(19) **Europäisches Patentamt**

**European Patent Office**

**Office européen des brevets**

(11) **EP 1 397 481 B1**

(12) **EUROPEAN PATENT SPECIFICATION**

(45) Date of publication and mention
of the grant of the patent:
**05.04.2006 Bulletin 2006/14**

(51) Int Cl.:
*C12C 11/02* (2006.01)    *C12C 11/07* (2006.01)
*C12C 11/09* (2006.01)

(21) Application number: **02744983.4**

(22) Date of filing: **20.06.2002**

(86) International application number:
**PCT/CA2002/000970**

(87) International publication number:
**WO 2002/102961 (27.12.2002 Gazette 2002/52)**

(54) **COMBINED CONTINUOUS/BATCH FERMENTATION PROCESS**

KOMBINIERT KONTINUIERLICHER / STAPELWEISER VERGÄRUNGSPROZESS

PROCÉDÉ DE FERMENTATION PAR LOT/EN CONTINU COMBINÉ

(84) Designated Contracting States:
**AT BE CH CY DE DK ES FI FR GB GR IE IT LI LU
MC NL PT SE TR**

(30) Priority: **20.06.2001 US 299153 P
20.06.2001 US 299186 P**

(43) Date of publication of application:
**17.03.2004 Bulletin 2004/12**

(73) Proprietor: **LABATT BREWING COMPANY
LIMITED
London,
Ontario N6B 2H8 (CA)**

(72) Inventors:
• **PILKINGTON, Phyllis, Heather**
**London, Ontario N6B 2H8 (CA)**
• **MENSOUR, Normand, Anthony**
**London, Ontario N6B 2H8 (CA)**

(74) Representative: **Albrecht, Thomas
Kraus & Weisert
Patent- und Rechtsanwälte
Thomas-Wimmer-Ring 15
80539 München (DE)**

(56) References cited:
**EP-A- 0 669 393         EP-A- 1 106 679
WO-A-01/98477         DE-C- 4 430 905
US-A- 4 929 452**

• **KRONLOF J ET AL: "PRODUCTION OF BEER
USING IMMOBILIZED YEAST ENCODING
A-ACETOLACTATE DECARBOXYLASE"
JOURNAL OF THE INSTITUTE OF BREWING,
INSTITUTE OF BREWING. LONDON, GB, vol. 98,
no. 6, 1 November 1992 (1992-11-01), pages
479-491, XP000311039 ISSN: 0046-9750**
• **LINKO M ET AL: "Recent advances in the malting
and brewing industry" JOURNAL OF
BIOTECHNOLOGY, ELSEVIER SCIENCE
PUBLISHERS, AMSTERDAM, NL, vol. 65, no. 2-3,
27 October 1998 (1998-10-27), pages 85-98,
XP004144915 ISSN: 0168-1656**
• **PILKINGTON ET AL.: "Kappa-Carrageenan Gel
Immobilisation of lager brewing yeast" JOURNAL
OF THE INSTITUTE OF BREWING, vol. 105, no. 6,
1999, pages 398-404, XP002212080**
• **SMOGROVICOVÁ ET AL.: "Reactors for
continuous primary beer fermentation using
immobilised yeast" BIOTECHNOLOGY
TEHCNIQUES, vol. 11, no. 4, 1997, pages 261-264,
XP002212356 cited in the application**

**EP 1 397 481 B1**

**Description**

Field of the Invention:

The present invention relates to the production of potable alcohol products, especially beer, and in particular using a hybrid process comprised of continuous and batch fermentation processing stages.

Background of the Invention:

The extensive number of recent publications in this area illustrates the brewing industry's great interest in immobilization. In several reviews (Enari, 1995; Iserentant, 1995; Masschelein, 1997; Mensour *et al.,* 1997; Stewart, 1996; Virkajarvi & Linko, 1999) on the general state of the brewing industry, the possible revolutionary role of immobilization in beer production has been highlighted. In addition to the groups mentioned in sections 3.1 to 3.5, many other institutions have been involved in immobilized cell R&D for brewing applications. The Miller Brewing Company (Duncombe *et al.,*1996; Tata et al., 1999) from the United States ran some preliminary evaluations on a Meura Delta test unit, as well as on the fluidized bed bioreactor distributed by Schott Engineering. Coors Brewing also performed preliminary experimentation with the Meura Delta system.

The Slovak Technical University, in collaboration with Heineken, investigated the use of calcium pectate gel in an air lift system for the production of beer (Domeny, 1996). More recently, the group from the Slovak Technical University has published several articles on their on-going research (Smogrovicova et al., 1997; Smogrovicova & Domeny, 1999). Guinness initially investigated the use of various adsorption carriers for immobilization and subsequent fermentation in a fluidized bed bioreactor (Donnelly, 1998). In 1999, Donnelly and colleagues published a paper describing the kinetic of sugar metabolism inside their fluidized bed bioreactor (Donnely et aL, 1999). Their experimental setup involved the use of Siran porous glass beads as the immobilization carrier for a top fermenting yeast. Guinness has become part of the Immocon Consortium that was described in section 2.2.5.

Holsten Brauerei AG and Lurgi AG, both from Germany, have jointly developed and operated a pilot plant for the continuous production of alcohol free beer (Dziondziak, 1995). Calcium alginate beads within a single-stage loop fluidized bed fermentor (130 L) were used for fermentation while a sieve bottom column (7 sieve bottoms) was used to dealcoholize the beer. The total production time for this process was 8.5 h.

A team from the Sapporo Breweries Ltd. Brewing Research Laboratories located in Japan studied the use of immobilized cells in a fluidized bed reactor for the main fermentation of beer. Their studies involved the use of polyvinyl alcohol gel beads (Shindo & Kamimur, 1990), Ca-alginate gel beads (Shindo *et al.*, 1994a), double-layered gel fibers (Shindo *et al.,* 1994b) and chitosan gel beads (Shindo *et al.,* 1994c) as immobilization matrices. In the latter study, a one liter working volume bioreactor containing 25% by volume Chitopearl® type II beads (chitosan beads) was operated on a continuous basis with wort treated with glucoamylase. This enzyme treatment allowed for acetate ester formation in the immobilized cell system to be similar to that of conventional batch fermentation, thus one step closer to product matching.

The research group from Sapporo has now focused their attention on the development of a chitosan bead fluidized bead fermenter operating in repeated batch mode. The system was operable for 75 days without any major problems and the resulting beer was similar in quality to a commercial product A non-flocculating strain was shown to be much more effective than a flocculent strain (Maeba et al., 2000; Umemoto et al., 1998).

Two other approaches to diacetyl reduction were presented at the EBC Congress held in Maastricht in 1997. Researchers in France (Dulieu et al., 1997) proposed the use of encapsulated □-acetolactate decarboxylase to rapidly convert □-acetolactate into acetoin. Meura Delta has highlighted preliminary results on the use of an aluminosilicate zeolite as a catalyst for the cold and direct conversion of acetolactate into acetoin (Andries et al., 1997). If such treatments prove to be effective and consumer acceptable, lower cost alternatives to the maturation systems proposed by Cultor and Alfa Laval could become a reality.

Other non-industrial research in the field of immobilization for beer production includes that of the Singapore Institute of Standards and Industrial Research where the use of a thread type of alginate gel particle for use in a packed bed reactor was studied and found to be more favorable than alginate beads (Que, 1993). Mafra and colleagues from the Universidade do Minho in Portugal have discussed the use of a superflocculent yeast strain for the continuous maturation of beer (Mafra et al, 1997). This same research group has also published work on the use of their flocculent yeast within an airlift bioreactor for the production of ethanol (Vicente et al., 1999; Domingues et al., 2000)

Researchers at various academic institutions have also recently investigated the use of immobilization for the production of beer (Argiriou *et al.*, 1996; Bardi *et al.,* 1996; Cashin, 1996; Moll & Duteurtre, 1996; Nedovic *et al.*, 1996a; Nedovic *et al.,* 1996b; Norton *et al.,* 1995; Scott *et al.,* 1995; Wackerbauer *et al.,* 1996a; Wackerbauer *et al.,* 1996b). Research groups from China (Chao *et al.,* 1990; Yuan, 1987; Zhang *et al.,*1988), Russia (Kolpachki *et al.,* 1980; Sinitsyn *et al.*, 1986) and Czechoslovakia (Chladek *et al.,* 1989; Curin *et al.,* 1987; Polednikova *et al.,* 1981) were also involved in immobilized cell technology and published results in the 1980's.

Numerous references where considered during the background work to the studies upon which the present invention is based. These include:

Abbott, B.J. 1978. Immobilized cells. In: *Annual Reports on Fermentation Processes,* Ed. Perlman, D., New York: Academic Press, 2: 91.

Anon. 1994. Maturex® L. *Novo Nordisk pubication. B* 560c-GB.

Anon. 1996. Table Curve 2D. *User's Manual, Jandel Scientific.*

Anon. 1997. Alfa Laval Brewery Systems. *Brewers' Guardian* 126: 26.

Anon. 1998. Digox 5 Operating Manual. *Dr. Theidig publication.*

Aquilla, T. 1997. The biochemistry of yeast: debunking the myth of yeast respiration and putting oxygen in its proper place. *Brewing Techniques* 50.

Aschengreen, N.H., Jepsen, S. 1992. Use of acetolactate decarboxylase in brewing fermentations. *Proceedings of the 22nd Convention of the Institute of Brewing (Australia and New Zealand Section),* Melbourne 80. Atkinson, B. 1986. Immobilised cells, their application and potential. In: *Process engineering aspects of immobilized cell systems.* Ed. Webb, C., Black, G.M, Atkinson, B. Manchester: Institution of Chemical Engineers 3.

Audet, P., Paquin, C., Lacroix, C. 1988. Immobilized growing lactic acid bacteria with kappa-carrageenan - locust bean gel. *Applied Microbiology and Biotechnology* 29: 11.

Austin, G.D., Watson, RW.J., Nordstrom, PA., D'Amore, T. 1994. An on-line capacitance biomass monitor and its correlation with viable biomass. *MBAA Technical Quarterly* 31: 85.

Axcell, B.C., O'Connor-Cox, E.S.C. 1996. The concept of yeast vitality - an alternative approach. *Proceedings of Convention of the Institute of Brewing (Asia Pacific Sect.).* Singapore 24:64.

Axelsson, A., Sisak, C., Westrin, BA., Szajani, B. 1994. Diffusion characteristics of a swelling gel and its consequences for bioreactor performance. *The Chemical Engineering Journal* 55: B35.

Bailey, J.E., Ollis, D.F. 1986. *Biochemical Engineering Fundamentals.* New York: McGraw-Hill, Inc.

Bancel, S., Hu, W. 1996. Confocal laser scanning microscopy examination of cell distribution in macroporous microcarriers. *Biotechnology Progress* 12: 398.

Barker, M.G, Smart, K.A. 1996. Morphological changes associated with the cellular aging of a brewing yeast strain. *Journal of the American Society of Brewing Chemists* 54(2): 121.

Bejar, P., Casas, C., Godia, F., Sola, C. 1992. The influence of physical properties on the operation of a three-phase fluidized-bed fermenter with yeast cells immobilized in calcium alginate. *Applied Biochemistry and Biotechnology* 34: 467.

Bickerstaff, G.F. 1997. Immobilization of enzymes and cells. In: *Immobilization of enzymes and Cells,* Ed. Bickerstaff, G. F., New Jersey, U.S.A.: Humana Press, Inc. 1.

Bimbaum, S., Pendleton, R., Larson, P., Mosbach, K. 1981. Covalent stabilization of alginate gel for the entrapment of living whole cells. *Biotechnology Letters* 3: 393.

Budac, D., Margartis, A. 1999. *Personal communication.*

Büyükgüngör, H. 1992. Stability of *Lactobacillus bulgaricus* immobilized in kappa-carrageenan gels. *Journal of Chemical Technology and Biotechnology* 53: 173.

Chahal, P.S. 1992. *Fluorosensor controlled fed-batch production of Cyclosporin-A from Beauveria nivea.* Ph.D. Thesis. University of Western Ontario.

Chisti, M.Y. 1989. *Airlift bioreactors.* London: Elsevier Applied Science.

Chisti, Y., Moo-Young, M. 1993. Improve the performance of airlift reactors. *Chemical Engineering Progress* 6: 38.

Cho, G.H., Choi, C.Y., Choi, Y.D., Han, M.H. 1982. Ethanol production by immobilised yeast and its carbon dioxide gas effects in a packed bed reactor. *Journal of Chemical Technology and Biotechnology* 32: 959.

Coutts, M.W. 1956. *Britain Patent No. 872,391.*

Curin, J., Pardonova, B., Polednikova, M., Sedova, H., Kahler, M. 1987. Beer production with immobilized yeast. *European Brewing Convention Congress,* Madrid 433.

Dale, C.J., Hough, J.S., Young, T.W. 1986. Freactionation of high and low molecular weight components from wort and beer by adsorption chromatography using the gel Sephadex LH20. *Journal of the Institute of Brewing* 92(5): 457.

Daoud, I.S., Searle, B.A. 1986. Yeast vitality and fermentation performance. *Monograph - XII European Brewery Convention - Symposium on Brewers' Yeast,* Helsinki 108.

de Backer, L., Willaert, R.G., Baron, G.V. 1996. Modelling of immobilized bioprocesses. In: *Immobilized Living Cell Systems Modelling and Experimental Methods,* Ed. Willaert, R. G., Baron, G. V., and de Backer, L., Toronto: John Wiley and Sons. 47.

de Beer, D., Van den Heuvel, J.C., Ottengraaf, S.P.P. 1993. Microelectrode measurements of the activity distribution in nitrifying bacterial aggregates. *Applied Environmental Microbiology* 59: 573.

Debourg, A., Laurent, M., Goossens, E., Borremans, E., Van De Winkel, L., Masschelein, C.A. 1994. Wort aldehyde reduction potential in free and immobilized yeast systems. *Jounal of the American Society of Brewing Chemists* 52: 100.

Dillenhofer, W., Ronn, D. 1996. Secondary fermentation of beer with immobilized yeast. *Brauwelt International* 14: 344.

Doran, P.M., Bailey, J.E. 1986a. Effects of hydroxyurea on immobilized and suspended yeast fermentation rates and cell cycle operation. *Biotechnology and Bioengineering* 28: 1814.

Doran, P.M., Bailey, J.E. 1986b. Effects of immobilization on growth, fermentation properties, and macromolecular composition of *Saccharomyces cerevisiae* attached to gelatin. *Biotechnology and Bioengineering* 28: 73.

dos Santos, V.A.P.M, Bruijnse, M., Tramper, J., Wijffels, R.H. 1996. The magic-bead concept: an integrated approach to nitrogen removal with co-immobilized micro-organisms. *Applied Microbiology and Biotechnology* 45: 447.

Driessen, W., Habets, L., Vereijken, T. 1997. Novel anaerobic and aerobic process to meet strict effluent plant design requirements. *Proceedings of the Institute of Brewing* (*Asia Pacific Section*), Aukland 148.

Dulieu, C., Boivin, P., Dautzenberg, H., Poncelet, D. 1996. Immobilized enzyme system to avoid diacetyl formation: a new tool to accelerate beer maturation. *International Workshop on Bioencapsulation,* Potsdam 22.

Dunbar, J., Campbell, S.L., Banks, D.J., Warren, D.R. 1988. Metabolic aspects of a commercial continuous fermentation system. *Proceedings of the Convention of the Institute of Brewing,* Brisbane 151.

Estapé, D., Gòdia, F., Solà, C. 1992. Determination of glucose and ethanol effective diffusion coefficients in Ca-alginate gel. *Enzyme and Microbial Technology* 14: 396.

Evans, H.A.V., Cleary, P. 1985. Direct Measurement of Yeast and Bacterial Viability. *Journal of the Institute of Brewing* **91**: 73.

Fan, L.-S. 1989. *Gas-Liquid-Solid Fluidization Engineering.* Boston: Butterworths.

Fernandez, E. 1996. Nuclear magnetic resonance spectroscopy and imaging. In: *Immobilized Living Cell Systems: Modelling and Experimental Methods.* Toronto: John Wiley and Sons, Chapter 6.

Garcia, Al., Garcia, LA., Diaz, M. 1994. Prediction of ester production in industrial beer fermentation. *Enzyme and Microbial Technology* 16(1): 66.

Geankoplis, C.J. 1993. *Transport Processes and Unit Operations.* New Jersey: Prentice Hall P.T.R.

Gee, D.A., Ramirez, W.F. 1994. A flavour model for beer fermentation. *Jounal of the Institute of brewing* 100: 321.

Geiger, K.H., Compton, J. 1957. *Canada Patent No. 545,867.*

Gekas, V.C. 1986. Artificial membranes as carriers for the immobilization of biocatalysts. *Enzyme and Microbial Technology* 8: 450.

Gift, E.A., Park, H.J., Paradis, G.A., Demain, A.L., Weaver, J.C. 1996. FACS-based isolation of slowly growing cells: double encapsulation of yeast in gel microdrops. *Nature Biotechnology* 14: 884.

Gikas, P., Livingston, A.G. 1993. Use of ATP to characterize biomass viability in freely suspended and immobilized cell bioreactors. *Biotechnology and Bioengineering* 42: 1337.

Gikas, P., Livingston, A.G. 1996. Viability of immobilised cells: use of specific ATP levels and oxygen uptake rates. *Progress in Biotechnolgy 11, Immobilized Cells: Basics and Applications,* Noordwijkerhout 11:264.

Gilson, C.D., Thomas, A. 1995. Ethanol production by alginate immobilised yeast in a fluidised bed bioreactor. *Journal of Chemical Technology and Biotechnology* 62: 38.

Gòdia, F., Casa, C., Castellano, B., Solà, C. 1987. Immobilized cells: behavior of carrageenan entrapped yeast during continuous ethanol fermentation. *Applied Microbology and Biotechnology* 26: 342.

Gopal, C.V., Hammond, J.R.M. 1993. Application of immobilized yeasts for fermenting beer. *Brewing and Distilling International* 24: *72.*

Hannoun, B.J.M., Stepbanopoulous, G. 1986. Diffusion coefficients of glucose and ethanol in cell-free and cell-occupied calcium alginate membranes. *Biotechnology and Bioengineering* 28: 829.

Hardwick, W.A. 1995. *Handbook of Brewing.* New York: Marcel Dekker, Inc.

Hayat, M.A. 1972. *Basic Electron Microscopy Techniques.* Toronto: van Nostrand Reinhold Co. 96.

Heijnen, J.J., van Loosdrecht, M.C.M., Mulder, R., Weltevrede, R., Mulder, A. 1993. Development and scale-up of an aerobic biofilm air-lift suspension reactor. *Water Science and Technology* 27: 253.

Higbie, R. 1935. The role of absorption of a pure gas into a still liquid during short periods of exposure. *Transactions of the American Institute of Chemical Engineers* 31: 365.

Hines, A.L,. Maddox, R.N. 1985. *Mass Transfer Fundamentals and Applications.* U.S.A.: Prentice-Hall, Inc.

Hinfray, C., Jouenne, T., Junter, G. 1994. Ethanol production from glucose by free and agar-entrapped batch cultures of *Saccharomyces cerevisiae* at different oxygenation levels. *Biotechnology Letters* 16: 1107.

Hoekstra, S.F. 1975. Wort composition, a review of known and unknown facts. *Proceedings of the European Brewery Convention,* Nice 465.

Hooijmans, C.M., Ras, C., Luyben, K.Ch.A.M. 1990. Determination of oxygen profiles in biocatalyst particles by means of a combined polarographic oxygen microsensor. *Enzyme and Microbial Technology* 12: 178.

Hough, J.S., Briggs, D.E., Stevens, R., Young, T.W. 1982. Metabolism of wort by yeast. In: *Malting and Brewing*

*Science Volume 2 Hopped Wort and Beer,* Ed Hough, J. S., Briggs, D. E., Stevens, R., and Young, T. W., London, U.K.: Chapman and Hall. 566.

Hüsken, L.E., Tramper, J., Wijffels, R 1996. Growth and eruption of gel-entrapped microcolonies. In: *Progress in Biotechnology 11, Immobilized Cells*: *Basics and Applications* Ed. Wijffels, R.H., Buitelaar, R.M.., Bucke, C., Tramper, J., Amsterdam: Elsevier Science 336.

Hutter, K.J. 1996. Flow-cytometric analyses for assessment of fermentative ability of various yeasts. *Brauwelt International 1:* 52.

Hwang, S.-J., Fan, L.-S. 1986. Some design consideration of a draft tube gas-liquid-solid spouted bed. *The Chemical Engineering Journal* 33: 49.

Imai, T. 1996. Recent advances in the determination of yeast vitality. *Proceedings of the Congress of the Institute of Brewing (Asia Pacific Section),* Singapore 24: 60.

Inloes, D.S., Taylor, D.P., Cohen, S.N., Michaels, A.S., Robertson, C.R. 1983. Ethanol production by *Saccharomyces cerevisiae* immobilized in hollow-fiber membrane bioreactors. *Applied and Environmental Microbiology* 46: 264.

Inoue, T. 1987. Possibilities opened by "new biotechnology" and application of immobilized yeast to beer brewing. *Reports of the Research Laboratory of Kirin Brewery Co., Ltd.* 7.

Inoue, T. 1992. A review of diacetyl control technology. *Proceedings of the 22nd Convention of the Institute of Brewing (Australia and New Zealand Section),* Melbourne 76.

Jepsen, S. 1993. Using ALDC to speed up fermentation. *Brewers' Guardian.* 55.

Jone's, M., Pierce, J.S. 1964. Absorption of amino acids from wort by yeasts. *Journal of the Institute of Brewing.* 70: 307.

Jones, R.P., Greenfield, P.F. 1984. A review of yeast ionic nutrition - Part I: growth and fermentation requirements. *Process Biochemistry* 19(2): 48.

Jones, R.P., Pamment, N., Greenfield, P.F. 1981. Alcohol fermentation by yeast - the effect of environmental and other variables. *Process Biochemistry* 16(3): 42.

Kara, B.V., David, I., Searle, B.A. 1987. Assessment of yeast quality. *Proceedings of the Congress of the European Brewery Convention,* Madrid, 21: 409.

Karamanev, D.G. 1991. Model of the biofilm structure of Thiobacillus ferrooxidans. *Journal of Biotechnology* 10: 51.

Karel, S.F., Libicki, S.B., Robertson, C.R. 1985. The immobilization of whole cells: engineering principles. *Chemical Engineering Science* 40: 1321.

Kasten, F.H. 1993. Introduction to fluorescent probes: properties, history and applications. In: *Fluorescent and Luminescent Probes for Biological Activity,* Ed. Mason, W. T. London, U.K.: Academic Press Limited 12.

Klopper, W.J. 1974. Wort composition, a survey. *European Brewery Convention Monograph 1. Wort Symposium,* Zeist 8.

Korgel, B.A., Rotem, A., Monbouquette, H.G. 1992. Effective diffusivity of galactose in calcium alginate gels containing immobilized *Zymomonas mobilis. Biotechnology Progress* 8: 111.

Kreger-Van Rij, N. 1984. *The Yeasts: A Taxonomic Study.* Amsterdam: Elsevier Science Publishers B.V.

Kronlöf, J., Virkajärvi, I. 1996. Main fermentation with immobilized yeast - pilot scale. *Proceedings of the European Brewery Convention Brewing Science Group*, Berlin 94.

Kunze, W. 1996. *Technology Brewing and Malting*. Berlin: VLB.

Kuriyama, H., Ishibashi, H., Umeda, LM.T., Kobayashi, H. 1993. Control of yeast flocculation activity in continuous ethanol fermentation. *Journal of Chemical Engineering Japan* 26(4): 429.

Kurosawa, H., Matsamura, M., Tanaka, H. 1989. Oxygen diffusivity in gel beads containing viable cells. *Biotechnology and Bioengineering* 34: 926.

Kurosawa, H., Tanaka, H. 1990. Advances in immobilized cell culture: development of a co-immobilized mixed culture system of aerobic and anaerobic micro-organisms. *Process Biochemistry International* 25: 189.

Kurtzman, C.P., Fell, J.W. 1998. *The Yeasts*, *A Taxonomic Study*, *Fourth Edition.* Amsterdam: Elsevier 361.

Kyung, K.H., Gerhardt, P. 1984. Continuous production of ethanol by yeast "immobilized" in a membrane-contained fermentor. *Biotechnology and Bioengineering* 26: 252.

Lee, S.S., Robinson, F.M., Wang, H.Y. 1981. Rapid determination of yeast viability. *Biotechnology and Bioengineering Symposium No. 11,* Gatlingburg, USA 641.

Lentini, A. 1993. A review of the various methods available for monitoring the physiological status of yeast yeast viability and vitality. *Ferment* 6: 321.

Lentini, A., Takis, S., Hawthorne, D.B., Kavanagh, T.E. 1994. The influence of trub on fermentation and flavour development *Proceedings of the 23rd Convention of the Institute of Brewing (Asia Pacific Section),* Sydney 89.

Leudeking, R. 1967. Fermentation process kinetics. In: *Biochemical and Biological Engineering*, Ed. Blakebrough, N., London: Academic Press, Inc. 203.

Leudeking, R., Piret, E.L. 1959. A kinetic study of the lactic acid fermentation. *Journal ofBiochemical and Microbiolial Technology and Engineering* 1: 393.

Lewandowski, Z., Altobelli, A., Fukushima, E. 1993. NMR and microelectrode studies of hydrodynamics and kinetics in biofilms. *Biotechnology Progress* 9: 40.

Lewandowski, Z., Stoodley, P., Altobelli, S. 1995. Experimental and conceptual studies on mass transport in biofilms. *Water Science Technology* 31: 153.

Lewis, M., Young, T. 1995. *Brewing*. London: Chapman and Hall.

Li, J., Humphrey, A.E. 1991. Use of fluorometry for monitoring and control of a bioreactor. *Biotechnology and Bioengineering* 37: 1043.

Lim, H.-S., Han, B.-K., Kim, J.-H., Peshwa, M.V, Hu, W.-S. 1992. Spatial distribution of mammalian cells grown on macroporous microcarriers with improved attachment kinetics. *Biotechnology Progress* 8: 486.

Linko, M., Virkajarvi, I., Pohjala, N. 1996. Effect of flocculation characteristics on immobilized yeast performance. *European Brewery Convention Brewing Science Group,* Berlin 102.

Lloyd, D., Moran, C.A., Suller, M.T.E., Dinsdale, M.G. 1996. Flow cytometric monitoring of rhodamine 123 and a cyanine dye uptake by yeast during cider fermentation. *Journal of Institute of Brewing* 102: 251.

Lundberg, P., Kuchel, P.W. 1997. Diffusion of solutes in agarose and alginate gels: $^1$H and $^{23}$Na PFGSE and $^{23}$Na TQF NMR studies. *Magnetic Resonance in Medicine* 37: 44.

Margaritis, A., te Bokkel, D.W., El Kashab, M. 1987. Repeated batch fermentation of ethanol using immobilized cells of *Saccharomyces cerevisiae* in a fluidized bioreactor system. In: *Biological Research on Industrial Yeasts*, Ed. Stewart, G.G., Russell, I., Klein, RD., Hiebsch, R.R., Boca Raton: CRC Press 121.

Margaritis, A., Wallace, J.B. 1982. The use of immobilized cells of *Zymomonas mobilis* in a novel fluidized bioreactor to produce ethanol. *Biotechnology and Bioengineering Symposium* 147.

Margaritis, A., Wilke, C.R. 1978a. The rotorfermentor. Part I: description of the apparatus, power requirements, and mass transfer characteristics. *Biotechnology and Bioengineering* 20: 709.

Margaritis, A., Wilke, C.R. 1978b. The rotorfermentor. Part II: application to ethanol fermentation. *Biotechnology and Bioengineering* 20: 727.

Marrs, W.M. 1998. The stability of carrageenans to processing. In: *Gums and Stabilizers for the Food Industry* 9, Cambridge: Royal Society of Chemistry, 218: 345.

Martens, F.B., Egberts, G.T.C., Kempers, J., Robles de Medina, M.H.L., Welton, H.G. 1986. *European Brewing Convention Monograph XII*, *Symposium on Brewing Yeast,* Helsinki 339.

Masschelein, C.A. 1990. Yeast metabolism and beer flavour. Proceedings of the Third Aviemore Conference on Malting, Brewing and Distilling 103.

Masschelein, C.A., Carlier, A., Ramos-Jeunehomme, C., Abe, I. 1985. The effect of immobilization on yeast physiology and beer quality in continuous and discontinuous systems. *Proceedings of the 20th European Brewery Convention Congress,* Helsinki 339.

Masschelein, C.A., Ramos-Jeunehomme, C. 1985. The potential of alginate immobilized yeast in brewery fermentations. *Institute of Brewing Central and Southern African Section Proceedings of the 1st Scientific and Technical Convention*, Johannesburg 392.

Masschelein, CA., Vandenbussche, J. 1999. Current outlook and future perspectives for immobilized yeast technology in the brewing industry. *Brewers' Guardian* 28(4): 35.

Masters, B.R., Thaer, A.A. 1994. Real-time scanning slit confocal microscopy of the *in vivo* human cornea. *Applied Optics* 33: 695.

Meilgaard, M. 1982. Prediction of flavor differences between beers from their chemical composition, *Brygmesteren 5.*

Mensour, N., Margaritis, A., Briens, C.L., Pilkington, H., Russell, L 1996. Application of immobilized yeast cells in the brewing industry. In: *Progress in Biotechnology 11, Immobilized Cells: Basics and Applications* Ed. Wijffels, RH., Buitelaar, R.M.., Bucke, C., Tramper, J., Amsterdam: Elsevier Science 661.

Mensour, N., Margaritis, A., Briens, C.L., Pilkington, H., Russell, I. 1997. New Developments in the Brewing Industry Using Immobilized Yeast Cell Bioreactor Systems. *Journal of the Institute of Brewing* 103: 363.

Merchant, F.J.A. 1986. *Diffusivity Characteristics of Glucose in Alginate Immobilization Matrices.* Ph.D. Thesis. University of Western Ontario.

Merchant, F.J.A, Margaritis, A., Wallace, J.B. 1987. A novel technique for measuring solute diffusivities in entrapment matrices used in immobilization. *Biotechnology and Bioengineering* 30: 936.

Mochaba, F.M. 1997. A novel and practical yeast vitality method based on magnesium ion release. *Journal of the Institute of Brewing* 103: 99.

Mochaba, F., O'Connor-Cox, E.S.C., Axcell, B.C.1998. Practical procedures to measure yeast viability and vitality prior to pitching. *Journal of the American Society of Brewing Chemists* 56(1): 1.

Muhr, A.H., Blanshard, J.M.V. 1982. Diffusion in gels. *Polymer* 23: 1012.

Mulder, M.H.V., Smolders, C.A. 1986. Continuous ethanol production controlled by membrane processes. *Process*

*Biochemistry* 21: 35.

Nakanishi, K., Murayama, H., Nagara, A., Mitsui, S. 1993. Beer brewing using an immobilized yeast bioreactor system. *Bioprocess Technology* 16: 275.

Nakanishi, K., Onaka, T., Inoue, T. 1986. A new immobilized yeast reactor system for rapid production of beer. *Reports of the Research Laboratory of Kirin Brewing Company* 13.

Nakatani, K., Takahashi, T., Nagami, K., Kumada, J. 1984a. Kinetic study of vicinal diketones in brewing (I) formation of total vicinal diketones. *MBAA Technical Quarterly* 21(2): 73.

Nakatani, K, Takahashi, T., Nagami, K., Kumada, J. 1984b. Kinetic study of vicinal diketones in brewing (II) theoretical aspect for the formation of total vicinal diketones. *MBAA Technical Quarterly* 21(4): 175.

Nakatani, K., Fukui, N., Nagami, K., Nishigala, M. 1991. Kinetic analysis of ester formation during beer fermentation. *Journal of the American Society of Brewing Chemists* 49(4): 152.

Narziβ, L., Miedaner, H., Graf, P., Eichhorn, P., Lustig, S. 1993. Technological approach to improve flavour stability. *MBAA Technical Quarterly* 30: 48.

Nava Saucedo, J.E., Roisin, C., Barbotin, J.-N. 1996. Complexity and heterogeneity of microenvironments in immobilized systems. *Progress in Biotechnology 11, Immobilized Cells: Basics and Applications*, Noordwijkerhout 39.

Nedovic, A.N., Vunjak-Novakovc, G., Leskosek-Cukalovic, I., Cutkovic, M. 1996. A study on considerably accelerated fermentation of beer using an airlift bioreactor with calcium alginate entrapped yeast cells. *Fifth World Congress of Chemical Engineering* 2: 474.

Neufeld, R. J., Poncelet, D.J., Norton, S.D. 1996. *Application for Canadian Patent No. 2133789.*

Norton, S., D'Amore, T.1994. Physiological effects of yeast cell immobilization: applications for brewing. *Enzyme and Microbial Technology* 16: 365.

Norton, S., Watson, K., D'Amore, T. 1995. Ethanol tolerance of immobilized brewer's yeast cells. *Applied Microbiology and Biotechnology* 43: 18.

O'Connor-Cox, E., Mochaba, F.M., Lodolo, E.J., Majara, M., Axcell, B. 1997. Methylene blue staining: use at your own risk. *MBAA Technical Quarterly* 34(1): 306.

O'Reilly, A.M., Scott, J.A. 1995. Defined coimmobilization of mixed microorganism cultures. *Enzyme and Microbial Technology* 17: 636.

Okazaki, M., Hamada, T., Fujji, H., Mizobe, A., Matsuzawa, S. 1995. Development of poly(vinyl alcohol) hydrogel for waste water cleaning. I. Study of poly(vinyl alcohol) gel as a carrier for immobilizing organisms. *Journal of Applied Polymer Science* 58: 2235.

Oldshue, J.Y., Herbst, N.R. 1992. *A Guide to Fluid Mixing.* New York: Ligbtnin.

Opekarova, M., Sigler, K. 1982. Acidification power: indicator of metabolic activity and autolytics changes in *Saccharomyces cerevisiae* (yeast). *Folia Microbiologia* 27: 395.

Øyaas, J., Storro, I., Svendsen, H., Levine, D.W. 1995. The effective diffusion coefficient and the distribution constant for small molecules in calcium-alginate gel beads. *Biotechnology and Bioengineering* 47: 492.

Paiva, T.C.B., Sato, S., Visconti, A.E.S., Castro, L.A.B. 1996. Continuous alcoholic fermentation process in a tower reactor with recycling of flocculating yeast *Applied Biochemistry and Biotechnology* 57-58(0): 55.

Pajunen, E., Makinen, V., Gisler, R. 1987. *Secondary fermentation with immobilized yeast. European Brewery Convention Congress,* Madrid 441.

Parascandola, P., de Alteriis, E. 1996. Pattern of growth and respiratory activity of *Saccharomyces cerevisiae* (baker's yeast) cells growing entrapped in an insolubilized gelatin gel. *Biotechnology and Applied Biochemistry* 23: 7.

Perry, R.H., Green, D.W. 1984. *Perry's Chemical Engineers' Handbook.* New York: McGraw-Hill Book Company.

Pilkington, P.H., Margaritis, A., Mensour, N.A. 1998a. Mass transfer characteristics of immobilized cells used in fermentation processes. *Critical Reviews in Biotechnology* 18(2 & 3): 237.

Pilkington, P.H., Margaritis, A., Mensour, N.A., Russell, I. 1998b. Fundamentals of immobilized yeast cells for continuous beer fermentation: a review. *Journal of the Institute of Brewing* 104: 19.

Pilkington, H., Margaritis, A., Mensour, N., Sobczak, J., Hancock, L, Russell, I. 1999. Kappa-carrageenan gel immobilization of lager brewing yeast. *Journal of the Institute of Brewing* 105(6): 398.

Polson, A. 1950. Some aspects of diffusion in solution and a definition of a colloidal particle. *Journal of Physical and Colloidal Chemistry* 54: 649.

Power, D.A., McCuen, P.J. 1988. *Manual of BBL® Products and Laboratory Procedures, Sixth Edition.* Maryland: Becton Dickinson Microbiology Systems 249.

Priest, F.G., Campbell, I.1996. *Brewing Microbiology 2nd Ed.*, UK: Chapman and Hall.

Rees, D.A. 1972. Polysaccharide gels: a molecular view. *Chemistry and Industry* 19: 630.

Roca, E., Camesselle, C., Nunez, M. 1995. Continuous ethanolic fermentation by *Saccharomyces cerevisiae* immobilised in Ca-alginate beads hardened with $Al^{3+}$. *Biotechnology Letters* 9: 815.

Roukas, T. 1994. Continuous ethanol production from carob pod extract by immobilized *Saccharomyces cerevisiae* in a packed-bed reactor. *Journal of Chemical Technology and Biotechnology* 59: 387.

Russell, I., Stewart, G.G. 1992. Contribution of yeast and immobilization technology to flavour development in fermented beverages. *Food Technology* 148.

Ryder, D.S. 1985. The growth process of brewing yeast and the biotechnological challenge. *MBAA Technical Quarterly* 22: 124.

Ryu, D.D., Kim, Y.J., Kim, J.H. 1984. Effect of air supplement on the performance of continuous ethanol fermentation system. *Biotechnology and Bioengineering* 26: 12.

Salmon, P.M., Robertson, C.R. 1987. Mass transfer limitations in gel beads containing growing immobilized cells. *Journal of Theoretical Biology* 125: 325.

Schumpe, A., Quicker, G., Deckwer, W.-D. 1982. Gas solubilities in microbial culture media. *Advances in Biochemical Engineering* 24: 1.

Shindo, S., Sahara, H., Koshino, S. 1994. Suppression of alpha-acetolactate formation in brewing with immobilized yeast. *Journal of the Institute of Brewing* 100: 69.

Smart, K.A. 1995. The importance of the brewing yeast cell wall. *Brewers' Guardian* 124(4): 44.

Smart, K.A. 1999. Ageing in brewing yeast *Brewers' Guardian* 19.

Smart, K.A., Chambers, K.M., Lambert, I., Jenkins, C. 1999. Use of methylene violet procedures to determine yeast viability and vitality. *Journal of the American Society of Brewing Chemists* 57(1):18.

Sharpe, F.R. 1988. Assessment and control of beer flavour. Journal of the Institute of Brewing 95: 301.

Stewart, G.G. 1977. Fermentation - yesterday, today and tomorrow. MBAA *Technical Quarterly* 14: 1.

Stewart, G.G., Russell, I. 1986. The relevance of the flocculation properties of yeast in today's brewing industry. *European Brewery Convention Symposium on Brewers' Yeast,* Helsinki 53.

Stewart, G.G., Lyness, A., Younis, O. 1999. The control of ester synthesis during wort fermentation. *MBAA Technical Quarterly* 36(1): 61.

Takahashi, S. and Kimura, Y. 1996. Effect of main fermentation parameters on stale flavour. *Brauwelt International* 14 (3): 253.

Taylor, D.G. 1989. Influence of brewhouse practice on wort composition. *Brewer's Guardian* 118(2): 30. Technical Committee and Editorial Committee of the American Society of Brewing Chemists (ASBC). 1992. *Methods of Analysis*. 8th Edition. Minnesota: ASBC.

Uttamlal, M., Walt, D.R. 1995. A fiber-optic carbon dioxide sensor for fermentation monitoring. *Biotechnology* 13: 597.

Venâncio, A., Teixeira, J.A. 1997. Characterization of sugar diffusion coefficients in alginate membranes. *Biotechnology Techniques* 11: 183.

Vilachá, C., Uhlig, K. 1985. The measurement of low levels of oxygen in bottled beer. *Brauwelt International* 70.

Virkajärvi, I., Kronlöf, J. 1998. Long-term stability of immobilized yeast columns in primary fermentation. *Journal of the American Society of Brewing Chemists* 56(2): 70.

Vives, C., Casas, C., Godia, F., Sola, C. 1993. Determination of the intrinsic fermentation kinetics of *Saccharomyces cerevisiae* cells immobilized in calcium alginate beads and observation on their growth. *Applied Microbiology and Biotechnology* 38: 467.

Wada, M., Kato, J., Chibata, 1. 1979. A new immobilization of microbial cells. *European Journal of Applied Microbiology and Biotechnology* 8: 241.

Wang, H.Y., Lee, S.S., Takach, Y., Cawthon, L. 1982. Maximizing microbial cell loading in immobilized-cell systems. *Biotechnology and Bioengineering Symp. No. 12* 139.

Westrin, B.A., Axelsson, A. 1991. Diffusion in gels containing immobilized cells: a critical review. *Biotechnology and Bioengineering* 38: 439.

Wheatcroft, R., Lim, Y.M., Hawthorne, D.B., Clarke, B.J., Kavanagh, T.E. 1988. An assessment of the use of specific oxygen uptake measurements to predict the fermentaion performance of brewing yeasts. *The Institute of Brewing* (*Australia and New Zealand Section*) *Proceedings of the Twentieth Convention,* Brinsbane 193. White, F.H., Portno, A.D. 1978. Continuous fermentation by immobilized brewers yeast. *Journal of the Institute of Brewing* 84: 228.

Wijffels, R.H., de Gooijer, C.D., Schepers, A.W., Tramper, J. 1996. Immobilized-cell growth: diffusion limitation in expanding micro-colonies. In: *Progress in Biotechnology 11*, *Immobilized Cells: Basics and Applications* Ed. Wijffels, R.H., Buitelaar, R.M.., Bucke, C., Tramper, J., Amsterdam: Elsevier Science 249.

Wijffels, R.H., Englund, G., Hunik, J.H., Leenen, J.T.M., Bakketun, A. et al. 1995. Effects of diffusion limitation on immobilized nitrifying microorganisms at low temperatures. *Biotechnology and Bioengineering* 45:1.

Aivasidis, A., 1996. Another Look at Immobilized Yeast Systems. *Cerevisia Belgian Journal of Brewing* & *Biotechnology,* **21,** 27.

Aivasidis, A., Wandrey, C., Eils, H.-G. & Katzke, M., 1991. Continuous Fermentation of Alcohol-Free Beer with Immobilized Yeast in Fluidized Bed Reactors. *Proceedings of the European Brewery Convention Congress, Lisbon,* 1991, 569.

Akiyama-Jibiki, M., Ishibiki, T., Yamashita, H. & Eto, M., 1997. A Rapid and Simple Assay to Measure Flocculation in Brewer's Yeast. *Master Brewers of the Americas Technical Quarterly,* 34, 278.

Alfa Laval Brewery Systems, 1997. Immobilized Yeast System Reduces Maturation Time. *Brewers' Guardian,* **126**, 26.

Alfa Laval Brewery Systems, 1996. *Continuous Maturation of Beer with Immobilized Yeast,* Company Report. A1 Taweel, A.M. & Walker, L.D., 1983. Liquid Dispersion in Static In-line Mixers. *Canadian Journal of Chemical Engineering,* **61**, 527.

Andries, M., Derdelinckx, G., Ione, K.G., Delvaux, F., van Beveren, P.C. & Masschelein, C.A., 1997a. Zeolites as Catalysts for the Cold and Direct Conversion of Acetolactate into Acetoin. *Proceedings of the European Brewery Convention Congress*, *Maastricht*, Poster 48.

Andries, M., Van Beveren, P.C., Goffin, O. & Masschelein, C.A., 1995. Design of a Multi-Purpose Immobilized Yeast Bioreactor System for Application in the Brewing Process. *European Brewery Convention Symposium: Immobilized Yeast Applications in the Brewing Industry*, *Espoo, Finland*, 134.

Andries, M., Van Beveren, P.C., Goffin, O. & Masschelein, C.A., 1996a. Design and Application of an Immobilized Loop Bioreactor for Continuous Beer Fermentation. in *Immobilized Cells: Basics and Applications.* (R.H. Wijffels, RM. Buitelaar, C. Bucke & J. Tramper, eds.) Amsterdam: Elsevier Science, 672.

Andries, M., Van Beveren, P.C., Goffin, O., Rajotte, P. & Masschlein, CA, 1996b. Design and Applications of an Immobilized Loop Bioreactor to the Continuous Fermentation of Beer. *Proceedings of the 6th International Brewing Technology Conference,* Hmogate, 380.

Andries, M., Van Beveren, P.C., Goffin, O., Rajotte, P. & Masschlein, C.A., 1997b. Practical Results Using the Meura-Delta Immobilized Yeast Fermentation System. *Brewers' Guardian,* 26.

Andries, M., Van Beveren, P.C., Goffin, O., Rajotte, P. & Masschlein, C.A., 1997c. First Results on Semi-Industrial Continuous Fermentation with the Meura-Delta Immobilized Yeast Fermentor. *Master Brewers Association of the Americas Technical Quarterly,* 34, 119.

Argiriou, T., Kanellaki, M., Voliotis, S. & Koutinas, AA., 1996. Yissiris-Supported Yeast Cells: High Biocatalyic Stability and Productivity Improvement by Successive Preservatives at 0 °C. *Journal of Agriculture and Food Chemistry*, 44, 4028.

Audet, P. & Lacroix, C., 1989. Two Phase Dispersion Process for the Production of Biopolymer Gel Beads: Effects of Barious Parameters on Bead Size and their Distribution. *Process Biochemistry*, **24**, 217.

Axelsson, A. & Persson, B., 1988. Determination of Effective Diffusion Coefficients in Calcium Alginate Gel Plates with Varying Yeast Cell Content. *Applied Biochemistry and Biotechnology,* 18, 231.

Bardi, E.P., Koutinas, A.A., Soupioni, M.J. & Kanellaki, M.E., 1996. Immobilization of Yeast on Delignified Cellulosic Material for Low Temperature Brewing. *Journal of Agriculture and Food Chemistry*, **44**, 463.

Berkman, P, D. & Calabrese, R, V., 1988. Dispersion of Viscous Liquids by Turbulent Flow in a Static Mixer. *American Institute of Chemical Engineering Journal.* **34**, 602.

Borremans, E., 1997. Secondary Fermentation of Beer with Immobilized Yeast. *Cerevisia Belgian Journal of Brewing & Biotechnology,* **22**, 33.

Bower, J.L. & Christensen, CM., 1995. Disruptive Technologies: Catching the Wave. *Harvard Business Review,* **73**, 43.

Breitenbücher, K. & Mistler, M., 1995. Fluidized Bed Fermenters for the Continuous Production of Non-Alcoholic Beer with Open-Pore Sintered Glass Carriers. *European Brewery Convention Symposium*: *Immobilized Yeast Applications in the Brewing Industry, Espoo, Finland,* 77.

Brewers Association of Canada, 1988. *About Beer And The Brewing Industry,* Ottawa, Ontario.

Broderick, Harold M., 1979. *The Practical Brewer: A Manual for the Brewing Industry,* 2nd Ed. Impressions Inc., Wisconsin.

Bums, J.A., 1937. *Journal of the Institute of Brewing*, **43**, 31.

Calleja, G.B. & Johnson, B.F., 1977. A Comparison of Quantitative Methods for Measuring Yeast Flocculation. *Canadian Journal of microbiology*, **23**, 68.

Carberry, J.J., 1976. *Chemical and Catalytic Reaction Engineering*, McGraw-Hill.

Carberry, J.J. & Varma, A., 1987. *Chemical Reaction and Reactor Engineering*, Marcel Dekker Inc., New York.

Cashin, M.-M., 1996. Comparative Studies of Five Porous Supports for Yeast Immobilization by Adsorption/Attachment. *Journal of the Institute of Brewing*, **102**, 5.

Champagne, C.P., 1994. Overview: Immobilized Cell Technology in Food Processing. *Proceedings of the Bioencapsulation Research Group IV*, *Quebec, Canada*, 33.

Chang, C.M., Lu, W.J., Own, K.S. & Hwang, S.J., 1994. Comparison of Airlift and Stirred Tank Reactors for Immobilized Enzyme Reactions. *Process Biochemistry*, **29**, 133.

Chao, X., Ye, G. & Shi, S., 1990. Kinetic Study of the Continuous Fermentative Process of Green Beer Production with Immobilized Yeast. *Huagong Jixie,* **17**,18.

Chibata, I., 1979. Immobilized Microbial cells with Polyacrylamide Gel and Carrageenan and their Industrial Applications. American Chemical Society Series, **106**, 197.

Chisti, M.Y., 1991. *Airlift Bioreactors,* Elsevier Applied Science, New York.

Chisti, Y. & Moo-Young, M., 1993. Improve the Performance of Airlift Reactors. *Chemical Engineering Progress,* **6**, 38.

Chladek, L., Voborsky, J., Sima, J. & Hosek, Z., 1989. *Prumysl Potravin*, **40**, 590.

Coe, H.S. & Clevenger, G.H., 1916. Methods for Determining the Capacities of Slime Thickening Tanks. *Transcripst of the American Institute of Mechanical Engineering,* **55**, 356.

Curin, J., Pardonova, B., Polednikova, M., Sedova, H. & Kahler, M., 1987. Beer Production with Immobilized Yeast. *Proceedings of the European Brewery Convention, Madrid,* 433.

Decamps, C. & Norton, S., 1994. New Emulsion Process using Static Mixer for the Production of □-Carrageenan Gel Beads. Labatt Breweries of Canada Internal Report.

Del Pozo, M., Briens, C.L. & Wild, G., 1994. Effect of Liquid Coalescing Properties on Mass Transfer, Heat Transfer and Hydrodynamics in a Three-Phase Fluidized Bed. *The Chemical Engineering Journal*, **55**, 1.

Dillenhofer, W. & Ronn, D., 1996a. Alfa Laval/Schott System of Secondary Fermentation with Immobilized Yeast. *Brewing & Distilling International,* **27**, 35.

Dillenhofer, W. & Ronn, D., 1996b. Secondary Fermentation of Beer With Immobilized Yeast. *Brauwelt International,* **14**, 344.

Dillenhoffer, W. & Ronn, D., 1996c Continuous Maturation of Beer. *Beverage World International*, 34.

Domeny, Z., Smogrovicova, D., Gemeiner, P., Malovikova, A. & Sturdik, E., 1996. Calcium Pectate Gel to Immobilize Yeast for Continuous Beer Production. *Proceedings of the Bioencapsulation Research Group V, Potsdam, Germany,* Poster 12.

Domingues, L., Lima, N. & Teixeira, J.A., 2000. Contamination of a High-Cell-Density Continuous Bioreactor. *Biotechnology and Bioengineering,* **68**, 584.

Donnelly, D., 1998. Kinetics of Sugar Metabolism in a Fluidized Bed Bioreactor for Beer Production. *Master Brewers Association of the Americas Annual Convention,* Minneapolis, Poster 8.

Donnelly, D., Bergin, J., Gardiner, S. & Cahill, G., 1998. Kinetics of Sugar Metabolism in a Fluidized Bed Bioreactor for Beer Production. *Master Brewers Association of the Americas Technical Quarterly,* **36**, 183.

Dulieu, C., Boivin, P., Malanda, M., Dautzenberg, H. & Poncelet, D., 1997. Encapsulation of $\alpha$-Acetolactate Decarboxylase to Avoid Diacetyl Formation. *Proceedings of the European Brewery Convention Congress, Maastricht,* Poster 44.

Duncombe, D., Bower, P., Bromberg, S., Fehring, J., Lau, V. & Tata, M., 1996. The Contribution of Free Cells in an Immobilized Yeast System. *Journal of the American Society of Brewing Chemists,* Poster Presentation.

Dziondziak, K. & Seiffert, T., 1995. Process for the Continuous Production of Alcohol-Free Beer. *Proceedings of the European Brewery Convention Congress, Brussels,* 301.

Enari, T.-M., 1995. State of the Art of Brewing Research. *Proceedings of the European Brewery Convention Congress, Brussels,* 1.

Fix, G., 1989. Principles of Brewing Science. Brewers Publications, USA.

Fouhy, K. & Parkinson, G., 1996. Brewers Break with Tradition. *Chemical Engineering,* **103**, 45.

Gil, G.H., 1991. Continuous Ethanol Production in a Two-Stage, Immobilized and Suspended Cell Bioreactor (Alcohol Dehydrogenase). *Ph.D. Thesis,* Georgia Institute of Technology.

Gilliland, R.B., 1951. The Flocculation Characteristics of Brewing Yeasts During Fermentation. *Proceedings of the European Brewing Convention*, **8**, 35.

Groboillot, A., D.K. Boadi, D. Poncelet & Neufeld, R.J., 1994. Immobilization of Cells for Application in the Food Industry. *Critical Reviews in Biotechnology*, **14**, 75.

Haikara, A., Virkajarvi, I., Kronlof, J. & Pajunen, E., 1997. Microbial Contaminations in Immobilized Yeast Bioreactors for Primary Fermentations. *Proceedings of the European Brewery Convention Congress*, 439.

Heggart, H.M., Margaritis, A., Pilkington, H., Stewart, R.J., Dowhanick, T.M. & Russell, I., 1999. Factors Affecting Yeast Viability and Vitality Characteristics: A Review. *Master Brewers Association of the Americas Technical Quarterly,* **36**, 383.

Heijnen, J.J., Mulder, A., Enger, W. & Hoeks, F., 1989. Review on the Application of Anaerobic Fluidized Bed Reactors in Waste-Water Treatment. *The Chemical Engineering Journal*, **41**, B 37.

Heijnen, J.J., Mulder, A., Weltevrede, R., Hols, J. & van Leeuwen, H.L.J.M., 1991. Large Scale Anaerobic-Aerobic Treatment of Complex Industrial Waste-Water Using Biofilm Reactors. *Water Science Technology*, **23**, 1427.

Heijnen, J.J., Van Loosdrecht, M.C.M., Mulder, R.W.R. & Mulder, A., 1993. Development and Scale-Up of an Aerobic Biofilm Air-Lift Suspension Reactor. *Water Science Technology,* **27**, 253.

Helm, E., Nohr, B. & Thome, R.S.W., 1953. The Measurement of Yeast Flocculence and its Significance in Brewing. *Wallerstein Laboratories Communications*, **16**, 315.

Horitsu, H., Wang, M.Y. & Kawai, K., 1991. A Modified Process for Soy Sauce Fermentation by Immobilized Yeasts. *Agricultural and Biological Chemistry,* **55**, 269.

Hryclik, Kevin, Gerry Ginter, Jim Helmke, & Jim Spiers, 1987. *The How's And Why's of Brewing*, Revision #2, LBOC.

Hunik, J.H., Tramper, J. & Wijffels, R.H., 1994. A Strategy to Scale Up Nitrification Processes with Immobilized Cells of *Nitrosomonas europaea* and *Nitrobacter agilis. Bioprocess Engineering,* **11**, 73.

Hwang, S.-J. & Fan, L.-S., 1986. Some Design Considerations of a Draft Tube Gas-Liquid-Solid Spouted Bed. *The Chemical Engineering Journal*, **33**, 49.

Hyttinen, I., Kronlof, J. & Hartwall, P., 1995. Use of Porous Glass at Hartwall Brewery in the Maturation of Beer with Immobilized Yeast. *European Brewery Convention Symposium: Immobilized Yeast Applications in the Brewing Industry, Espoo, Finland, 55.*

Ibrahim, Y.A.A., Briens, C.L., Margaritis, A. & Bergouguou, M.A., 1996. Hydrodynamic Characteristics of a Three-Phase Inverse Fluidized Bed Column. *Journal of the American Institute of Chemical Engineering, 42,* 1889.

Inoue, T., 1995. Development of a Two-Stage Immobilized Yeast Fermentation System for Continuous Beer Brewing. *Proceedings of the European Brewery Convention Congress*, *Brussels*, 25.

Iserentant, D., 1995. Beers: Recent Technological Innovations in Brewing. *Fermented Beverage Production*. (A.G.H. Lea & J.R Piggott, eds.) London: Chapman & Hall, 45.

Kaplan, R.S. & Norton, D.P., 1996. The Balanced Scorecard. *President and Fellows of Harvard College*, *Harvard Business School Press*, Massachusetts, USA.

Karamanev, D.G., Nagamune, T. & Endo, I., 1992. Hydrodynamic and Mass Transfer Study of a Gas-Liquid-Solid Draft Tube Spouted Bed Bioreactor. *Chemical Engineering Science*, **47**,3581.

Karel, S.F., Libicki, S.B. & Robertson, C.R, 1985. The Immobilization of Whole Cells: Engineering Principles. *Chemical Engineering Science*, **40**, 1321.

Katzbauer, B., Narodoslawsky, M. & Moser, A., 1995. Classification System for Immobilization Techniques. *Bioprocess Engineering,* **12**, 173.

Kennard, M. & Janekeh, M., 1991. Two- and Three-Phase Mixing in a Concentric Draft Tube Gas-Lift Fermentor. *Biotechnology and Bioengineering, 38*, 1261.

Kolot, F.B., 1988. *Immobilized Microbial Systems: Principles*, *Techniques and Industrial Applications.* Robert E. Krieger Publishing Company, Florida.

Kolpachki, A.P., Isaeva, V.S., Kazantsev, E.N. & Fertman, G.I., 1980. Intensification of Wort Fermentation with Immobilized Yeasts. *Fermentnaya I Spirtovaya Promyshlennost*, **9***.*

Krikilion, Ph., Andries, M., Goffin, O., van Beveren, P.C. & Masschelein, C.A., 1995. Optimal Matrix and Reactor Design for High Gravity Fermentation with Immobilized Yeast *Proceedings of the European Brewery Convention Congress, Brussels,* 419.

Kronlof, J., 1994. Immobilized Yeast in Continuous Fermentation of Beer. Ph.D. Thesis, VTT Publications, 167.

Kronlof, J., Linko, M. & Pajunen, E., 1995. Primary Fermentation with a Two-Stage Packed Bed System Pilot Scale Experiences. *European Brewery Convention Symposium: Immobilized Yeast Applications in the Brewing Industry, Espoo, Finland,* 118*.*

Kronlof, J. & Virkajarvi, I., 1996. Main Fermentation with Immobilized Yeast - Pilot Scale *European Brewery Convention Brewing Science Group Bulletin, Zoeterwoude,* 94*.*

Kronlof, J., Virkajarvi, I., Storgards, E.L., Londesborough, J. & Dymond, G., 2000. Combined Primary and Secondary Fermentation with Immobilized Yeast. *World Brewing Congress,* Poster #56.

Ku, W.Y., 1982. Fermentation Kinetics for the Production of Ethanol by Immobilized Yeast Cells (Biomass). *Ph.D. Thesis,* The Louisiana State University and Agricultural and Mechanical College.

Kunze, W., 1999. Technology Brewing and Malting. VLB Berlin, Germany.

Kynch, G.J., 1952. *Transcripts of the Faraday Society,* **48**, 166.

Lacroix, C., Paquin, C. & Arnaud, J.P., 1990. Batch Fermentation with Entrapped Growing Cells of *Lactobacillus casei:* Optimization of the Rheological Properties of the Entrapment Gel Matrix. *Applied Microbiology and Biotechnology,* **32**, 403.

Levenspiel, O., 1972. Chemical Reaction Engineering. *John Wiley & Sons,* New York.

Linko, M., Virkajarvi, I., Pohjala, N., Lindborg, K., Kronlof, J. & Pajunen, E., 1997. Main Fermentation with Immobilized Yeast - A Breakthrough?. *Proceedings of the European Brewery Convention, Maastricht,* 385.

Livingston, A.G. & Chase, H.A., 1990. Liquid-Solid Mass Transfer in a Three Phase Draft Tube Fluidized Bed Reactor. *Chemical Engineering Communications, 92*, 225.

Livingston, A.G. & Zhang, S.F., 1993. Hydrodynamic Behaviour of Three-Phase (Gas-Liquid-Solid) Airlift Reactors. *Chemical Engineering Science*, **48**, 1641.

Lommi, H., 1990. Immobilized Yeast for Maturation and Alcohol-Free Beer. *Brewing and Distilling International,* **21**, 23.

Lommi, H., Gronqvist, A., & Pajunen, E., 1990. Immobilized Yeast Reactor Speeds Beer Production. *Food Technology,* **5**, 128.

Lorenzen, K.; 1996. Immobilized Yeast Plants for Alcohol-Free Beer Production and Rapid Maturation. *Proceedings of the Institute of Brewing Convention, Singapore, 244.*

Maeba, H., Umemoto, S., Sato, M. & Shinotsuka, K., 2000. Primary Fermentation with Yeast Immobilized in Porous Chitosan Beads - Pilot Scale Trial. *Proceedings of the 26th Convention of the Institute of Brewing - Asia Pacific Section,* 82.

Mafra, L, Machado Cruz, J.M. & Teixeira, J.A., 1997. Beer Maturation in a Continuously Operating Bioreactor using a Flocculating Brewer's Yeast Strain. *Proceedings of the European Brewery Convention,* 509.

Maiorella, B.L., 1983. *Fermentative Ethanol Production (Alcohol, Distillation, Economics).* Ph.D. Thesis, University of California, Berkeley.

Margaritis, A., 1975. *A Study of the Rotorfermentor and the Kinetics of Ethanol Fermentation.* Ph.D. Thesis, University of California, Berkeley.

Margaritis, A., & Bajpai, P., 1982a. Continuous Ethanol Production from Jerusalem Artichoke Tubers, Part I. Use of Free Cells of *Kluyveromyces marxianus. Biotechnology and Bioengineering*, **24**, 1473.

Margaritis, A., & Bajpai, P., 1982b. Continuous Ethanol Production from Jerusalem Artichoke Tubers, Part II. Use of Immobilized Cells of *Kluyveromyces marxianus. Biotechnology and Bioengineering*, **24**, 1483.

Margaritis, A. & Merchant, F., 1984. Advances in Ethanol Production Using Immobilized Cell Systems. *Critical Reviews in Biotechnology,* **1**, 339.

Margaritis, A. & Rowe, G.E., 1983. Ethanol Production Using *Zymomonas mobilis* Immobilized in Different Carrageenan Gels. *Developments in Industrial Microbiology*, **24**, 329.

Margaritis, A., te Bokkel, D. & El Kashab, M., 1987. Repeated Batch Fermentation of Ethanol Using Immobilized Cells of *Saccharomyces cerevisiae* in a Fluidized Bioreactor Systesm. *Biological Research on Industrial Yeasts. Volume I,* (G.G. Stewart, I. Russell, R.D. Klein & R.R. Hiebsch, eds.) Boca Raton: CRC Press, 121.

Margaritis, A. & Wallace, JB, 1982. The Use of Immobilized Cells of *Zymomonas mobilis* in a Novel Fluidized Bioreactor to Produce Ethanol. *Fourth Symposium on Biotechnology in Energy Production and Conservation,* Gatlinburg, Tennessee, **12**, 147.

Margaritis, A. & Wallace, J.B., 1984. Novel Bioreactor Systems and their Applications. *Bio/Technology,* **2**, 447.

Margaritis, A. & Wilke, C.R., 1978a. The Rotorfermentor. Part I: Description of the Apparatus, Power Requirements, and Mass Transfer Characteristics. *Biotechnology & Bioengineering,* **20**, 709.

Margaritis, A. & Wilke, C.R., 1978b. The Rotorfermentor: Part II: Application to Ethanol Fermentation. *Biotechnology & Bioengineering,* **20**, 727.

Masschelein, C.A., 1997. A Realistic View on the Role of Research in the Brewing Industry Today. *Journal of* the Institute *of Brewing*, **103,** 103.

Masschelein, CA., 1994. State-of-the-Art and Future Developments in Fermentation. *Journal of the American Society of Brewing Chemists,* **52**, 1.

Masschelein, C.A. & Andries, M., 1996a. The Meura-Delta Immobilised Yeast Fermenter for the Continuous Production of Beer. *Cerevisia Belgian Journal of Brewing* & *Biotechnology,* **21**, 28.

Masschelein, C.A. & Andries, M., 1996b. Meura-Delta's Immobilized Yeast Fermenter for Continuous Beer Production. *Brewing & Distilling International,* **27**, 16.

Masschelein, C.A., Andries, M., Franken, F., Van de Winkel, L. & Van Beveren, P.C., 1995. The Membrane Loop Concept: A New Approach for Optimal Oxygen Transfer into High Cell Density Pitching Yeast Suspensions. *Proceedings of the European Brewery Convention Congress, Brussels,* 377.

Masschelein, C.A., Ryder, D.S. & Simon, J-P., 1994. Immobilized Cell Technology in Beer Production. *Critical. Reviews in Biotechnology,* **14**, 155.

Matsuura, K., Hirotsune, M., Nakada, F. & Hamachi, M., 1991. A Kinetic Study on Continuous Sake Fermentation. *Hakkokogaku Kaishi,* **69**, 345.

McCabe, J.T., 1999. The Practical Brewer: A Manual for the Brewing Industry. Master Brewers Association of the Americas, USA.

Mensour, N.A., Margaritis, A., Briens, C.L., Pilkington, H. & Russell, I., 1997. New Developments in the Brewing Industry Using Immobilized Yeast Cell Bioreactor Systems. *Journal of the Institute of Brewing*, **103**, 363.

Mensour, N.A., Margaritis, A., Briens, C.L., Pilkington, H. & Russell, I., 1996. Application of Immobilized Yeast Cells in the Brewing Industry. *Immobilized Cells: Basics and Applications.* (R.H. Wijffels, R.M. Buitelaar, C. Bucke & J. Tramper, eds.) Amsterdam: Elsevier Science, 661.

Mensour, N., Margaritis, A., Briens, C.L., Pilkington, H. & Russell, I., 1995. Gas Lift Systems for Immobilized Cell Fermentation. *European Brewery Convention Symposium: Immobilized Yeast Applications in the Brewing Industry,* Espoo, Finland, 125.

Mensour, N., Margaritis, A., Russell, I., Briens, C.L., Decamps, C. & Norton, S., 1994. Beer Production with Immobilized Yeast Cells in a Pilot Plant Scale Airlift Reactor. *Proceedings of the Bioencapsulation Research Group IV, Quebec, Canada,* 49.

Middleman, S., 1974. Drop Size Distributions Produced by Turbulent Pipe Flow of Immiscible Fluids Through a Static Mixer. *Industrial Engineering and Chemical Process Design and Development*, **13**, 78.

Mieth, H.O., 1995. Immobilized Yeast Plants for Alcohol Free Beer Production and Rapid Maturation. *Proceedings of the Institute of Brewing Convention*, *Victoria Falls*, 166.

Mistler, M., Breitenbücher, K. & Jaeger, R., 1995. Continuous Fermentation of Beer with Yeast Immobilized on Porous Glass Carriers. *Brewers Digest,* **70**, 48.

Moll, M. & Duteurtre, B., 1996. Fermentation and Maturation of Beer with Immobilized Microorganisms. *Brauwelt International,* **3**, 248.

Motai, H., Hamada, T. & Fukushima, Y., 1993. Application of a Bioreactor System to Soy Sauce Production. in *Industrial Applicationof Immobilized Biocatalysts.* (A. Tanaka, T. Tosa & T. Kobayashi, eds.) New York: Marcel Dekker, 315.

Muhr, A.H. & Blanchard, M.V., 1982. Diffusion in Gels. *Polymer,* **23**, 1012.

Mwesigye, P.K. & Barford, J.P., 1994. Transport of Sucrose by *Saccharomyces cerevisiae. Journal of Fermentation and Bioengineering,* **77**, 687.

Nakanishi, K., Murayama, H., Nagara, A. & Mitsui, S., 1993. Beer Brewing Using an Immobilized Yeast Bioreactor System. in *Industrial Applications of Immobilized Biocatalysts.* (A. Tanaka, T. Tosa & T. Kobayashi, eds.) New York: Marcel Dekker, 275.

Nakanishi, K., T. Onaka, T. Inoue & Kubo, S., 1985. A New Immobilized Yeast Reactor System for Rapid Production of Beer. *Proceedings of the 20th European Brewing Convention Congress*, Helsinki, 331.

Nakatani, K., Takahashi, T., Nagami, K. & Kumada, J., 1984. Kinetic Study of Vicinal Diketones in Brewing (I) Formation of Total Vicinal Diketones. *Master Brewers Association of the Americas Technical Committee*, **21**, 73.

Nedovic, V.A., Leskosek-Cukalovic, I. & Vunjak Novaki, G., 1996a. Short-Time Fermentation of Beer in an Immobilization Yeast Air-Lift Bioreactor. *Proceedings of the Institute of Brewing Convention, Singapore*, 244.

Nedovic, V.A., Vunjak-Novakovic, G., Leskosek-Cukalovic, I. & Cutkovic, M., 1996b. A Study on Considerably Accelerated Fermentation of Beer Using an Airlift Bioreactor with Calcium Alginate Entrapped Yeast Cells. *Proceedings of the 5th World Congress of Chemical Engineering, San Diego,* 474.

Neufeld, R.J., Norton, S. & Poncelet, D.J.C.M., 1994. Immobilized-Cell Carrageenan Bead Production and a Brewing Process Utilizing Carrageenan Bead Immobilized Yeast Cells. *Canadian Patent Application* 2,133,789.

Nguyen, A.L. & Luong, J.H.T., 1986. Diffusion in k-Carrageenan Gel Beads. *Biotechnology and Bioengineering,* 28, 1261.

Nielsen, J. & Villadsen, J., 1994. Bioreactor Modeling. *Bioreaction Engineering Principles*, Plenum Press, New York, 9.

Norton, S. & D'Amore, T., 1994. Physiological Effects of Yeast Cell Immobilization: Applications for Brewing. *Enzyme and Microbial Technology*, **16**, 365.

Norton, S., Neufeld, R.J. & Poncelet, D.J.C.M., 1994. Immobilized-Cell Carrageenan Bead Production and a Brewing Process Utilizing Carrageenan Bead Immobilized Yeast Cells. *Canadian Patent Application* 2,133,789.

Norton, S., Mensour, N., Margaritis, A., Briens, C.L., Decamps, C. & Russell, I., 1994. Pilot Scale Primary Fermentation of Beer with a Gaslift Immobilized Yeast Reactor. *Proceedings of the European Brewing Convention, Sub-Committee,* Dublin.

Norton, S., Watson, K. & D'Amore, T., 1995. Ethanol Tolerance of Immobilized Brewers' Yeast Cells. *Applied Microbiology & Biotechnology,* **43**, 18.

Notbaft, A., 1995. The Start-Up of an Immobilized Yeast System for Secondary Fermentation at Brahma. *European Brewery Convention Symposium: Immobilized Yeast Applications in the Brewing Industry, Espoo, Finland,* 41.

Nunokawa, Y. & Hirotsune, M., 1993. Production of Soft Sake by an Immobilized Yeast Reactor System, in *Industrial Application of Immobilized Biocatalysts.* (A. Tanaka, T. Tosa & T. Kobayashi, eds.) New York: Marcel Dekker, 235.

Pajunen, E., 1996a. The Behaviour of Immobilized Yeast Cells. *Cerevisia Belgian Journal of Brewing & Biotechnology,* **21**, 33.

Pajunen, E., 1996b. Immobilized System in the Brewing Industry. *Proceedings of the Institute of Brewing Convention, Singapore,* 38.

Pajunen, E., 1995. Immobilized Yeast Lager Beer Maturation: DEAE-Cellulose at Sinebrychoff. *European Brewery Convention Symposium: Immobilized Yeast Applications in the Brewing Industry, Espoo, Finland, 24.*

Pajunen E. & Gronqvist A., 1994. Immobilized Yeast Fermenters for Continuous Lager Beer Maturation. *Proceedings for the Institute of Brewing Convention, Sydney, 101.*

Pajunen, E., A. Gronqvist & Lommi, H., 1989. Continuous Secondary Fermentation and Maturation of Beer in an Immobilized Yeast Reactor. *MBAA Technical Quarterly,* **26**, 147.

Pajunen, E., Gronqvist, A., Simonsen, B. & Lommi, H., 1994. Immobilized Yeast Fermenters for Continuous Lager Beer Maturation. *ALAFACE Annual Meeting*, *Quito*, 13.

Pajunen, E., Ranta, B., Andersen, K., Lommi, H., Viljava, T., Bergin, J. & Guercia, H., 2000a. Novel Process for Beer Fermentation with Immobilized Yeast *Proceedings of the 26th Convention of the Institute of Brewing, Asia-Pacific Section*, 91.

Pajunen, E., Viljava, T. & Lommi, H., 2000b. Novel Primary Fermentation with Immobilzied Yeast System. *World Brewing Congress*, Oral presentation.

Paul, F. & Vignais, P.M., 1980. Photophosphorylation in Bacterial Chromatophores Entrapped in Alginate Gel: Improvement of the Physical and Biochemical Properties of Gel Beads with Barium as Gel-Inducing Agent *Enzyme and Microbial Technology, 2*, 281.

Peach, M., 1996. Fermenting Faster Pints. *New Scientist,* **2058**, 23.

Pilkington, P.H, Margaritis, A. & Mensour, N.A., 1998a. Mass Transfer Characteristics of Immobilized Cells Used in Fermentation Processes. *Critical Reviews in Biotechnology, 18*, 237.

Pilkington, P.H., Margaritis, A., Mensour, N.A. & Russell, I., 1998b. Fundamentals of Immobilized Yeast Cells for Continuous Beer Fermentation: A Review. *Journal of the Institute of Brewing, 104*, 19.

Pilkington, H., Margaritis, A., Mensour, N., Sobczak, J., Hancock, I. & Russell, I., 1999. Kappa-Carrageenan Gel Immobilization of Lager Brewing Yeast. *Journal of the Institute of Brewing, 105*, 398.

Pirt, SJ., 1975. *Principles of Microbe and Cell Cultivation,* Blackwell Scientific, Oxford. Pittner, H. & Back, W., 1995. Continuous Production of Acidified Wort for Alcohol Free Beer Using Immobilized Lactic Acid Bacteria. *Master Brewers Association of the Americas TechnicalQuarterly,* **32**, 163.

Pittner, H., W. Back, W. Swinkels, E. Meersman, B. van Dieren & Lommi, H.,1993. Continuous Production of Acidified Wort for Alcohol-Free Beer Using Immobilized Lactic Acid Bacteria. *Proceedings of the 24th European Brewing Convention Congress,* Oslo, 323.

Polednikova, M., Sedova, H. & Kahler, M., 1981. Immobilized Brewing Yeast. *Kvasny Prumysl,* **27**, 193.

Poncelet, D., Lencki, R., Beaulieu, C., Halle, J, P., Neufeld, R J. & Fournier, A., 1992. Production of Alginate Beads by Emulsification/Internal Gelation. *Applied Microbiology & Biotechnology,* **38**, 39.

Poncelet, D., Poncelet de Smet, B., Beaulieu, C. & Neufeld, R. J., 1993. Scale Up of Gel Bead and-Microcapsule Production in Cell Immobilization. in *Fundamentals of Animal Cell Encapsulation and Immobilization,* Goosen, M.F.A., Ed., CRC Press Inc., Boca Raton, Florida.

Prakash, A., Briens, C.L. & Bergougnou, M.A., 1987. Mass Transfer Between Solid Particles and Liquid in a Three Phase Fluidized Bed. *The Canadian Journal of Chemical Engineering,* **65**, 228.

Prasad, K.Y. & Ramanujam, T.K., 1995. Overall Volumetric Mass Transfer Coefficient in a Modified Reversed Flow Jet Loop Bioreactor with Low Density Particles. *Bioprocess Engineering,* **12**, 214.

Pritchett, Price. 1993. *Culture Shift.* Texas: Pritchett & Associates, Inc. Que, F., 1993. Using a Thread Type of Alginate Gel Particles as Cell-Immobilised Support and Some Concept of Packed Bed Fermenter Design. *Biotechnology Techniques,* **7**, 755.

Rajotte, P., 1998. Continuous Fermentation with Immobilized Yeast Cells. *American Brewer,* **76**, 42.

Rajotte, P., 1997. Jumping into the Next Millenium Canadian Style. *American Brewer,* **75**, 42.

Russell, I., Norton, S., Mensour, N., Margaritis, A. & Briens, C., 1995. Immobilized Yeast Cells: Applications for Brewing; *Proceedings of the Institute of Brewing Convention, Victoria Falls,* 159.

Ryder, D.S. & Masschelein, C.A., 1985. The Growth Process of Brewing Yeast and the Biotechnological Challenge. *Journal of the American Society of Brewing Chemists.* **43**, 66.

Satterfield, C.N., 1970. *Mass Transfer in Heterogeneous Catalysts,* MIT Press, Cambridge.

Scott, J.A., O'Reilly, A.M. & Kirkhope, S., 1995. A Fibrous Sponge Matrix to Immobilized Yeast for Beverage Fermentations. *Biotechnology Techniques,* **9**, 305.

Shindo, S. & Kamimur, M., 1990. Immobilization of Yeast with Hollow PVA Gel Beads. *Journal of Fennentation and Bioengineering,* **70**, 232.

Shindo, S., Sahara, H. & Koshino, S., 1994a. Suppression of α-Acetolactate Formation in Brewing with Immobilized Yeast *Journal of the Institute of Brewing* **100**, 69.

Shindo, S., Sahara, H., Koshino, S. & Tanaka, H., 1993. Control of Diacetyl Precursor [☐-acetolactate] Formation During Alcohol Fermentation with Yeast Cells Immobilized in Alginate Fibers with Double Gel Layers. *Journal of Fermentation and Bioengineering,* **76**,199.

Shindo, S, Sahara, S, Watanabe, N. & Koshino, S., 1994b. Main Fermentation with Immobilized Yeast Using Fluidized-Bed Reactor. *Proceedings of the Institute ofBrewing Convention, Sydney,* 109.

Sinitsyn, A.P., Rajnina, E.I., Efremov, A.B., Gracheva, I.M. & Gemet, M.V., 1986. Fermentation of Hydrolysed Mash by Yeasts Immobilized on Borosilicate Carriers. *Fermentnaya I Spirtovaya Promyshlennost*, 31.

Smogrovicova, D. & Domeny, Z., 1999. Beer Volatile By-Product Formation at Different Fermentation Temperature using Immobilized Yeasts. *Process Biochemistry,* **34**, 785.

Smogrovicova, D., Domeny, Z. Gemeiner, P. Malovikova, A. & Sturdik, E., 1997. Reactors for Continuous Primary Beer Fermentation using Immobilized Yeast, *Biotechnology Techniques*, **11**, 261.

Sodini, I., Boquien, C.Y., Corrieu, G. & Lacroix, C., 1997. Use of an Immobilized Cell Bioreactor for the Continuous Inoculation of Milk in Fresh Cheese Manufacturing. *Journal of Industrial Microbiology & Biotechnology*, **18**, 56.

Speers, R.A. & Ritcey, L.L., 1995. Towards an Ideal Flocculation Assay. *Journal of the American Society of Brewing Chemists*, 174.

Stewart, G.G., 1996. Brewing Technology for the Future. *The Brewer*, **82**, 348.

Stewart, G.G. & Russell, 1., 2000. *Brewer's Yeast.* The Institute of Brewing, England.

Stewart, G.G. & Russell, I., 1981. Yeast Flocculation, in *Brewing Science,* Ed. J.R.A. Pollock, Academic Press, New York.

Stratford, M., 1996. Yeast Flocculation: Restructuring the Theories in Line with Recent Research, *Cerevisiae Belgium Journal of Biotechnology,* 38.

Sumino, T., Nakamura, H. & Mori, N., 1993. Development of a High-Efficiency Wastewater Treatment System Using Immobilized Microorganisms. in *Industrial Application of Immobilized Biocatalysts.* (A. Tanaka, T. Tosa & T. Kobayashi, eds.) New York: Marcel Dekker, 377.

Tata, M., Bower, P., Bromberg, S., Duncombe, D., Fehring, J., Lau, V., Ryder, D. & Stassi, P. 1999. Immobilized Yeast Bioreactor Systems for Continuous Beer Fermentation. *Biotechnology Progress,* **15**, 105.

Technical Committee and Editorial Committee of the American Society of Brewing Chemists. 1992. *Methods of Analysis.* 8th Edition, Minnesota, ASBC.

Teixera, J.M., Teixera, J.A., Mota, M., Manuela, M., Guerra, B., Machado Cruz, J.M. & Sa Almeida, A.M., 1991. The Influence of Cell Wall Composition of a Brewer's Flocculent Lager Yeast on Sedimentation During Successive Industrial Fermentations. *Proceedings of the European Brewery Congress,* 241.

Umemoto, S., Mitani, Y. & Shinotsuka, K, 1998. Primary Fermentation with Immobilized Yeast in a Fluidized Bed Reactor. *Master Brewers Association of the Americas Technical Quarterly,* **35**, 58.

Van de Winkel, L., 1995. Design and Optimization of a Multipurpose Immobilized Yeast Bioreactor for Brewery Fermentations. *Cerevisia Belgian Journal of Brewing & Biotechnoloy,* **20**, 77.

Van de Winkel, L. & De Vuyst, L., 1997. Immobilized Yeast Cell Systems in Today's Breweries and Tomorrow's. *Cerevisia Belgian Journal of Brewing & Biotechnology,* **22**, 27.

Van de Winkel, L., McMurrough, I., Evers, G., Van Beveren, P.C. & Masschelein, C.A., 1995. Pilot-Scale Evaluation of Silicon Carbide Immobilized Yeast Systems for Continuous Alcohol-Free Beer Production. *European Brewery Convention Symposium: Immobilized Yeast Applications in the Brewing Industry, Espoo, Finland,* 90.

Van de Winkel, L., P.C. van Beveren & C.A. Masschelein, 1991a. The Application of an Immobilized Yeast Loop Reactor to the Continuous Production of Alcohol-Free Beer. *Proceedings of the 23rd European Brewing Convention Congress,* Lisbon, 577.

Van de Winkel, L., P.C. van Beveren, E. Borremans, E. Goosens & C.A. Masschelein, 1991b. High Performance Immobilized Yeast Reactor Design for Continuous Beer Fermentation. *Proceedings of the 24th European Brewing Convention Congress, Oslo,* 307.

Van Dieren, B., 1995. Yeast Metabolism and the Production of Alcohol-Free Beer. *European Brewery Convention Symposium: Immobilized Yeast Applications in the Brewing Industry, Espoo, Finland,* 66.

Van Iersel, M.F.M., Meersman, E., Swinkels, W., Abee, T. & Rombouts, F.M., 1995. Continuous Production of Non-Alcohol Beer by Immobilized Yeast at Low Temperature. *Journal of Industrial Microbiology*, **14**, 495.

Van Loosdrecht, M.C.M. & Heijnen, J.J., 1993. Biofilm Bioreactors for Waste-Water Treatment. *Trends in Biotechnology,* **11**, 117.

Vicente, A.A., Dluhy, M. & Teixeira, J.A., 1999. Increase of Ethanol Productivity in an Airlift Reactor with a Modified Draught Tube. *The Canadian Journal of Chemical Engineering*, **77**, 497.

Virkajarvi, I. & Linko, M., 1999. Immobilization: A Revolution in Traditional Brewing. *Naturwissehschaften,* **86**, 112.

Virkajarvi, I. & Kronlof, J., 1998. Long Term Stability of Immobilized Yeast Columns in Main Fermentation. *Journal of the American Society of Brewing Chemists,* **56**, 70.

Virkajarvi, I. & Pohjala, N., 1999. Profiting from Immobilized Fermentation. *Proceedings of the 5th Aviemore Conference on Malting, Brewing and Distilling,* 290.

Wackerbauer, K., Fitzner, M. & Gunther, J., 1996a. Technisch-technologische Moglichkeiten mit immobilisierter Hefe. *Brauwelt.* **136**, 2140.

Wackerbauer, K., Fitzner, M. & Lopsien, M., 1996b. Untersuchungen mit dem Neuen MPI-Bioreaktor-System. *Brauwelt*, **136**, 2250.

Webb, C., G.M. Black & B. Atkinson, 1986. *Process Engineering Aspects of Immobilized Cell System.* England: The Institution of Chemical Engineers.

Westrin, B.A. & A. Axelsson, 1991. Diffusion in Gels Containing Immobilized Cells: A Critical Review. *Biotechnology and Bioengineering,* **38**, 439.

Wu, W.T., Wu, J.Y: & Jong, J.Z., 1992. Mass Transfer in an Airlift Reactor with a Net Draft Tube. *Biotechnology Progress,* **8**, 465.

Yamane, T., 1981. On Approximate Expressions of Effectiveness Factors for Immobilized Biocatalysts. *Journal of*

*Fermentation Technology,* **59**, 375.

Yamauchi, Y. & Kashihara, T., 1995a. Kirin Immobilized System. *European Brewery Convention Symposium: Immobilized Yeast Applications in the Brewing Industry, Espoo, Finland,* 99.

Yamauchi, Y., Kashihara, T., Murayama, H., Nagara, A., Okamoto, T. & Mawatari, M., 1994. Scaleup of Immobilized Yeast Bioreactor for Continuous Fermentation of Beer. *Master Brewers Association of the Americas Technical Quarterly,* **31**, 90.

Yamauchi, Y., Okamoto, T., Murayama, H., Kajino, K., Amikura, T., Hiratsu, H., Nagara, A., Kamiya, T. & Inoue, T., 1995b. Rapid Maturation of Beer Using an Immobilized Yeast Bioreactor. 1. Heat Conversion of α-Acetolactate. *Journal of Biotechnology,* **38**, 101.

Yamauchi, Y., Okamoto, T., Murayama, H., Kajino, K., Nagara, A. & Noguchi, K., 1995c. Rapid Maturation of Beer Using an Immobilized Yeast Bioreactor. 2. Balance of Total Diacetyl Reduction and Regeneration. *Journal of Biotechnology*, **38**, 109.

Yamauchi, Y., Okamoto, T., Murayama, H., Nagara, A. & Kashihara, T., 1995d. Rapid Fermentation of Beer Using an Immobilized Yeast Multistage Bioreactor System: Control of Sulfite Formation*. Applied Biochemistry and Biotechnology,* **53**, 277.

Yamauchi, Y., Okamoto, T., Murayama, H., Nagara, A., Kashihara, T., Yoshida, M. & Nakanishi, K., 1995e. Rapid Fermentation of Beer Using an Immobilized Yeast Multistage Bioreactor System: Balance Control of Extract and Amino Acid Uptake. *Applied Biochemistry and Biotechnology*, **53**, 245.

Yamauchi, Y., Okamoto, T., Murayama, H., Nagara, A., Kashihara, T., Yoshida, M., Yasui, T. & Nakanishi, K., 1995f. Rapid Fermentation of Beer Using an Immobilized Yeast Multistage Bioreactor System: Control of Minor Products of Carbohydrate Metabolism. *Applied Biochemistry and Biotechnology,* **53**, 261.

Yuan, X., 1987. Application of Immobilization Technique in Brewing Industry. *Shipin Kexue*, **94**, 8.

Zhang, Z, Su, E. & Yu, J., 1988.. Studies on Continuous and Rapid Fermentation of Beer by Immobilized Yeast. *Gongye* Weishengwu,**18**,11.

Summary of the Invention:

The present invention relates to a process for the production of potable alcohols, wherein a gas lift bioreactor utilizing internal circulation is used to carry out a continuous fermentation stage where wort containing fermentable sugars is initially fermented using flocculent yeast cells immobilized by self-aggregation in a restricted oxygen supply and the at least partially fermented discharge from the continuous process is delivered to a batch processing stage for finishing (which in the context of the claims of the present invention can include - but is not limited to - the completion of the fermentation process through, which fermentable carbohydrates to alcohol).

The present invention relates to the production of beer, (including in particular pale styles of beer,-lagers, and especially North American style beers). In this connection see for example, the Essentials of Beer Style - F. Eckhardt.

In particular, there is provided a process, wherein said yeast is highly flocculent or superflocculent yeast.

More details concerning preferred practices and advantages associated with the continuous processes are provided over the course of the detailed description of the present invention. These include the use of artificial (e.g. controlled) gas mixtures, and the use of nitrogen, carbon dioxide and oxygen as well as air. In addition, greater details concerning the batch hold processing stage are provided herein. Note that in certain embodiments of the present invention, the focus of the batch hold process goes beyond issues of "completion" of the conversion of fermentable carbohydrates to alcohol (which in any case can be virtually completed in the continuous stage of the processing). In such embodiments, the primary focus of the batch hold processing stage is on flavour-matching (or remediation), particularly in connection with diacetyl and acetaldehyde. Preferred embodiments of the present invention provide for the post-continuous stage distribution of the pitched and/or at least partially fermented wort through a distribution manifold (whether as a fixed manifold or by selectively connecting and disconnecting conduit) amongst a plurality of batch hold tanks. In a serial distribution process one tank is filled, followed by the next, and so on. In a particularly preferred embodiment, the continuous reactor throughput capacity and batch hold capacity are matched in terms of size and number of reactors/ batch hold vessels - such that the production now-rate is matched in terms of capacity over time. Ideally, a batch hold vessel is drained of finished product just in time to be cleaned, reconnected and then refilled from the ongoing discharge from the continuous fermentation stage. In accordance with another aspect of the present invention, certain embodiments are particularly managed in relation to the oxygen content of the wort/beer. This applies to both the continuous and batch hold stages of the process. With regard to the continuous stage the oxygen concentration has a variety of effects, but notably, it may be desirable to minimized it in order to optimize conversion of higher alcohols to flavor active esters. In this connection it is noted that concentrations of higher alcohols can remain largely un-effected by the batch hold processing stage so if desired stringent 02 control is used to manage the fusel ester flavour balance. Pre-purging of wort with CO2 prior to continuous fermentation can be useful in this connection.

In one embodiment of the present invention, the primary purpose of the continuous stage of the processing is to provide for pitching of the downstream batch fermentation that then occurs in the batch hold process.

For greater certainty, the contents of the priority documents are incorporated herein in full and form as much a part of the present specification as if they were fully reproduced herein.

Detailed Description:

The following is a two-part detailed description of aspects of the present invention.

The description contains and/or refers to graphs, formula, figures and the like, each of which is referred to by the term "Figure" followed by a specific identifying number, and to accompanying drawings each of which are described and/or referred to by the term "FIG" followed by a specific identifying number. In these drawings the items illustrated may not be to exact scale.

In the accompany drawings:

FIG. 1 is a process flowsheet for the Pilot Scale Continuous Fermentation System, the individual pieces of equipment shown being summarized in Table 5.1 herein.

FIG. 2 is a schematic diagram of the 50L pilot scale gas-lift draft tube (GLDT) bioreactor.

FIG. 3 is a cross sectional view of the reactor of FIG. 2 including the location of the internal draft tube as well as the internal separator.

FIG. 4 is a detailed drawing of the head plate of the bioreactor of FIG. 2.

FIG 5 is a detailed drawing of the body of the bioreator of FIG. 2.

FIG. 6 is a detailed drawing of the conical bottom of the bioreactor of FIG. 2.

FIG. 7 is a detailed drawing of the gas pipe sparger of the bioreactor of FIG. 2. A total of 160 holes (0.16 cm diameter) were drilled into the 1.27 cm diameter pipe sparger with a longitudinal spacing of 0.8 cm center to center and a latitudinal spacing of 0.6 cm.

FIG. 8 is a diagram of the continuous bead production using statue mixers (Labatt Patent Application No. 2,133,789).

FIG. 9 is a picture of Siran® glass beads supplied by Schott Engineering.

FIG.10 is a picture of Celite® diatomaceous earth beads supppied by World Minerals.

FIG.11 is a picture of $\kappa$-carrageenan gel beads produced in the laboratories of Labatt Brewing Company Limited ("Labatt").

FIG.12 is a series of pictures representing non-flocculent yeast; chain-forming yeast and flocculent yeast respectively. These images were taken using a microscopic focussing camera at a magnification of 100 X.

FIG.13 is a microscopic picture of the medium flocculent yeast strain LCC3021 at a magnification of 100 X.

FIG. 14 is a microscopic picture of the superflocculent yeast strain LCC290 at a magnification of 100 X.

FIG. 15 is a schematic diagram of the static mixer process for the making of kappa-carrageenan gel beads. In the static mixer, the fluid moves through the mixer (rather than the mixer through the fluid) allowing for mixing of fluids as they are pumped through the pipe line.

FIG. 16 is another schematic of a gas-lift draft tube bioreactor system for primary beer fermentation.

FIG. 17 is a photograph of the actual gas-lift draft tube bioractor vessel of FIG. 15.

FIG. 18 is a detailed drawing of a 13L (i.e. 8L working volume) gas-lift tube reactor vessel of FIG. 16.

FIG. 19 is a detailed drawing of a bioreactor vessel headplate where: 1-liquid withdrawal port for oxygen sensor; 2-thermowell for temperature sensor, linked to thermostatic controller; 3-temperature probe; 4-liquid return port for oxygen sensor; 5-inoculation port; 6 membrane sample port with stainless steel cap.

FIG. 20 is a profile of liquid withdrawal port for oxygen sensor with filler unit submerged in bioreactor liquid phase.

FIG. 21 is a detailed equipment and front diagram for continuous primary beer fermentation using a gas-lift bioreactor system (see Table 5.1 for detailed equipment description).

FIG. 22 is a schematic of the gelation mechanism of carrageenan (adapted from Rees, 1972).

FIG. 23 is a schematic of the utilization of wort constituents by immobilized yeast during primary fermentation.

FIG. 24 is a picture of kappa-carrageenan gel bead containing immobilized lager yeast at zero time fermentation.

FIG. 25 is a picture of a pod of lager yeast entrapped in kappa-carrageenan gel bead after two days of batch fermentation showing bud scars on individual yeast cells.

FIG. 26 is a picture of an outer edge of a kappa-carrageenan gel bead showing lager yeast cells after two months of continuous fermentation.

FIG. 27 is a picture of lager yeast cells at an outer region of a kappa-carrageenan gel bead after two months of continuous fermentation.

FIG. 28 is a picture of lager yeast cells at the centre of a kappa-carrageenan gel bead after two months continuous fermentation.

FIG. 29 is a picture of an entire kappa-carrageenan gel bead after six months continuous fermentation; many fractured beads had hollow centres.

**Detailed Description - Part 1:**

*YEAST STRAIN AND INOCULUM PREPARATION*

The fermentations conducted in this thesis employed a polyploid yeast from the *Saccharomyces cerevisiae* family (also referred to as *Saccharomyces uvarum* and/or *Saccharomyces carlsbergensis)*. The brewing community will commonly refer to this yeast as bottom fermenting producing a lager-type beer. This characterization is attributable to lager yeast's ability to settle out of the liquid medium upon completion of the fermentation. Ale yeast, unlike the lager yeast, will rise to the top of the fermentation vessel and was therefore known as a top fermenting strain. The ability of yeast to settle or rise is not necessarily dependent on whether the yeast is a lager or ale type but is strain specific. Lager yeast typically does not ferment at temperatures above 34°C while ale yeast cannot ferment melibiose. Scientists will use these characteristics to differentiate lager strains from ale yeast (McCabe, 1999).

The medium flocculent yeast strain *Saccharomyces cerevisiae* strain 3021 from the Labatt Culture Collection was used in both the free cell self-aggregated fermentations and the □-carrageenan immobilized fermentations. For the trials involving the use of superflocculent yeast as the immobilizant, a variant of the LCC3021 strain, namely LCC290, was used.

Pure yeast cultures were cryogenically stored in a -80°C freezer located within the Labatt Technology Development Department. When required, sterile loops of yeast culture were aerobically pre-grown at 21 °C on PYG agar plates (3.5 g of peptone, 3.0 g of yeast extract, 2.0 g of $KH_2PO_4$, 1.0 g of $MgSO_4 \cdot 7H_2O$, 1.0 g of $(NH_4)SO_4$, 20.0 g of glucose, and, 20.0 g of agar dissolved in distilled water up to a volume of one liter).

Isolated yeast colonies were then transferred into test tubes containing 10 mL of pasteurized wort and incubated with agitation at 21°C for a 24 hour period. This inoculum was progressively scaled up to a volume of 5 L by adding the previous culture into the appropriate wort volume (10 mL into 190 mL, 200 mL into 800 mL and 1 L into 4L). The yeast inoculum was then transferred into centrifuging jars and subjected to centrifugation at 10000 rpm and 4°C for 10 minutes. The desired mass of yeast for all subsequent fermentations was drawn from the resulting wet yeast pellets (30% w/v).

*FERMENTATION MEDIUM*

Industrial grade lager wort produced by the Labatt London brewhouse was used as the nutrient medium for all fermentations. Reference is made throughout this thesis to the wort's specific gravity expressed as degrees Plato (°P). Formula 4.1 describes the relationship between specific gravity and °P.

$$^\circ P = 135.997 \bullet SG^3 - 630.272 \bullet SG^2 + 1111.14 \bullet SG - 616.868 \qquad (4.1)$$

The wort used throughout this thesis was 17.5 °P which corresponds to a specific gravity of 1.072.

Table 4.1 provides the typical carbohydrate profile of this wort as measured by the high performance liquid chromatography (HPLC) method described in section 4.7.2. Approximately 73% of the carbohydrates in this wort are fermentable, while the brewing yeast employed in this study cannot readily take up 27% of the longer chain carbohydrates.

**Table 4.1 Typical carbohydrate composition of the wort utilized in the fermentation trials. The wort was produced by the Labatt London brewhouse and had a specific gravity measured as 17.5 °P.**

|  | Average (g/L) | Coefficient of variation (%) | Fermentable (%) | Unfermentable (%) |
|---|---|---|---|---|
| Fructose | 3.3 | 18.0 | 1.9 | |
| Glucose | 16.5 | 4.3 | 9.3 | |
| Maltose | 87.7 | 10.1 | 47.8 | |
| Maltotriose | 25.2 | 10.8 | 14.2 | |
| Maltotetrose | 6.4 | 18.3 | | 3.6 |
| Polysaccharides | 41.1 | 9.1 | | 23.2 |
| Total | 177.2 | | 73.2 | 26.8 |

The coefficient of variation for most of the analyzed substances ranges between 10% and 20%. This variability is due in large part to the industrial production process utilized, as well as the variability in raw materials from one brew to another.

*IMMOBILIZATION TYPES*

Three types of immobilization - entrapment, adsorption and self-aggregation - were tested during this Ph.D. research. For the industrially sourced carriers, supplier data are presented first and then supplemented by in-lab analysis. Pictures and size distributions of the investigated carriers (when available) are presented elsewhere herein.

Two types of adsorption matrices were tested in the pilot scale gas-lift draft tube bioreactor. Pictures of both these carriers are presented herein. Schott Engineering provided a sintered glass bead carrier, Siran®. The selected particles were 1-2 mm in diameter, had open pores for yeast immobilization with a 55-60 % pore volume and pore size distribution between 60 and 300 □m, an appropriate size for yeast cells. This type of carrier is reported to be biologically and chemically stable, easy to clean, reusable, sterilizable with steam, non-compacting and neutral in taste, and is therefore food approved.

World Minerals of California supplied a spherical carrier composed of diatomaceous earth. This carrier provided the advantages of thermal and chemical stability, mechanical strength and rigidity. Diatomite; the basic raw material, is commonly used in the brewing industry for filtration of beer. The Celite® R-632 carrier was specifically designed for whole cell immobilization.

Supplier specifications were as follows:

| | |
|---|---|
| Size range: | 0.595 mm to 1.41 mm (14/30 mesh cut) |
| Mean pore diameter: | 7:0 Dm |
| Total pore volume: | 1.19 cm³/g |
| Compacted bed density: | 0.334 kg/m³ |

Kappa-carrageenan gel beads, an entrapment based carrier, were produced in the laboratories of the Labatt Brewing Company Ltd. The production process is described in Section 5.2 and the results of this production process are presented in Section 6.2.1.

The simplest mode of immobilization, self-aggregation, was possible by the selection of yeast strains capable of flocculation. The industrial lager yeast LCC3021 possesses the natural capability of flocculation and is considered as a medium flocculent strain. As the fermentation progresses, small clumps of yeast, measuring from 0.5 mm to 1.0 mm, will form in the liquid medium. The LCC290 yeast, a variant of LCC3021 lager yeast, will form much larger floes (from 1.0 mm to 5.0 mm depending on degree of agitation) and is therefore classified as a superflocculent yeast. Images of the various yeast floes are presented herein.

*SAMPLING PROTOCOL*

As the fermentations progressed, it was necessary to withdraw samples from the fermenting liquid at numerous time intervals. To perform this task, sterile sampling valves were purchased from Scandi-brew®. These valves are constructed of stainless steel and are equipped with a chamber (delimited by a top and bottom port) in which ethanol can be stored to maintain an aseptic environment. Before taking a sample, the ethanol is released from the chamber by removing the retaining cap from the bottom spout Fresh ethanol (75% by volume) is run through the chamber and the cap is then placed on the top port of the valve. The valve lever is then pulled and approximately 50 mL of liquid sample is collected into a sterilized container. A second sample is collected for the fermentations involving superflocculent yeast so that proper deflocculation can be performed prior to cell enumeration. Once the sampling is complete, the valve chamber is rinsed with hot water and peracetic acid and then, finally, with ethanol. The retaining cap is placed on the bottom spout and the chamber is filled with ethanol in preparation for the next sampling.

*MICROBIOLOGICAL MONITORING*

Free Yeast Cell Enumeration and Viability by Methylene Blue Method

Liquid samples containing freely suspended yeast cells are first collected from the fermentation medium by the above sampling procedure. A Hauser Scientific Company Hemacytometer with a volume of $10^{-4}$ mL is used in conjunction with a light microscope to perform the cell counts. The liquid samples should be diluted with distilled water in order to achieve a total yeast count of 150 to 200 cells in the counting field. Heggart et al. (1999) describe all the factors that affect viability and vitality characteristics of yeast.

In order to assess the degree of viability within the sample, the methylene blue staining technique described by the American Society of Brewing Chemists was used (Technical Committee and Editorial Committee of the . ASBC, 1992). Live cells can render the methylene blue stain colorless by oxidizing it. Dead cells, on the other hand, will stain blue. The following reagents were used in the preparation of methylene blue for viability assessment:

Solution A: 0.1 g of methylene blue in 500 mL distilled water
Solution B: 13.6 g of $KH_2PO_4$ in 500 mL distilled water
Solution C: 2.4 g of $Na_2HPO_4 \cdot 12H_2O$ in 100 mL distilled water

The Fink-Kuhles buffered methylene blue was then prepared by mixing 500 mL of solution A with 498.75 mL of solution B and 1.25 mL of solution C to yield a final mixture at a pH of 4.6.

A mixture of diluted cell suspension and methylene blue was prepared in a test tube and then thoroughly mixed. After allowing this mixture to rest for several minutes (ensures contact between cells and the dye), a drop of liquid was placed between the hemacytometer's counting glass and the cover slip (defined volume). The percentage of viable cells was determined by counting both the viable and dead cells within the counting field and then dividing the number of viable cells by the total number of cells.

4.5.2 Immobilized Yeast Cell Counts- Self Aggregation

When using yeast cells with a tendency to form floes, it becomes difficult to accurately assess the number of cells present in a liquid sample because the cells will tend to settle in the sample jar. In order to obtain a representative sample, a deflocculating agent was used. In these experiments, a 0.5% by volume sulfuric acid solution was employed to destabilize the flocculated yeast cells, hence allowing for a representative yeast cell count. The same enumeration and viability procedure outlined in section 4.5.1 was used with the sulfuric acid replacing distilled water as the diluting agent.

Immobilized Yeast Cell Counts- Gel Beads

Before yeast counts were performed on gel-entrapped cells, it was necessary to disrupt the gel matrix using a Polytron® apparatus (Brinkmann Instruments). A sample of beads was first passed through a sterile sieve (500 Om mesh size) and then flushed with sterile water. One milliliter of gel-entrapped-cell beads and 19 mL of distilled water were added into a 50 mL sample container. The Polytron® was then used to physically disrupt the gel and thus release the yeast into solution. The enumeration and viability methods described in section 5.5.1. were then performed on the gel-disrupted sample.

Contamination Monitoring

All the fermentations performed throughout this thesis were regularly monitored for contamination. The monitoring program consisted of at least one check per week of the liquid in the 50-L continuous fermenters and the wort in the storage vessels. Liquid samples were withdrawn aseptically and then spread onto culture plates composed of Universal Beer Agar (UBA, Difco Laboratories) and 10 mg/L of cycloheximide. These test samples were then incubated at 28 °C for up to 10 days in both aerobic and anaerobic conditions. Placing the selected plates into jars containing an AnaeroGen® packet (Oxoid), which removes any oxygen remaining in the jar, created the desired anaerobic growth environment. The use of an indicator strip (turns pink if oxygen is present) allowed us to verify that the environment was, indeed, anaerobic. Bacterial contaminants, if present in the liquid sample, would then be detected by this method.

Wild or non-brewing yeast detection required a separate growth medium that would not favor bacterial and/or brewing yeast growth. Pour plates prepared with yeast medium (YM, Difco Laboratories) supplemented with 0.4 g/L $CuSO_4$ were utilized to selectively allow for the growth of any potential wild yeast (incubation at 25 °C for 7 days). Incubating the liquid sample plated on PYN agar (Peptone Yeast-Extract Nutrient, Difco Laboratories) for 7 days at 37 °C allowed for the detection of non-lager brewing yeast Lager yeast growth is inhibited at temperatures above 34 °C, thus any growth on these plates would indicate an ale yeast contamination.

*ANALYTICAL METHODS*

Appropriate calibrations were performed on all the relevant equipment as prescribed by standard industrial operating procedures.

Ethanol

Ethanol concentration in beer and fermenting samples was analyzed using the gas chromatography method described by the Technical Committee and the Editorial Committee of the American Society of Brewing Chemists (1992). A de-gassed sample of liquid was combined with 5% v/v isopropanol internal standard followed by the injection of 0.2 □L of this mixture into a Perkin Elmer 8500 Gas Chromatograph. The following list provides further detail regarding the exact setup of the GC:

    Flame ionization detector (FID)
    Dynatech autosampler
    Chromosorb 102, 80-100 mesh support packing
    Helium carrier gas flowing at 20 mL/min
    Injector temperature of 175 °C, detector temperature of 250 °C & column temperature of 185 °C isothermally.

Carbohydrates

The glucose, fructose, maltose, maltotriose, maltotetrose, polysaccharides and glycerol concentrations were measured using a high-performance liquid chromatography (Spectra-Physics SP8100XR HPLC) system. A cation exchange column (Bio-Rad Aminex HPX-87K) with potassium phosphate dibasic as the mobile phase was used to separate these carbohydrates as they eluted through the system. The quantity of the compounds was then determined using a refractive index detector to generate the appropriate compound peaks. The HPLC was operated at a back pressure of 800 psi, a column temperature of 85 °C and a detector temperature of 40 °C. The samples were degassed and diluted to the appropriate levels. A 10 □L injection was then introduced into the system at a flow rate of 0.6 mL/min.

The brewing industry commonly uses another measure to assess the liquid's overall carbohydrate level. The liquid specific gravity expressed in degrees Plato was measured using an Anton Paar DMA-58 Densitometer. Filtered and de-gassed samples were transferred into a special glass u-tube, which was then subjected to an electronic oscillation. The frequency of the oscillation through the liquid was measured and then correlated to a liquid specific gravity (g/100 g or °P). It should be noted that this measurement is an approximation of the sample's total carbohydrate concentration (or specific gravity) since the calibrations are performed on aqueous sucrose solutions at 20 °C whose specific gravity is the same as the wort in question.

Vicinal Diketones

Total diacetyl (2,3-butanedione) and total 2,3-pentanedione concentrations were determined using a Perking Elmer 8310 Gas Chromatograph equipped with an electron capture detector. A 5% methane in argon carrier gas flowing at 1.0 mL/min was used as the carrier gas and the sample was passed through a J & W DB-Wax column. The injector temperature was maintained at 105 °C while the detector temperature was set at 120 °C. A Hewlett Packard 7694E headspace autosampler facilitated the analysis. Quantification was calculated by evaluating the peak area of the selected sample component and then cross-referencing it to the 2,3-hexanedione internal standard calibration value.

In order to assess the "total" concentration of these compounds, it was first necessary to equilibrate these samples to 65 °C and then hold then for 30 minutes at this temperature. This pre-analysis sample handling allowed for the conversion of □-acetolactate and □-hydroxybutyrate into their respective diketones, diacetyl and 2,3-butanedione.

Esters and Higher Alcohols

Some of the most important flavor compounds detected in beer were measured using a headspace gas chromatography method. Acetaldehyde, ethyl acetate, isobutanol, 1-propanol, isoamyl acetate, isoamyl alcohol, ethyl hexanoate and ethyl octanoate were quantified using n-butanol as the internal standard. A Hewlett Packard 5890 Gas Chromatograph equipped with a flame ionization detector, a HP 7994 headspace autosampler and a J&W DB-Wax capillary column was utilized. The injector temperature was set at 200 °C and the detector temperature was 220 °C. The oven temperature profile was as follows: 40 °C for 5 min, ramp from 40 °C to 200 °C at rate of 10 °C/min, ramp from 200 °C to 220 °C at a rate of 50 °C/min, and finally a hold at 220 °C for 5 min. A helium makeup gas at 30 mL/min (28 psig), a hydrogen stream at 50 mL/min (25 psig) and an air stream at 300 mL/min (35 psig) supplemented a helium carrier gas flow of 6.0 mL/min. The entire GC cycle for a sample loop of 1 mL was 40 minutes.

Other Analyses

Several other analytical measurements were performed on an as-needed-basis on fermentation liquid that was subjected to aging and packaging. Finished product analyses were performed by the Labatt Quality Control department as per finished beer standards. The methods described by the Technical Committee and the Editorial Committee of the American Society of Brewing Chemists (1992) were the basis for these measurements. A list of the analyses, as well as a brief description of the relevance of these measurements, is provided in Table 4.2.

**Table 4.2 Quality Control Analyses and Description**

| Specification | Description |
| --- | --- |
| Air | Total air carried over during the packaging process; specification is less than 1 mL |
| Carbon Dioxide | Level of carbonation introduced into the product; reported as % with specification of 2.75 % |
| Sulfur Dioxide | Amount of sulfur dioxide in the beer measured by GC; target of <10 mg/L |
| Dimethyl Sulfide | Amount of dimethyl sulfide (cooked com smell) in the beer measured by GC; target of <70 □g/L |
| Bitterness | Amount of bitterness contributed by the hops to the beer; measurement of alpha-acids in beer; 1 bitterness unit (BU) is equivalent to ~1 mg/L alpha-acid. |
| Colour | Colour of the beer measured by spectrophotometry; absorbance of sample at 430 nm for light path of 0.5 inch |
| pH | Measured using calibrated pH meter, pH = $-\log_{10}[H^+]$ |
| Apparent Extract | Amount of available soluble mass in liquid without compensating for the effect of alcohol on the relative density of the liquid; measured using a hydrometer and reported as °P; AE |
| Real Extract | Same as apparent extract except alcohol is being accounted for in this measurement.; RE |
| Calculated Original Extract | Based on Balling's experiment that 2.0665 g of extract produces 1.0000 g alcohol; COE = 100 * [(2.0665 * (% w/w alcohol) + RE)/(100 + 1.0665 * (% w/w alcohol))] |
| Warm Haze | Haze present in beer at room temperature (21 °C) without disturbing the sediment; evaluated using nephelometric method based on light scatter and reported as Formazin Turbidity Unit (FTU); spec is < 200 FTU |

Table continued

| Specification | Description |
|---|---|
| Initial Chill Haze | Haze formed in beer when it is chilled from room temperature (21°C) to 0°C without disturbing sediment; measurement method as above; spec is <100 FTU |
| Foam | Measurement of beer foaming potential using the NIBEM instrument; foam is generated in a controlled matter and the rate of foam collapse is recorded; spec is >170 seconds |

*YEAST SETTLING PROTOCOL - LCC290*

Preparation of Yeast Test Sample

Superflocculent yeast (LCC290) was grown in wort as described in section 4.1. This inoculum was then centrifuged at 4 °C and 10000 rpm for 15 minutes in order to obtain a yeast pellet for further inoculation. Wort, as described in section 4.2, was pasteurized at 100 °C for 60 minutes and then one liter was aseptically transferred into 6 X 2L sterilized shake flasks. Each shake flask was inoculated with 4 g of centrifuged yeast. The flasks were placed on a shaker operating at 135 rpm (21 °C ambient room temperature) and allowed to ferment. One flask was withdrawn at the following time intervals: 24 h, 40 h, 48 h, 64 h, 71 h, and 192 h. At each interval, a small sample of liquid was taken for carbohydrate analysis and for yeast concentration and viability measurements (actual methods described in Chapter 4). The remaining liquid/yeast mixture was subjected to the yeast settling protocol described in section 4.7.2.

Yeast Settling Protocol

The settling rate for LCC290 superflocculent yeast strains was measured using the following method. Each sample was allowed to ferment until the desired interval as described in section 4.7.1. At the prescribed time, the appropriate sample flask was withdrawn. The samples were agitated in order to ensure that all particles were suspended. The contents of the flask were then immediately transferred into a 1000 mL graduated cylinder. As the flocs settled, the distance between the liquid surface and the floc-liquid interface was measured at 30 second intervals. The settling rate was calculated by applying the following equation:

$$\text{Settling rate} = \frac{\Delta H}{\Delta t} = \frac{(H_0 - H_t)}{(t - t_0)} \tag{5.1}$$

Using the standard Kynch method (1952), a settling rate versus cell concentration curve was generated from the settling curves obtained for each fermentation interval.

*CIRCULATION & MIXING RATE METHODS*

In order to measure mixing time and circulation rate inside the three phase gas-lift draft tube bioreactor, an acid injection system linked to a data acquisition system was utilized. By applying a pulse of a strong acid into the bioreactor, it was possible to calculate both circulation rate and mixing time by monitoring the change in pH over time and then relating them to the equations presented in section 3.2.2. The data acquisition system consisted of:

an Ingold pH probe (Cole-Parmer, cat. #P-05990-90) coupled to an Ingold Microprocessor-Based pH Transmitter (Model 2300)
a Data Translation DT2805 card
a 386DX personal computer
and a Quick Basic data acquisition program (written by C. Hudson and J. Beltrano in 1994 and modified by N. Mensour in 1998).

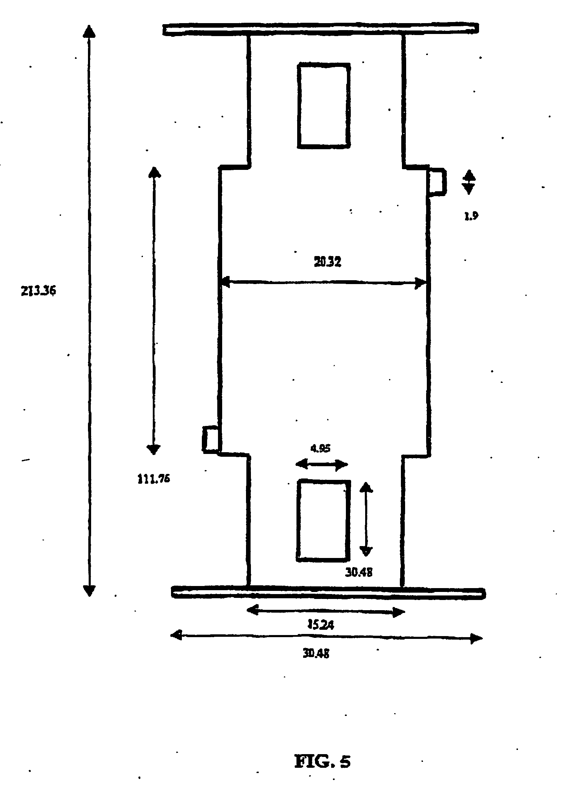

Ten milliliters of 10 N hydrochloric acid were injected into the annulus section of the gas-lift draft tube bioreactor (diagram is provided in Figure 5.5) just under the pH probe location. This distance corresponded to a height of 26 cm below the head plate. The pH probe was subjected to a two-point calibration with certified standard buffers (Beckman pH 7.0 green buffer and Beckman pH 4.0 red buffer) prior to all mixing experiments. The 4-20 mA current produced by the pH meter was connected to a screw terminal board, where the current was transformed into a voltage, which was then measured by the data acquisition card located inside the computer. The data acquisition program was started simultaneously to the acid injection. The length of data collection was 5 minutes at a sampling frequency of 50 Hz. The array size in the program was set at 3750 (total of 15000 points collected) with a gain of 1 set for the data acquisition card.

The collected data was transferred from the laboratory to a more powerful computer (Pentium II microprocessor) for further analysis. TableCurve 2D (Jandel Scientific Software, Labtronics, Canada) was utilized extensively for data analysis due to its capacity to deal with large data sets, as well as its many built-in data handling functions (data smoothing, curve fitting, etc.). The Savitzky-Golay algorithm, a time-domain smoothing method based on least squares quartic polynomial fitting across a moving window, was applied to the original data to eliminate noise. The smoothed data was then adjusted to reflect a change in pH rather than the actual pH measurement. A decaying sinusoidal function was fitted to the adjusted data. The mixing times and circulation rates were then calculated from the fitting parameters.

These mixing experiments were conducted on actual fermentations inside the 50-L gas-lift bioreactor with one of three immobilization carriers present (either superflocculent yeast LCC290, medium flocculent yeast LCC3021 or □-carrageenan gel beads). The liquid phase was fermented beer with a specific gravity of 2.5 °P and the gas phase was comprised of carbon dioxide sparging gas. The fermentation temperature was controlled at 15 °C. The sparging gas superficial velocities were varied between 2.0 and 6.0 mm/s. At a given gas flowrate, the system was allowed to equilibrate for 10 minutes. The acid injection test would then start and be repeated 3 times. The next gas flowrate would be selected and the mixture inside the reactor would have its pH readjusted to the starting level.

DESIGN OF A PILOT SCALE GAS-LIFT DRAFT TUBE DIOREACTOR SYSTEM

*GAS-LIFT DRAFT TUBE BIOREACTOR FERMENTATION SYSTEM*

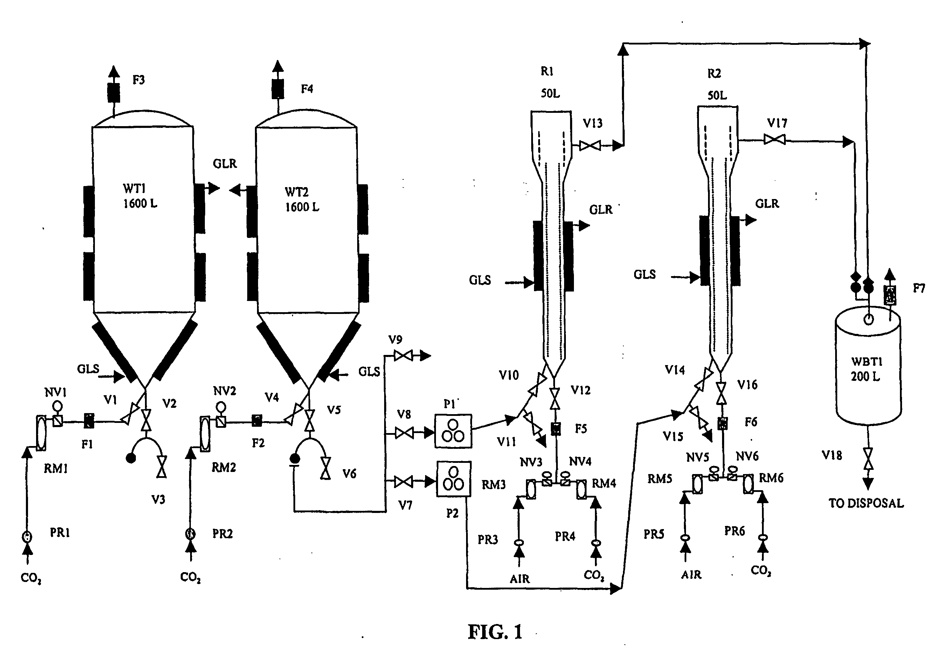

Draft tube fluidized bed (DTFB) systems have shown their value for use in three phase systems. Two identical pilot scale gas-lift draft tube bioreactors were designed, built and installed in the Experimental Brewery of the Labatt Brewing Company Ltd. in order to carry out the experimental work for this thesis. In addition, several existing vessels were modified for both wort storage and beer collection. The flowsheet in FIG. 1 depicts the overall process used in the pilot scale continuous fermentation experiments and Table 5.1 lists a more detailed description of the equipment represented in FIG. 1.

Wort was supplied from the London Brewing plant through 5.08 cm stainless steel lines and transferred into 1600 L working volume wort storage tanks (WT1 & WT2). With a two-tank system, it was possible to ensure a continuous supply of nutrient medium to the pilot scale continuous fermenters (R1 & R2). Each holding tank is equipped with a carbon dioxide sparge system for oxygen and homogeneity control and a glycol cooling jacket system for temperature control. This central source of nutrient medium was set up to feed up to 3 independent fermenters through a valve header system (V7, V8 & V9). Masterflex peristaltic pumps (P1 & P2) were utilized to deliver a prescribed flow of wort to the pilot scale bioreactors (R1 & R2).

**Table 5.1. Description of individual equipment represented in Figure 5.1**

| Item | Description |
| --- | --- |
| Air | 100 psig air supply from London plant |
| $CO_2$ | 100 psig carbon dioxide supply from London plant |
| F1 | Sterile filter at carbon dioxide inlet |
| F2 | Sterile filter at carbon dioxide inlet |
| F3 | Sterile filter at vent outlet of WT1 |
| F4 | Sterile filter at vent outlet of WT2 |
| F5 | Sterile filter at inlet of sparge gas |
| F6 | Sterile filter at inlet of sparge gas |
| F7 | Sterile filter at outlet of WBT1 |
| GLR | Glycol line return; 25 psig |
| GLS | Glycol line supply; 45 psig |
| NV1 | Carbon dioxide needle valve |
| NV2 | Carbon dioxide needle valve |
| NV3 | Needle valve at air inlet |
| NV4 | Needle valve at carbon dioxide inlet |

Table continued

| Item | | Description |
|---|---|---|
| | NV5 | Needle valve at air inlet |
| | NV6 | Needle valve at carbon dioxide inlet |
| | P1 | Masterflex peristaltic feed pump for R1 |
| | P2 | Masterflex peristaltic feed pump for R2 |
| | PR1 | Carbon dioxide pressure regulator |
| | PR2 | Carbon dioxide pressure regulator |
| | PR3 | Air pressure regulator |
| | PR4 | Carbon dioxide pressure regulator |
| | PR5 | Air pressure regulator |
| | PR6 | Carbon dioxide pressure regulator |
| | R1 | Pilot scale gas-lift draft tube bioreactor, 50 L working volume |
| | R2 | Pilot scale gas-lift draft tube bioreactor; 50 L working volume |
| | RM1 | Carbon dioxide rotameter; 0 to 20 scfh scale |
| | RM2 | Carbon dioxide rotameter; 0 to 20 scfh scale |
| | RM3 | Air rotameter; 0 to 2.5 scfh scale |
| | RM4 | Carbon dioxide rotameter; 0 to 10 scfh scale |
| | RM5 | Air rotameter; 0 to 2.5 scfh scale |
| | RM6 | Carbon dioxide rotameter, 0 to 10 scfh scale |
| | V1,V2,V3 | Butterfly valves at the inlet/outlet of WT1 |
| | V4,V5,V6 | Butterfly valves at the inlet/outlet of WT2 |
| | V7,V8,V9 | Ball valve at wort distribution header |
| | V10,V11 | Ball valves at wort inlet of R1 |
| | V12 | Quick disconnect valve at inlet of sparge gas |
| | V13 | Butterfly valve at outlet of R1 |
| | V14,V15 | Ball valves at wort inlet of R2 |
| | V16 | Quick disconnect valve at inlet of sparge gas |
| | V17 | Butterfly valve at outlet of R2 |
| | V18 | Butterfly valve at outlet of WBT1 |
| | WBT1 | Waste beer tank; 200 L working volume |
| | WT1 | Wort storage tank equipped with glycol wall jackets and sparging capabilities;1600 L working volume |
| | WT2 | Wort storage tank equipped with glycol wall jackets and sparging capabilities; 1600 L working volume |

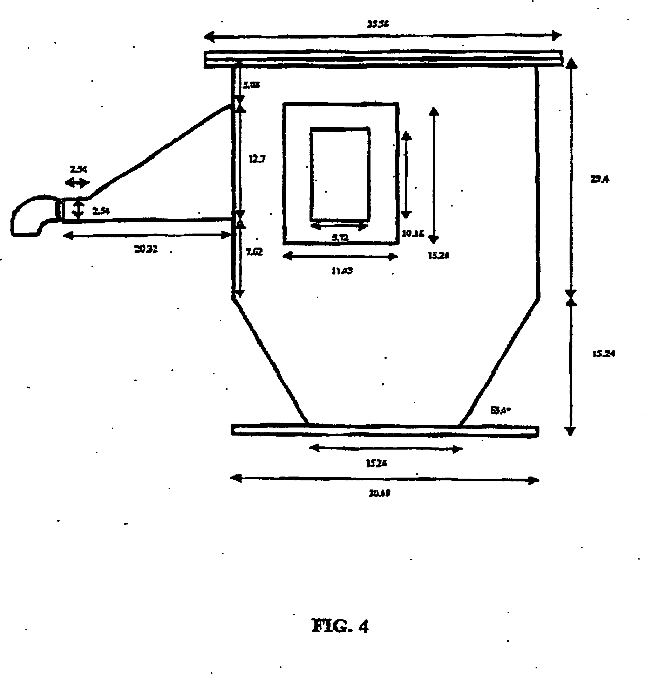

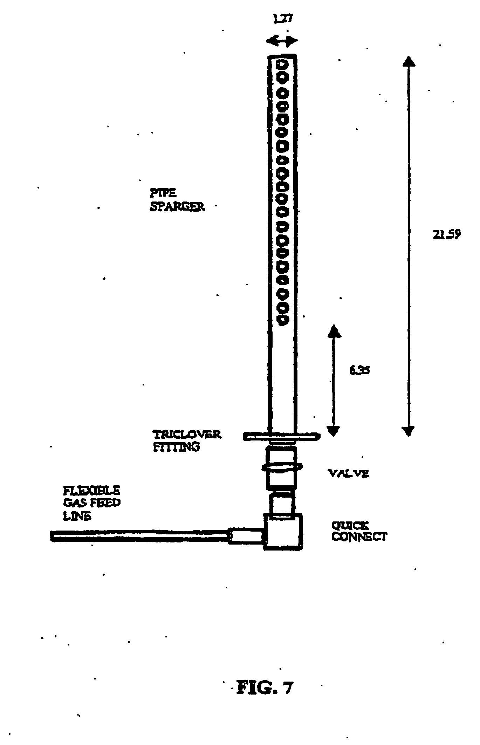

Carbon dioxide gas and air were sparged into the gas-lift system through stainless steel gas pipe spargers (FIG. 7). Rotameters (RM3, RM4, RM5 & RM6) were used to monitor the flow rates injected into the system. Sterile filters (0.2 Om mesh) were installed on the gas lines to ensure that no contaminants were introduced into the bioreactors. Product flowed out of the reactor through an overflow system (FIG. 4). The feed pump alone therefore controlled liquid residence time. Both reactors (R1 & R2) were connected to a waste beer tank (WBT1) to collect the overflow liquid. Special 50 L collection tanks were utilized for product collection and processing on an as needed basis.

More detailed diagrams and exact dimensions of the 50-L pilot scale bioreactor are provided in section 5.1.1. The wort handling and storage protocol will be presented in section 5.1.2 while the cleaning and sterilization protocols for the continuous fermentation system will be discussed in section 5.1.3. Section 5.1.4 covers the fermentation protocol followed throughout this thesis work.

Reactor Design & Specifications

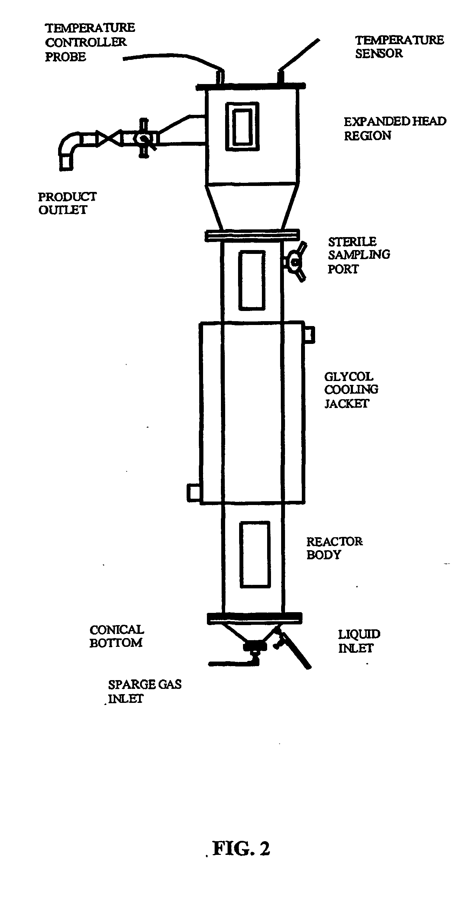

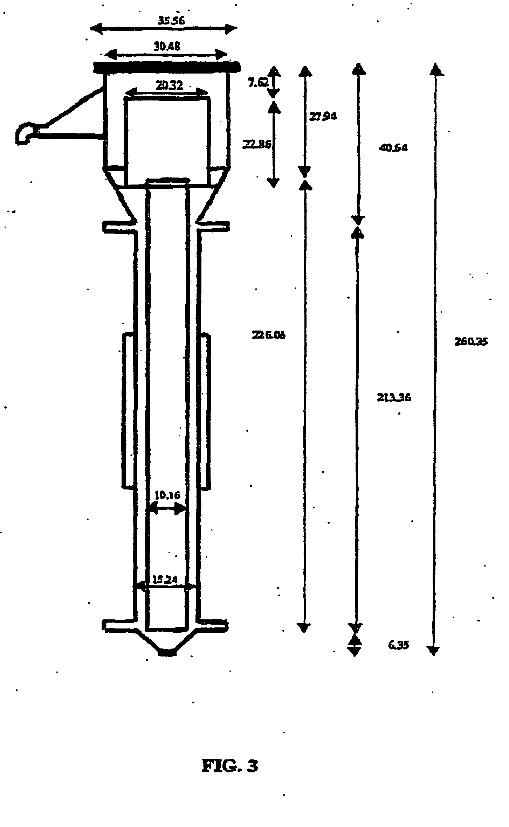

The 50-L working volume bioreactor designed for this work was built entirely of 304L stainless steel with 4 Plexiglas look windows located in the body of the reactor so that particle and fluid motion could be observed. The material of construction was chosen for its resistance to sanitation chemicals (caustic and acid), as well as for its durability to steam sterilization. Another important aspect of the design was the minimization of threaded fittings in direct contact with the fermentation medium. Instead, ports were welded and, where necessary, sanitary TriClover fittings were used The reactor was designed with an expanded head region so as to maximize gas disengagement and thus promote better liquid-solid mass transfer (Chisti & Moo-Young, 1993). The reactor bottom was designed with a 90-degree cone angle so as to minimize any solids from collecting at the bottom. FIG. 2 is a schematic diagram of the 50-L pilot scale systems that were installed in the Labatt Experimental Brewery. This diagram indicates the location of the inlet sparge gas, the liquid inlet, the glycol cooling jacket, the product outlet, the temperature sensing and control system, as well as the location of the two sanitary sampling ports. FIG. 3 is a schematic of the same GLDT bioreactor with dimensions provided in centimeters. FIG. 4 to FIG. 6 are detailed sectional drawings of the 50 L gas-lift draft tube bioreactor and FIG. 7 is a schematic of the gas sparging device utilized in these experiments.

The internal draft tube and the particle separator (baffle) are illustrated in FIG. 3. A draft tube diameter to reactor diameter ratio of 2/3 was chosen based on literature data (Chisti, 1991). The particle separator was sized to allow for better separation of gas from the solid-liquid mixture. By increasing the diameter of this baffling device (20.32 cm compared to a draft tube diameter of 10.16 cm), it is possible to obtain a greater differential between the bubble rise velocity and the liquid-solid fluid descent velocity. Gas entrainment into the annulus of the draft-tube system will be lowered and a better solid-liquid mass transfer will result.

A pipe sparger (FIG: 7) was designed for the injection of carbon dioxide mixing gas into the draft tube section. A total of 160 holes measuring 0.16 cm in diameter were drilled into the 1.27 cm diameter sparger. The holes were positioned with a longitudinal spacing of 0.8 cm center to center and a latitudinal spacing of 0.6 cm center to center (8 rows of 20 holes). Because mixing was the primary function of the sparged gas, a sparging hole diameter of 0.16 cm was selected.

Wort Handling and Storage Protocol

In traditional fermentation practices, wort is not held for extended periods of time without being pitched with yeast. Oxygenated wort is an excellent growth medium for many organisms, including yeast. Because the fermentation protocol for the continuous gas-lift systems required large quantities of wort to be held, it was necessary to develop wort transfer and holding protocols. It was the opinion of the researchers that unoxygenated cold wort could be stored for up to two weeks without it being compromised by contamination, if the wort was transferred to the holding vessel appropriately.

It was also deemed necessary to ensure that the temperature of the wort was controlled appropriately once inside the wort holding vessel. The available tankage inside the Experimental Brewery was originally designed for fermentation rather than wort holding. A test of these tanks's capability to maintain the temperature of stagnant liquid was performed. FIG. 2 clearly illustrates that these vessels cannot be used without agitation if a constant temperature of 4 °C is to be maintained. Wort was initially introduced into these vessels at a temperature of 4 °C. Temperature measurements were performed at several points throughout the tank in order to gain a better understanding of the real temperature. When the liquid was left in the vessel for 24 hours without agitation, the liquid temperature near the top climbed to approximately 20°C. The liquid in the middle of the tank also rose slightly ($\square$T of ~3°C), while that in the cone of the tank remained near the original 4°C.

FIGURE 5.8 EFFECT OF AGITATION BY GAS SPARGING ON TEMPERATURE PROFILE IN CYLINDROCONICAL WORT HOLDING TANK. THE WORT WAS INTRODUCED INTO THE VESSEL AT A TEMPERATURE OF 4 °C. MEASUREMENTS WERE PERFORMED 24 HOURS FOLLOWING TANK FILLING. CARBON DIOXIDE GAS WAS SPARGED INTO THE VESSEL AT A FLOW RATE OF 0.113 CM³/HOUR. THE AMBIENT ROOM TEMPERATURE WAS 19.8 °C. MEASUREMENT LOCATION: (1) TOP OF TANK AT WALL; (2) TOP OF TANK AT CENTRE; (3) MID TANK AT WALL; (4) MID TANK AT CENTRE; (5) TOP OF CONE AT WALL; (6) TOP OF CONE AT CENTRE; (7) BOTTOM OF CONE

By introducing slight agitation through the injection of carbon dioxide at a flow rate of 0.133 cm³/hour, it was possible to maintain the temperature of the wort inside the holding vessel at 4 °C. As a result of these findings, both wort holding vessels were fitted at the base of the cone with a 2.54 cm sanitary tubing to be used for wort agitation.

Unaerated wort was subsequently transferred from the Labatt London plant through the 5.08 cm stainless steel line into a buffer tank. From this tank, the wort was passed through a flash pasteurizer into one of the wort holding tanks (WT1 or WT2) where it was stored at 2 °C for up to 2 weeks. This pasteurization step was put in place as a precautionary measure to ensure that unwanted microorganisms were eliminated from the wort during the entire holding period. By utilizing unoxygenated wort, the damage to the hot wort by oxygen (formation of staling aldehydes) would be minimized. In addition, the air introduced with the sparge gas could therefore strictly accomplish the control of oxygen to the continuous fermenters.

Dissolved oxygen measurements were performed on the wort once inside the wort holding vessel. Figure 5.9 depicts the dissolved oxygen concentration of the wort over time following three transferring protocols. In the first instance, wort was transferred into the holding vessel and the carbon dioxide sparge was started (0.085 m³/h) to ensure proper temperature control. The wort dissolved oxygen concentration increased over the first day to reach approximately 1.3 mg/L and was subsequently reduced to approximately 0.1 mg/L by the fifth day. In the second trial, the wort holding vessel was purged for 3 hours with 0.85 m³/h carbon dioxide prior to filling. The initial oxygen pickup was greatly decreased and wort within the desired oxygen content (< 0.1 mg/L) was reached in 2 days.

**FIGURE 5.9** CONTROL OF DISSOLVED OXYGEN IN WORT DURING TRANSFERRING FROM THE LONDON PLANT. THREE FILLING PROTOCOLS WERE EVALUATED WITH THE THIRD SIMPLY BEING A COMBINATION OF THE PREVIOUS TWO METHODS. WORT TEMPERATURE WAS KEPT AT 4 °C.

In the final trial, the tank was pre-purged as above and a continuous carbon dioxide sparge (0.085 m³/h) was introduced through the filling process, as well as during the hold period. The dissolved oxygen content was kept to a minimum (<0.1 mg/L) throughout the holding phase. Consequently, this method was adopted as the protocol for all future wort collections.

5.1.2 Cleaning & Sterilization Protocol

The wort holding tanks were subjected to a cleaning cycle consisting of a pre-rinse with hot water (85 °C), a caustic cleaning rinse (40 % caustic at 60 °C) followed by a hot water post- rinse (85 °C). Sanitization of these vessels was accomplished by contacting the walls with a peracetic acid solution (2 % w/v). The piping wort transfer piping also went through the same cleaning and sanitization regiment.

The 50-L bioreactors followed a different cleaning and sterilization protocol. The systems were rinsed with hot water (60 °C) and then filled to the top with 40 °C warm water. An industrial cleaning agent, Diversol CX/A (DiverseyLever, Canada), was then added to this water to form a 2 % w/v solution. Air was sparged into the bottom of the reactor at a superficial gas velocity of 5 mm/s to ensure proper dissolution and proper contacting within the reactor. After one hour contact time, the reactor was emptied and flushed with fresh city water. This cleaning procedure was repeated a second time, culminating in two final cold city water fill-empty cycles.

The waste beer vessel was cleaned using a 2% w/v Diversol CX/A solution. Unlike the gas-lift bioreactors, sparging was not utilized since the WBT was not fitted with a sparger. Mechanical agitation was accomplished by rolling this vessel on its side. The cycle was repeated twice and was followed by two water fill-empty cycles.

Prior to steam sterilization, the 50-L bioreactors were connected to the waste beer vessel and the wort feed line was disconnected, as was the gas sparge line. Valves V10, V11, V12, V13, V14, V15, V16, V17 and V18 were opened and filters F5, F6 and F7 were removed. These gas lines and filters were autoclaved separately for 15 minutes at 121 °C. The steam supply was connected at valves V12 and V16. The steam valve was opened slowly to minimize damage to the equipment and the temperature inside the reactor was monitored closely. A 1-hour sterilization was performed once an internal temperature of 100 °C was reached. Valves V10, V11, V14, V15 and V18 were closed first. The steam supply was then shut off and sterilized filter F7 was connected. The sterilized filters F5 and F6 were immediately connected to the gas supply line and a superficial carbon dioxide gas velocity of 3 mm/s was started. This gas stream not only ensured that the reactors would not collapse during cool-down but also displaced any air present in the 50-L gas-lift bioreactors.

The wort feed line was connected to the bioreactor after an internal temperature of 20 °C was reached. With valves V2, V5, V10 and V14 still in the closed position and with valves V6, V7, V8, V9, V11, and V15 open, the steam supply was connected at either V3 or V6, depending on the wort supply being utilized. The steaming cycle lasted for 1 hour after which time valves V9, V11 and V15 were shut off simultaneously with the steam supply. Once the lines had reached room temperature (20°C), valves V3 and V6 were closed and the steam supply was disconnected. At this point, the entire continuous fermentation system, including the wort supply, the 50 L bioreactors and the waste beer tank, was sterilized and ready for fermentation.

5.1.3 Fermentation Protocol

The 50-L pilot scale gas-lift draft tube bioreactors were used for the continuous primary fermentation of brewer's wort into beer. A glycol thermal jacket provided temperature control with a liquid temperature of 15 °C targeted throughout the fermentation trials. Each reactor was equipped with a temperature probe for measurement purposes and a temperature thermocouple and glycol solenoid valve for the adjustment of glycol feed to the reactor. The gas-lift fermenters were also equipped with a primary mixing gas (carbon dioxide or nitrogen), as well as with an air supply for oxygen dosing. The desired mixture of gas was selected by adjusting the appropriate rotameter/needle valve combination and then passing this gas mixture through the sterile filter (Millipore, Millex®-FG$_{50}$, 0.2 □m Filter Unit) and into the draft-tube of the bioreactor. A superficial air velocity of 0.39 mm/s (0.4 scfh) was injected into the reactor for all the fermentations, while the primary mixing gas flowrate was adjusted to suit the specific immobilization type.

The 50-L gas-lift bioreactor followed a traditional batch start-up before a continuous mode of operation was started. After cleaning and sterilization as described in section 5.1.2, the gas-lift bioreactor was filled with 50 liters of wort from the wort holding tanks (WT1 or WT2) and then injected with 200 grams of yeast (4 g/L) through the Scandi Brew® sterile sample port. In the case of the k-carrageenan gel beads, 20 L of beads were injected into the reactor, yielding an initial concentration of-LCC3021 medium flocculent yeast of 4 grams per liter. The bioreactors were sampled daily and the evolution of diacetyl and the liquid specific gravity were closely monitored. Once the specific gravity had reached its minimum value and the diacetyl concentration had dropped below 30 □g/L, it was deemed that the system could be set into continuous operation. The fermentation medium (wort) was continuously fed through the bottom of the reactor while "green" beer overflowed through the funnel at the top of the reactor. As the reactor's working volume was fixed, selecting the flowrate of the fresh wort feed into the reactor controlled the average liquid residence time. Liquid samples were withdrawn from the reactor daily at the outlet through the sterile sampling valve (Scandi-Brew®) for both chemical and microbiological analyses (methods described in Chapter 4).

At selected time periods, continuous fermentation product was collected from the 50-L primary fermentation bioreactor in larger quantities (40-L sterile stainless steel cans) and subjected to post-fermentation processing in order to produce a finished, saleable beer for evaluation and comparison to industrially-produced control beer. The selected 50-L bioreactor was disconnected from the waste beer vessel and immediately connected to the beer collection vessel. Once the desired liquid had been collected, the bioreactor was reconnected to the waste beer vessel. The collected "green" beer was subjected to a post-fermentation hold period in order to reduce the liquid's diacetyl level below 30 □g/L. The yeast carried over with the liquid was allowed to settle and the liquid (cells concentration of ~1-5 million cells/mL) was placed in cold storage for aging (7 days at 2 °C). After the aging period, the liquid was filtered, diluted to 5 % alcohol by volume and carbonated before being packaged in 341-mL beer bottles. All packaged liquid was then subjected to pasteurization through Labatt plant equipment.

*5.2 CONTINUOUS GEL BEAD PRODUCTION PROCESS*

The objective of this section of experimental work was to evaluate a continuous bead production process for the production of yeast-inoculated gel beads in order to supply immobilized LCC3021 yeast cells to the 50-L continuous gas-lift draft tube bioreactors described in section 5.1.

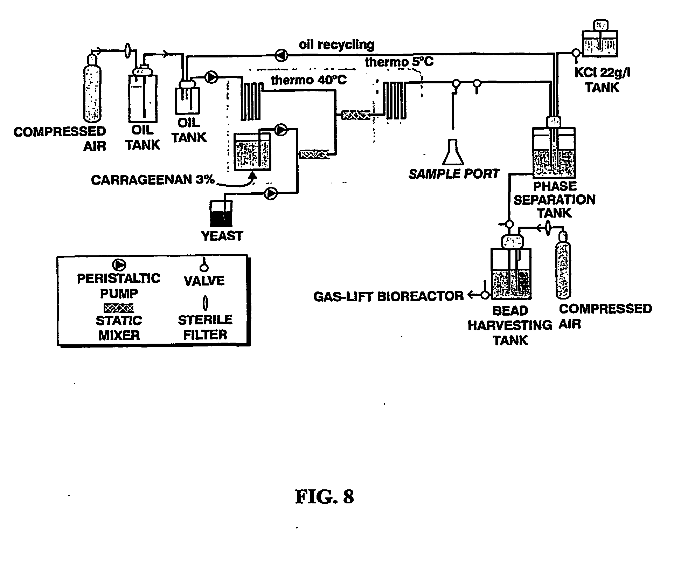

The production process (FIG. 8) first entailed the formation of an emulsion between the non-aqueous continuous phase (vegetable oil) and the aqueous dispersed phase (κ-carrageenan gel solution mixed with yeast cells) with the use of static mixers. Rapid cooling to induce polymer gelation followed this step. The formed beads were then introduced into a potassium chloride solution which both promoted hardening as well as separation of the beads from the oil phase.

The formation of the □-carrageenan gel bead emulsion was conducted in a 37°C temperature controlled water bath in order to prevent premature gelification of the carrageenan gel. The sterilized polymer was maintained at 37 °C in a temperature regulated water bath and the yeast inoculum was maintained at 20 °C prior to immobilization. Using Masterflex peristaltic pumps (Cole Parmer Company, USA), the gel and the yeast slurry were pumped through 24 elements of the 6.4 mm diameter static mixer in order to disperse the cells evenly through the gel. The sterilized oil, stored at room temperature, was pumped (Masterflex peristaltic pump) into the hot water bath to also reach a temperature of 37°C.

The inoculated polymer (aqueous phase) was then mixed with the oil (continuous phase) through another series of static mixers to create the desired emulsion. This resulting emulsion was rapidly cooled to 5 °C inside a water/ice bath, provoking the gelling of the polymer droplets into beads. The beads then proceeded into a sterile 22 g/L potassium chloride solution which aided their hardening and allowed for their separation from the oil phase. The process oil was recycled back to the process and the aqueous phase (beads and potassium chloride solution) was transferred into a separate tank for size classification before loading into the 50-L bioreactors.

5.2.1 Static Mixer - Kenics Type

At the heart of this novel bead production process are Kenics static mixers (Cole Parmer Instrument Company, Niles, Illinois, USA). They are composed of a series of stationary elements placed in a tube with an internal diameter equivalent to that of the static mixer diameter. These elements form crossed channels, which promote the division and the longitudinal recombination of the liquid flowing through the static mixer. The transversal rupture of these finely created streamlines into an increasingly homogenous emulsion is furthermore provoked by this mixing system. Table 5.2 lists the three types of static mixers that were used in this study.

**Table 5.2 Description of Kenies static mixers used. (supplied by Cole Parmer)**

| Model | Static mixer diameter D (mm) | Number of elements ($N_r$) |
|---|---|---|
| G-04667-04 | 6.4 | 12 |
| G-04667-06 | 9.5 | 12 |
| G-04667-08 | 12.7 | 12 |

5.2.2 Gel Production Materials

The two principal materials in the production of the gel beads were the oil and polymer. κ-Carrageenan (type X-0909, lot 330360, Copenhagen Pectin, Denmark), a polysaccharide polymer extracted from red algae, was a generous gift from Copenhagen Pectin A/S. This polymer possesses the unique property of thermo-gelation, where its gelling temperature depends on the concentrations of both κ-carrageenan ([Car]) and potassium chloride ([KCl]). The polymer was dissolved to a concentration of 30 g/L into distilled water at 80°C containing 2.0 g/L of KCl. The resulting gel solution had a gelling temperature of 28°C. The gel was autoclaved for 1 hour at 121 °C and then placed into a 40 °C water bath so that it would not harden. Commercial grade corn oil (Pasquale Bros. Inc., Canada) was also sterilized for 1 hour at 121°C and then stored at room temperature (20°C) until its use. A yeast slurry was prepared as described in section 4.1.

5.2.3 Measurement of Bead Diameter

Bead samples were collected at the exit of the 5 °C heat exchanger in flasks containing 100 mL of 22 g/L KCl solution. The beads were allowed to soak in this solution for 2 hours to promote their hardening. The oil was removed from the aqueous phase by successive washes with potassium chloride solution. The samples were then stored at 4 °C to prevent microbial contamination prior to analysis.

The measurement of bead diameter was performed using the image analysis software Optimas (Version 4.02, BioScan, Inc, USA) linked to a video camera (Pentax Macro 50 mm). A bead sample was transferred into a petri dish containing a fine film of water (used to separate the beads) and then placed under the camera. A total of 300 to 400 beads were measured using this system. The capabilities of the Optimas software lie between 100 $\mu$m and several mm with a maximum absolute error of 30 $\mu$m. The data obtained from Optimas was analyzed further using Microsoft Excel. The resulting sample size distributions were characterized by their sample mean diameter ($D_B$) and coefficient of variation (COV).

5.2.4 Bead System Evaluation - Experimental Plan

A total of 3 static mixer diameters ($D_s$ = 6.4 mm, 9.5 mm and 12.7 mm) were compared to assess which type of bead population would be produced as measured by the sample's average bead diameter and coefficient of variation of the size distribution. The number of static mixer elements ($N_s$) was varied between 12 and 120 elements while the polymer volume fraction ($\square_c$) was studied between 8.3 % v/v and 50 %v/v gerin oil solution. Above an $\square_c$ of 50%, the dispersed (gel) and continuous (oil) phases became inverted, that is to say, oil droplet inclusion within the polymer matrix resulted instead of gel droplets within the oil matrix. The superficial liquid velocity of the oil/gel emulsion through the emulsion section was adjusted in the range of 3.6 cm/s and 17.8 cm/s. The superficial liquid velocity ($V_{SL}$) through the emulsion static mixer was calculated by the following equation:

$$V_{SL} = (Q_{oil} + Q_{car})/S$$

where S is the cross sectional area of the tubing which contain the static mixer, $Q_{oil}$ is the volumetric flowrate of the oil phase and $Q_{car}$ is the volumetric flowrate of the carrageenan gel solution.

RESULTS AND DISCUSSION: FERMENTATIONS & MIXING DYNAMICS WITHIN 50-L GAS-LIFT BIOREACTORS

The use of immobilized cells for the production of ethanol has been published. In the last two decades, researchers have attempted to optimize the ethanol production process by coupling immobilized cell technology with continuous processing (Kuu, 1982; Gil, 1991; Maiorella, 1983). Many have met with great success and the use of continuous immobilized cell systems for ethanol production has become industrial. However, the implementation of such a continuous process in the brewing industry for the primary fermentation of beer is not as simple. Beer is comprised not only of ethanol, but also of a myriad of flavor compounds, which add both complexity and depth to the final product. The following chapter describes the results obtained by the author in the quest for producing a well-balanced beer within the pilot scale GLDT fermenter.

*6.1 BATCH FERMENTATIONS IN THE PILOT SCALE GLDT SYSTEM*

Batch fermentations utilizing freely suspended yeast cells were conducted in the 50-L pilot scale gas-lift draft tube bioreactor. These trials provided the opportunity to assess the feasibility of using such a system for the fermentation of wort into beer. In addition, the trials served to establish a benchmark for future comparison with continuous fermentation liquids. Two batch fermentations were undertaken in the 50-L bioreactor using a lager yeast strain from the Labatt Culture Collection (LCC3021). The yeast growth rate, as well as the consumption of nutrients and release of products, was monitored throughout the fermentations.

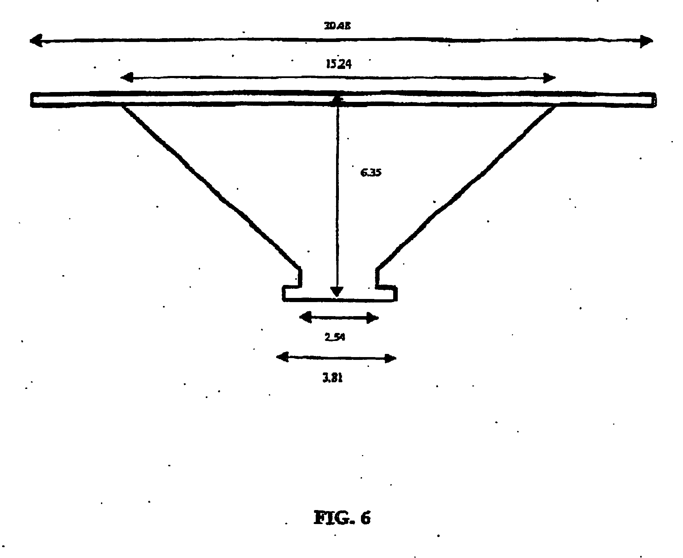

Figures 6.1 and 6.2 present the yeast concentration and viability profiles for Batch fermentation 1 and 2, respectively. In both instances, yeast growth followed the classical rates reported in literature. Viabilities as measured by methylene blue remained high throughout, with values remaining ranging near ninety percent. The carbohydrate concentration profiles for batches 1 and 2 are presented in Figures 63 and 6.4. The simple sugars, glucose and fructose, were taken up first by the yeast, followed by the consumption of maltose and maltotriose. The levels of maltotetrose as well as the larger polysaccharides remained unchanged through the fermentation. Ethanol is one of the most important by-products of yeast metabolism. An optimized anaerobic fermentation will produce about 48 g of ethanol and 47 g of carbon dioxide per 100 g of metabolized glucose. Small quantities of glycerol will also be produced (3.3 g per 100 g glucose) as this by-product is involved in maintaining the redox balance within the fermenting yeast, as well as supporting the cell in its osmotic balance, particularly in hypertonic media. Figures 6.5 and 6.6 illustrate the evolution of the ethanol and glycerol concentrations over fermentation time. The ethanol levels rise very slowly at the beginning of the fermentation due to the presence of oxygen in the fermentation medium as the yeast cells are in their aerobic growth phase. Once the oxygen has been depleted, ethanol levels rise exponentially until the fermentable sugars are depleted, at which point the concentration levels off. Vicinal diketones are also very important by-products of yeast metabolism. The total diacetyl and pentanedione concentrations for batches 1 and 2 are provided in Figures 6.7 and 6.8. These compounds rose until approximately 40 hours into the fermentation, corresponding to the peak levels of yeast concentration and are a result of the amino acid syntheses that yeast undertake during their growth phase. During the latter portion of the fermentation, diacetyl, pentanedione and their precursors $\square$-acetolactate and $\square$-ketobutyrate, are converted by the yeast to their corresponding, less flavor active diols.

From the results presented in this section, it appeared that the two batch fermentations proceeded normally within the gas-lift draft tube bioreactor. Yeast growth and carbohydrate uptake followed the expected paths, as did the by-products, ethanol, diacetyl and pentanedione. A comparison of the individual batch data indicates that the two batches fermented in very similar fashion. Figure 6.9 compares the ethanol concentration from batches 1 and 2. The individual curves follow the same profile with many of the data points overlapping each other, indicating a level of repeatability. Although the sequence of consumption of substrates and subsequent yield of products did not change within the gas-lift system, the rate of fermentation did The completion of primary fermentation represented by the peak ethanol concentration was achieved in both batches at about 80-85 hours. Diacetyl reduction to below 30 □g/L was achieved in an additional 20 hours. These results suggested that primary fermentation of high gravity wort could be completed in about 100 hours as compared to 120-168 hours for traditional batch lager fermentation. The agitation provided by the gas-lift draft tube bioreactor contributed to this decrease in fermentation time due to the enhanced mass transfer afforded by such systems. With this information, future fermentation trials were performed with confidence that the gas-lift draft tube bioreactor did not significantly alter the fermentation metabolism of yeast and that fermenting with freely suspended yeast within this system could reduce batch fermentation time by at least 20 hours.

FIGURE 6.1 TOTAL CELL CONCENTRATION AND VIABILITY VERSUS FERMENTATION TIME FOR LCC3021 YEAST BATCH FERMENTATION 1 WITHIN A PILOT SCALE GLDT BIOREACTOR.

FIGURE 6.2 TOTAL CELL CONCENTRATION AND VIABILITY VERSUS FERMENTATION TIME FOR LCC3021 YEAST BATCH FERMENTATION 2 WITHIN A PILOT SCALE GLDT BIOREACTOR.

FIGURE 6.3 CARBOHYDRATE CONCENTRATION PROFILES VERSUS FERMENTATION TIME FOR LCC3021 YEAST BATCH FERMENTATION 1 WITHIN A PILOT SCALE GLDT BIOREACTOR.

FIGURE 6.4 CARBOHYDRATE CONCENTRATION PROFILES VERSUS FERMENTATION TIME FOR LCC3021 YEAST BATCH FERMENTATION 2 WITHIN A PILOT SCALE GLDT BIOREACTOR.

FIGURE 6.5 ETHANOL AND GLYCEROL CONCENTRATIONS VERSUS FERMENTATION TIME FOR LCC3021 YEAST BATCH FERMENTATION 1 WITHIN A PILOT SCALE GLDT BIOREACTOR.

**FIGURE 6.6 ETHANOL AND GLYCEROL CONCENTRATIONS VERSUS FERMENTATION TIME FOR LCC3021 YEAST BATCH FERMENTATION 2 WITHIN A PILOT SCALE GLDT BIOREACTOR.**

**FIGURE 6.7 DIACETYL AND PENTANEDIONE CONCENTRATIONS VERSUS FERMENTATION TIME FOR LCC3021 YEAST BATCH FERMENTATION 1 WITHIN A PILOT SCALE GLDT BIOREACTOR.**

**FIGURE 6.8 DIACETYL AND PENTANEDIONE CONCENTRATIONS VERSUS FERMENTATION TIME FOR LCC3021 YEAST BATCH FERMENTATION 2 WITHIN A PILOT SCALE GLDT BIOREACTOR.**

**FIGURE 6.9 ETHANOL CONCENTRATION COMPARISON FOR BATCH 1 AND BATCH 2 VERSUS FERMENTATION TIME. LCC3021 YEAST WAS USED WITHIN A PILOT SCALE GLDT BIOREACTOR.**

*6.2 IMMOBILIZATION CARRIERS*

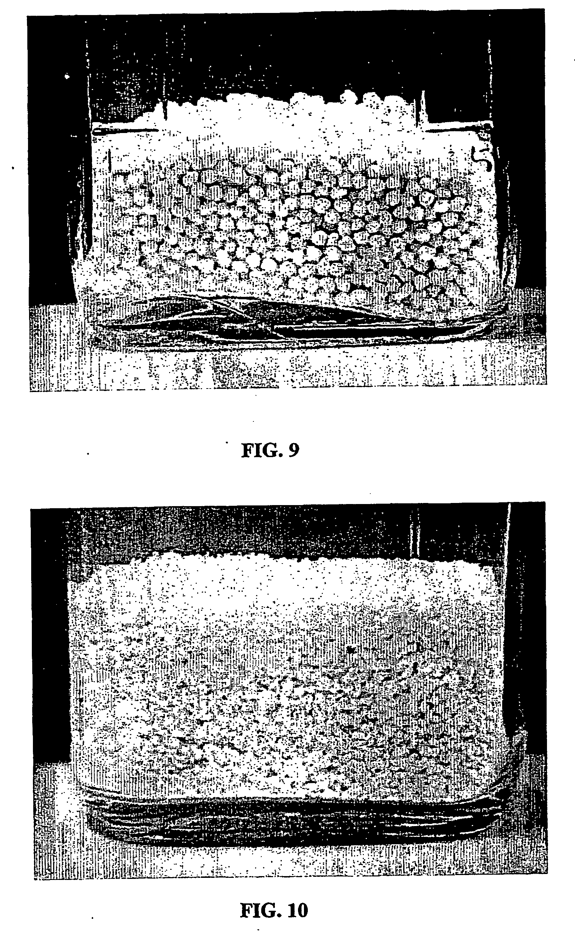

Several carriers were investigated throughout this research project to identify the most promising alternatives for future development work. Three distinct modes of immobilization were tested within the 50-L gas-lift draft tube bioreactor. Two commercially available adsorption carriers with sizes ranging between 1 and 2 mm were evaluated. Siran®, a glass bead carrier supplied by Schott Engineering (FIG. 9), and Celite®, a diatomaceous earth bead provided by World Minerals (FIG. 10), were tested because of their proposed ease of handling and their commercial availability. Adsorption-based carriers provide the opportunity for more aseptic operation since the reactor can be first loaded with the carrier, followed by in-place sterilization and finally inoculation of yeast directly into the reactor. From an industrial standpoint, this option is very attractive as the carrier would not require special storage and the plant would not have to significantly alter its inoculation practices.

The initial fermentation results with both of these carriers in the 50-L gas-lift draft tube bioreactor were unfavorable. The problems that arose were mainly due to the high particle densities of Siran® and Celite® as compared to the liquid medium. Three phase gas-lift draft tube systems work best when the ratio of the carrier and the liquid densities is kept close to unity. In the case of Siran®, the ratio was 1.34, whereas the ratio for Celite® was 1.31. The consequence of having such high density differences between the solid and liquid phase was a significant increase in the minimum gas fluidization velocity required to operate the 50-L gas-lift draft tube bioreactor. For 4 liters of Siran® carrier (8% v/v solids loading), a gas velocity of 21.5 mm/s (based on draft tube diameter) was required in order to achieve circulation. This higher gas velocity was not a significant problem when testing was performed in a water solution, however, as soon as the liquid medium was wort, catastrophic failure occurred within the gas-lift draft tube (GLDT) system. The required gas velocity caused excessive foaming within the reactor, which ultimately reduced the liquid level to below the draft tube, effectively stopping liquid and solid circulation. Failure similar to that encountered with the Siran® occurred when Ceiite® was substituted as the immobilization material Due to these results, both of these adsorption-based carriers were abandoned in future gas-lift fermentation trials.

Using an entrapment-based carrier like □-carrageenan allowed the system to be loaded on a 40% (v/v) basis with solid and required about 0.17 standard cubic meters per hour of gas (5.8 mm/s superficial gas velocity) for its fluidization and subsequent circulation. The positive results experienced with operating the system with carrageenan-entrapped yeast cell beads were due to the carrier's lower density (about 1100 kg/m$^3$) and consequent ease of fluidization. Similarly, desired solids loading with the self-aggregating yeast, LCC 3021 (medium flocculent) and LCC290 (super flocculent), were achieved with gas fluidization velocities of approximately 3 mm/s required to ensure proper circulation. Section 6.2.1 describes in more detail the k-carrageenan gel carrier and section 6.2.2 describes the self-aggregating yeast - LCC3021 flocs and LCC290 flocs □ which were evaluated as immobilization matrices for continuous primary fermentation within the 50-L GLDT fermenter.

6.2.1 □-Carrageenan Gel Beads

Entrapment-based immobilization methods require the inclusion of the yeast cells within the matrix prior to their introduction into the fermentation vessel. Since in-situ reactor inoculation is not feasible at this time, it is necessary to produce these gel beads prior to the commencement of fermentation. It is still not clear what effects long term storage has on inoculated gel beads. In order to minimize any potential negative storage effects, it was decided to produce large quantities of gel beads within a short period of time (8 hours). The static mixer bead process described in Section 5.2 was therefore utilized for this purpose. The ideal beads would have particle diameters ($D_B$) between 0.8 mm and 1.4 mm with the coefficient of variation (COV) of the size distribution kept to a minimum. It was necessary to adjust several parameters of the bead making process to produce the desired amount and consistency of beads. The following section presents a summary of the bead process parameter selection and Section 6.2.1.2 describes the beads used in the continuous fermentation trials.

6.2.1.1 Bead Production Process: Variable Selection

Characterization of the bead making process was undertaken in collaboration with other researchers with emphasis placed on the following process parameters □ static mixer diameter ($D_s$), number of static mixer elements ($N_s$), superficial liquid flowrate ($V_{SL}$) and polymer volume fraction ($□_C$). Figures 6.12 to 6.21 summarize the results obtained through experimentation.

Figure 6.12 illustrates a typical size distribution obtained using the static mixer process to immobilize yeast within the carrageenan gel. In this example, the following parameters were utilized: static mixer diameter of 12.7 mm, 60 static mixer elements, superficial liquid velocity of 10.5 cm/s, and polymer volume fraction of 0.25. The mean bead diameter was measured at 701 □m with a coefficient of variation of 45%. The cumulative size distribution illustrated in Figure 6.13 appeared to fit a normal cumulative distribution calculated with the sample mean and standard deviation. The de Kolmorogof Smirnov method (Scheaffer et McClave, 1990) was used to test the normality. The maximum distance between the experimental data and the fitted data (K-S statistic D) was calculated at 0.0274. The modified D value corresponding to data following a normal distribution must lie below 0.895 at a 95% confidence level. In our case, the modified D value was calculated to be 0.174, well below the limit of 0.895, and it can be concluded that our data fits a normal distribution.

All of the data collected from this bead making process showed size distributions with only one peak. Poncelet et al. (1992), however, showed the occurrence of satellite peaks and/or a secondary peak corresponding to beads with diameters smaller than 200 $\mu$m for alginate beads produced by dispersion in a stirred tank. It is possible that smaller beads produced in our process were simply lost during the bead-washing step and therefore would not appear in our size distribution data.

The effects of superficial liquid velocity and static mixer diameter on the average bead diameter and on the coefficient of variation of the size distribution are depicted in Figures 6.14 and 6.15 respectively. The average bead diameter decreases with an increase of superficial liquid velocity for all three static mixer diameters with a more pronounced effect on the 12.7-mm static mixer. Beads with average diameters larger than 700 Om were not produced with the smaller diameter static mixers (6.4 mm and 9.5 mm) at all tested liquid velocities, whereas the 12.7 mm diameter static mixer produced beads larger than 700 □m at liquid velocities below 11 cm/s. All three static mixer diameters produced beads with coefficients of variation between 38% and 58%. It also appeared that as the velocity increased the coefficient of variation decreased in all three cases. The coefficient of variation varied with the static mixer diameter, with the lowest values produced with the lowest diameter static mixer.

At a superficial liquid velocity of 3.5 cm/s, the polymer volume fraction appeared to affect the average bead diameter, while velocities above 7 cm/s produced relatively no differences at experimental values of □$_c$ varying between 0.083 and 0.5 (Figure 6.16). There appeared to be little or no effect on the coefficient of variation by the polymer volume fraction with increasing superficial liquid velocities (Figure 6.17).

Figures 6.18 and 6.19 illustrate the effects of superficial liquid velocity and the number of static mixer elements on the average bead diameter. As the liquid velocity increased, the average bead diameter decreased for all variations of the number of static mixer elements (Figure 6.18). The average bead diameter at a given liquid velocity was similar for 24 elements to 120 elements while the 12 element configuration produced bead diameters larger than the five other tested configurations. Figure 6.19 also shows that the average bead diameter reaches a minimum above 24 static mixer elements.

Figure 6.20 depicts the effect of superficial liquid velocity on the coefficient of variation for several static mixer element numbers. It appeared that liquid velocity did not affect the coefficient of variability for all tested configurations. The effect of the number of static mixer elements on the coefficient of variability was more pronounced (Figure 6.21). The coefficient of variation decreased with an increase of static mixer elements and reached a minimum of 45% at 60 elements and above. These results were consistent for superficial liquid velocities ranging between 3.6 cm/s and 17.8 cm/s.

It had been hypothesized that an increase in the static mixer diameter ($D_s$) would create heterogeneity of shear forces within the mixer, inducing an increase in the size dispersion as measured by the coefficient of variation.

Concurrently, an increase in $D_s$ would decrease the intensity of the shear forces thus increasing the mean bead diameter. Both of these effects were observed in the experimentation with the smallest diameter static mixer producing beads with the smallest average bead diameter (400 □m - 500 □m) and the smallest coefficient of variation (approximately 40%) or size dispersion.

The energy required to create an emulsion is proportional to the interfacial area created by the polymer and the oil phase. The smaller the bead size, the larger the energy required for formation. Berkman and Calabrese (1988) have shown that an increase in the average superficial liquid velocity ($V_s$) provokes an increase in the dissipated energy per unit mass of fluid, thus favoring a reduction in the bead size. An increase in the average superficial liquid velocity (tested between 3.6 cm/s and 17.8 cm/s) produced a decrease in the average bead size. Such a velocity increase results in a pressure differential between the static mixer inlet and outlet. This pressure differential is proportional to the dissipated energy per unit mass of liquid. An increase in velocity therefore induces an increase in the system's dissipated energy, which favors a reduction in bead size. The reduction in bead diameter, $D_B$, was observed as the superficial liquid velocities increased. Al Taweel and Walker (1983) have shown that a dynamic equilibrium is established between the formation of beads and the coalescence between beads for high velocities corresponding to significant turbulence levels. For constant static mixer diameter ($D_s$) and number of elements ($N_s$), the superficial velocity had little effect on the coefficient of variation. Velocity is therefore a parameter, which allows the manipulation and selection of the average bead diameter without significantly modifying the size dispersion.

Within the scope of this research, the carrageenan gel volume fraction (□$_c$) had little effect on either the average bead diameter or the coefficient of variation, except for the lowest studied velocity of 3.6 cm/s where the average bead diameter decreased with a decrease in □$_c$. Audet and Lacroix (1989) studied this parameter for the production of carrageenan beads in a two-phase dispersion system (batch stirred tank not continuous static mixer process) and they concluded that $\varepsilon_c$ had no effect on the mean bead diameter for a polymer solution with a carrageenan concentration of 3% (w/v). The specific effect of the □-carrageenan gel concentration on the bead size distribution was examined by Audet and Lacroix (1989) who showed that this parameter strongly influenced the size distribution. Increasing gel concentrations resulted in increasing average bead diameter ($D_B$) and coefficient of variation (COV). The noted effect was attributed to the increased viscosity of the gel at higher concentrations resulting in lower shear forces on the emulsion and thus larger beads. Although the effect of gel concentration on bead size was not investigated in this thesis, it could be used as another means of controlling bead size if necessary.

An increase in the number of mixing elements ($N_s$) increases the average residence time that a fluid element spends inside the static mixer, resulting in a more homogenous mixture and thus the formation of smaller and more tightly dispersed beads. In the experimentation, an equilibrium in the dispersion (measured by the coefficient of variation) was reached around 60 to 72 elements. Middleman (1974) has shown that 10 elements were sufficient to attain such an equilibrium in the case of emulsions with low viscosity (0.6 to 1.0 cP). The carrageenan solution used in these experiments [3% w/v)] had an average viscosity of 200 cP and the oil's viscosity was 25 cP. Consequently, this higher viscosity required a longer residence time inside the mixer in order to reach pseudo homogeneity.

FIGURE 6.12. TYPICAL SIZE DISTRIBUTION OF BEADS PRODUCED USING THE STATIC MIXER PROCESS. THE PROCESS PARAMETERS IN THIS EXAMPLE WERE: $D_S = 12.7$ MM, $N_S = 60$, $V_{SL} = 10.5$ CM/S AND $\square_C = 0.25$.

FIGURE 6.13. TYPICAL CUMULATIVE SIZE DISTRIBUTION OF BEADS PRODUCED USING THE STATIC MIXER PROCESS. THE PROCESS PARAMETERS IN THIS EXAMPLE WERE: $D_S = 12.7$ MM, $N_S = 60$, $V_{SL} = 10.5$ CM/S AND $\square_C = 0.25$.

FIGURE 6.14. SUPERFICIAL LIQUID VELOCITY (CM/S) VERSUS AVERAGE BEAD DIAMETER ($\square$M). THREE DIFFERENT STATIC MIXER DIAMETERS WERE EVALUATED ($D_S$ OF 12.7 MM, 9.5 MM AND 6.4 MM). THE NUMBER OF STATIC MIXER ELEMENTS ($N_s$) WAS KEPT CONSTANT AT 48 AND THE POLYMER FRACTION ($\square_C$) WAS SET AT 0.25.

FIGURE 6.15. SUPERFICIAL LIQUID VELOCITY (CM/S) VERSUS COEFFICIENT OF VARIATION OF THE BEAD DIAMETER (%). THREE DIFFERENT STATIC MIXER DIAMETERS WERE EVALUATED ($D_s$ OF 12.7 MM, 9.5 MM AND 6.4 MM). THE NUMBER OF STATIC MIXER ELEMENTS ($N_s$) WAS KEPT CONSTANT AT 48 AND THE POLYMER FRACTION ($\square_c$) WAS SET AT 0.25.

FIGURE 6.16. SUPERFICIAL LIQUID VELOCITY (CM/S) VERSUS AVERAGE BEAD DIAMETER ($\square$M). FOUR POLYMER FRACTIONS ($\square_c$ OF 0.5, 0.25, 0.125 AND 0.083) WERE EVALUATED. THE NUMBER OF STATIC MIXER ELEMENTS ($N_s$) WAS KEPT CONSTANT AT 48 AND THE STATIC MIXER DIAMETER ($D_s$) WAS SET AT 12.7 MM.

FIGURE 6.17. SUPERFICIAL LIQUID VELOCITY (CM/S) VERSUS COEFFICIENT OF VARIATION OF THE BEAD DIAMETER (%). FOUR POLYMER FRACTIONS ($\square_C$ OF 0.5, 0.25, 0.125 AND 0.083) WERE EVALUATED. THE NUMBER OF STATIC MIXER ELEMENTS ($N_s$) WAS KEPT CONSTANT AT 48 AND THE STATIC MIXER DIAMETER ($D_s$) WAS SET AT 12.7 MM.

FIGURE 6.18. SUPERFICIAL LIQUID VELOCITY (CM/S) VERSUS AVERAGE BEAD DIAMETER ($\square$M). THE NUMBER OF STATIC MIXER ELEMENTS ($N_s$) WAS VARIED TO 12, 24, 48, 60, 72 AND 120. THE POLYMER FRACTION ($\square_C$) WAS KEPT CONSTANT AT 0.25 AND THE STATIC MIXER DIAMETER ($D_s$) WAS SET AT 12.7 MM.

FIGURE 6.19. SUPERFICIAL LIQUID VELOCITY (CM/S) VERSUS COEFFICIENT OF VARIATION OF THE BEAD DIAMETER ($\square$M). THE NUMBER OF STATIC MIXER ELEMENTS ($N_s$) WAS VARIED TO 12, 24, 48, 60, 72 AND 120. THE POLYMER FRACTION ($\square_C$) WAS KEPT CONSTANT AT 0.25 AND THE STATIC MIXER DIAMETER ($D_s$) WAS SET AT 12.7 MM.

FIGURE 6.20. AVERAGE BEAD DIAMETER ($\square$M) VERSUS NUMBER OF STATIC MIXER ELEMENTS ($N_s$). SUPERFICIAL LIQUID VELOCITY (CM/S) WAS VARIED TO 3.6, 7.0, 10.6, 13.2 AND 17.8. THE POLYMER FRACTION ($\square_C$) WAS KEPT CONSTANT AT 0.25 AND THE STATIC MIXER DIAMETER ($D_s$) WAS SET AT 12.7 MM.

FIGURE 6.21. COEFFICIENT OF VARIATION OF THE BEAD DIAMETER (%) VERSUS NUMBER OF STATIC MIXER ELEMENTS ($N_s$). SUPERFICIAL LIQUID VELOCITY (CM/S) WAS VARIED BETWEEN 3.6 AND 17.8. THE POLYMER FRACTION ($\Box_C$) WAS KEPT CONSTANT AT 0.25 AND THE STATIC MIXER DIAMETER ($D_s$) WAS SET AT 12.7 MM.

### 6.2.1.2 Bead Production Process: □-Carrageenan Bead Characteristics

From the data described in the previous section, it was possible to select bead production process parameters to produce beads with the desired characteristics for the fermentation trials. To minimize the coefficient of variation for a particular static mixer diameter, 60 mixing elements were chosen to create the oil-gel dispersion.

Beads with an average diameter of approximately one mm were selected to minimize external mass transfer and to facilitate separation by mechanical means from the fermenting liquid. To achieve this, the largest static mixer tested (12.7 mm) and the lowest tested velocity (3.6 cm/s) were selected. Since the polymer fraction had little effect on the coefficient of variation, a 50/50 ratio ($\Box$ = 0.5) of gel to oil was employed in order to maximize bead productivity.

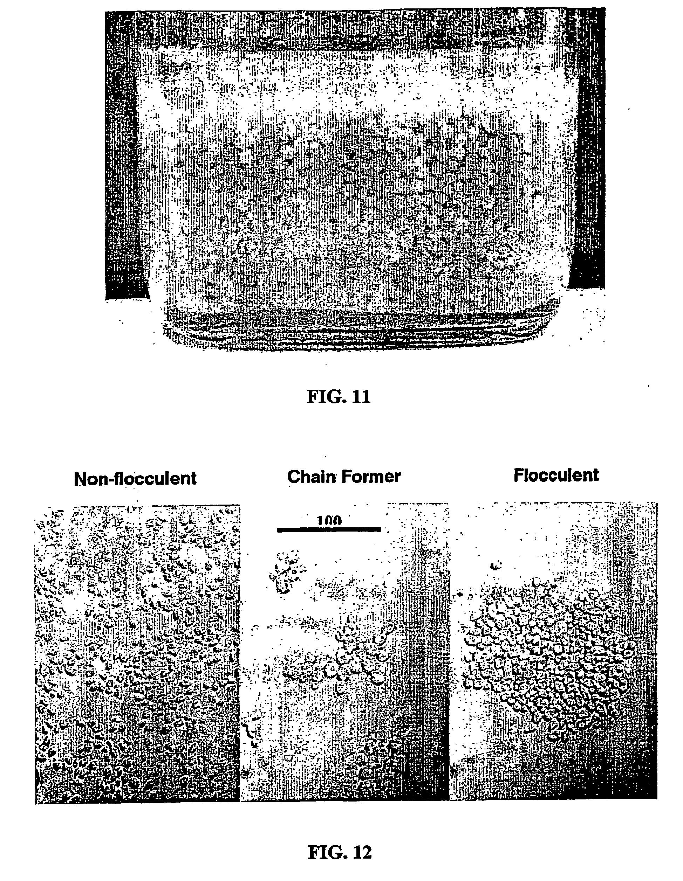

Several batches of gel beads, with LCC3021 yeast entrapped, were produced in the laboratory using the process described in Section 5.2 with $D_s$ =12.7 mm, $N_s$ = 60, $V_{SL}$ = 3.9 cm/s and $\Box_C$ = 0.5. The resultant beads (FIG. 11) were passed through a series of sieves to remove beads larger than 2.0 mm and those smaller than 0.5 mm.

The resulting particle size distribution is presented in Figure 6.23. Figure 6.24 illustrates the cumulative size distribution of these beads. This was the typical distribution employed throughout the 50-L gas-lift fermentation trials.

**FIGURE 6.23. BEAD SIZE DISTRIBUTION OF K-CARRAGEENAN GEL BEADS UTILIZED IN THE CONTINUOUS FERMENTATION TRIALS WITHIN THE 50L GAS-LIFT DRAFT TUBE BIOREACTOR.**

**FIGURE 6.24. CUMULATIVE BEAD SIZE DISTRIBUTION OF K-CARRAGEENAN GEL BEADS UTILIZED IN THE CONTINUOUS FERMENTATION TRIALS WITHIN THE 50L GAS-LIFT DRAFT TUBE BIOREACTOR.**

6.2.1.3 Limitations of the Bead Process With Respect to Industrial Scale Application

A process producing 10 L of beads per hour, per static mixer, was developed and implemented at a pilot plant level. Several aspects of this process require further development and/or optimization before industrial scale bead production can be considered. An increase in volumetric productivity of the system is necessary in order to supply the volume of immobilized cells required to feed a large-scale bioreactor. For example, a 2000-hL gas-lift draft tube bioreactor would require approximately 800 hL of beads. To achieve such volumes, an increase in both the flows of gel and oil are necessary. The data suggest that the resulting increased velocity using the static mixers of 6.4 mm to 12.7 mm diameters would induce the formation of beads too small to be used in the fermentation system. It would therefore be necessary to increase the diameter of the static mixers, thus increasing the average bead diameter. However, the use of static mixers with a larger diameter will also increase the bead size dispersion, producing a larger percentage of beads outside the desired range.

Another alternative would be the implementation of a system using static mixers of medium size (12.7 mm) placed in parallel. With a ten static mixer system, productivities reaching 100 L/h are conceivable. For the 2000-hL industrial example, the process would run continuously for 800 hours or approximately 34 days to produce the required volume of beads. Several systems could be implemented to reduce the production time but this would add yet another level of complexity. The production time could become less of an issue if it were possible to store the beads for extended periods of time while retaining yeast viability. It is conceivable that a process for drying the beads or storing the beads in a vacuum-sealed container could be developed.

Poncelet and co-workers (1993) have published work indicating that the type of static mixer used to create the dispersion must be considered. With their proposed system using another type of static mixer, as opposed to the Kenics-type used in this research, it may be possible to utilize a larger diameter mixer without compromising the size distribution of the beads (maintaining a low coefficient of variation).

Additional concerns with the existing pilot process include operating the system at 40 °C and the use of vegetable oil and potassium chloride solutions for bead production. Due to the high production temperature, both heating and cooling systems are required in the process. The potential thermal shock that the yeast cells are exposed to requires additional investigation so that an assessment can be made as to potential negative implications. In this study, immobilized cell beads with high yeast viabilities (above 90%) were produced but any other effects that the process may have caused on the yeast population were not investigated.

Because oil is used to produce the desired emulsion and consequently the formation of the beads, and since oil will act as a surfactant thereby suppressing foam formation, the residue of oil on the bead surface is an issue. Although this residue would help during the fermentation stage, any carryover into the final beer would be detrimental, as foam is desirable in finished products. The large volumes of potassium chloride solution utilized to separate the solid phase (beads) from the oil and the method of removing this saline solution from the bead slurry before the introduction of beads into the bioreactor requires attention. Otherwise it may be necessary to flush this solution from the reactor following the addition of beads to the reactor.

Since the immobilized cell beads are produced outside the bioreactor, aseptic techniques must be utilized throughout the bead formation process and sterility maintained until the beads are introduced into the bioreactor. The various transfer points between tanks provide opportunity for contamination and must be monitored due to the fact that the presence of a contaminant could result in its co-immobilization within the bead. As a result of diligence within the laboratory, it was possible to consistently produce aseptic beads. However, the environment within a plant setting may not be as hospitable as the laboratory, therefore requiring much stricter control.

6.2.2 Flocculent Yeast Cells

One of the most natural form of immobilization is the self-aggregation of microorganism into flocs of cells. Calleja and Johnson (1977) have proposed three possible reasons for cells to come in contact with each other to form aggregates, with all distinctive bonding properties. The first involves cells of different sexes being attracted to each other by the release of pheromones (□ and a-factors). This type of bonding is temporary and involves protein-protein bonding between □ and a-agglutinins anchored in the complementary cell walls. Cells may also aggregate through their failure to separate from the mother cell during the budding process. This failure may be inherent to the particular yeast strain or can be caused by nutrient deprivation or mutation of a number of genes. This phenomenon is referred to as chain-formation and not flocculation. The bonds between these cells can be irreversibly destroyed by mechanical shear (Stratford, 1996).

The third scenario is more commonly known as flocculation. Stewart and Russell (1981) have defined flocculation as a reversible "phenomenon wherein yeast cells adhere in clumps and either sediment rapidly from the medium in which they are suspended or rise to the medium's surface". Extensive evidence indicates that flocculation is genetically controlled and the mechanism of flocculation relies on selected molecules acting as bridges between adjacent cell walls. More specifically, it is thought that specific lectins are bound to the □-mannans of the adjoining cells in the presence of $Ca^{2+}$ ions (Calleja and Johnson, 1977). This protein/carbohydrate bonding was found to be reversibly inhibited by chelating agents or by specific sugars.

FIG. 12 depicts three possible yeast cell configurations, namely non-flocculent yeast, chain-forming yeast and flocculent yeast. In the case of the chain-forming yeast, although the cells have aggregated, it is not considered as a type of flocculation since these cells were never single to start with and flocculation implies single cells coming together to form a mass because of favorable environmental conditions ($Ca^{2+}$ ions and low levels of inhibiting sugars). In the case of flocculent cells, the specific size of the floc may be dependent on cell genetics as well as on the hydrodynamic conditions to which the cell is exposed (shear environment).

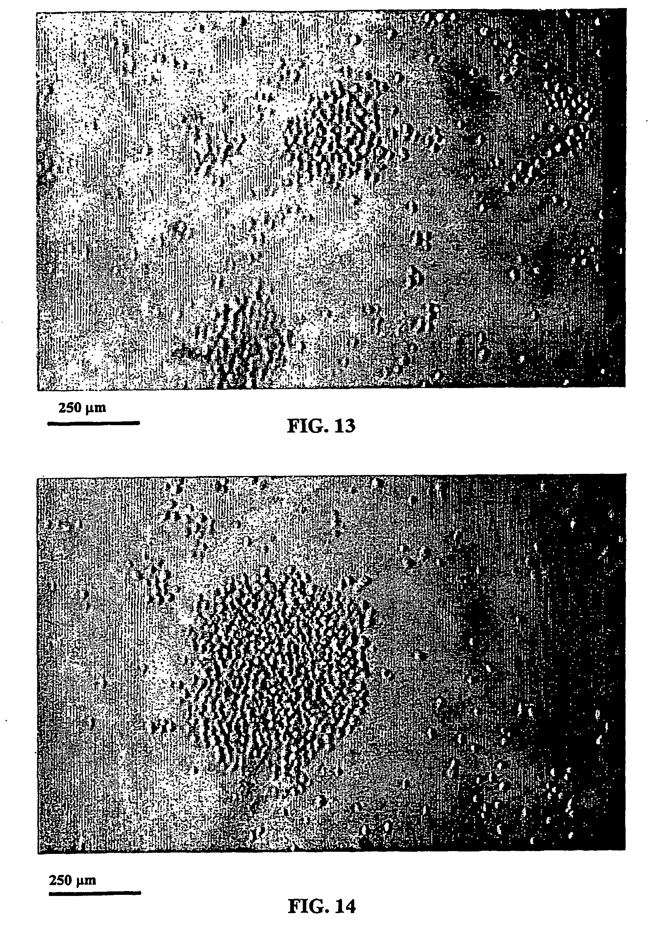

FIG. 13 and FIG. 14 highlight two Labatt lager yeast strains with varying degrees of flocculation. The medium flocculent yeast strain, LCC3021, is presented in FIG. 13. In the presence of calcium ions, this strain will form 0.5 mm to 1.0 mm aggregates once glucose has been depleted from the liquid medium. FIG. 14 is a picture of the superflocculent yeast strain, LCC290, which will form flocs larger than 1 mm in size and under low shear environment will aggregate to clumps measuring up to 5 mm in diameter. Under moderately agitated conditions, the floc diameter of LCC290 will be between 1 and 2 mm. Several measurement methods have been proposed for the assessment of yeast flocculation (Speers & Ritcey, 1995; Akiyama-Jibiki et al., 1997; Teixera et al, 1991; Stewart & Russell, 2000). In "Brewer's Yeast" (Stewart & Russell, 2000), it has been proposed that yeast flocculation methods can be subdivided into three categories, namely sedimentation methods, static fermentation methods and direct observation of floc formation in growth medium.

The sedimentation method first described by Burns in 1937 was modified by Helm and colleagues in 1953 and is currently part of the standard methods of analysis recognized by the Technical Committee and the Editorial Committee of the American Society of Brewing Chemists (1992). This technique is referred to as an in vitro technique as the yeast's settling characteristics are assessed in a calcium-sulfate buffer and not in the actual fermentation medium. The static fermentation method (also known as the Gilliland method) involves growing the yeast in hopped wort and measuring its flocculation characteristics in vivo. Both these methods involve measurements of the absorbance of settled yeast samples vs. yeast samples that have been deflocculated using a UV/Visible spectrophotometer.

Stewart and Russell (2000) present a measurement method for yeast flocculation by visually describing the level of flocculation that occurs in samples of yeast grown in 20 mL screw capped glass bottles. To express the degree of flocculation, they used a subjective measure, for example: 5 - extremely flocculent, 4 - very flocculent; 3- moderately flocculent, 2- weakly flocculent, 1 - rough and 0 - non-flocculent. The superflocculent yeast strain, LCC290 received a classification of 4 - very flocculent whereas the LCC3021 yeast strain was classified as 3 - moderately flocculent.

Flocculence is an important characteristic in the brewing industry as the yeast's natural tendency to either sediment or rise to the surface is commonly used as a separation method for this yeast from the fermenting liquid. However, a yeast strain that flocculates before the fermentation has completed is undesirable since the liquid will not have reached its ideal alcohol and residual sugar level. In continuous fermentation and in particular, gas-lift draft tube continuous fermentation, flocculent yeast act as the immobilization matrix. Their tendency to settle is compensated for by the injection of the sparging gas, which keeps them in suspension. With such a system, the fear of under-fermenting the liquid medium is eliminated since the solid particles are continuously circulated and kept in intimate contact with the fermenting liquid.

In section 6.2.2.1, the settling properties and the fermentation performance of the superflocculent yeast, LCC290, were characterized. The interest was in identifying the onset of flocculation for this particular yeast strain. In addition, the settling velocity of the yeast was determined in order to provide valuable information that could be used for the future in the design of yeast settling vessels.

6.2.2.1 Characterization of Superflocculent Yeast, LCC290

Before performing continuous fermentations with the superflocculent yeast LCC290 within the gas-lift draft tube bioreactor, it was decided to characterize the yeast in lab scale, shake flask fermentations. Figure 6.28 shows the evolution of the yeast population over time. As expected, the concentration increased sharply in the first 48 hours then leveled off with a slight decrease at the end of fermentation. In the first 48 hours, there were enough nutrients and oxygen present in the wort to allow for yeast growth. However, as the yeast continues to consume carbohydrates in the absence of oxygen, it will not reproduce but rather enter into its anaerobic fermentative phase. Once the carbohydrate supply was depleted, a small population of yeast began to die. This phenomenon is depicted in Figure 6.29, where cell viability decreased from approximately 97 % to just above 90%.

Figure 6.30 shows the consumption of carbohydrates over the course of fermentation. The yeast cells first consumed the simple sugars glucose and fructose then sequentially took up maltose and maltotriose. Brewing yeast cannot, however, metabolize either maltotetrose or the longer chain polysacharrides (poly 1 & 2). As the overall carbohydrate concentration decreased (represented by specific gravity curve in Figure 6.31), the ethanol concentration increased proportionately. At approximately 37 hours into the fermentation, ethanol and carbohydrate concentrations were equal.

From a growth and carbohydrate metabolism perspective, it appeared that the superflocculent yeast LCC290 behaved, as would the industrial yeast strain LCC3021. The fermentation appeared to reach completion when the liquid specific gravity reached approximately 2.7 °P. It is common for flocculent yeast strains to form large clumps (flocs) and settle out of solution before end-fermenting; this phenomenon is known in the brewing industry as a 'hung' fermentation.

In our batch trials, we were able to end ferment because the flasks were agitated therefore keeping the yeast in suspension and in close contact with the nutrient supply.

Another important characteristic that was investigated was the yeast's ability to flocculate. In particular, we were interested in establishing the speed, with which the yeast would settle, as well as get an indication of when this particular yeast strain would commence flocculation. Both of these characteristics are of importance for the continuous fermentation trials as they play a role in maintaining a healthy yeast population within the gas-lift fermenter. Figure 6.32 shows yeast-settling curves over the course of fermentation. Very little settling occurred in the sample tested at 24 hours into the fermentation. Flocculation is inhibited by the presence of certain sugars; glucose is a known inhibitor, hence flocculation will commence only once this inhibitor has been depleted. In the sample at 40 hours batch fermentation, the cells began to flocculate and settled out of solution when tested using the method described in section 4.7. Settling was very rapid for all tested intervals, except at 24 hours when no settling occurred. During the slowest settling trial, conducted at 40 hours, the yeast took 90 s to completely settle out of the test apparatus. At 71 hours, less than 50 s were required for settling.

Researchers have proposed that settling rate is a function of solids concentration (Coe and Clevenger, 1916). Figure 6.33 plots the settling velocity of the solids at a given yeast cell concentration. The data points for this curve were generated using the method proposed by Kynch (1952) on the settling data collected at each fermentation interval. The results lie on approximately the same curve, confirming the same phenomenon that Coe and Clevenger (1916) had observed.

The results collected during the settling test indicated that the superflocculent yeast strain LCC290 will flocculate at liquid specific gravities of 6 °P and lower. This value can be used as a guide for continuous fermentations to indicate where the pseudo-steady-state liquid specific gravity should be kept if it is desired to keep the cells flocculated. Operating the reactor above 6 °P would risk destabilizing the flocculated cells and possibly lead to the washout of the immobilized yeast population. The settling characteristics of the superflocculent yeast indicate that the yeast population will settle out quite quickly if left stagnant. With a three-phase gas-lift draft tube bioreactor, it will be possible to keep these cells in circulation, however, in the case of a failure in the gas supply system, the cell population would settle out quickly and possibly necessitate auxiliary sparge gas to resuspend the solids. For post-fermentation processing, this rapid settling characteristic is advantageous as solids separation devices such as gravity settlers can be used for bulk solids removal. In the brewing industry, this would decrease the solids load on the centrifuging equipment and therefore allow for longer run times between centrifuge bowl discharges. Less beer losses would be expected and the level of off-flavors imparted to the beer by the centrifuge (although minimal) would be minimized because of the lower levels of yeast biomass passing through the centrifuge.

FIGURE 6.28 TOTAL YEAST CELL CONCENTRATION OF LCC290 AGITATED BATCH FERMENTATIONS VERSUS FERMENTATION TIME. FERMENTATION TEMPERATURE WAS KEPT AT 15 °C.

**FIGURE 6.29 YEAST CELL VIABILITY AS MEASURED BY METHYLENE BLUE VERSUS FERMENTATION TIME.**

**FIGURE 6.30 CARBOHYDRATE CONCENTRATION PROFILES VERSUS FERMENTATION TIME FOR LCC290 YEAST BATCH FERMENTATIONS.**

FIGURE 6.31 ETHANOL AND GLYCEROL CONCENTRATIONS AND LIQUID SPECIFIC GRAVITY VERSUS FERMENTATION TIME FOR LCC290 YEAST BATCH FERMENTATIONS.

FIGURE 6.32 INTERFACE HEIGHT OF A YEAST SUSPENSION VERSUS SETTLING TIME. THE VALUES FOR THIS CHART WERE COLLECTED AT SEVERAL FERMENTATION INTERVALS.

**FIGURE 6.33 SETTLING VELOCITY OF A YEAST SUSPENSION VERSUS CELL CONCENTRATION. THE VALUES FOR THIS CHART WERE COLLECTED AT SEVERAL FERMENTATION INTERVALS.**

*6.3 ASSESSMENT OF GAS-LIFT TECHNOLOGY FOR CONTINUOUS FERMENTATION OF BEER*

The first and most important goal of this thesis was to evaluate the feasibility of operating the 50-L pilot scale gas-lift bioreactor in continuous mode using □-carrageenan gel beads to entrap *Saccharomyces carlsbergensis* cells (described in section 6.2.1). In addition, it was our desire to investigate whether a North American type lager beer of acceptable flavor quality could be produced with such a system. We also set out to determine the minimum residence time required for complete attenuation of the high gravity wort (17.5 °P) as well as establish an operating range for oxygen within the continuous fermentation system.

The minimum residence time where all wort sugars were consumed was 24 hours. This can be compared with a classical batch fermentation time of five to seven days. The dissolved oxygen concentration measured by the in-place Ingold oxygen probe within the bioreactor was close to zero regardless of the oxygen added to the sparging gas (ranged from 0 to 20% v/v). This indicated that the oxygen supplied in the wort was either consumed quickly by the yeast cells or was simply vented in the off gas. The level of free cells in the overflow of beer was in the order of $10^8$ cells per mL of green beer. The levels of the vicinal diketones, diacetyl and 2,3-pentanedione, as well as the level of acetaldehyde, decreased with decreasing oxygen proportions in the sparging gas (Figures 6.34 and 6.35). The measured esters (ethyl acetate and isoamyl acetate) and higher alcohols (propanol, isobutanol, isoamyl alcohol) did not appear to be affected by the change in oxygen supply (Figure 6.36).

Figure 6.37 compares various flavor-active compounds in two finished test beers produced with the continuous immobilized cell system to a control beer produced industrially (free cell batch fermentation). Some differences in esters (ethyl acetate, isoamyl acetate) and in higher alcohols (propanol) were consistently observed between the continuously fermented beer and the control, regardless of the level of oxygen supply. The taste of the finished beer produced with 2% oxygen was judged by a trained taste-panel to be relatively close to the control beer (industrial product). The beer produced with 20% oxygen, however, was judged unacceptable with signs of flavor oxidation and a "papery" and "winey" taste.

At pseudo-steady state, the pilot scale bioreactor was operated with a residence time of 24 hours over a 6-week period. The "green" beer had an acceptable flavor profile and no major defects (sulfury off-notes) were noted. The amount of oxygen in the sparging gas proved to be a critical element in this experimentation. Beers produced with 2 to 5 % oxygen in the sparging gas gave the best taste profiles. This critical control point needs further attention with the focus on more accurate oxygen measurement techniques with measurements performed on a larger set of pre-fermentation and post-fermentation analytes.

In traditional batch primary fermentation, the wort is dosed with oxygen before being transferred into the fermenter. After inoculation of the medium, the dissolved oxygen concentration rapidly decreases as the yeast cells consume it (first 24 hours of fermentation where yeast growth occurs). The remainder of the fermentation is therefore carried out under mostly anaerobic conditions. The use of a continuous homogenous system for primary fermentation does not allow for this change of oxygen concentration over time. For this reason, it may be very difficult to attain a complete flavor match for beer produced using continuous and batch fermentations. Regardless of these differences, the bioreactor configuration tested in this initial assessment produced a beer with an acceptable flavor quality and analytical profile. By using a gas-lift bioreactor with relatively small-sized beads (~1 mm), it was possible to increase the volumetric bioreactor productivity by reducing the time for primary fermentation by several days. The level of biomass released in the exiting beer showed that the level of yeast growth in the immobilized cell bioreactor was equivalent to that of free cell batch fermentation under similar conditions. These observations confirm the reliance of flavor formation on the level of yeast growth.

This could explain the failure of previous attempts to produce acceptable beer with restricted growth immobilized cell systems. The supply of a controlled gas mixture can be a powerful tool in the fine adjustment of beer organoleptic properties in continuous immobilized cell fermentations.

The high level of diacetyl in the exiting liquid was also observed by other researchers (Virkajarvi & Pohjala, 1999; Kronlof et al., 2000). In North American lager type beers, the target level of diacetyl is 30 □g/L as compared to the 400-800 □g/L levels in the exiting continuous fermentation liquid. The use of traditional aging technology (cold aging at 2 °C for 14 days) lowered diacetyl to the desired range but to the detriment of overall process productivity. The use of the rapid secondary fermentation technology reported in Chapter 2 would help reduce diacetyl without significantly lowering productivity (2-hour process). The additional costs, however, may be prohibitive and all brewers may not want to subject their beer to high temperatures (80 °C to 90 °C).

FIGURE 6.34 VICINAL DIKETONES CONCENTRATION VERSUS PERCENT OF OXYGEN IN THE SPARGE GAS. THE FERMENTATIONS WERE CARRIED OUT IN THE 50-L GAS-LIFT SYSTEM LOADED WITH 40% (v/v) CARRAGEENAN GEL BEADS. THE TOTAL SPARGE GAS RATE WAS KEPT CONSTANT AT 6.4 SCFH. THE RESIDENCE TIME WAS 24 HOURS.

FIGURE 6.35. ACETALDEHYDE CONCENTRATION VERSUS PERCENT OXYGEN IN THE SPARGE GAS. THE FERMENTATIONS WERE CARRIED OUT IN THE 50-L GAS-LIFT SYSTEM LOADED WITH 40% (V/V) CARRAGEENAN GEL BEADS. THE TOTAL SPARGE RATE WAS KEPT CONSTANT AT 6.4 SCFH. THE RESIDENCE TIME WAS 24 HOURS.

FIGURE 6.36 ESTERS AND FUSEL ALCOHOLS CONCENTRATION VERSUS PERCENT OXYGEN IN THE SPARGE GAS. THE FERMENTATIONS WERE CARRIED OUT IN THE 50-L GAS-LIFT SYSTEM LOADED WITH 40% (V/V) CARRAGEENAN GEL BEADS. THE TOTAL SPARGE RATE WAS KEPT CONSTANT AT 6.4 SCFH. THE RESIDENCE TIME WAS 24 HOURS.

**FIGURE 6.37. COMPARISON OF FINISHED PRODUCT PRODUCED WITH 2% OXYGEN AND 20 % OXYGEN IN THE SPARGE GAS VERSUS INDUSTRIALLY PRODUCED BEER AND TASTE THRESHOLDS. FOR THE CONTINUOUS FERMENTATION PRODUCTS, THE FERMENTATIONS WERE CARRIED OUT IN THE 50-L GAS-LIFT SYSTEM LOADED WITH 40% (V/V) CARRAGEENAN GEL BEADS. THE TOTAL SPARGE RATE WAS KEPT CONSTANT AT 6.4 SCFH. THE RESIDENCE TIME WAS 24 HOURS.**

*6.4 MIXING AND CIRCULATION RATES OF FERMENTATIONS WITHIN A THREE-PHASE GAS-LIFT DRAFT TUBE BIOREACTOR*

Mixing experiments were conducted using the acid injection method outlined in section 4.8. The goals of this phase of experimentation were twofold. We wanted to first assess whether the gas-lift system was well mixed by calculating the liquid circulation rate and the resulting mixing time for a number of immobilization carriers at different superficial fluidizing gas velocities. The distinction of these trials from those reported in literature was that the entire experimentation was conducted on actual fermentation media with active yeast cells rather than on model solutions (water-solid-gas systems). These mixing experiments were also geared towards calculating superficial liquid velocities, which could be used for the future scale-up of the pilot system. 6.4.1 Probe Calibration

The pH probe utilized in the mixing studies was calibrated using the method described in section 4.8. The 4-20 mA signal emitted from the pH probe was passed across a 250 Ohm resistor and transformed into a 1 - 5 Volt signal, which could be recorded by the data acquisition card (DAC). The pH probe was immersed sequentially into a series of buffers as follows: pH of 4.6 buffer, pH of 4.0 buffer, pH 5.0 buffer, pH of 6.0 buffer and finally into pH of 7.0 buffer (Beckman certified standards, Cole Parmer). Figure 6.38 presents the data collected by the acquisition system for the Ingold pH probe's response to the 5 standard pH solutions. Figure 6.39 is the pH probe calibration curve plotting the actual pH value versus the measured signal voltage. The best-fit calibration curve for this system (coefficient of correlation of 0.9996) was defined by the following equation:

$$pH = 3.68 * Voltage - 3.53 \qquad (6.1)$$

The collected mixing data was transformed using equation 6.1 to reflect actual pH values as measured inside the gas-lift bioreactor.

The response time of the pH probe to a change in pH was also measured. Figure 6.40 to Figure 6.43 depict the typical response of the pH probe to four different step changes in pH, namely 0.6, 1.2, 2.3 and 3.4 units. The original data was fitted to a pulse function using the built-in capabilities of TableCurve 2D (Jandel Scientific) data plotting and analysis software. The resulting curve fits had coefficients of correlation greater that 0.994. From these curves, the time for the probe to respond to 98 % of the step change (response time) was calculated and then plotted versus pH step change (Figure 6.44). Response time declined with pH step change in the ranges tested. For the smallest step change of 0.6, the pH probe response time was ~ 6.4 seconds. The response time decreased to about 4.2 seconds for a pH step change of 3.4.

This type of probe characterization is important, especially when the system is being used for the evaluation of mixing time and circulation rate. The probe should have a low response time for it to reflect changes in the medium it is measuring. In particular, the pH probe response time must be lower than the circulation rate within the reactor if it is to accurately be used in such measurement. A quasi-instantaneous response is however not necessary since a slight lag in response will simply be reflected in consecutive circulation rate measurements and therefore nullified.

FIGURE 6.38 ORIGINAL DATA ACQUIRED BY THE DATA ACQUISITION SYSTEM TO THE INGOLD PH PROBE RESPONSE TO VARIOUS BUFFER SOLUTIONS VERSUS TIME. THE ACQUISITION FREQUENCY WAS 50 HZ FOR A TOTAL OF 15000 POINTS.

FIGURE 6.39 pH PROBE CALIBRATION CURVE PLOTTING PH VERSUS MEASURED VOLTAGE (V). THE LINE OF BEST FIT OR CALIBRATION LINE HAS THE FOLLOWING EQUATION: PH = 3.68*VOLTAGE – 3.53 WITH A COEFFICIENT OF CORRELATION OF 0.9996. (N=2500)

FIGURE 6.40 TYPICAL DATA OF pH PROBE RESPONSE TIME TO A PH STEP CHANGE OF ~0.6. THE RESPONSE WAS FITTED USING TABLECURVE SOFTWARE. THE BEST-FIT PULSE FUNCTION HAD A COEFFICIENT OF CORRELATION OF 0.995.

**FIGURE 6.41** TYPICAL DATA OF PH PROBE RESPONSE TIME TO A PH STEP CHANGE OF ~1.2. THE RESPONSE WAS FITTED USING TABLECURVE SOFTWARE. THE BEST-FIT PULSE FUNCTION HAD A COEFFICIENT OF CORRELATION OF 0.999.

**FIGURE 6.42** TYPICAL DATA OF PH PROBE RESPONSE TIME TO A PH STEP CHANGE OF ~2.3. THE RESPONSE WAS FITTED USING TABLECURVE SOFTWARE. THE BEST-FIT PULSE FUNCTION HAD A COEFFICIENT OF CORRELATION OF 0.999.

$$[\text{PulseCum}] \quad y=a+b(1-\exp(-(x-d\ln(1-2^{0.5}/2)-c)/d))^2$$
$$r^2=0.99948433 \quad F\text{stat}=9688579.1$$

FIGURE 6.43 TYPICAL DATA OF pH PROBE RESPONSE TIME TO A pH STEP CHANGE OF ~3.4. THE RESPONSE WAS FITTED USING TABLECURVE SOFTWARE. THE BEST-FIT PULSE FUNCTION HAD A COEFFICIENT OF CORRELATION OF 0.999.

FIGURE 6.44 INGOLD pH PROBE RESPONSE TIME TO A STEP CHANGE. (N = 3) THE PROBES WAS IMMERSED IN THE HIGHER pH BUFFER THEN IMMEDIATELY SUBJECTED TO THE LOWER pH BUFFER OF 4.0. THE LINE OF BEST FIT FOR EACH RESPONSE CURVE WAS UTILIZED TO CALCULATE THE TIME NECESSARY FOR THE PROBE TO REACH 98% OF THE STEP CHANGE.

6.4.2 Mixing Time and Circulation Rates

Mixing time and circulation rate experiments were performed on three types of immobilized cell fermentations. The experimentation was carried out inside the 50-L pilot scale draft tube bioreactor on a model water solution containing no solids and then on fermentation broth with a specific gravity of 2.7 °P containing either □-carrageenan gel beads, superflocculent LCC290 yeast or medium flocculent LCC3021 yeast. Figures 6.45 and 6.46 are sample depictions of the raw data collected using the pH probe system after the injection of an acid pulse (method described in section 4.8). Figure 6.45 illustrates the pH probe response to an acid injection into a water solution containing no solids, while figure 6.46 is the response to the acid injection into a fermentation broth containing the highly flocculent yeast, LCC290. The signals were fitted to a decaying sinusoidal curve and coefficients of correlation of 0.96 and 0.90, respectively, were calculated for the corresponding equations. The fitting parameters "b" and "c" on the charts correspond to the "a" and "□" values described in the decaying sinusoidal equation (3.1). These numerical values were used in equations 3.2 and 3.3 to calculate the circulation rate and the mixing time for the given system. Appendix B contains the remaining mixing data and curve fits to all the experimentation.

Figures 6.47 and 6.48 are mixing time and circulation rate graphs for an acid injection into a water solution containing no solids. Figures 6.49 and 6.50 are the corresponding graphs for the mixing experiments using the highly flocculent yeast LCC290 while the results from the □-carrageenan mixing tests are presented in Figures 6.51 and 6.52. Finally, the mixing time and circulation time of the medium flocculent yeast LCC3021 are shown in Figures 6.53 and 6.54. Regardless of the type of solid tested, both mixing time and circulation rate decreased with corresponding increases in superficial gas velocity. The relationship between circulation rate and superficial liquid velocity followed equation 3.11 proposed by Kennard and Janekah (1991) for all four tested systems. The mixing time followed the relationship in equation 3.11 for the water/no solids system and the □-carrageenan gel bead system. Both systems with flocculent yeast as the immobilization matrix did not show a strong correlation to the theoretical model of Kennard and Janekah. The LCC290 and the LCC3021 systems had initial mixing times (until the superficial gas velocity exceeded 4 mm/s) lower than predicted by the model. The rate of decrease in the mixing time, however, slowed down at superficial gas velocities greater than 4 mm/s while the model lower values. Table 6.1 provides the derived equations for circulation time and mixing time as they relate to superficial gas velocity.

Figure 6.55 illustrates the mixing time versus superficial gas velocity relationship for all four systems. The water/no solids scenario demonstrated the highest time for 98 % mixing of a pH pulse (~220 seconds at $V_{sg}$ of 3 mm/s) and the LCC290 system showed the best capacity to minimize the effect of a pulse of acid in the system (~110 seconds at $V_{sg}$ of 3 mm/s). The values for the LCC3021 and the □-carrageenan system were between the water/no solids and the LCC290 systems. Solids within the gas-lift bioreactor help with the dispersion of liquid phase fluid elements by stimulating the formation of eddies and promoting co-axial mixing. The superflocculent yeast LCC290, although at the same solids loading (16 % w/v) as the medium flocculent yeast LCC3021, allowed for quicker mixing times at all tested superficial gas velocities.

Figure 6.56 depicts the circulation time versus superficial gas velocity for all four tested systems. At a superficial gas velocity of 2 mm/s, circulation time ranged between 28 seconds and 35 seconds with the water/no solids system having the quickest circulation rate and the LCC290 system displaying the slowest circulation rate. At the higher gas velocities, the difference between the 4 systems was reduced to approximately 3 seconds. At all tested velocities, however, the LCC290 system demonstrated slightly slower circulation rates while the water/no solids system had the fastest circulation rates.

Figure 6.57 illustrates the relationship between superficial gas velocity and superficial liquid velocity. Equation 3.7 proposed by Livingston and Zhang (1993) was utilized to calculate the superficial liquid velocity for a given circulation rate and solid type. Superficial liquid velocity increased with corresponding increases in superficial gas velocity. The LCC3021 and the water/no solids systems had similar trends, while the LCC290 and the k-carrageenan systems showed some similarity. The model equation suggested by Kennard and Jenekah was fit to the superficial liquid velocity versus superficial gas velocity curves in Figure 6.57. Figure 6.58 plots the experimentally calculated superficial liquid velocity versus the theoretically calculated superficial liquid velocity using equation 3.10. All four systems fit the proposed equation as indicated by the linear function with slope of 1 and origin at y = 0. Table 6.1 lists the correlations that were derived for the systems that were tested in this research work.

FIGURE 6.45 pH PROBE RESPONSE DATA WITHIN A 50 L GAS-LIFT DRAFT TUBE BIOREACTOR. AN ACID PULSE WAS INJECTED INTO A WATER SOLUTION CONTAINING NO SOLIDS. THE SUPERFICIAL GAS VELOCITY WAS SET AT 1.94 MM/S. THE ORIGINAL DATA WAS FITTED TO A DECAYING SINUSOIDAL CURVE. THE COEFFICIENT OF CORRELATION WAS 0.96.

FIGURE 6.46 PH PROBE RESPONSE DATA WITHIN A 50 L GAS-LIFT DRAFT TUBE BIOREACTOR. AN ACID PULSE WAS INJECTED INTO A FERMENTATION MEDIUM CONTAINING THE HIGHLY FLOCCULENT YEAST, LCC290. THE SUPERFICIAL GAS VELOCITY WAS SET AT 1.94 MM/S. THE ORIGINAL DATA WAS FITTED TO A DECAYING SINUSOIDAL CURVE. THE COEFFICIENT OF CORRELATION WAS 0.90.

FIGURE 6.47 MIXING TIME VERSUS SUPERFICIAL GAS VELOCITY IN A 50 L GAS-LIFT DRAFT TUBE BIOREACTOR. AN ACID PULSE WAS INJECTED INTO A WATER SOLUTION CONTAINING NO SOLIDS. MIXING TIME CORRESPONDS TO THE TIME NECESSARY FOR 98% OF THE STEP CHANGE TO BE NULLIFIED. (N = 3)

FIGURE 6.48 CIRCULATION TIME VERSUS SUPERFICIAL GAS VELOCITY IN A 50 L GAS-LIFT DRAFT TUBE BIOREACTOR. AN ACID PULSE WAS INJECTED INTO A WATER SOLUTION CONTAINING NO SOLIDS. (N = 3)

FIGURE 6.49 MIXING TIME VERSUS SUPERFICIAL GAS VELOCITY IN A 50 L GAS-LIFT DRAFT TUBE BIOREACTOR. AN ACID PULSE WAS INJECTED INTO A FERMENTATION MEDIUM CONTAINING THE HIGHLY FLOCCULENT YEAST, LCC290 (FLOC SIZE > 1.0 MM). MIXING TIME CORRESPONDS TO THE TIME NECESSARY FOR 98% OF THE STEP CHANGE TO BE NULLIFIED. (N = 3)

FIGURE 6.50 CIRCULATION TIME VERSUS SUPERFICIAL GAS VELOCITY IN A 50 L GAS-LIFT DRAFT TUBE BIOREACTOR. AN ACID PULSE WAS INJECTED INTO A FERMENTATION MEDIUM CONTAINING THE HIGHLY FLOCCULENT YEAST, LCC290 (FLOC SIZE > 1.0 MM). (N = 3)

**FIGURE 6.51** MIXING TIME VERSUS SUPERFICIAL GAS VELOCITY IN A 50 L GAS-LIFT DRAFT TUBE BIOREACTOR. AN ACID PULSE WAS INJECTED INTO A FERMENTATION MEDIUM CONTAINING YEAST, LCC3021, IMMOBILIZED WITHIN □-CARRAGEENAN GEL BEADS (BEAD SIZE 1-2 MM). MIXING TIME CORRESPONDS TO THE TIME NECESSARY FOR 98% OF THE STEP CHANGE TO BE NULLIFIED. (N = 3)

FIGURE 6.52 CIRCULATION TIME VERSUS SUPERFICIAL GAS VELOCITY IN A 50 L GAS-LIFT DRAFT TUBE BIOREACTOR. AN ACID PULSE WAS INJECTED INTO A FERMENTATION MEDIUM CONTAINING YEAST, LCC3021, IMMOBILIZED WITHIN □-CARRAGEENAN GEL BEADS (BEAD SIZE 1-2 MM). (N = 3)

**FIGURE 6.53 MIXING TIME VERSUS SUPERFICIAL GAS VELOCITY IN A 50 L GAS-LIFT DRAFT TUBE BIOREACTOR. AN ACID PULSE WAS INJECTED INTO A FERMENTATION MEDIUM CONTAINING THE MEDIUM FLOCCULENT YEAST, LCC3021 (FLOC SIZE < 0.5 MM). MIXING TIME CORRESPONDS TO THE TIME NECESSARY FOR 98% OF THE STEP CHANGE TO BE NULLIFIED. (N = 3)**

**FIGURE 6.54** CIRCULATION TIME VERSUS SUPERFICIAL GAS VELOCITY IN A 50 L GAS-LIFT DRAFT TUBE BIOREACTOR. AN ACID PULSE WAS INJECTED INTO A FERMENTATION MEDIUM CONTAINING THE MEDIUM FLOCCULENT YEAST, LCC3021 (FLOC SIZE < 0.5 MM). (N = 3)

FIGURE 6.55 MIXING TIME VERSUS SUPERFICIAL GAS VELOCITY IN A 50 L GAS-LIFT DRAFT TUBE BIOREACTOR. AN ACID PULSE WAS INJECTED INTO A FERMENTATION MEDIUM CONTAINING DIFFERENT SOLIDS. MIXING TIME CORRESPONDS TO THE TIME NECESSARY FOR 98% OF THE STEP CHANGE TO BE NULLIFIED. (N = 3)

FIGURE 6.56 CIRCULATION TIME VERSUS SUPERFICIAL GAS VELOCITY IN A 50 L GAS-LIFT DRAFT TUBE BIOREACTOR. AN ACID PULSE WAS INJECTED INTO A FERMENTATION MEDIUM CONTAINING DIFFERENT SOLIDS. (N = 3)

FIGURE 6.57 SUPERFICIAL LIQUID VELOCITY (MM/S) VERSUS SUPERFICIAL GAS VELOCITY (MM/S) FOR THE FOUR TESTED SYSTEMS – LCC3021 YEAST, LCC 290 YEAST, CARRAGEENAN GEL BEADS AND WATER/NO SOLIDS SYSTEM. THE TESTING WAS CONDUCTED INSIDE THE 50-L PILOT SCALE GAS-LIFT DRAFT TUBE BIOREACTOR.

**FIGURE 6.58 THEORETICAL SUPERFICIAL LIQUID VELOCITY (MM/S) VERSUS EXPERIMENTAL SUPERFICIAL LIQUID VELOCITY (MM/S) FOR THE FOUR TESTED SYSTEMS. THE THEORETICAL VALUE WAS CALCULATED USING THE FOLLOWING RELATIONSHIP AS PROPOSED BY KENNARD AND JANEKAH (1991): $V_{SL} \propto V_{SG}^{M}$. THE LINEAR LINE HAS A SLOPE OF 1 AND A Y-INTERCEPT OF 0.**

**Table 6.1 Summary of Calculated Correlations for Mixing Time, Circulation Rate and Superficial Liquid Velocity for the Four Tested Systems**

| | Mixing Time | Circulation Rate | Superficial Liquid Velocity |
|---|---|---|---|
| Water/no solids | $t_m=336.04\ V_{SG}^{-0.4}$ | $t_c=37.94\ V_{SG}^{-0.4}$ | $V_{SL}=189.06 V_{SG}^{0.283}$ |
| LCC290 yeast | $t_m=181.55\ V_{SG}^{-0.4}$ | $t_c=44.67\ V_{SG}^{-0.4}$ | $V_{SL}=134.75 V_{SG}^{0.419}$ |
| □-Carrageenan gel | $t_m=254.68\ V_{SG}^{-0.4}$ | $t_c=41.73\ V_{SG}^{-0.4}$ | $V_{SL}=171.92 V_{SG}^{0.283}$ |
| LCC3021 yeast | $t_m=322.07\ V_{SG}^{-0.4}$ | $t_c=37.90\ V_{SG}^{-0.4}$ | $V_{SL}=158.12 V_{SG}^{0.427}$ |

For the superficial liquid correlation, Kennard and Janekah (1991) proposed an exponent of 0.41 in distilled water and 0.64 when the solution contained carboxymethyl cellulose and ethanol. The LCC290 and the LCC3021 systems had exponents of 0.419 and 0.427 respectively, while the □-carrageenan system and the water/no solids systems had an exponent of 0.253.

A basic assumption of gas-lift draft tube technology is that the system can deliver adequate mixing so that the fluid element exiting the reactor is completely mixed. In the operation of the 50-L pilot scale systems as continuous fermenters, fresh nutrient medium was injected at the bottom of the reactor at a flowrate of 36 mL per minute into a total reactor volume of 50 L. This represents approximately a 1000-fold dilution in feed components. With the mixing characteristics calculated for the LCC290 yeast system, a fluid element is mixed in about 3 reactor circulation loops, while 10 reactor circulation loops are necessary for the water/no solids scenario. In addition, the residence time (24 hours) is approximately 1000 greater than the mixing time (180 seconds). The rapid mixing coupled with the dilution of nutrients within the system and the large difference in mixing time versus residence time strongly suggest an adequately mixed system. The original premise for using a gas-lift bioreactor was that it provided an ideally mixed environment for beer fermentation. The results of the mixing studies performed on all three fermentation carriers support this premise.

*6.5 EVALUATION OF SEVERAL IMMOBILIZATION METHODS FOR CONTINUOUS PRIMARY FERMENTATION*

*WITHIN A GAS-LIFT SYSTEM*

Continuous fermentations were performed in the 50-L pilot scale gas-lift draft tube bioreactor utilizing three types of immobilization carrier- □-carrageenan gel beads, superflocculent LCC290 yeast and medium flocculent LCC3021 yeast. All fermentations were initially pitched with the same level of yeast inoculum (4 g/L) and industrial lager wort was used as the nutrient medium. The fermentations were started up in batch to allow for the rapid reduction of wort sugars, as well as to promote yeast growth within the fermenter. In the case of the flocculent yeast, this batch phase allowed for the formation of yeast flocs, which could then be retained within the bioreactor once a continuous feed was started. Once the diacetyl level in the fermentation liquid had dropped to below 30 □g/L, continuous wort feed was started. The following sections describe in more detail the fermentation analyses resulting from these three types of immobilization matrices.

6.5.1 Use of □-carrageenan Gel Beads: Entrapment

The use of □-carrageenan gel beads as an immobilization matrix aided in the feasibility assessment of gas-lift technology for continuous primary fermentation of beer (section 6.3). It was still necessary to assess whether such a system could be operated for extended periods of time (up to 2 months) without experiencing major operational difficulties, including fermentation instability and contamination. The operational parameters for this fermentation trial are depicted in Figure 6.59. The carbon dioxide superficial gas velocity was set at 5.5 mm/s while 0.9 mm/s of air were introduced to the reactor in this sparge gas. The oxygenation rate was therefore set at 3 % of the total sparge gas to coincide with the results in section 6.3, which indicated the production of the preferred beer when 2-5 % oxygen was introduced to the system. The fermentation temperature was controlled at 15 °C. Some fluctuations can be seen in the data and they relate to the nature of the control loop that was utilized.

Figure 6.60 represents the evolution of the free yeast cell population over time, as well as the yeast's viability. Viability remained relatively high throughout the 2-month fermentation with a temporary decrease measured around 200 hours. This corresponds to the point just prior to the start of the continuous wort feed. In batch fermentation, it is common for viability to decrease at the end of fermentation since the cells are deprived of nutrients. Once the continuous wort feed was started, viability climbed back above 90 %. The free yeast cell population was low during the first 400 hours of fermentation and then, over the next 300 hours, it increased about tenfold from ~ 100 million cells per mL to ~ 1.5 billion cells per mL. Once at this maximum concentration, the free cell yeast population maintained this pseudo-steady state value for the remainder of the fermentation period.

The sudden increase in free yeast concentration is probably linked to the immobilized yeast cell population. At the start of the fermentation, the yeast entrapped in the gel will grow inside the gel until all available space has been taken up. Once the gel beads are filled with yeast, the expanding population will overflow into the liquid medium. Our results seem to indicate that during the first 400 hours, the immobilized yeast grew within the gel and, at ~700 hours, the yeast had no more room to grow within the bead therefore started releasing larger quantities of cells into the fermentation broth.

This instability in the yeast population is reflected in the ethanol and specific gravity profiles (Figure 6.61). During the initial 200 hours of fermentation, it was expected that the ethanol would increase over time and that the specific gravity would decrease following traditional batch kinetics. Between 200 and 600 hours, ethanol reached a plateau of 45 g/L and the specific gravity remained at ~ 6 °P. This result was not expected as an end-fermented liquid would have a specific gravity of ~ 2.5 to 2.7 °P. At about 600 hours, when the free yeast population had just about reached its maximum, the ethanol level increased to about 70 g/L and the wort's specific gravity fell to about 2.2 °P. A closer look at the specific carbohydrate profiles over time (Figure 6.62) indicates that the maltose concentration did not level off until approximately 600 hours into the process. The other sugars were reduced as expected.

Two other key analytes - diacetyl and 2,3-pentanedione - were monitored throughout the 2-month continuous run (Figure 6.63). The low points at approximately 180 hours correspond to the end of the batch start-up phase. Once the continuous feed was started, both diacetyl and 2,3-pentanedione increased rapidly to about 500 □g/L and 400 □g/L respectively. This initial increase was expected since the fresh nutrient supply would stimulate yeast growth and therefore increase the levels of overflow metabolites, yielding diacetyl and 2,3-pentanedione. Throughout the fermentation run, 2,3-pentanedione levels remained above 400 □g/L while diacetyl concentrations dropped from 500 □g/L to 275 □g/L midway through the continuous fermentation run. This point also coincided with the diacetyl level dropping below the 2,3-pentanedione level as was observed in the feasibility assessment reported in section 6.3.

**FIGURE 6.59 OPERATING PARAMETER FOR THE CARRAGEENAN IMMOBILIZED FERMENTATION VERSUS FERMENTATION TIME.**

**FIGURE 6.60 TOTAL YEAST CELL CONCENTRATION AND VIABILITY OF THE □-CARRAGEENAN IMMOBILIZED YEAST VERSUS FERMENTATION TIME.**

FIGURE 6.61 ETHANOL CONCENTRATION AND SPECIFIC GRAVITY OF CARRAGEENAN IMMOBILIZED YEAST CONTINUOUS FERMENTATION VERSUS FERMENTATION TIME.

FIGURE 6.62 CARBOHYDRATES PROFILE OF CARRAGEENAN IMMOBILIZED YEAST CONTINUOUS FERMENTATION VERSUS FERMENTATION TIME.

**FIGURE 6.63 VICINAL DIKETONES CONCENTRATION OF CARRAGEENAN IMMOBILIZED CONTINUOUS FERMENTATION VERSUS FERMENTATION TIME.**

6.5.2 Use of a Superflocculent Yeast Strain: Self-Flocculation

Continuous fermentations using the 50-L pilot scale gas-lift bioreactor loaded with LCC290 superflocculent yeast were performed over a 3-month period. The $CO_2$ sparging gas was set at ~2.5 mm/s while air was introduced at ~0.4 mm/s in order to promote some yeast growth (this corresponds to a total of 1.51 L of gas per minute being introduced with 3 % being oxygen). The fermentation temperature in the reactor was maintained at ~15 °C throughout the entire run. An interruption in the power supply forced us to reduce the temperature of the fermenter to 4 °C for a period of three days (about 1700 hours into the fermentation) (Figure 6.64). This cool down of the reactor was performed in order to slow down yeast metabolism, and maintain yeast viability during the power interruption. This unexpected event provided an opportunity to assess the resilience of the system to events that could be common in industrial situations. Once the electricity was restored, the reactor temperature was readjusted to 15°C and the fermentation proceeded for another 30 days.

Once the batch start-up phase was completed (~180 hours), wort was continuously supplied to the system at a flowrate of 2.16 L per hour, thus providing a 24-hour residence time based on a reactor working volume of 50 L. After the initial batch period, the cell concentration increased, reaching 3 billion cells/mL at about 750 hours into the fermentation (Figure 6.65). This yeast mass then decreased to approximately 1 billion cells per mL at around 1000 hours and remained at this level until the end of the fermentation. Yeast viability was at above 90 % throughout the fermentation run (Figure 6.65).

The ethanol concentration and the fermentation broth specific gravity reached pseudo-steady state shortly after the continuous feed was started (Figure 6.66). Ethanol concentration rose to approximately 70 g/L and the liquid specific gravity was ~2.3 °P for the remainder of the fermentation. The carbohydrate profiles in Figure 6.67 confirm this pseudo-steady state at approximately 270 hours into the continuous fermentation run. The polysaccharide concentration dropped from ~42 g/L to ~33 g/L at about 1400 hours into the fermentation. This result was due to a variation in wort batches. Since lager yeast cannot consume these polysaccharides, this anomaly in wort nutrient had no marked effect on the performance of the primary fermentation vessel This difference in the unfermentable sugar portion would be detected by trained taste panelists who would notice that the product had a "thin" body.

The diacetyl and 2,3-pentanedione concentrations over time are presented in Figure 6.68. As with the □-carrageenan continuous fermentations, the diacetyl and 2,3-pentanedione levels rose as soon as the continuous wort feed was started. Diacetyl reached approximately 375 □g/L while the 2,3-pentanedione concentration was approximately 600 □g/L. These concentration levels were maintained throughout the fermentation run until the interruption in power at ~1700 hours. Since the liquid sat in batch for 3 days without further yeast metabolism (due to lack of nutrient supply), the levels of vicinal diketones were reduced. Once the wort feed was restarted, both diacetyl and 2,3-pentanedione returned to their pseudo-steady state values.

FIGURE 6.64 OPERATING PARAMETER FOR THE LCC290 FERMENTATION VERSUS FERMENTATION TIME.

**FIGURE 6.65** TOTAL YEAST CELL CONCENTRATION AND VIABILITY OF LCC290 YEAST VERSUS FERMENTATION TIME.

**FIGURE 6.66** ETHANOL CONCENTRATION AND SPECIFIC GRAVITY OF LCC290 YEAST CONTINUOUS FERMENTATION VERSUS FERMENTATION TIME.

FIGURE 6.67 CARBOHYDRATES PROFILE OF LCC290 YEAST CONTINUOUS FERMENTATION VERSUS FERMENTATION TIME.

**FIGURE 6.68 VICINAL DIKETONES CONCENTRATION OF LCC290 CONTINUOUS FERMENTATION VERSUS FERMENTATION TIME.**

6.5.3 Use of a Medium Flocculent Yeast: Self-Flocculation

Several fermentation runs were performed using the medium flocculent yeast strain LLC3021, as the immobilization matrix within the 50-L pilot scale gas-lift bioreactor. As with the two previous modes of immobilization, the initial yeast concentration was set at 4 g/L. This yeast was pitched into industrial lager wort (described in section 4.2) and allowed to ferment in batch until all the fermentable sugars were consumed and the diacetyl level had dropped to below 30 □g/L. The fermentation temperature was controlled at 15 °C and the sparge gas rate was the controlled at the same level as the LCC290 fermentation (superficial carbon dioxide gas velocity of ~2.5 mm/s and ~0.4 mm/s air resulting in approximately 3 % oxygen in the total sparge gas) (Figure 6.69).

This initial batch stage allowed the yeast cells to flocculate and therefore be more easily retained within the gas-lift system. At the end of the batch startup, the wort feed rate was set at 2.16 L per hour, which corresponded to a residence time of ~24 hours based on a reactor working volume of 50 liters. The yeast population (Figure 6.70) increased to about 1 billion cells per milliliter and remained at this level for just over 1000 hours (between 500 and 1500 hours into the continuous fermentation run). The yeast population doubled suddenly at ~1500 hours into the fermentation and then leveled off at 2 billion cells/mL. This change in yeast population was unexpected. The yeast viability throughout the fermentation run was maintained at above 90 % (Figure 6.70).

Figure 6.71 presents the data for ethanol concentration and fermentation broth specific gravity over the 3-month continuous run. Shortly after the batch startup (180 hours), the ethanol concentration leveled off at 70 g/L and the specific gravity reached a minimum of ~ 22 °P. The sudden increase in yeast population discussed above was not reflected in a decrease in ethanol concentration. The most logical explanation for this yeast population increase is that a larger portion of the overall yeast population entered into growth phase, producing this doubling in yeast concentration. A decrease in ethanol concentration would have been expected to coincide with the increase in yeast concentration but this was clearly not the case since ethanol remained at its pseudo-steady state value of 70 g/L throughout the continuous run. The carbohydrate concentration profiles versus fermentation time (Figure 6.72) revealed the same conclusion as the ethanol and specific gravity curves. This run had reached its pseudo-steady state at approximately 250 hours into the continuous fermentation.

Figure 6.73 provides the diacetyl and 2,3-pentanedione concentration curves versus continuous fermentation time. Like the □-carrageenan gel and LCC290 vicinal diketone results, the diacetyl and 2,3-pentanedione concentration increased following the batch startup phase to reach pseudo-steady state values of ~225 □g/L and 400 □g/L respectively.

**FIGURE 6.69 OPERATING PARAMETER FOR THE LCC3021 FERMENTATION VERSUS FERMENTATION TIME.**

**FIGURE 6.70 TOTAL YEAST CELL CONCENTRATION AND VIABILITY OF LCC3021 YEAST VERSUS FERMENTATION TIME.**

FIGURE 6.71 ETHANOL CONCENTRATION AND SPECIFIC GRAVITY OF LCC3021 YEAST CONTINUOUS
FERMENTATION VERSUS FERMENTATION TIME.

**FIGURE 6.72 CARBOHYDRATES PROFILE OF LCC3021 YEAST CONTINUOUS FERMENTATION VERSUS FERMENTATION TIME.**

**FIGURE 6.73 VICINAL DIKETONES CONCENTRATION OF LCC3021 CONTINUOUS FERMENTATION VERSUS FERMENTATION TIME.**

6.5.4 Comparison of the various carriers

In sections 6.5.1 to 6.53, the fermentation performances of □-carrageenan gel beads, LCC290 superflocculent yeast and LCC3021 medium flocculent yeast as immobilization matrices were presented. All three carriers were deemed suitable for continuous primary fermentation within the 50-L pilot scale gas-lift draft tube bioreactor. Liquid residence times of 24 hours were achieved in all three cases. The fermentation runs using LCC290 superflocculent yeast reached a pseudo-steady state much quicker than the LCC3021 medium flocculent yeast and □-carrageenan immobilized cell systems. The LCC290 fermentation reached its maximum ethanol concentration of 70 g/L at about 250 hours into the run. The LCC3021 run hit its steady state ethanol concentration of 70 g/L at ~600 hours. During the □-carrageenan continuous fermentation, ethanol leveled off at two separate points over the course of the run. First, ethanol hit 45 g/L between 200 and 500 hours and then rose to 70 g/L at about 575 hours and remained at that concentration until the end of the trial.

The three fermentation systems seemed to reach a maximum free yeast cell concentration of ~1 billion cells per milliliter. The inconsistency in yeast concentration impacted negatively on the □-carrageenan system's ethanol productivity (lower initial pseudo-steady state ethanol concentration as compared to LCC290 yeast system). The yeast concentration peaked at different time intervals in each system. For the LCC290 run, ethanol reached its maximum between 500 and 1000 hours into the continuous fermentation, while the LCC3021 fermentation had a maximum cell count between 1500 and 2000 hours into its continuous run. The □-carrageenan immobilized system reached a maximum cell concentration between 700 and 1000 hour of continuous operation.

The pseudo-steady state concentrations of diacetyl and 2,3-pentanedione in the three types of immobilized cell fermentation - LCC290 superflocculent yeast, LCC3021 medium flocculent yeast and □-carrageenan immobilized yeast - were dissimilar. For the LCC290 fermentation, diacetyl settled at 375 □g/L while the level in the LCC3021 fermentation was leveled off at about 225 □g/L. In the case of the □-carrageenan fermentation, the diacetyl concentration hit 500 □g/L, and midway into the continuous run, the level decreased gradually to about 200 □g/L in a 500 hour time frame. The 2,3-pentanedione concentration mirrored the diacetyl concentration in all three runs with concentrations of 2,3-pentanedione higher than diacetyl throughout the LCC290 and LCC3021 fermentations. The □-carrageenan run exhibited a different pattern, with diacetyl levels higher than 2,3-pentanedione during its first pseudo-steady state, after which time the diacetyl concentration dropped below the 2,3-pentanedione concentration. The yeast concentration data and the ethanol production data also suggest that two separate and unique pseudo-steady states were achieved during the □-carrageenan fermentations.

The task of comparing different fermentation systems and assessing which one has performed better can become complex when the merits of the system are based on more than one criterion. For example, if overall ethanol productivity alone was used as the measure of success, all three tested systems would rate equally well since the production of 70 g/L ethanol per 50 L of reactor volume over a 24-hour residence time was achieved in all cases.

The production of a saleable beer requires more than simple ethanol production. The proposed fermentation system should be evaluated on its ability to produce an acceptable beer (ethanol productivity and diacetyl levels among other things), on the potential incremental costs of the carrier, on the availability of the carrier, on the ease of operation of the system, on environmental issues such as disposal of the carrier, on the stability of the carrier, as well as the flexibility provided by the carrier system. In order to evaluate such a multifaceted scenario, the business world utilizes a dimensionless analysis process called the "Balanced Scorecard" (Kaplan and Norton, 1996). The first step involves the identification of criteria for which the system must be evaluated on. Each criterion is then given a rating on a scale of 1 to 5, with 1 being least favored and 5 being the most favored. At the end of the analysis, the score for each option is totaled and the alternative with the highest score is the best choice given the circumstances Table 6.2 presents the results of the Balanced Scorecard analysis performed on the immobilization carriers that were viewed as potential alternatives for use in the 50-L pilot scale gas-lift draft tube bioreactor for fermentation. A total of 6 carriers - Chitopearl® chitosan beads, Celite® diatomaceous earth beads, Siran® glass beads, □-carrageenan gel beads, medium flocculent LCC3021 yeast and superflocculent LCC290 yeast - were evaluated with the primary objective of producing a saleable beer. Each carrier system was rated using the aforementioned scale. Overall, the LCC290 superflocculent yeast performed best followed closely by the medium flocculent yeast, LCC3021. The four other carriers received scores between 16 and 20. Third preference was given to the □-carrageenan system because a saleable liquid was produced in the pilot unit.

This carrier assessment strongly suggests that future focus on the development of continuous fermentation systems should be geared towards self-aggregation as the mode of immobilization. The availability (readily available), cost (low cost since no additional equipment is needed to operate), ease of operation (fits within existing plant operations) provided by such an alternative outweigh the potential instability of the yeast flocs in an agitated system. It may be possible to use the shear sensitivity of self-aggregate to control the floc size during the fermentation process, and possible achieve increase mass transfer and therefore achieve further increases in bioreactor volumetric productivity.

**Table 6.2 Comparison of several immobilization carrier for primary fermentation of beer within a gas-lift bioreactor system**

|  | Chitopearl® | Celite® | Siran® | Carrageenan | LCC3021 | LCC290 |
|---|---|---|---|---|---|---|
| Good beer | 3 | 1 | 1 | 4 | 5 | 4 |
| Cost | 2 | 3 | 1 | 3 | 5 | 5 |
| Availability | 1 | 5 | 5 | 2 | 5 | 5 |
| Ease of operation | 3 | 1 | 1 | 3 | 4 | 5 |
| Disposal environmental | 4 | 3 | 4 | 2 | 3 | 3 |
| Stability | 4 | 1 | 1 | 3 | 2 | 3 |
| Flexibility | 3 | 3 | 3 | 1 | 2 | 5 |
| **TOTAL** | **20** | **17** | **16** | **18** | **26** | **30** |

6.6 Production of a North American type lager beer using Gas-lift Draft tube technology

The production of a clean tasting North American (NA) type lager beer poses many challenges to the brewer. NA type lager beers are characterized by a light color and a taste profile with low bitterness, low residual sugar (thin), no dominant flavor and therefore relatively no aftertaste. Because of these inherent properties, the brewer can mask very few flavor defects. High levels of diacetyl (buttery), acetaldehyde (green apple) as well as sulfury off-notes (burnt rubber, skunky, rotten eggs, cooked vegetables) are the most common flavor problems plaguing modern day brewers. Although bacterial contamination of the fermentation medium can also be a cause of these off-flavors in beer, improper control of the fermentation process more often yields higher than expected off-flavor levels.

Throughout the continuous fermentation trials conducted as part of this thesis, contamination levels in both the wort and the fermentation vessels were controlled through diligent practice of aseptic techniques. The fermentation trials with all three carrier types, which lasted for several months, showed no detectable levels of contaminants (monitored by methods reported in Chapter 4). Higher than desired levels of diacetyl (target less than 30 □g/L) and acetaldehyde (target less than 10 mg/L) plagued the products from the continuous primary fermentations but these levels were not due to bacterial infection. These findings do not differ from those reported in literature (Pajunen et al., 2000; Kronlof et al., 2000). A Belgian brewer turned their high levels of acetaldehyde in the beer from a continuous fermentation process into a selling feature and marketed the product as an apple-flavored ale (Andries et al., 1996b).

High levels of diacetyl following primary fermentation are also normal in the brewing industry. Some brewers have adopted a practice called "temperature free rise" following the completion of their primary fermentation in order to aid in the reduction of diacetyl. Others have opted to simply hold their products for longer periods of time during the aging process to achieve the reduction of the vicinal diketones (diacetyl and 2,3-pentanedione) to the desired levels. In another approach, several research groups developed the rapid aging technology discussed in Chapter 2 to deal with high diacetyl levels. Although this approach is very effective, it adds another level of complexity to the overall brewing process that some may find difficult to accept.

The economics of the rapid aging process are quite clear, however, in these early days of continuous processing in the brewing industry, it may be advisable to minimize technological complexity in order to facilitate the transition from traditional batch fermentation to continuous production. For this reason, it was decided to investigate the use of a batch hold following continuous primary fermentation within the 50-L pilot scale gas-lift systems to control the high levels of diacetyl in the finished beer. This additional processing step was not foreseen at the beginning of this Ph.D. program, however, it was necessary to implement such a measure in order to compare the beers produced continuously to batch control beers.

6.6.1 Use of Batch Hold Following Continuous Primary Fermentation

A critical parameter in determining the completion of primary fermentation is the diacetyl level in the end fermented liquid. The conversion of the diacetyl precursor, $\Box$-acetolactate, into diacetyl is the rate-limiting step in the diacetyl pathway (Figure 3.5). This first reaction is chemical in nature and is highly dependent on temperature. If the "green" beer enters the cold aging process before the chemical conversion of $\Box$-acetolactate to diacetyl has occurred, the resulting beer may have levels of diacetyl above the taste threshold of 20 $\Box$g/L, unless extended cold aging periods are used to allow the slow conversion of the precursor to occur. In all three continuous fermentations described in section 6.5, the diacetyl level exiting the reactor was above the desired target value of 30 $\Box$g/L in the undiluted beer. If the liquid was filtered at this stage to remove the yeast, the diacetyl would remain high hence a warm batch period was employed to reduce the diacetyl value to below the acceptable limit.

The continuously fermented beer was collected and held in 40-L-stainless steel beer vessels at 21°C. Small samples (100 mL) were withdrawn regularly from the liquid and analyzed for diacetyl, ethanol, specific gravity, esters and fusel alcohols. Figure 6.74 shows the reduction of diacetyl versus warm hold time for one batch of beer fermented continuously with LCC290 yeast as the immobilization matrix. The warm hold period was effective at reducing the level of diacetyl from ~600 $\Box$g/L to below 30 $\Box$g/L, what is considered in the brewing industry as the "pre-drop" limit.

In another test, the effect of agitation on the reduction of diacetyl during the hold period was investigated. A carbon dioxide sparge gas (0.14 m$^3$/h) was introduced through a 1.27 cm stainless steel tubing into the bottom of the beer collection vessel to keep the liquid agitated during the hold period. Figure 6.75 presents the results of this experiment. It appeared that the agitation provided by the $CO_2$ sparging had very little impact on the rate of reduction of diacetyl in this secondary holding tank. This result may be indicative of inadequate mixing provided by the $CO_2$ mixing gas therefore not increasing the reaction rate of the 1$^{st}$ chemical reaction ($\Box$-acetolactate conversion into diacetyl) or not increasing the mass transfer rate for the 2$^{nd}$ reaction to occur more quickly (conversion of diacetyl to acetoin by yeast). It may also be possible that the non-agitated vessel had enough cells in suspension to further reduce diacetyl into the flavor inactive acetoin once the rate-limiting chemical conversion (1$^{st}$ step) had occurred.

The effects of this warm batch hold following continuous primary fermentation on the concentrations of esters and fusel alcohols and on the ethanol concentration and the specific gravity of the liquid are presented in Figures 6.76 and 6.77 respectively. From these results, it appeared that the warm hold period had little effect on the concentrations of acetaldehyde, ethyl acetate, propanol, isobutanol, isoamyl alcohol and isoamyl acetate (Figure 6.76). The specific gravity of the liquid in the holding vessel decreased from 2.7 °P to 2.0 °P in the first 12 hours of the hold period and then leveled off at this lower value. Ethanol concentration was steady at 70 mg/L throughout the 65-hour test period. These results indicated that the hold period would primarily affect the concentration of diacetyl and 2,3-pentanedione while the impact on esters, fusel alcohols and ethanol would be minimal.

**FIGURE 6.74 VICINAL DIKETONES CONCENTRATION VERSUS WARM BATCH HOLD FOLLOWING CONTINUOUS PRIMARY FERMENTATION WITH LCC290 YEAST IN THE GAS-LIFT SYSTEM.**

**FIGURE 6.75 DIACETYL CONCENTRATION VERSUS WARM BATCH HOLD FOLLOWING CONTINUOUS PRIMARY FERMENTATION WITH LCC290 YEAST IN THE GAS-LIFT SYSTEM. ONE SAMPLE WAS AGITATED BY SPARGING CARBON DIOXIDE GAS THROUGH IT WHILE THE OTHER SAMPLE WAS LEFT STATIC.**

**FIGURE 6.76 ESTER AND FUSEL ALCOHOL CONCENTRATIONS VERSUS WARM BATCH HOLD FOLLOWING CONTINUOUS PRIMARY FERMENTATION WITH LCC290 YEAST IN THE GAS- LIFT SYSTEM.**

**FIGURE 6.77 ETHANOL CONCENTRATION AND SPECIFIC GRAVITY VERSUS WARM BATCH HOLD FOLLOWING CONTINUOUS PRIMARY FERMENTATION WITH LCC290 YEAST IN THE GAS- LIFT SYSTEM.**

The batch holding protocol was performed on liquid produced from the continuous fermentations in the 50-L gas-lift bioreactor using LCC290 superflocculent yeast, LCC3021 medium flocculent yeast or □-carrageenan immobilized yeast. The diacetyl reduction profiles of these three test runs are presented in Figure 6.78. Diacetyl was successfully reduced to its target value of 30 □g/L in all three cases. The time that was necessary to achieve this reduction, however, varied in all three cases. In the LCC290 situation, the reduction from 600 □g/L to 30 □g/L was accomplished in approximately 48 hours whereas the LCC3021 fermentation and the □-carrageenan fermentation only required ~24 hours and ~40 hours to reach this target value. It was postulated that this discrepancy was related to the initial starting value of diacetyl and not on the type of immobilization matrix utilized.

Figure 6.79 illustrates the same diacetyl results from Figure 6.78 with a time adjustment performed on the results from LCC3021 and □-carrageenan fermentations. The original diacetyl reduction curves from the latter two fermentations were shifted so that their initial values fell on the diacetyl reduction curve generated by the LCC290 superflocculent yeast. With this transformation, the diacetyl reduction profile for all three systems seemed to fall on the same line. Using the TableCurve2D software, these results were curve fitted to a first order kinetic equation (Levenspiel, 1972) (Figure 6.80). It was calculated that the adjusted experimental data from Figure 6.79 fit the following equation:

$$[\text{Diacetyl}] = 648.54 \ e^{(-0.0426 \ t)} \qquad\qquad (6.1)$$

with a correlation of coefficient of 0.96. This result strongly supports the theory that all three immobilization systems exhibited the same diacetyl reduction potential. The results should not be surprising since diacetyl reduction is often linked to yeast strain (Nakatani et al., 1984). The □-carrageenan system immobilized the LCC3021 yeast within its gel structure and the LCC290 yeast was a selected variant of the LCC3021 strain.

Once the diacetyl level was below the target level of 30 □g/L, the resulting beers were aged in cold storage (2°C) for 7 days before undergoing final product preparation (filtration, dilution, carbonation and packaging). Table 6.3 summarizes the analysis of the beers produced in the 50-L pilot scale systems with either LCC290 yeast, LCC3021 yeast or k-carrageenan immobilized yeast as the immobilization matrices. Figure 6.81 is a radar graph of the esters and fusel alcohols of three beers produced continuously and of one control beer produced industrially in batch. As compared to the industrially produced batch liquid (control), the continuous liquids had lower esters (ethyl acetate, isoamyl acetate) and higher propanol and lower isobutanol, primary amyl alcohol, and isoamyl alcohol. The acetaldehyde levels in the continuous fermentation products were higher than the control liquid. The foaming level, initial chill haze, warm haze, dimethyl sulfide, sulfur dioxide, carbon dioxide and air levels were within specifications.

FIGURE 6.78 DIACETYL CONCENTRATION VERSUS WARM BATCH HOLD FOLLOWING CONTINUOUS PRIMARY FERMENTATION WITH LCC290 YEAST, LCC3021 YEAST AND CARRAGEENAN GEL IMMOBILIZED YEAST IN THE GAS-LIFT SYSTEM.

FIGURE 6.79 DIACETYL CONCENTRATION VERSUS WARM BATCH HOLD FOLLOWING CONTINUOUS PRIMARY FERMENTATION WITH LCC290 YEAST, LCC3021 YEAST AND CARRAGEENAN GEL IMMOBILIZED YEAST IN THE GAS-LIFT SYSTEM. THE VALUES FOR LCC3021 FERMENTATION AND THE CARRAGEENAN FERMENTATION WERE ADJUSTED IN TIME TO HAVE THE SAME STARTING POINT AS THE LCC290 FERMENTATION.

$$[\text{Diacetyl}] = 648.54 \exp(-0.0426\, t)$$
$$r^2 = 0.9641173 \quad F_{stat} = 564.24018$$

FIGURE 6.80 DIACETYL CONCENTRATION VERSUS WARM BATCH HOLD FOLLOWING CONTINUOUS PRIMARY FERMENTATION WITH LCC290 YEAST, LCC3021 YEAST AND CARRAGEENAN GEL IMMOBILIZED YEAST IN THE GAS-LIFT SYSTEM. THE VALUES FOR LCC3021 FERMENTATION AND THE CARRAGEENAN FERMENTATION WERE ADJUSTED IN TIME TO HAVE THE SAME STARTING POINT AS THE LCC290 FERMENTATION.

Several other parameters (apparent extract, real extract, calculated original extract, color, bitterness) that are intimately affected by the dilution of the product from its original ethanol concentration to the final value of 5.0 % v/v were different from the control because the continuous products required higher dilution with water to reach the desired ethanol value due to higher original ethanol concentrations (70 g/L versus 60 g/L in batch). Figure 6.82 is a radar graph of alcohol, diacetyl, pH, color and bitterness of the same liquids described above.

The alcohol level, diacetyl and pH are well within target whereas the color and bitterness are out of specification. The lower color is related to the higher dilution that the continuous liquids underwent and this can be adjusted by increasing the color in the wort nutrient feed. The bitterness values are also subject to this same dilution error and would as well be adjusted in the wort feed.

**Table 6.3 Summary of analysis on beers produced using the gas-lift system.**

| Specification | Industrially batch fermented liquid | LCC290 continuously fermented liquid | LCC3021 continuously fermented liquid | Carrageenan continuously fermented liquid |
|---|---|---|---|---|
| Air (mL) | <1 | 0.40 | 0.35 | 0.35 |
| Carbon dioxide (%) | 2.75 | 2.90 | 2.81 | 2.73 |
| Sulfur dioxide (mg/L) | <10 | 0 | 0 | 0 |
| Dimethyl sulfide ($\square$g/L.) | <70 | 59 | 30 | 30 |
| Bitterness (BU) | 12.00 | 11.30 | 13.74 | 13.18 |
| Colour (SRM) | 3.20 | 2.20 | 2.10 | 2.30 |
| pH | 4.10 | 4.15 | 4.10 | 4.09 |
| Diacetyl (Og/L) | <20 | 12 | 12 | 9 |

Table continued

| Specification | Industrially batch fermented liquid | LCC290 continuously fermented liquid | LCC3021 continuously fermented liquid | Carrageenan continuously fermented liquid |
|---|---|---|---|---|
| Alcohol (%v/v) | 5.00 | 4.99 | 5.03 | 5.04 |
| Alcohol (%w/w) | 3.93 | 3.93 | 3.96 | 3.96 |
| Apparent Extract (°P) | 1.55 | 1.02 | 1.40 | 1.44 |
| Real Extract (°P) | 3.36 | 2.84 | 3.24 | 3.27 |
| Calc. Original Extract (°P) | 11.0 | 10.5 | 11.0 | 11.0 |
| Warm Haze (FTU) | <200 | 45 | 50 | 47 |
| Initial Chill Haze (FTU) | <100 | 43 | 51 | 54 |
| Foam (s) | >170 | 167 | 187 | 175 |
| Acetaldehyde (mg/L) | $4.4 \pm 1.3$ | 10.0 | 21.9 | 11.6 |
| Propanol (mg/L) | $12.8. \pm 6.8$ | 57.6 | 51.7 | 84.3 |
| Ethyl acetate (mg/L) | $32.4 \pm 4.3$ | 11.0 | 10.6 | 8.7 |
| Isobutanol (mg/L) | $21.6 \pm 3.4$ | 10.6 | 8.3 | 8.9 |
| Primary Amyl Alc (mg/L) | $20.0 \pm 2.3$ | 15.2 | 9.4 | 6.4 |
| Isoamyl alcohol (mg/L) | $60.9 \pm 8.6$ | 48.0 | 40.9 | 46.5 |
| Isoamyl acetate (mg/L) | $2.5 \pm 0.7$ | 0.32 | 0.25 | 0.18 |

FIGURE 6.81 RADAR GRAPH OF BEERS FERMENTED CONTINUOUSLY IN THE GAS-LIFT SYSTEM USING EITHER LCC290 YEAST, LCC3021 YEAST OR LCC3021 YEAST IMMOBILIZED IN CARRAGEENAN GEL BEADS. THE ESTERS AND FUSEL ALCOHOLS OF THE FINISHED BEERS ARE REPRESENTED IN THIS GRAPH. ALL PRODUCTS WERE SUBJECTED TO A WARM BATCH HOLD FOLLOWING THE PRIMARY FERMENTATION STAGE.

FIGURE 6.82 RADAR GRAPH OF BEERS FERMENTED CONTINUOUSLY IN THE GAS-LIFT SYSTEM USING EITHER LCC290 YEAST, LCC3021 YEAST OR LCC3021 YEAST IMMOBILIZED IN CARRAGEENAN GEL BEADS. THE ESTERS AND FUSEL ALCOHOLS OF THE FINISHED BEERS ARE REPRESENTED IN THIS GRAPH. ALL PRODUCTS WERE SUBJECTED TO A WARM BATCH HOLD FOLLOWING THE PRIMARY FERMENTATION STAGE.

6.6.2 Selection of best sparge gas

Carbon dioxide is readily available in most breweries since it is a natural by-product of yeast fermentation. Breweries collect the evolved $CO_2$ and then scrub the gas stream to remove slight impurities that may have been carried over into the collection stream (typically sulfurous compounds). This purified stream is then compressed and stored as a liquid for future use in the brewery (99.95 % pure). The use of carbon dioxide as a sparge gas in continuous fermentation seemed like a logical choice from an operations point of view. The plant would be able to utilize their collection system and recover the $CO_2$ exiting the continuous fermenter. The use of other gases would only add another level of complexity to the existing plant operations.

However, for continuous fermentation to become a viable alternative to existing batch operations, it is necessary to produce a product that is a close match to existing brands. It is believed that by minimizing the biological/biochemical impacts that the yeast is exposed to during continuous fermentation, it may be possible to achieve such a product match. Carbon dioxide is known to adversely affect yeast metabolism during primary fermentation. This effect is magnified in tall cylindroconical vessels where the head pressure inherent to the system suppresses the free release of $CO_2$ from the liquid medium. These conditions tend to produce beers with lower esters and higher fusel alcohols. Successful attempts have been made to remove some of this $CO_2$ from the fermentation by periodically injecting an auxiliary gas stream into the bottom of the cylindroconical vessel.

The effects of $CO_2$ inhibition appeared to have been reduced with the resulting products containing less fusel alcohols and higher ester levels.

Building on this knowledge, the use of nitrogen gas instead of carbon dioxide, as the sparge gas within the gas-lift system, was investigated. Several liquids fermented in the 50-L uplift reactors were collected and processed in the Labatt Experimental Brewery utilizing the following steps. After 14 hours of liquid collection from the reactor (24 hr residence time), the "green beer" was decanted from the yeast This liquid was then subjected to a 48-hour room-temperature (21 °C) hold period, which allowed both diacetyl and acetaldehyde to reach Labatt specifications (diacetyl <30 □g/L and acetaldehyde <10 mg/L). This liquid was then cold aged for 7 days and then processed using standard industrial practices.

Table 6.4 compares the results of finished beers obtained from continuous fermentation with LCC290 yeast under $CO_2$ sparged and $N_2$ sparged systems to a standard industrially produced liquid (control). The nitrogen-sparged liquid compares favorably to the industrially produced liquid. Analyses indicated that there was twice as much 1-propanol in the liquid while the dimethyl sulfide concentration was approximately three times lower.

Both color and bitterness values appeared to be higher than the industrial liquid as did the foaming potential as measured by the NIBEM test. The $CO_2$-sparged beer had lower esters (ethyl acetate, isoamyl acetate) and higher 1-propanol than did the nitrogen-sparged liquid. The ratios of esters (ethyl acetate, isoamyl acetate, ethyl hexanoate, ethyl octanoate, ethyl decanoate) to fusel alcohol (1-propanol, isobutanol, isoamyl alcohol) were calculated for the control liquid, the nitrogen-sparged liquid and the $CO_2$-sparged liquid and were found to be 0.30, 0.27, 0.15 respectively.

**Table 6.4 Summary of chemical analyses for several products fermented continuously using the gas-lift system loaded with LCC290 superflocculent yeast.**

| Analysis | Industrially batch fermented liquid | Nitrogen-sparged continuously fermented liquid | CO2-sparged continuously fermented liquid |
|---|---|---|---|
| Acetaldehyde (mg/L) | 2.53 | 3.68 | 4.80 |
| Ethyl acetate (mg/L) | 28.08 | 30.90 | 14.14 |
| 1-propanol (mg/L) | .13.03 | 28.45 | 40.03 |
| Isobutanol (mg/L) | 17.15 | 17.89 | 7.01 |
| Isoamyl acetate (mg/L) | 2.57 | 2.06 | 0.69 |
| Isoamyl alcohol (mg/L) | 74.54 | 78.45 | 51.35 |
| Ethyl hexanoate (mg/L) | 0.140 | 0.180 | 0.074 |
| Ethyl octanoate (mg/L) | 0.110 | 0.280 | 0.059 |
| Ethyl decanoate (mg/L) | 0.0079 | 0.0630 | 0.0081 |
| Diacetyl (□g/L) | 6 | 9 | 10 |
| 2,3-pentonedione (□g/L) | 4 | 5 | 14 |
| Sulfur dioxide (mg/L) | 1.3 | 1 | 0 |
| Dimethyl sulfide (mg/L) | 79 | 24 | 64 |
| Bitterness (BU) | 11.5 | 20.6 | 15.5 |
| Color (SRM) | 3.1 | 4.1 | 3.7 |
| Foam (s) | 176 | 210 | 195 |
| FAN (mg/L) | | 92 | 84 |
| pH | 4.13 | 4.10 | 4.19 |
| RE (°P) | 3.38 | 4.08 | 3.601 |
| COE (°P) | 10.97 | 12.77 | 11.50 |
| Alcohol (%v/v) | 4.93 | 5.74 | 5.17 |

Figure 6.83 is the radar graph representing the esters, fusel alcohols and acetaldehyde concentrations for the three liquids. The profile of the nitrogen-sparged liquid closely follows that of the control beer except for a higher propanol level. The CO2-sparged fermentation exhibited much lower esters and fusel alcohol that did not match the control. In both continuous fermentation liquids, the diacetyl and acetaldehyde levels were below the Labatt specifications.

The findings suggested that nitrogen sparging increased the production of esters to similar levels as those of commercial beers, whereas carbon dioxide sparging produced liquids with relatively lower ester concentrations. These results suggest an altered yeast metabolism under the $CO_2$-sparged environment. The propanol levels, regardless of the sparging gas, were much higher in the continuously fermented beers than those measured in industrially fermented control beers. Although the propanol concentrations are well below the taste threshold of 100 mg/L, the noted differences may be an indicator of slightly altered metabolism occurring in continuous fermentation as compared to batch fermentation. It is also possible that the higher propanol level is due to the continuous supply of the amino acid threonine, which through the oxo-acid degradation pathway will yield propanol.

**FIGURE 6.83 RADAR GRAPH COMPARING THE ESTERS AND FUSEL ALCOHOLS OF NITROGEN-SPARGED AND CO2-SPARGED CONTINUOUS GAS-LIFT FERMENTATION LIQUIDS TO INDUSTRIALLY PRODUCED LIQUID.**

CHAPTER 7.0 CONCLUSIONS

The following conclusions can be drawn from the research performed throughout this thesis. An acceptable beer with no major flavor defects can be produced using a 50-L pilot scale gas-lift draft tube bioreactor as the continuous primary fermentor when followed by a 2-day batch hold for the control of diacetyl. A minimum residence time of 24 hours or 1 reactor volume turnover per day is achievable for the fermentation of high gravity wort (17.5 °P) into an end-fermented broth (2.5 °P). The use of superflocculent yeast LCC290, medium flocculent yeast LCC3021 and □-carrageenan immobilized yeast are all feasible carriers within the gas-lift system. The use of heavier pre-formed carriers such as Siran® glass beads and Celite® diatomaceous earth beads are not practical alternatives within a gas-lift draft tube system. A minimum of 2 months continuous operation in the case of □-carrageenan gel beads and a minimum of 3 months continuous operation in the case of LCC290 and LCC3021 fermentations are achievable without experiencing any microbial contaminations or reactor performance instabilities. In addition, the continuous system was capable of handling potential and assumed variations in the industrial wort supply during the extended run periods.

Continuous fermentation using the superflocculent yeast LCC290 with nitrogen as the sparging gas, followed by a 2-day batch hold, produced the closest flavor match to an industrial control beer. The 2-day batch hold devised to deal with the high concentrations of diacetyl in the outlet liquid of the continuous primary fermentor was an effective, although not optimal, control mechanism. The diacetyl reduction capacity of the three tested continuous fermentation systems was very similar and, as previously suspected, this trait can be attributed to strain type. The batch hold period did not affect the concentrations of esters and fusel alcohols in the beer during the holding stage.

Utilizing 3% oxygen in the sparge gas provided adequate oxygen nutrient levels in the wort, resulting in the maintenance of a viable yeast population (above 90 %) throughout the fermentation runs while producing beers with an acceptable flavor profile. The continuous fermentations using LCC290 yeast and LCC3021 yeast as the immobilization matrices reached a pseudo-steady state more rapidly than the □-carrageenan gel bead system. The instability of □-carrageenan immobilized fermentations, possibly resulting from an increase in the immobilized yeast population, caused the fermentation of product below target levels. For ideal continuous production, this phenomenon is highly undesirable as the prolonged startup increases the time necessary to react and recommence following a catastrophic failure. A longer startup phase will also require a longer continuous run phase in order to become attractive.

The continuous gel bead production process produced the required quantities of beads for testing inside the pilot scale units. It is, however, necessary to further optimize the bead production process so as to produce beads with a tighter size distribution. The process also requires further investigation to determine its suitability at an industrial scale. Rather than the Kenics type investigated in this research, a new type of static mixer for which scale-up can be achieved by increasing diameter rather than solely on number of static mixers, must be found and tested for this option to become viable.

The acid pulse tracer technique utilized in this thesis allowed us to assess the mixing time and circulation rate within the 50-L pilot scale bioreactor during actual fermentations involving LCC290 superflocculent yeast, LCC3021 medium flocculent yeast and 0-carrageenan immobilized yeast. The mixing data was fit to a decaying sinusoidal function from which the mixing time and circulation rate were calculated.

Rapid mixing is provided within the gas-lift draft tube system with mixing times calculated at less than 200 seconds for all three types of immobilization carriers. Mixing time decreased slightly with increases in superficial gas velocity in all three tested scenarios. At the all tested superficial gas velocities (2 mm/s to 6 mm/s), the LCC290 system showed the quickest mixing times (between 100 s and 120 s). The liquid circulation times were very similar for all three carrier types regardless of superficial gas velocity. They also decreased linearly with corresponding increases in gas velocity. Complete liquid mixing (98% response to a pulse) occurred within three to six reactor circulation cycles for all the tested immobilization carriers. These results confirmed that the tested 50-L pilot scale system provided adequate mixing for continuous fermentation. Poor mixing times would have been indicative of possible dead zones that would have been undesirable for beer fermentation.

This Ph.D. research work has clearly demonstrated the feasibility of pursuing a further scale-up of the production system designed, built and operated in the Labatt Experimental Brewery. The use of a gas-lift draft tube bioreactor with LCC290 superflocculent yeast and nitrogen as the sparging gas, followed by a 2-day batch hold at 21 °C, is recommended as the system of choice.

## Detailed Description - <u>Part 2:</u>

CHAPTER 4. MATERIALS AND METHODS

4.1 Yeast Strain and Characteristics

A lager brewing strain of *Saccharomyces cerevisiae,* Labatt Culture Collection (LCC) 3021, was used throughout this work. *Saccharomyces cerevisiae* is synonymous with *Saccharomyces uvarum* Beijerinck var. *carlsbergensis* Kudryavtsev,1960 (Kurtzman,1998). At 37°C LCC 3021 will not grow. This helps to distinguish LCC 3021 lager yeast from most ale yeast, which will grow at 37°C and higher temperatures. LCC 3021 is a bottom fermenting strain, as are most lager yeast, but there are exceptions. As well, this strain will ferment glucose, galactose, sucrose, maltose, raffinose, and melibiose, but not starches. The ability to ferment melibiose is one tool used by taxonomists to distinguish it from ale yeast.

As with most brewing strains, LCC 3021 is polyploid and reproduces by mitotic division. Under normal brewing conditions lager yeast does not reproduce by meiosis. This has the advantage of making the brewing strain genetically stable because crossover of genetic material is less likely (Kreger-van Rij, 1984).

4.2 Preparation of Yeast Inoculum

Yeast was taken from a vial cryogenically preserved in a -80°C freezer and streaked on Peptone Yeast-Extract Nutrient (PYN) agar (peptone, 3.5 g/L; yeast extract, 3.0 g/L; $KH_2PO_4$, 2.0 g/L; $MgSO_4 \cdot 7H_2O$, 1.0 g/L; $(NH_4)_2SO_4$, 1.0 g/L; glucose, 20.0 g/L; agar, 20.0 g/L in $dH_2O$) growth medium to obtain well-separated colonies. A sterile loop consisting of several colonies was taken from the 3-4 day old plate of growing yeast, and these colonies were inoculated into a 10 mL volume of wort in a test tube. This was allowed to grow at 21°C overnight, thus the term "overnight culture", and then was added to a larger volume of wort, usually 200 mL, to increase yeast biomass. In consecutive days, this mixture was added to another larger volume of wort, and so on, until the desired amount of yeast biomass was propagated. Generally one expects to produce approximately 20 g of lager yeast per litre of wort. To prepare for yeast inoculation, the culture was centrifuged at 4°C and $1.0 \times 10^4$ rpm (radius = 0.06 m) for 10 min. After centrifuging, the liquid was decanted and the appropriate wet weight of yeast was obtained from the pellet for pitching.

4.3 Wort Fermentation Medium

Labatt Breweries of Canada supplied brewery wort with a specific gravity of 17.5°P. The concentration of fermentable carbohydrates, specific gravity, and free amino nitrogen in the brewer's wort used for the fermentations throughout this work is given in Appendix A2.1. Additional detail on the wort composition is given by Dale et al., 1986, Hoekstra, 1975, Hough et al., 1982, Klopper, 1974, and Taylor, 1989.

*Batch Fermentations*: Wort was heated in an autoclave for 45 min at 100°C and then cooled, before inoculation with immobilized cell beads or freely suspended yeast.

*Continuous Fermentations*: The wort used for the continuous fermentations was flash pasteurized (Fisher Plate Heat Exchanger, combi-flow Type Eurocal 5FH) prior to feeding into the gas lift bioreactor and this wort was monitored regularly for microbial contaminants, as described in section 4.6. If contamination was detected in the wort, it was immediately discarded and new wort was collected from the plant

The flash pasteurizer was operated at a volumetric flow rate of 0.8 $m^3$ / hr. The unit had a tubular holding section where the wort was held at an average temperature of 85°C with a minimum temperature of 80°C. The volume of the holding section was 1.13 x $10^{-2}$ $m^3$, giving a residence time in the holding section of 51 seconds. Following the heating step, the wort was rapidly cooled to a temperature of 2°C upon exiting the unit.

4.4 Immobilization Methodology

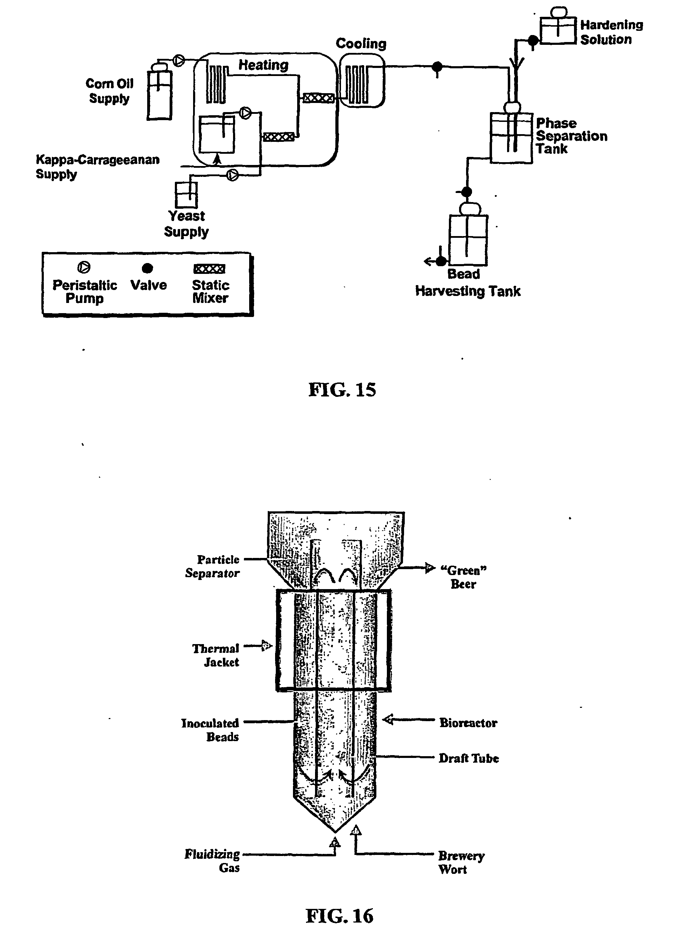

Kappa-carrageenan gel X-0909 was a generous gift from Copenhagen Pectin A/S. Kappa-carrageenan gel beads containing entrapped lager yeast cells were produced using the static mixer process, as described in detail by Neufeld et al. (1996), with initial cell loadings of $10^7$ - $10^8$ cells/mL of gel, which are specified for each experiment. As illustrated in FIG. 15, the static mixer process is based on the formation of an emulsion between a non-aqueous continuous phase, vegetable oil (Mazola Corn Oil), and an aqueous dispersed phase, kappa-carrageenan (3% w/v) in KCl (0.2% w/v) solution, inoculated with yeast, using in-line polyacetal static mixers (Cole-Parmer Instrument Co., USA). In the heating section of the schematic, where the yeast was rapidly mixed with the carrageenan solution and the emulsion was formed, the temperature was 37°C. Gelation of the kappa-carrageenan droplets within the emulsion was induced with rapid cooling in an ice bath and subsequent hardening in a potassium chloride bath (22 g/L). A 24-element static mixer of 6.4 mm in diameter was used to create the mixture of yeast and carrageenan. A second 42 element mixer of 12.7 mm in diameter was used to create the emulsion. The beads used for the experiments in this work were 0.5 mm < (bead diameter) < 2.0 mm.

4.5 Cumulative Particle Size Distribution of Kappa-Carrageenan Gel Beads

**Containing Immobilized Yeast Cells**

Kappa-carrageenan gel beads were randomly sampled from a 30-L production run of gel beads in order to calculate a particle size distribution on a mass wet-weight basis. Each sample was approximately 500 g wet weight Sieving was used to determine the bead particle size distibution. The beads were passed through a series of sieves with grid sizes of 2.0, 1.7, 1.4, 1.18, 1.0, and 0.5 mm. A 4.5 L volume of 22 g/L KCl solution was used facilitate the sieving of each bead sample. The kappa-carrageenan gel beads were assumed to be perfectly spherical so that the sieve diameter was taken as the particle diameter. It was also assumed that the particle density was uniform and independent of particle size.

4.6 Yeast Cell Enumeration and Viability

*Freely Suspended Yeast Viability and Cell Concentration:* The American Society of Brewing Chemists International methylene blue staining technique (Technical Committee and Editorial Committee of the ASBC, 1992) was used to measure yeast cell viability. The stain measures whether a yeast population is viable or non-viable based on the ability of viable cells to oxidize the dye to its colourless form. Non-viable cells lack the ability to oxidize the stain and therefore stain blue. Fink-Kuhles buffered methylene blue was prepared by mixing 500 mL of Solution A (0.1 g methylene blue / 500 mL $dH_2O$) with 500 mL of Solution B (498.65 mL of 13.6 g $KH_2PO_4$ / 500 mL d $H_2O$ mixed with 1.25 mL of 2.5 g $Na_2HPO_4 \cdot 12H_2O$ /100 mL d $H_2O$) to give a final buffered methylene blue solution with a pH of 4.6.

The diluted yeast solution was mixed with the methylene blue solution in a test tube, to a suspension of approximately 100 yeast cells in a microscopic field. A small drop the well-mixed suspension was placed on a microscope slide and covered with a cover slip. Following one to five minutes of contact with the stain, the cells stained blue and the cells remaining colourless were enumerated The percentage of viable cells was reported as a percentage of the total number of cells enumerated. Cell concentration was determined using a light microscope and a Hemacytometer (Hauser Scientific Company).

*Immobilized Cell Viability and Cell Concentration:* Gel beads were separated from the fermenting liquid by passing the mixture through a sterile sieve (500 Dm pore mesh size) and rinsing with 10 mL of distilled water. Gel beads, 1 mL, containing entrapped yeast were added to a sterile 50 mL specimen container containing 19 mL of distilled water. The beads were then disrupted using a Polytron® (Brinkmann Instruments) apparatus, to release the cells from the gel. Cell viability and concentration were then measured as described for the freely suspended cells.

4.7 Microbiological Analyses

*Liquid Phase Analyses:* Samples were taken from continuous fermentations at least once a week for microbiological analyses. The wort that was used for continuous fermentations was also tested for contamination prior to transferring it into the bioreactor. To test for the presence of both aerobic and anaerobic bacteria, samples were plated on Universal Beer Agar (UBA, Difco Laboratories), with the addition of 10 mg/L of cycloheximide, and incubated at 28°C for 10 days. Plates that were tested for anaerobic bacterial contamination were placed in an anaerobic jar with an AnaeroGen® (Oxoid) packet, which takes up any oxygen remaining in the jar, creating an anaerobic environment. An anaerobic indicator (Oxoid), which turns pink in the presence of oxygen, was used to verify anaerobic conditions within the jar. Wild yeast contamination was tested by plating samples on yeast medium (YM agar, Difco Laboratories) plus $CuSO_4$ (0.4 g/L) incubated at 25°C for 7 days. Peptone Yeast-Extract Nutrient agar (PYN), described previously, was used to screen samples for non-lager yeast contaminants at 37°C for 7 days. The absence of yeast growth on PYN at 37°C indicated that no ale yeast or contaminants that grow at 37°C were present.

*Gel Phase Analyses:* An assay was developed in our laboratory to ensure that the immobilized cell beads to be used for fermentations were free of contaminating bacteria before being pitched into the bioreactor. The main concern was to avoid contamination with beer spoilage organisms such as *Pediococcus sp.* and *Lactobacillus sp.* or wild yeast A 3 mL volume of carrageenan gel beads was inoculated into 100 mL of several different selective liquid media described below and placed in 250 mL flasks at 25°C, and shaken at 100 rpm in an incubator shaker. NBB broth (Nachweis von Bierschädlichen Bacterien) (BBL cat # 98139, NBB Broth Base, 0.02 g/L cycloheximide) is a semi-selective medium which is used to test for beer spoilage bacteria, such as *Pediococcus sp.* and *Lactobacillus sp.* Copper sulphate broth (16 g/L YM broth, Difco; 0.4 g/L $CuSO_4$) is a semi-selective medium to test for wild yeast contaminants. Finally, Standard Methods (STA) + cycloheximide broth (16 g/L "Standard Methods" broth, Difco; 0.02 g/L cycloheximide) is used to test for bacteria found in water, wastewater, dairy products, and foods (Power and McCuen, 1988). The selective media were chosen to detect and identify potential beer spoilage organisms within three days. Contaminated samples were indicated by turbidity within the sample and a presumptive identification of the contaminants was made.

*Respiratory Deficient (RD) Yeast Cell Detection Methodology: Triphenyltetrazolium Choride (TTC) Overlay Technique:* This method was used to distinguish respiratory deficient yeast from the rest of the population, and is based on the principle that TTC is a colourless salt that forms a red precipitate upon reduction. When TTC is overlayed onto yeast colonies growing on Yeast-Peptone-Dextrose (YPD) agar (yeast extract, 10 g/L; Peptone, 20 g/L; Dextrose, 20 g/L; Agar, 20 g/L in $dH_2O$), respiratory sufficient yeast will reduce the TTC, and these colonies will become dark pink to red. However, respiratory deficient yeast do not reduce the dye and retain their original colour.

Cultures were serially diluted to a suitable concentration of microorganisms, ~100 cells/ 0.2 mL, for plating. The YPD plates were then incubated for approximately 3 days at 21°C until yeast colonies were visible in an aerobic environment. Each plate was then overlaid with 20 mL of 50°C TTC overlay agar. After cooling the individual solutions to 50°C, TTC overlay agar was made by mixing 1:1 Solution A (12.6 g/L $NaH_2PO_4$; 11.6 g/L

$Na_2HPO_4$; 30.0 g/L agar in $dH_2O$, autoclaved at 121°C, 15 min) with Solution B (2.0 g/L 2,3,5-triphenyltetrazolium chloride in $dH_2O$, autoclaved at 121°C, 15 min). Plates were read after 3 hours of incubation at ambient temperature. Percent RD was reported as a percent of unstained colonies of the total number observed.

4.8 Scanning Electron Microscopy (SEM) of Yeast Immobilized in Kappa-Carrageenan Gel Beads

Kappa-carrageenan gel beads containing immobilized yeast were removed from the bioreactor through the sample port and placed in a 10 mL screw-cap glass vial, with the beads submerged in a small volume of fermentation broth. The vial was immediately covered in ice and transported in an insulated container to the SEM facility. Kappa-carrageenan gel beads containing immobilized yeast were fixed in 2% (v/v) glutaraldehyde prepared in Sorensen's phosphate buffer, 0.07 M, pH 6.8 (Hayat, 1972). This was followed by post-fixing in 1% (w/v) osmium tetroxide, prepared in the same buffer, and dehydration through a graded series of alcohol solutions 50, 70, 80, 90, 95, 100% (v/v), at 15 min for each, and then 3 changes at 100%. Before critical point drying (Ladd Research Industries, Burlington, VT) through carbon dioxide, some beads were frozen in liquid nitrogen, fractured and collected into 100% alcohol. Freeze fracturing allows the internal face of the beads to be exposed with minimum distortion. Following critical point drying, the samples were sputter-coated (Polaron SC500 sputter coater, Fison Instruments, England) with 30 nm of gold/palladium and then scanned with a Hitachi S-4500 field emission scanning electron microscope (Nissei Sangyo, Tokyo, Japan).

4.9 Bioreactor Sampling Protocol

The bioreactor sample port (Scandi-Brew Type T Membrane Sample Valve) reservoir was filled with 70% (v/v) ethanol solution to maintain aseptic conditions around the opening between samplings. In order to take a sample, the plug was removed from the base of the ethanol reservoir, drained, and rinsed thoroughly with ethanol, prior to opening the port. Samples were collected into a crimp vial or a screw-cap jar and volumes varied from 5-60 mL, depending on the analysis required. In order to test for microbiological contamination, 10 mL of the fermentation liquid was vacuum-pumped though a sterile membrane filter unit. The membrane, 0.45 □m pore size, was placed on the appropriate selective medium, as described in Section 4.6.

For chemical analyses, 60 mL of sample was withdrawn through the septum from the 100 mL crimp-sealed vial and syringe-filtered through a Schleicher and Schull, FP-050, double-layer syringe filter system, 5 □m and 0.45 □m pore sizes. The required volume of sample was then dispensed into a 20 mL head space vial and crimped with a Teflon septum and aluminum cap. The required sample volumes are listed in Table 4.1.

Table 4.1. Sample volume requirements for various chemical analyses.

| Sample | Volume (mL) |
| --- | --- |
| ethanol | 5 |
| short-chain diols | 10 |
| beer volatiles | 12 |
| vicinal diketones | 5 |
| carbohydrates/specific gravity/ | 12 |
| free amino nitrogen/protein | 12 |

4.10 Dissolved Oxygen Measurement

The Dr. Thiedig Digox 5 dissolved oxygen analyzer measures dissolved oxygen in the range of 0.001 - 19.99 mg/L in wort, fermenting wort and beer (Anon, 1998). Vilachá and Uhlig, (1985) tested many instruments for dissolved oxygen measurement in beer and found the Digox analyser to give trust-worthy, precise values. The electrochemical measurement method used by the Digox 5 is based on an amperometric three-electrode arrangement with a potentiometer. The measuring cell consists of a measuring electrode (cathode) and counter electrode (anode). These electrodes are exposed to the liquid in which the oxygen concentration is to be measured. A reaction at the measurement electrode occurs after fixing a defined measurement potential. At the large, silver, measurement electrode, molecules of oxygen are reduced to hydroxyl ions. Two water molecules react in equation 4.1, with one molecule of oxygen, while absorbing four electrons, giving four hydroxyl ions.

$$O_2 + 2H_2O + 4e^- \rightarrow 4OH^- \qquad (4.1)$$

The stainless steel anode absorbs the four electrons released at the cathode in order to ensure the flow of current In equation 4.2, the measurement current, I, is directly proportional to the oxygen concentration, $C_{L,O}$:

$$I = K \times C_{L,O} \qquad (4.2)$$

where the constant, K, in influenced by the Faraday constant, the number of electrons converted per molecule, the cathode surface area, and the width of the boundary layer at the surface of the measurement electrode.

A constant, characteristic, measurement potential is critical for the selectivity (for oxygen) and precision of the measurement. The measuring voltage is stabilized by the reference electrode, which is not burdened by current. This, together with the potentiostat, which provides electronic feedback, provides a constant measurement potential. The surface of the measurement electrode is electrolytically connected to the reference electrode via a diaphragm.

The error, based on the measuring range of the final dissolved oxygen concentration, was $\pm 3\%$ (Anon, 1998). The dissolved oxygen analyzer was calibrated using the Thiedig Active Calibration, in which the Digox 5 produced a defined oxygen quantity based on Faraday's Law (0.500 mg/L) and then cross-checked this with the measured values in the matrix. This allowed the instrument to be calibrated under the pressure, temperature and flow conditions corresponding to those of the measurement, within one min. Because the exchange of molecules in the sensor is a diffusion process, it is influenced by temperature, resulting in faster reaction rates and increases in the measured current. Therefore, the Digox 5 is also equipped with a sensor, which measures the temperature and automatically compensates for fluctuations.

The Digox 5 has some advantages over membrane-based oxygen sensors. Because the Digox uses no electrolyte, the sensitivity loss is relatively slow and only minor deposits on the measurement electrode occur. Also, the sensitivity can be determined at any time, by performing an active calibration. It is a simple procedure to clean the electrode and recalibrate the instrument. In most membrane-sensors, silver chloride is deposited on the cathode, and the electrolyte solutions changes, resulting in progressively lower readings. For this reason membranes and electrolytes are recommended to be changed every few weeks and then recalibrated, a lengthy and cumbersome task. Calibration of the membrane-based sensors is usually conducted in the lab at oxygen saturation levels, which could cause appreciable errors, especially in the wort and beer matrix at very low oxygen levels. Temperature will have a three-fold influence on membrane-based oxygen sensors: membrane permeability will change, the partial pressure of oxygen will change, and the solubility of oxygen in the electrolyte will change. Temperature compensation for these three factors in membrane-based sensors is difficult

*Dissolved Oxygen Measurement in the Wort During Storage:* Flexible Tygon® food grade tubing (¼ inch i.d.) was aseptically connected to a sample port located near the top of the conical bases of the wort storage tanks, T-1 and T-2 (see section 4.2.1). A variable speed peristaltic pump provided volumetric flow rate of 11 L/hr through the dissolved oxygen analyzer block. ((Masterflex® L/S™ Digital Standard Drive, Cole-Parmer cat. #P-07523-50)). Wort dissolved oxygen measurements were then recorded after 4-5 minutes.

*Dissolved Oxygen Measurement in the Bioreactor:* Prior to performing the dissolved oxygen measurements on the bioreactor, the Digox 5 analyser block was sanitized. The inlet of the sensor was connected to sterile, Tygon® Food Grade tubing (¼ inch i.d.). A 70% (v/v) ethanol solution was pumped through the analyzer at a volumetric flow rate of approximately 10 L/hr for 15 min. The dissolved oxygen analyzer was connected to a laboratory water tap and hot water (70°C) was passed through the sensor for a minimum of 2 hours. This methodology was used rather than steam sterilization because the analyzer block materials cannot tolerate temperatures of above 70°C. Following the two-hour sanitation period, the tubing at the inlet and outlet of the unit was clamped to maintain sterility within the analyzer. In a laminar flow hood, the freshly sterilized tubing was connected to the inlet and outlet of the analyzer. The free ends of the tubing were then aseptically clamped to the ¼" I.D. stainless steel ports on the bioreactor head plate and measurements were taken. When the ports on the bioreactor were not in use, they were sealed using a short length of sterilized Tygon® food grade tubing. Dissolved oxygen was measured on-line in the gas lift bioreactor by withdrawing liquid from the fermentation through a port situated on the bioreactor head plate. The fermentation liquid exited the bioreactor through a stainless steel filter (see section 4.1.2) connected to a ¼ inch stainless steel pipe which penetrated the bioreactor head plate. The liquid then flowed through flexible Tygon® food grade tubing (¼ inch i.d.), which was connected to a variable speed peristaltic pump (Masterflex® L/S™ Digital Standard Drive, Cole-Parmer cat. #P-07523-50), providing a volumetric flow rate of 11 L/hr through the dissolved oxygen analyzer block. The fermentation liquid was then recycled through a second quarter-inch stainless steel port, which penetrated the bioreactor head plate. Tygon® food grade tubing (Cole-Parmer, 1999) was used to connect the sensor to the bioreactor because of its supplier-specified low oxygen permeability of 30 $cm^3mm/(s.cm^2.cmHg)$ x $10^{-10}$. The measurement was taken after 4-5 minutes of circulation.

### 4.11 Chemical Analyses

Calibrations were performed using the appropriate standard reagents. All reagents used for the analyses were >99% pure. Where necessary, subsequent purification via distillation was performed.

### 4.11.1 Ethanol

Ethanol concentration was determined using the internal standard gas chromatagraph (GC) method of the Technical Committee and Editorial Committee of the American Society of Brewing Chemists (1992). Degassed samples were treated directly with isopropanol internal standard, 5% (v/v) and injected into a Perkin Elmer 8500 Gas Chromatograph equipped with a flame ionization detector (FID) and a Dynatech autosampler. A Chromosorb 102, 80-100 mesh column was used with helium as the carrier gas. Chromatographic conditions: flow rate of 20 mL/min, injector temperature of 175°C. detector temperature of 250°C, and column temperature of 185°C.

### 4.11.2 Carbohydrate Summary

Glucose, fructose, maltose, DP3 (maltotriose), DP4 (maltotetraose), poly-1 (polysaccharide peak 1) and glycerol concentrations in fermentation samples were quantified using a Spectra-Physics (SP8100XR) high performance liquid chromatograph (HPLC) equipped with a cation exchange column (Bio-Rad Aminex, HPX-87K) and a refractive index detector (Spectra-Physics, SP6040XR). The mobile phase was potassium phosphate, dibasic, 0.01 M, and the system was equipped with a Spectra-Physics (SP8110) auto sampler. The instrument was operated with a backpressure of 800 psi. The flow rate of sample and eluent through the column was 0.6 mL/min, with a column temperature of 85°C and a detector temperature of 40°C. The injection volume was 10 □L.

4.11.3 Specific Gravity

The specific gravity of the wort and fermentation medium is described in this study in terms of Real Extract (degree Plato, °P), which is the accepted unit used in the brewing industry.

Fermentation samples were filtered as described in section 4.8 and vortexed prior to analysis with a digitalized density meter (Anton Paar DMA-58 Densitometer) to measure wort specific gravity (degree Plato). The fermentation samples were inserted into a glass u-tube, which oscillated electronically to determine the specific gravity, thus giving degree Plato indirectly.

Degree Plato refers to the numerical value of a percentage (w/v) sucrose solution in water at 20°C whose specific gravity is the same as the wort in question. Because the degree Plato scale and resulting tables relating solution specific gravity to solute concentrations are based on aqueous solution of sucrose, it is only an approximation of the amount of extract. Extract is a term referring to the total available soluble mass in a brewing material "as is", and /or potentially through processing (Hardwick, 1995) such as carbohydrates, proteins, tannins. Extract is still currently expressed in the brewing industry as specific gravity in degree Plato because of the lack of a more appropriate reference better related to the variability in compositions of worts of different origins.

4.11.4 Total Diacetyl

Total diacetyl (2,3-butanedione) in beer and fermentation samples was measured using a headspace analyte sampling technique, followed by capillary GC separation (Hewlett-Packard 5890) and electron capture detection (ECD) based on the method of the Technical Committee and Editorial Committee of the American Society of Brewing Chemists (1992). The method refers to "total diacetyl" because the method measures the amount of diacetyl and its precursor, alpha-acetolactate. The carrier gas was 5% methane in argon at 1.0 mL/min and a J & W DB-Wax column was used. The split ratio was 2:1 and the auxiliary gas was helium at 60 mL/min. Injector temperature was 105°C and detector temperature was 120°C.

The system was equipped with a Hewlett Packard 7694E headspace autosampler and 2,3-hexanedione was used as an internal standard. The sample cycle time was 40 min, with a vial equilibration time of 30 min at 65°C, a pressurization time of 2 min at 4.8 psig, a loop fill time of 0.2 min, a loop equilibration time of 0.1 min, and an injection time of 0.27 min. Carrier pressure was 18.8 psig, transfer line temperature was 95°C and loop temp was 65°C.

4.11.5 Beer Volatiles

Beer volatiles including acetaldehyde, ethyl acetate, isobutanol, 1-propanol, isoamyl acetate, isoamyl alcohol, ethyl hexanoate, and ethyl octanoate were measured using an internal standard (n-butanol) GC (Hewlett Packard 5890) headspace method and a flame ionization detector (FID). The carrier gas was helium at 6.0 mL/min and the GC was equipped with an Hewlett Packard 7694 headspace autosampler.

GC injector temperature was 200°C and detector temperature was 220°C. Oven temperature profile: 40°C(5 min), 40 - 200°C (10°C/min), 200 -220°C (50°C/min), 220°C (5 min). The FID gases included the carrier at 6.0 mL/min, helium makeup at 30 mL/min and 28 psig, $H_2$ at 50 mL/min and 25 psig, and air at 300 mL/min and 35 psig.

The septum was purged at a flow rate of 0.8 mL /min. The head pressure was 4.0 psig. When the autosampler was connected via a needle in the injection port, the vial pressure was 15.9 psig, the carrier pressure was 7.1 psig, the column head pressure was 4 psig, the split flow was 18 mL/min and the column flow was 6 mL/min. Zone temperatures: vial at 70°C, loop at 80°C, transfer line at 150°C.

The GC cycle time was 40 min, with a vial equilibration time of 35 min, a pressurization time of 0.25 min, a loop fill time of 0.1 min, a loop equilibration time of 0.1 min, an injection time of 3 min and a sample loop volume of 1 mL.

4.11.6 Free Amino Nitrogen (FAN)

The Free Amino Nitrogen International Method of the Technical Committee and Editorial Committee of the American Society of Brewing Chemists (1992) was used to determine the concentration of free amino nitrogen in a fermentation sample, using a Perkin Elmer LS50B spectrophotometer. This spectrophotometric method displays a colour reaction between ninhydrin and the nitrogen present in the sample. The amount of absorbance is directly related to the amount of free amino nitrogen present

|  | |  |
|---|---|
| a) Colour Reagent: | 19.83 g disodium hydrogen phosphate ($Na_2HPO_4$) |
| | 30.00 potassium dihydrogen phosphate ($KH_2PO_4$) |
| | 2.78 g ninhydrin monohydrate |
| | 1.50 g fructose |
| b) Dilution Reagent: | 2.00 g potassium iodate ($KIO_3$) |
| | 596 mL distilled, deionized water |
| | 404 mL 95% (v/v) ethanol |

Stored in refrigerator and used at room temp.

c) Glycine Stock Solution: 0.1072 g/100 mL distilled deionized water
d) Glycine Standard Solution: stock solution was diluted 1:100 (v/v) with distilled, deionized water. This standard contains 2 mg/L FAN.

The samples were diluted to a ratio of 100:1 with distilled water and 2 mL of the diluted sample were introduced into each of 3 test tubes. The blank was prepared by introducing 2 mL of distilled deionized water into each of 3 test tubes. Three test tubes containing 2 mL each of the glycine standard solution were also prepared.
For all samples, 1 mL of colour reagent was added and then they were placed in a 100°C water bath for exactly 16 min. The test tubes were then cooled in a 20°C water bath for 20 min. Five mL of the dilution reagent was then added to each test tube and mixed thoroughly. The samples were then allowed to stand for 10-15 min. The absorbance at 570 nm was then measured using a spectrophotometer and the amount of FAN in a sample was calculated using equation 4.3.

$$FAN\ (mg/L) = (A_P - A_B - A_F)\ 2d\ /\ A_S \qquad (4.3)$$

Where FAN is the amount of free amino nitrogen in the sample in mg/L, Ap is the average of the absorbances of the test solutions, $A_B$ is the average of the absorbances for the blanks, $A_F$ is the average of the absorbances for the correction for dark worts and beers, 2 is the amount of FAN in the glycine standard solution, d is the dilution factor of the sample, and As is the average of the absorbances for the glycine standard solution.

CHAPTER 5. CONTINUOUS FERMENTATION USING A GAS-LIFT BIOREACTOR SYSTEM

A gas-lift draft tube bioreactor system was chosen for continuous beer fermentation because of its published excellent mass transfer (liquid-solid) and mixing characteristics. Liquid-solid mass transfer is especially important since it involves the transfer of nutrients from the liquid phase to the solid immobilized cell biocatalyst, providing substrates for the encapsulated yeast These bioreactors also provide good aeration, low power consumption, and are simple to construct. This has made gas-lift bioreactor systems very attractive for large scale operations, such as those used commercially for wastewater treatment (Driessen et al., 1997; Heijnen, 1993).

5.1 Gas-lift Draft Tube Bioreactor Description

This section gives a detailed description of the gas-lift bioreactor used in this work.

5.1.1 Bioreactor Body

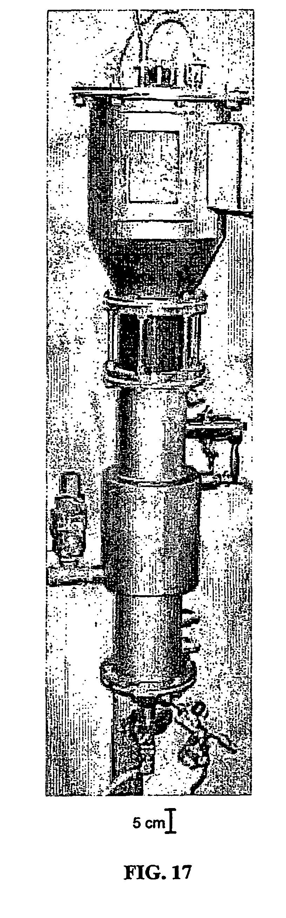

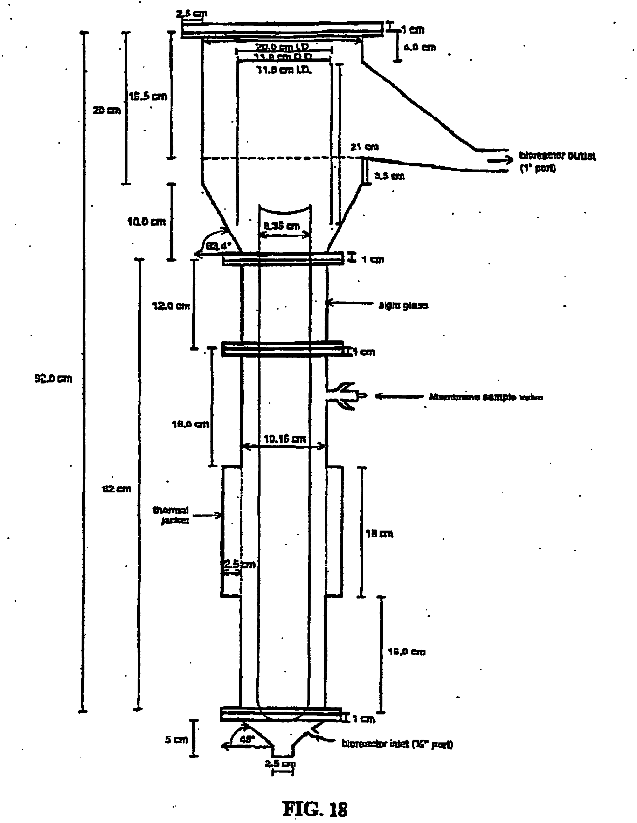

The 13 L (8 L working volume) gas-lift draft tube bioreactor designed for this work was a three phase fluidized bed (liquid/solid/gas) where the immobilized cells were kept in suspension by carbon dioxide gas driven internal liquid circulation (Heijnen, 1996) as shown in FIG. 16. A photograph of the bioreactor vessel is given in FIG. 17 and a detailed drawing with detailed dimensions is given in FIG. 18. Carbon dioxide and air flow into the bottom cone of the bioreactor through a sintered stainless steel sparger ($CO_2$ purger nozzle, Part #9222, Hagedorn & Gannon, USA), 0.11m length, 0.013 m outer diameter. Carbon dioxide was used as the fluidizing gas and air was used to supply oxygen to the yeast cells.
A draft tube, concentrically located inside the columnar bioreactor, functioned as the riser in this fluidized bed system while the outside annulus served as the downcomer. The internal draft tube was suspended from a cylindrical particle separator, seated on three stainless steel tabs in the expanded head region of the bioreactor. Keeping the draft tube and particle separator fittings inside the bioreactor, minimized the risk of microbial contamination from the outside environment.

Originally, the bioreactor had a mesh screen to separate the immobilized cells from the liquid at the outlet. However, the screen was prone to plugging, so a stainless steel cylinder was used to separate the immobilized cell beads from the liquid phase as they moved over the top of the draft tube and flowed down the annulus. The particles would hit the cylinder and fall back down into the bulk liquid phase rather than leaving the bioreactor as overflow. Thus there was a small region near the bioreactor outlet that was free of immobilized cell particles. The bioreactor expanded head region also increased the surface area for gas bubble disengagement.

5.1.2 Bioreactor Headplate

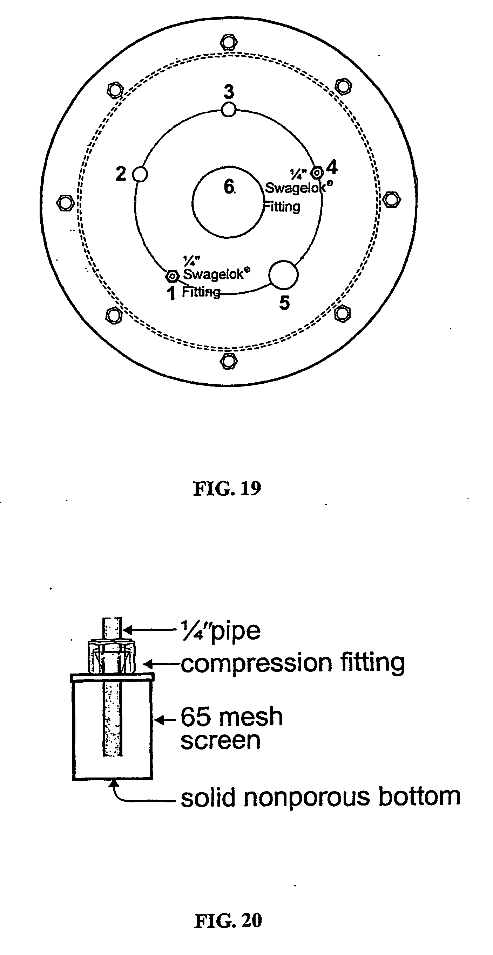

In FIG. 19 a schematic of the bioreactor headplate is given. Headplate ports were kept to a minimum to reduce the risk of contamination. The ports were either welded directly onto the headplate or compression fittings (Swagelok®) were used. The headplate incorporated an inoculation port, a thermowell, a thermometer, a septum for gas sampling, and liquid withdrawal and return ports for dissolved oxygen measurement A temperature sensor was inserted into the thermowell, which fed back to the temperature controller system. The temperature controller gave feedback to a solenoid valve, which opened and closed the glycol supply to the bioreactor thermal jacket Temperature was monitored using a thermometer (Cole-Parmer Waterproof Thermocouple thermometer, #90610-20) and a type T probe, which was welded into the bioreactor head plate. Dissolved oxygen was measured using a dissolved oxygen analyzer (Dr. Theidig, Digox 5), which required a flow of 9-11 L/hr of liquid broth through the analyzer block for accurate oxygen readings. Liquid was withdrawn from the bioreactor for oxygen measurement through a ¼ i.d. pipe that went through the headplate into the fermentation liquid. As shown in FIG. 20, the tip of pipe was fitted with a filter to remove larger particulates from the liquid, as it was pumped through the dissolved oxygen analyzer. The liquid was then returned back to the bioreactor through another ¼" port in the headplate.

5.1.3 Sanitary Valves for Aseptic Sampling

The bioreactor was equipped with a membrane sample valve (Scandi-Brew®) welded into the bioreactor wall. The valve was designed for sampling under aseptic conditions. The membrane sealed directly against the fermentation liquid, allowing the valve to be fully sterilizable with steam and alcohol through two outlets (FIG. 18). A small external reservoir of ethanol surrounded the membrane to maintain sterility between sampling. This valve was used for all bioreactor sampling and it was assumed that the composition of the liquid at the point of sampling was not significantly different than the composition of the liquid exiting the bioreactor outlet. As mentioned in the Materials and Methods chapter of this work, the bioreactor was sampled from a valve located on the outer wall of the bioreactor. In order to validate the assumption that the composition of the liquid exiting the bioreactor outlet was the same as the liquid sampled from the body of the bioreactor, mixing time studies were performed.

A pulse tracer method was used to determine mixing time in the gas-lift bioreactor (Chistie, 1989). A 1 mL volume of 10 N HCl was rapidly injected into the bioreactor annulus and the change in pH was logged over time, with time, t = 0 seconds at the time of the injection. The pH was returned to its original value by injecting 10 N NaOH. The pH electrode (Cole-Parmer, cat. #P-05990-90) was 277 mm in length and 3.5 mm in diameter. An Ingold Model 2300 Process pH Transmitter was used to monitor pH. A two-point pH calibration was performed with certified standard buffers, Beckman pH 7.0 green buffer, Part #566002 and Beckman pH 4.0 red buffer, Part #566000. The data was logged at a frequency of 3750 Hz for 300 seconds using a software program designed by Cheryl Hudson and John Beltrano in 1994, and modified by Norm Mensour in 1999 (University of Western Ontairo, London, Ontario).

The pH data was then smoothed using the Savitsky-Golay algorithm in TableCurve 2D (Jandel Scientific Software, Labtronics, Guelph, Ontario). The Savitzky-Golay algorithm is a time-domain method of smoothing based on least squares quartic polynomial fitting across a moving window within the pH data (Anon, 1996). The smoothed data was then normalized and a plot of ApH versus time was generated. The mixing time was taken to the nearest minute, when the pH had reached ~95% of equilibrium value. The mixing time was measured using three different volumetric flow rates of carbon dioxide: 283 $cm^3$/min, 472 $cm^3$/min (volumetric flow rate used throughout this work), and 661 $cm^3$/min. In all three cases the pH in the bioreactor had equilibrated (~95% cutoff) in less than 2 minutes, as seen in Appendix 1. The mixing time was deemed to be sufficiently short to validate our original assumption that the bioreactor was well-mixed. This allowed us to assume that the composition of the liquid sampled from the bioreactor wall was not significantly different from that which flowed from the outlet, with an average liquid residence time of 24 hours in the bioreactor. From the appended figures, a definite liquid recirculation superimposed on mixing by dispersion was seen, which is typical of gas-lift bioreactors (Chisti, 1989).

5.2 Flow Diagram of Continuous Beer Fermentation System

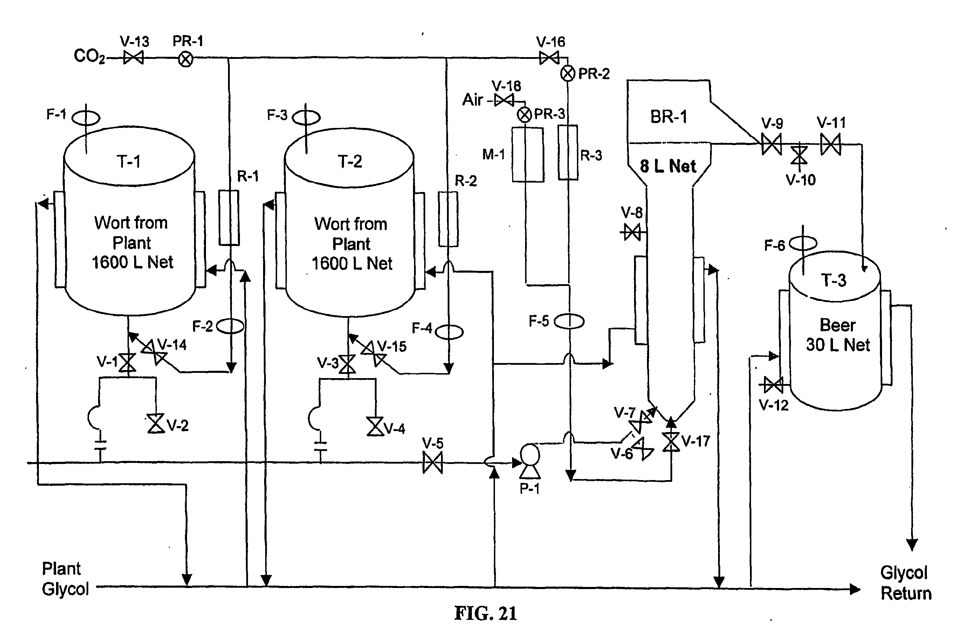

A flow diagram for the continuous beer fermentation system, which was housed in the Microbrewery Pilot Plant of Labatt Brewing Company Limited in London, Ontario, is given in FIG. 21 with a detailed parts description in Table 5.1. In summary, brewer's wort was collected from the London Labatt Plant, sterilized using a flash pasteurizer (Fisher Plate Heat Exchanger , combi-flow Type Eurocal 5FH), and stored in large holding tanks (T-1 and T-2). During continuous fermentation the wort was transferred at a controlled flow rate to the gas-lift bioreactor (BR-1) containing immobilized yeast cells. Fermented liquid left the bioreactor as overflow and was collected into a receiving vessel (T-3). In the following sections, the operation of the continuous beer fermentation system given in FIG. 21 is detailed.

5.2.1 Wort Collection and Storage

Unoxygenated wort for continuous fermentation was collected from the Labatt London plant via piping into a 1600 L cylindroconical storage tank, pre-purged with carbon dioxide to minimize oxygen pickup by the wort. All tanks of this scale, including wort holding tanks, T-1 and T-2, were cleaned and sanitized as per Labatt Best Practices prior to their use. The wort was then flash pasteurized and transferred at 2°C into the available wort holding tank, T-1 or T-2 (also pre-purged with carbon dioxide). Wort was held in these tanks at 2°C for up to 2 weeks, supplying liquid to the continuously fermenting bioreactor, BR-1. At the end of the two-week period, the bioreactor feed was changed over so that wort was supplied from the second wort tank, which contained fresh wort. Two identical wort storage tanks, T-1 and T-2, were employed to minimize downtime during the changeover to fresh wort. In all cases, wort was tested for contamination a minimum of two days prior to being introduced into the bioreactor (BR-1). If the wort was contaminated, it was discarded and fresh wort was immediately collected and pasteurized.

*Minimizing Wort Dissolved Oxygen Concentration During Storage:* The goal was to store the wort with minimal oxygen, at a constant level, and at a low temperature, without freezing the wort. This was required to prevent undesirable staling reactions in the wort from chemical reactions with oxygen (Narziβ et al., 1993), to provide a consistent supply of wort to the bioreactor, and to minimize the risk of wort contamination with microbes during storage. The large 1,600 L (net) cylindroconical vessels (T-1 and T-2) used to store the wort for the continuous fermentations, were originally designed as batch fermenters, not wort storage tanks. Because of this, the cooling for these vessels was not adequate to maintain wort at 2°C. After three days of holding the wort, temperature varied as much as 15°C from one region of the tank to another (Table 5.2).

These warm regions in the tanks increased the risk of microbial growth. Thus, some agitation was needed in these tanks to ensure a uniform low temperature throughout.

For these reasons, a pipe sparger was installed into the base cone of each wort storage tank (T-1 and T-2). Experiments were performed to determine the best protocol for filling the tank with wort and maintaining constant low levels of dissolved oxygen. In the first experiment, the storage tank was filled with wort that had been collected without oxygenation and flash-pasteurized. Once the storage tank was filled with 1,600 L wort, 0.113 m$^3$/hr of carbon dioxide was sparged into the base of the tank. During the second experiment, the wort was again collected without oxygenation and flash-pasteurized. This time, the storage tank was purged with carbon dioxide (0.85 m$^3$/hr) for 3 hours prior to filling and a small amount of carbon dioxide (0.113 m$^3$/hr) was continuously sparged into the storage vessel as the wort was being transferred into the tank. This low flow of carbon dioxide was continuously bubbled through the wort stored in the tank while it supplied wort to the continuous fermentation. For both experiments, wort dissolved oxygen concentration was monitored on a regular basis during a week of storage.

In Figure 5.7, dissolved oxygen concentration versus wort storage time is given. When the holding tank was not pre-purged with carbon dioxide, the air in the headspace of the tank allowed some pickup of oxygen by the wort. Thus, without prepurging the tank it took a significantly longer period of time for the dissolved oxygen concentration in the wort to reach a minimal and constant level. When the tank was pre-purged, the wort dissolved oxygen concentration remained at a constant low level throughout the storage period. Thus, prepurging the wort storage tanks (T-1 and T-2), and continuing to provide a small flow of carbon dioxide through the wort during storage in order to keep a slight positive pressure on the tanks, was adopted as part of the wort storage procedure for all continuous fermentations.

The temperature profile in the storage vessels was also compared with and without 0.113 m$^3$/hr of carbon dioxide sparging. This was performed on water rather than on wort using a Type T temperature probe connected to a thermometer (Cole-Parmer Waterproof Thermocouple Thermometer, cat. #90610-20). City water (1,600 L) was collected into a wort storage tank and equilibrated for three days and the temperature of the water was recorded in different regions of the storage tank. The water in the tank was then sparged for 24 hours with 0.113 m$^3$/hr carbon dioxide and the temperature was again recorded. Ambient temperature was recorded in each case and the temperature set point within the storage tank was 2.0°C.

As seen in Table 5.2, with carbon dioxide sparging, the temperature in the storage tanks was more uniform, with temperature ranging between 0.1 and 4.1°C in the regions measured, and the contents of the tanks did not freeze.

This lower temperature helped to prevent unwanted growth of microbes in the wort during storage.

Gas was released from the wort storage tanks through a sterile gas filter situated at the top of the tank. Wort was then transferred using a variable speed peristaltic pump (P-1) (Masterflex® L/S™ Digital Standard Drive, Cole-Parmer cat. #P-07523-50) to the 8 L bioreactor (BR-1) inlet using Norprene® Food Grade L/S 16 flexible tubing.

### 5.2.2 Continuous Fermentation using Gas-Lift Draft Tube Bioreactor System

Wort was introduced near the bottom cone of the bioreactor, BR-1, through a ¼" port. A mixture of filter-sterilized (Millipore, Millex®-FG$_{50}$, 0.2 □m Filter Unit), air and carbon dioxide (99.99% purity) flowed into the bioreactor through the sintered stainless steel sparger. A rotameter (R-3) was used to control the carbon dioxide flow rate at STP, and a precalibrated mass flow controller (M-1) was used to control the flow rate of air at STP. Fermented liquid left the bioreactor as overflow and flowed through 1" I.D. reinforced PVC tubing into a 30 L stainless steel collection vessel (T-3) which was cooled with an external glycol coil and kept at a temperature of 4°C.

### 5.2.3 Product Collection

The product collection vessel (T-3) had a large inlet port (1"ID.) which was designed so that the fermented liquid would flow down the collection vessel wall to minimize foaming. This vessel also had a sterile gas filter, (Millipore, Millex®-FG$_{50}$, 0.2 Om Filter Unit), for gas release from the bioreactor (BR-1) and the collection vessel (T-3). The collection vessel was periodically emptied using a ¼" valve (V-12) situated 2" above the base of the tank.

### 5.2.4 Glycol Cooling Loop

Glycol was transferred from the London Brewery to the Microbrewery Pilot Plant at a temperature of -23°C and pressure of 45 psig, and circulated through cooling jackets for the wort holding tanks (T-1 and T-2), the gas-lift bioreactor (BR-1), and the product collection vessel (T-3). The two wort holding tanks and the bioreactor were equipped with liquid phase temperature probes which provided feedback to temperature controllers, which in turn controlled the flow of cold glycol to the vessel jackets. The wort holding tanks stored the wort at 2°C, while the temperature within the bioreactor was controlled at temperatures of 12°C to 22°C, depending upon the specific experiment. The product collection vessel did not have automatic temperature control, but rather, the flow of glycol was manually controlled to keep the vessel at approximately 4°C. It was not necessary to precisely control the temperature of the product collection vessel (T-3) because the liquid in this vessel was simply discarded and not analyzed or processed further.

Glycol was also used to jacket and cool the wort transfer lines from the wort tanks (T-1 and T-2) to the bioreactor (BR-1). Once the glycol had circulated through a given jacket, it was returned to a main line within the Pilot Plant Microbrewery and then was returned to the London Plant, generally at a temperature of -15°C and pressure of 40 psig.

### 5.3 Bioreactor Sterilization Protocol

The bioreactor (BR-1) was filled with a 2% (v/v) solution of Diverse® CX/A (DiverseyLever, Canada), a sanitizing detergent, and soaked overnight with gas sparging. The reactor was then drained and rinsed with cold water. This cycle of cleaning solution and water rinsing was repeated two times. In order to prepare the bioreactor for steam sterilization, the wort and gas lines were disconnected. The steam line was connected to the bioreactor inlet and the following valves were opened: the bioreactor inlet and purge valves (V-7, V-6), the gas inlet (V-17), product outlet valves (V-9, V-11), the membrane sampling valves (V-8, V-10), and collection vessel drain port (V12). The plant steam valve was then slowly opened and the bioreactor valves were adjusted so that a trickle of steam was observed at the exit of each external opening. After 60 minutes of steam exposure, all the external valves on the bioreactor were closed (V-17, V-8, V-10, V-12) except the wort bypass valve (V-6). When the steam valve was closed, the wort bypass valve was closed and a sterile filter was connected to the collection vessel to prevent contamination by non-sterile air entering the system as it cooled. The bioreactor gas line was also reconnected at V-17 as the plant steam line was closed in order to maintain a positive pressure while the system cooled.

### 5.4 Fermentation System Startup

Brewer's wort was collected from the plant into a 20 L stainless steel pressure vessel and heated in an autoclave for 45 minutes at 100°C. Immobilized cells were aseptically transferred into the cooled wort (40% v/v). The sealed vessel was transported to the Microbrewery Pilot Plant where the bioreactor system was housed. The 20 L vessel was connected to a quick connect fitting (Cornelius Anoka, MN, USA), which was clamped to reinforced 3/8" PVC tubing (Cole-Parmer, USA). The other end of the PVC tubing was clamped to the membrane sampling valve (V-8) in the bioreactor wall.

Filter-sterilized carbon dioxide was applied as 10 psig to the 20 L vessel and the membrane sample port was opened so that the immobilized cell mixture was transferred from the vessel into the bioreactor, without exposing the inoculum to the outside air environment The internal components of the "quick connect" fittings of the 20 L vessel were removed to prevent plugging with immobilized cells upon transfer into the bioreactor. The cumulative particle size distribution (undersize) for the kappa-carrageenan gel beads is shown in Figure 5.8. The arithmetic mean particle diameter, $D_{pam}$ was calculated to be 1.252 mm and the Sauter mean particle diameter, $D_{psm}$, was 1.17 mm. The median particle diameter was 1.255 mm. The experimental data and mean particle diameter calculations are given in Appendix 1.

Following inoculation with immobilized cells, the bioreactor was operated in batch mode until the sugar and diacetyl concentrations reached targets of less than 3°Plato in terms of specific gravity and less than 100 □g/L diacetyl. The system was then prepared for continuous operation. In order to rinse with hot water and steam-sterilize the wort transfer line, valves V-2 (or V-4 for T-2), V-5, and V-6 were opened, while V-1 (or V-3 for T-2) and V-7 were closed, isolating the wort line. The wort transfer line was rinsed with hot water at approximately 80°C, which was supplied through V-2 (or V-4 for T-2). Following the hot water rinse cycle, the plant steam line was connected at the same location and the wort transfer line was steam sterilized for a minimum of 30 minutes. At the same time that the steam line was shut off, the bypass valve (V-6) was also closed. Once the system had cooled, V-2 (or V-4 for T-2) was closed and the steam line was disconnected. The wort tank valve, V-1 (or V-3 for T-2), and the bypass valve (V-6) were opened and the wort transfer pump (P-1) was started. The wort was sent to the sewer drain via the bypass valve (V-6) until the condensate in the line was replaced with fresh cold wort. At that point the bypass valve was closed and the bioreactor inlet valve (V-6) on the reactor was opened, commencing the continuous fermentation process.

Every two weeks the tank, which supplied wort was alternated between storage tanks (T-1 and T-2). After two weeks of supplying wort from T-1, the continuous feed pump, P-1 was stopped and the valve (V-5) at the inlet of the bioreactor was closed. The wort transfer line was then connected to the second storage tank (T-2) and the line was flushed and sterilized as described in the previous paragraph. Continuous fermentation then resumed after only a short down time of less than one hour.

Table 5.1. Detailed parts description for flow diagram shown in Figure 5.6; PTFE, polytetrafluoroethylene; SS, stainless steel.

| Item | Description | Size | Mat'l Const. |
|------|-------------|------|--------------|
| BR-1 | Bioreactor | 8 L net | 316 SS |
| T-1 | Storage tank for wort | 1600 L net | 316 SS |
| T-2 | Storage tank for wort | 1600 L net | 316 SS |
| T-3 | Storage tank for beer | 30 L net | 316 SS |
| P-1 | Pump (peristaltic, variable speed) for wort transfer from T-1 to BR-1 | <0.08 L/min | SS rollers on Norprene® Food flexible tubing |
| F-1 | Filter for gas at outlet of T-1 | <4 bar | polyprop., 0.2 micrometer PTFE membrane |
| F-2 | Filter for gas at inlet of T-1 | <2 bar | polyprop., 0.2 micrometer PTFE membrane |
| F-3 | Filter for gas at outlet of T-2 | <4 bar | polyprop., 0.2 micrometer PTFE membrane |
| F-4 | Filter for gas at inlet of T-2 | <2 bar | polyprop., 0.2 micrometer PTFE membrane |
| F-5 | Filter for gas at inlet of BR-1 | <2 bar | polyprop., 0.2 micrometer PTFE membrane |
| F-6 | Filter for gas at outlet of T-3 | <2 bar | polyprop., 0.2 micrometer PTFE membrane |
| M-1 | Mass flow controller for air to BR-1 | <500 sccm | 316 SS, nylon, Viton® "O"-rings |
| R-1 | Rotameter for carbon dioxide to T-1 | <10 scfh | 316 SS, acrylic block |
| R-2 | Rotameter for carbon dioxide to T-2 | <10 scfh | 316 SS, acrylic block |
| R-3 | Rotameter for carbon dioxide to BR-1 | <2.5 scfh | 316 SS, acrylic block |
| PR-1 | Pressure regulator for carbon dioxide to T-1 & T-2 | <100 psi | 316 SS |

| Item | Description | Size | Mat'l Const. |
|------|-------------|------|--------------|
| PR-2 | Pressure regulator for carbon dioxide to BR-1 | <100 psi | 316 SS |
| PR-3 | Pressure regulator for air to BR-1 | <100 psi | 316 SS |
| V-1 | Valve (butterfly) for wort in T-1 | 1" | 316 SS, Viton® seat |
| V-2 | Valve (butterfly) for wort in CIP loop in T-1 | 1" | 316 SS, Viton® seat |
| V-3 | Valve (butterfly) for wort in T-2 | 1" | 316 SS, Viton® seat |
| V-4 | Valve (butterfly) for wort in CIP loop in T-2 | 1" | 316 SS, Viton® seat |

Table 5.1 (cont'd). Detailed parts description for flow diagram shown in FIG. 21.

| Item | Description | Size | Mat'l Const. |
|------|-------------|------|--------------|
| V-5 | Valve (ball) for wort at header | 1/4" | 316 SS, silicone seat |
| V-6 | Valve (ball) for bypass at BR-1 wort inlet | 1/4" | 316 SS, silicone seat |
| V-7 | Valve (ball) for BR-1 wort inlet | 1/4" | 316 SS, silicone seat |
| V-8 | Valve (membrane sample) on wall of BR-1 | 12 mm | 316 SS, silicone seat |
| V-9 | Valve (butterfly) at BR-1 beer outlet | 1" | 316 SS, viton seat |
| V-10 | Valve (membrane sample) for BR-1 wort outlet | 12 mm | 316 SS, silicone seat |
| V-11 | Valve (butterfly), secondary, at BR-1 beer outlet | 1" | 316 SS, viton seat |
| V-12 | Valve (ball) for emptying liquid from T-3 | 1/4" | 316 SS, silicone seat |
| V-13 | Valve (ball) for carbon dioxide line to T-1 & T-2 | 1/4" | 316 SS, silicone seat |
| V-14 | Valve (butterfly) for T-1 carbon dioxide inlet | 1/2" | 316 SS, silicone seat |
| V-15 | Valve (butterfly) for T-2 carbon dioxide inlet | 1/2" | 316 SS, silicone seat |
| V-16 | Valve (ball) for carbon dioxide line to BR-1 | 1/4" | 316 SS, silicone seat |
| V-17 | Valve (quick release) for BR-1 gas inlet | 1/4" | 316 SS, silicone seat |
| V-18 | Valve (ball) for air line to BR-1 | 1/4" | 316 SS, silicone seat |

Symbols used in FIG. 21:

Flexible connector
and union

Gas Filter

Pressure regulator

Pump

Valve

Figure 5.7. Dissolved oxygen concentration in the wort versus hold time in wort storage vessel (T-1 or T-2) under different tank filling conditions.

Table 5.2. Temperature profile of water in wort storage vessel (T-1 or T-2) after equilibrating for three days with no carbon dioxide sparging, and after 24 hours of carbon dioxide sparging at 0.113 cm$^3$/h.

| Location of Measurement within Cylindroconical Vessel | Temperature (°C) | |
|---|---|---|
| | No $CO_2$ Sparging | With $CO_2$ Sparging |
| 10 cm below liquid surface and 10 cm from the vessel wall | 20.6 | 0.4 |
| 10 cm below liquid surface and at the center of the vessel | 20.1 | 0.1 |
| bottom of cylindrical section and 10 cm from vessel wall | 3.8 | 3.7 |
| bottom of cylindrical section and at the center of the vessel | 3.7 | 4.1 |
| Pilot Plant ambient | 21.4 | 19.8 |

Figure 5.8. Cumulative particle size distribution of kappa-carrageenan gel beads containing immobilized yeast cells (n = 5)

## [1]CHAPTER 6. Kappa-Carrageenan Gel Immobilization of LAGER BREWING YEAST

[1] A version of section 6.0 has been published (Pilkington et al., 1999).

Scientists have studied a variety of matrices for the physical entrapment of whole cells including calcium alginate (Bejar et aL, 1992; Curin et al., 1987; Masschelein and Ramos-Jeunehomme, 1985; Nedovic et al., 1996; Shindo et al., 1994; White and Portno, 1978), agarose (Hooijmans et al., 1990; Lundberg and Kuchel, 1997), and carrageenan gels (Norton et al., 1995; Wang et al., 1982). Carrageenan is a food grade material and it has been favoured for cell encapsulation due to its superior mechanical strength compared to other gels (Büyükgüngör, 1992).

In the first part of this chapter, the yeast cell colonization within kappa-carrageenan gel beads was monitored over three cycles of repeated batch fermentation. The viability of the immobilized cells and the cells released into the liquid phase was examined. Fermentation parameters including ethanol, maltose, maltotriose, fructose, and glucose were followed throughout the repeated batch fermentations and then compared with control fermentations using only freely suspended yeast cells under the same nutrient conditions.

There has been little published information to date on the physical effects on cells after long term immobilization (Virkajärvi and Kronlöf, 1998) and continuous exposure to external stresses and fermentation products. The second part of this chapter examines the viability, cell population distribution and physical appearance of yeast cells immobilized within carrageenan gel beads over an extended period of continuous fermentation in a gas-lift bioreactor. Also examined over extended periods of time were the relative percentage of respiratory deficient yeast in the immobilized and freely suspended cell population of the bioreactor.

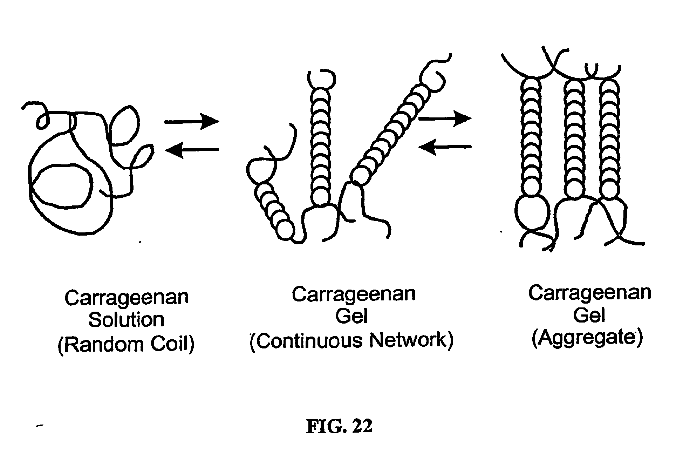

Carrageenan is made up of repeating 3-6-anhydrogalactose units and assorted carrageenans differ by the number and position of the sulfate ester groups on repeating galactose units. A schematic of the carrageenan gelation mechanism may be seen in FIG. 22. When carrageenan is in the sol state, its polysaccharide chains are in a random coil configuration. When enough helices have formed to provide cross-links for a continuous network, gelation occurs. As more helices are formed, or, as the helices form aggregates, the gel becomes stronger and more rigid (Rees, 1972).

The three common types of carrageenan are lambda, iota, and kappa. As illustrated in Figure 6.2, they differ in sulfate ester content and the amount of sulfate ester will affect the solubility of the polysaccharide chain. Lambda-carrageenan is highly sulfated and lacks the ability to form a gel (Marrs, 1998). Iota-carrageenan forms a highly elastic, weak gel in the presence of calcium ions, and does not show significant syneresis. Syneresis occurs when the tendency of the gel to further form helices or aggregates is so strong that the network contracts causing "weeping" of liquid (Rees, 1972). Kappa-carrageenan is moderately sulfated and thus forms a stronger and more rigid gel in the presence of potassium ions, and will undergo some syneresis. The increased gel strength afforded by kappa-carrageenan makes it desirable for immobilizing whole yeast cells.

Figure 6.2. Chemical structures of lambda-, iota-, and kappa-carrageenans.

An important characteristic of carrageenan is its reversible thermogelation properties. As carrageenan solution is cooled, viscosity increases and gelation occurs. As the solution is heated, viscosity decreases and the carrageenan reverts back to the sol state. By controlling the composition of the gelling cation solution, the temperature at which carrageenan is transformed from a sol into a gel may be altered. Kappa-carrageenan gelling temperature increases with increasing potassium chloride concentration in solution. This phenomenon was used to engineer a process for cell immobilization, since severe temperature fluctuations can be avoided (Neufeld et al., 1996). The gelling temperature of the carrageenan can be controlled such that it is high enough to be a gel under fermentation conditions, yet low enough that the yeast cells may be mixed with the carrageenan in its sol state without detrimental effects on viability prior to bead gelification.

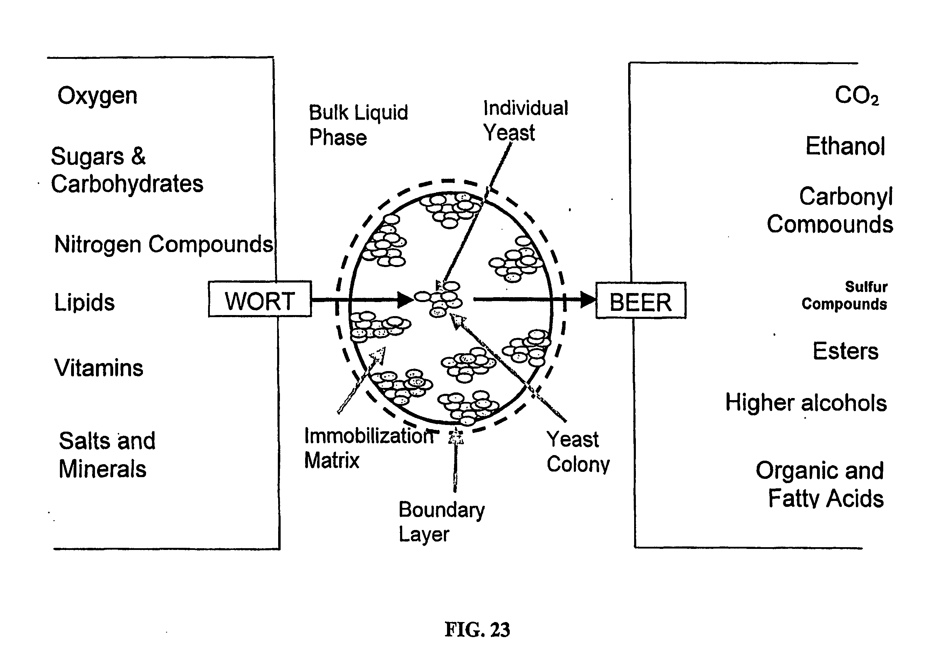

There are a number of factors, nevertheless, which indicate the need for further study on the effects of immobilization within gel matrices on yeast cell metabolism and physiology. Immobilized cells are not subjected to the same micro-environment as the free cells in the liquid phase because there are additional barriers from the gel matrix and other entrapped yeast cells which must be surmounted, before substrates can be transported to their surfaces (FIG. 23). There have been many studies on mass transfer rates within gel matrices (Estapé et aL, 1992; Hannoun and Stephanopoulos, 1986; Korgel et al., 1992; Kurosawa et al., 1989; Merchant et al., 1987; Øyaas et al., 1995; Venâncio and Tiexiera, 1997) to gain a better understanding of the potential negative effects that nutrient limitation to immobilized cells may have on fermentation performance. The effective diffusivities of small molecules within carrageenan gel are comparable with the diffusivities of the same molecules in water alone, and the gel allows molecular diffusion of small molecules, such as glucose and ethanol. However, in a typical immobilized cell fermentation, nutrients are rapidly transported to the immobilized cell beads mainly by convective transport in addition to molecular diffusion (Hannoun and Stephanopoulos, 1986). Once the nutrients enter the beads, transport is relatively slow because molecular diffusion dominates. This means the yeast cells at the periphery of the gel beads may have a distinct nutritional advantage over those in the center of the beads.

The age of the immobilized yeast must also be considered. Entrapped cells age as a continuous fermentation proceeds over the course of months and they ferment under a defined set of pseudo-steady-state conditions. However, during batch fermentation, yeast cells are exposed to an environment that changes with time and the cells are only reused for a limited number of fermentations before disposal. More research is needed to study the long-standing effects of continuous fermentation on yeast cell vitality, relating to fermentation performance.

In Part A of this chapter, the kinetics of yeast colonization in kappa-carrageenan gel beads were examined during three cycles of repeated batch fermentation. Viability and cell concentrations of immobilized and freely suspended yeast were monitored, along with ethanol, degree Plato, and sugar concentration.

In Part B, the effects of fermentation time on cell position and distribution within the gel bead and yeast cell morphology were examined. Scanning electron microscopy (SEM) was used to examine kappa-carrageenan-immobilized yeast cells in different regions of the gel bead at four different times: 1) immediately after bead production; 2) after two days of batch fermentation; 3) after two months of continuous fermentation in a pilot scale gas lift bioreactor; 4) after six months of continuous fermentation in a pilot scale gas lift bioreactor. Yeast viability and concentration in both immobilized and liquid phase cells were also measured. Also examined was the relative percentage of respiratory deficient yeast (immobilized and free cells in the liquid phase) after five months of continuous fermentation in the gas lift bioreactor and this was compared with the percentages found in traditional batch beer fermentations. A production lager yeast strain was used throughout the study.

6.1 Experimental Procedure

*Kappa-Carrageenan Gel Bead Production:* kappa-carrageenan gel X-0909 was a generous gift from Copenhagen Pectin A/S. Kappa-carrageenan gel beads containing entrapped lager yeast cells were produced using the static mixer process with an initial cell loading of 2.6 x $10^7$ cells/mL of gel (Patent Application 2133789 (Neufeld et al., 1996) and a bead diameter of 0.5 to 2.0 mm.

*Fermentation Medium:* Labatt Breweries of Canada supplied brewery wort with a specific gravity of 17.5°P as described in detail in the Materials and Methods section.

**Part A: Repeated Batch Kinetics of Yeast Immobilized in Kappa-Carrageenan Gel Beads**

Fermentations were conducted in 2L Erlenmeyer flasks at 21°C, with shaking at 150 rpm. Carrier loading was 40% (v/v) of immobilized cell beads and the total fermentation volume was 1 L. Each fermentation was seven days in duration. In R1 fresh immobilized cell beads were pitched into wort and at the end of the fermentation these beads were separated from the fermented liquid by passing the mixture through a sterile stainless steel sieve (500 Om mesh size). The beads were then repitched at the same proportion into fresh, sterile wort for a second (R2) and then third (R3) batch fermentation. Sampling was performed twice a day for the first three days, and then once per day for the fourth and fifth days of each fermentation. Fermentations were carried out in duplicate or triplicate. All fermentations were conducted with freely suspended cell control fermentations, which were conducted under the same conditions except that only free cells were pitched into the fermentations at a rate of 4 g/L. Samples were analyzed for free and immobilized cell viability and cell concentration, and liquid phase carbohydrate and ethanol concentrations

Yield factors, $Y_{P/S}$, of product ethanol, from substrate total fermentable glucose, were calculated using equation 3.20 for the three immobilized cell fermentation cycles and the free cell control. For all fermentations the yield factors were calculated from the start of fermentation to the time that maltose consumption was complete.

Ethanol productivity, $V_{ethanol}$, the amount of ethanol produced per total bioreactor working volume per unit fermentation time was calculated using equation 3.25 for R1, R2 and R3, and the free cell control from the start of fermentation to the time that maltose consumption was complete. In the case of the yield factors and ethanol productivity, the contributions of the immobilized and freely suspended yeast cells were not distinguished from one another.

The local maximum specific growth rate, $\Box_{max}$, and cell doubling time was calculated for the averaged free cell control using equations 33 and 3.4.

*Part B: Viability and Morphological Characteristics of Immobilized Yeast over Extended Fermentation Time Batch Fermentation Conditions:* Batch fermentations were conducted in 2 L Erlenmeyer flasks at 21°C, with shaking at 150 rpm. Carrier loading was 40% (v/v) with a total fermentation volume of 1 L.

*Continuous Fermentation Conditions:* Pilot scale gas lift draft tube bioreactors were used for continuous fermentations. All data collected were from an 8 L working volume bioreactor, except the 2 month scanning electron micrographs, which were collected from a 50 L bioreactor using the same fermentation medium and immobilization method. Immobilized cell beads at 40% (v/v) were fluidized within the bioreactors using a mixture of air and carbon dioxide. The bioreactors were operated under varying conditions with fermentation temperatures controlled at 12, 17 and 22°C and residence times held between 0.9 and 1.8 days. The gas lift reactor reached a maximum ethanol concentration of 73 kg/m$^3$ during the six-month experiment, with an average concentration of 58 kg/m$^3$.

*Microbiological Analyses:* Samples were taken from the liquid phase of the gas lift bioreactor at least once a week to test for contaminants including wild yeast, non-lager yeast, and aerobic and anaerobic beer spoilage bacteria. After five months, the liquid phase yeast cells were assayed in duplicate for respiratory deficient mutation.

*Scanning Electron Microscopy (SEM):* Kappa-carrageenan gel beads (1.0 -1.5 mm diameter) containing immobilized lager yeast cells were sampled for SEM examination at four different times: 1) after immobilized cell bead production and before inoculation of beads into the fermentation medium; 2) after 2 days in batch fermentation; 3) after 2 months of continuous fermentation in a pilot scale gas lift draft tube bioreactor, 4) after 6 months of continuous fermentation in a pilot scale gas lift draft tube bioreactor. The methodology for used for SEMs and the related sample preparation are described in section 4.7.

Using the methods described in section 4.6, yeast cell concentration and viability (immobilized and freely suspended) were assessed at the same times as the SEMs.

6.2 Results and Discussion

**Part A: Repeated Batch Kinetics of Yeast Immobilized in Kappa-Carrageenan Gel Beads**

Fermentation time was greatly reduced each time the immobilized cells were repitched into fresh wort, as seen in Figures 6.4 (a), (b), and (c) illustrating maltose, maltotriose, glucose, fructose and ethanol vs. fermentation time for the three repeated batch fermentation cycles. From these figures it can be seen that the time for complete sugar consumption was 64 hours for R1, 44 hours for R2, and 26 hours for R3. The freely suspended cell control fermentation which contained no immobilized cell beads, shown in Figure 6.5, took 82 hours for complete sugar consumption. One can also see from the graphs in Figure 6.4 that final ethanol concentrations were highest in the third of the three repeated batch immobilized cell fermentations. Because kappa-carrageenan is a hydro-gel, some ethanol is carried over in beads when they were repitched into fresh wort Consequently at time zero for R2 and R3, some ethanol was present in the fermentation liquid and the initial concentration of glucose, maltose, maltotriose, and fructose was lower in the immobilized cell fermentations (Figure 6.4) compared with the free cell control fermentation, as seen in Figure 6.5. Thus, yield factors were calculated for the fermentations so that the yield, g ethanol production per g sugar consumed, can be examined on a comparable basis.

Figure 6.4. a) R1, maltose, maltotriose, glucose, fructose, and ethanol concentration versus fermentation time for repeated batch fermentations using lager yeast cells immobilized in kappa-carrageenan gel beads.

Figure 6.4. b) R2, maltose, maltotriose, glucose, fructose, and ethanol concentration versus fermentation time for repeated batch fermentations using lager yeast cells immobilized in kappa-carrageenan gel beads.

Figure 6.4. c) R3, maltose, maltotriose, glucose, fructose, and ethanol concentration versus fermentation time f repeated batch fermentations using lager yeast cells immobilized in kappa-carrageenan gel beads.

Figure 6.5. Maltose, maltotriose, glucose, fructose, and ethanol concentration versus fermentation time for freely suspended lager yeast control fermentations (no immobilized cells).

Figures 6.6 (a) and (b) compare maltose and ethanol concentrations respectively versus fermentation time of R1, R2, and R3. During repeated R1, maltose was taken up by the yeast cells almost immediately after pitching into fresh wort. Ethanol concentrations reached their peak earlier in repeated R1 and also reached higher concentrations than the first two batch fermentations. As shown in Figure 6.6 (b), the initial lag in ethanol production in R1 was drastically reduced when these immobilized cells were repitched in R2 and further reduced after repitching for R3.

Figure 6.6. a) Maltose concentration versus fermentation time for repeated batch fermentations, R1, R2, and R3, using lager yeast cells immobilized in kappa-carrageenan gel beads.

Figure 6.6. b) Ethanol concentration versus fermentation time for repeated batch fermentations, R1, R2, and R3 using lager yeast cells immobilized in kappa-carrageenan gel beads.

Figure 6.7 (a) shows immobilized cell concentration per total bioreactor volume vs. fermentation time for R1, R2 and R3. The free cells released from the immobilized cell matrix into the bulk liquid phase in these fermentations vs. time are shown in Figure 6.7 (b). In Figure 6.7 (c) the total of immobilized and free yeast cells per total reactor volume are shown for the three batches. Figure 6.7 (a) shows that the concentration of immobilized cells within the kappa-carrageenan gel continued to increase following their initial inoculation into wort for R1. When the beads were repitched into fresh wort for repeated R2, growth continued to occur within the gel beads. The third time that the encapsulated cells were repitched into fresh wort, the rate of increase in immobilized cell concentration had slowed. The concentration profile of free cells released from the kappa-carrageenan gel matrix into the bulk liquid phase, immobilized cells, and total cells in the fermentation for R1 is shown in Figure 6.8.

Figure 6.7. a) Immobilized lager yeast cell average concentration per total bioreactor volume versus fermentation time for R1, R2, and R3 fermentations. Error bars represent the upper and lower limits of the experimental data (n = 2).

Figure 6.7. b) Concentration per total bioreactor volume of lager yeast cells released into bulk liquid phase versus fermentation time for R1, R2, and R3 fermentations. Error bars represent the upper and lower limits of the experimental data (n = 2).

Figure 6.7. c) Total (immobilized and liquid phase) lager yeast cell concentration per total bioreactor volume versus fermentation time for R1, R2, and R3 fermentations. Error bars represent the upper and lower limits of the experimental data (n = 2).

Figure 6.8. Profile of immobilized, liquid phase, and total (immobilized and liquid phase) cell concentration versus fermentation time for R1, the first of three repeated batch fermentations using lager yeast cells immobilized in kappa-carrageenan gel beads.

In R1, the immobilized cell concentration within the kappa-carrageenan gel bead was increasing at a similar rate to the control fermentation, which contained only liquid phase cells. This was confirmed by comparing the average growth curve of the free cell control fermentations in Figure 6.9 to the similar growth curve of cells immobilized in carrageenan in R1 in Figure 6.10. During R1, the gel beads were not yet fully colonized and the gel matrix did not appear to have an inhibitory effect on yeast cell growth within the beads. By R2, the matrix appeared to be restricting the growth of the cells within the gel bead, as indicated by a smaller increase of cell number during this fermentation cycle. This could be due to the nature of the gel or the crowding of the yeast cells within the beads, or to a lack of nutrient supply to the cells.

Figure 6.9. Control fermentation freely suspended lager yeast cell average concentration (n = 3) per total bioreactor volume versus fermentation time. No immobilized cells were present during these fermentations.

Figure 6.10. Immobilized lager yeast concentration per mL of gel beads versus fermentation time for R1, R2, and R3 fermentations. Error bars represent the upper and lower limits of the experimental data (n = 2).

In Table 6.1, the yields of ethanol from substrate fermentable sugars, $Y_{P/S}$, are shown for the three batch generations and the controL In Table 6.2, the bioreactor volumetric productivities of ethanol are also given, calculated using the data given in Table 6.1. The yields of ethanol from sugars for the fermentations were not significantly different from each other or from the control. Yields were all above 90% of the theoretical yield of 0.51 predicted from the Guy-Lussac equation. As mentioned earlier, biomass production and other by-products formed by the yeast cells prevent efficiencies from reaching higher than 95% of theoretical (Hardwick, 1995).

The volumetric bioreactor productivity of ethanol in the three repeated batch fermentations varied significantly from batch to repeated batch. Ethanol productivity increased with each cycle of repeated batch fermentation and, by R3, the immobilized cells were more productive than the control fermentation. The total amount of ethanol produced in R2 was not significantly greater than that produced during R1, but the fermentation time was less than half of R1 and of the control fermentation. There are many factors that could contribute to this increased fermentation rate of immobilized cells with each batch repetition, such as yeast cell adaptation to the fermentation conditions and the progressively increasing cell concentration. The total number of cells per bioreactor volume only becomes significantly greater than that of the control by R3. In Figure 6.7 (b), the graph of freely suspended cell (released from the gel matrix) concentration in the bulk liquid vs. fermentation time demonstrated that the number of cells released from the gel beads increased with each batch generation. Once the beads became more fully loaded with yeast cells, they appeared to release more cells into the bulk liquid phase. Hüsken et al. (1996) conducted studies that examined bacterial cell colony expansion and eruption/release from kappa-carrageenan gel slabs. Vives et al. (1993) have reported that the maximum concentration of yeast cells they have achieved in kappa-carrageenan gel beads was $10^9$ cells per gram of gel, which is the concentration that was reached within the gel particles by R2. Similar maximum cell concentrations were found during the continuous fermentations in Part B. However, maximum cell loadings in the gel matrix will depend upon the initial cell loading, the composition of the gel and other factors.

Table 6.1. Yield, $Y_{P/S}$, of product, P, ethanol from substrates, glucose (Glc), fructose (Frc), maltose (Mal) and maltotriose (DP3) for R1, R2, R3, and freely suspended cell control fermentation.

| Batch Fermentation | $t_f$* (h) | $t_0$ | $Glc_f$ (kg / m$^3$) | $Frc_f$ | $Mal_f$ | $DP3_f$ | $P_f$ | $Glc_0$ | $Frc_0$ | $Mal_0$ | $DP3_0$ | $P_0$ | $Y_{P/S}$ |
|---|---|---|---|---|---|---|---|---|---|---|---|---|---|
| R1 | 64.0 | 0.0 | 0.0 | 0.0 | 0.0 | 2.4 | 50.1 | 13.0 | 3.0 | 60.0 | 17.4 | 0.0 | 0.5 |
| R2 | 44.0 | 0.0 | 0.0 | 0.0 | 0.0 | 3.1 | 49.0 | 9.7 | 2.0 | 54.3 | 15.7 | 11.0 | 0.5 |
| R3 | 26.0 | 0.0 | 0.0 | 0.0 | 0.0 | 3.2 | 54.0 | 8.9 | 2.8 | 52.0 | 16.0 | 14.0 | 0.5 |
| Free Cell Ctrl | 82.0 | 0.0 | 0.0 | 0.0 | 0.0 | 4.2 | 66.0 | 19.5 | 3.6 | 91.2 | 27.3 | 0.0 | 0.5 |

*The symbol $t_f$ is the time in hours to complete maltose uptake and the subscript f refers to the concentration of the given analyte at time, $t = t_f$.

Table 6.2. Bioreactor productivity of ethanol [$V_{ethanol}$ = (kg ethanol produced) / (m$^3$ bioreactor volume $\cdot$ h)] for immobilized cell batch fermentations (R1, R2, and R3) compared with freely suspended cell batch fermentations.

| Fermentation | $V_{Ethanol}$ (kg / m$^3$ hr)* |
|---|---|
| R1 | 0.470 |
| R2 | 0.668 |
| R3 | 1.246 |
| Free Cell Control | 0.805 |

* calculated when maltose uptake complete.

Another factor affecting the increased bioreactor volumetric productivity observed with each repeated batch fermentation, involves yeast cell adaptation. By the end of the first fermentation, yeast cells had adapted their metabolic machinery to the given fermentation conditions. This may result in a decrease in the lag phase at the beginning of subsequent batch fermentations, increasing the rate of fermentation. During this study all control fermentations were carried out with freshly prepared lager yeast. It would be interesting to repitch the freely suspended control yeast alongside the repitched immobilized cells to further examine this effect relative to the cell concentration effects.

Figure 6.11 indicates that immobilized cell viability, using the methylene blue method as an indicator, was low (< 50%) when the immobilized cells were initially pitched into wort in R1, but the viability of immobilized cells was above 90% after 48 hours of fermentation. The yeast cells rapidly colonized the beads, and viability remained high throughout R3. However by repeated R3, viability tapered off slightly toward the end of the fermentation. However, throughout all three repeated batch fermentations, the free cells that were released into the bulk liquid medium had higher viability than their immobilized counterparts. The immobilization matrix may have a negative effect on yeast cell viability (mass transfer limitations and/or spatial limitations), or viable yeast cells may be preferentially released from the immobilization matrix into the bulk liquid medium over non-viable cells.

Using the averaged data from three separate freely suspended yeast control fermentations contained in Appendix 1, a plot of ln $(X/X_o)$ versus fermentation time, is given in Figure 6.12. The slope is equal to the local maximum specific growth rate of the cells at 21°C in brewer's wort, with shaking at 150 rpm. The local maximum specific growth rate of the yeast was found to be 0.096 hr$^{-1}$ and the cell doubling time was 7.22 hours. The $\square_{max}$ found in this work was defined as a local $\square_{max}$ because, as mentioned in the Theory section, the true $\square_{max}$ used in the Monod equation is achievable only when S is significantly greater than the Monod constant, $K_s$. More work is required to evaluate the Monod constant, $K_s$, of the limiting substrate in these fermentations, in order to confirm that the calculated local $\square_{max}$ was a true maximum, as defined by the Monod equation.

Figure 6.11. Immobilized lager yeast cell viability (methylene blue) versus fermentation time for R1, R2, and R3 fermentations.

127

Figure 6.12. Ln $(X/X_o)$ versus batch fermentation time during the exponential growth phase of the averaged freely suspended yeast control fermentations, where X is the cell concentration at time, t, and $X_o$ is the cell concentration at time, $t = 0$ (n = 3).

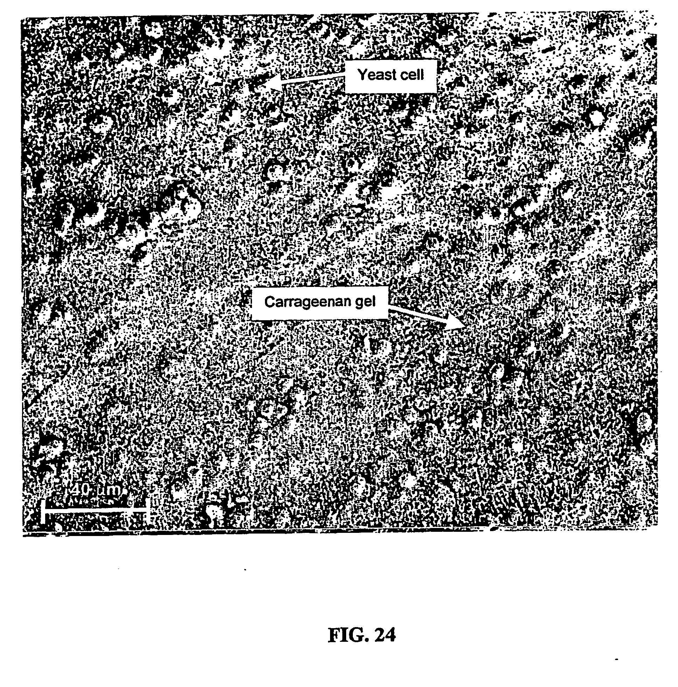

Part B: Viability and Morphological Characteristics of Immobilized Yeast Over Extended Fermentation Time Before the gel beads were exposed to fermentation medium, and following immobilized cell bead production using the static mixer process, the cell concentration was $2.6 \times 10^7$ cells/mL of gel bead (Table 6.3, where values are the averages of two samples). SEM imaging shows the cells to be individually and uniformly distributed throughout the gel bead (FIG. 24).

Table 6.3. Viability (methylene blue) and concentration of freely suspended and immobilized lager yeast cells entrapped in kappa-caaageenan gel beads over fermentation time.

| Time | Fermentation Mode | Freely Suspended Yeast In Liquid Phase | | Immobilized Yeast in Gel Phase | |
|---|---|---|---|---|---|
| | | Viability (%) | Cell Conc. (cells/mL in liquid) | Viability (%) | Cell Conc. (cells/mL of gel) |
| 0 | n/a | n/a | n/a | n/a | 2.6E+07 |
| 2 days | Batch | 98 | 5.5E+07 | 92 | 235E+08 |
| 2 months | Continuous | 93 | 2.35E+08 | 76 | 8.60E+08 |

| Time | Fermentation Mode | Freely Suspended Yeast In Liquid Phase | | Immobilized Yeast in Gel Phase | |
|---|---|---|---|---|---|
| | | Viability (%) | Cell Conc. (cells/mL in liquid) | Viability (%) | Cell Conc. (cells/mL of gel) |
| 6 months | Continuous | 92 | 2.11E+08 | <50* | 1.40E+09* |

*Based on single sample.

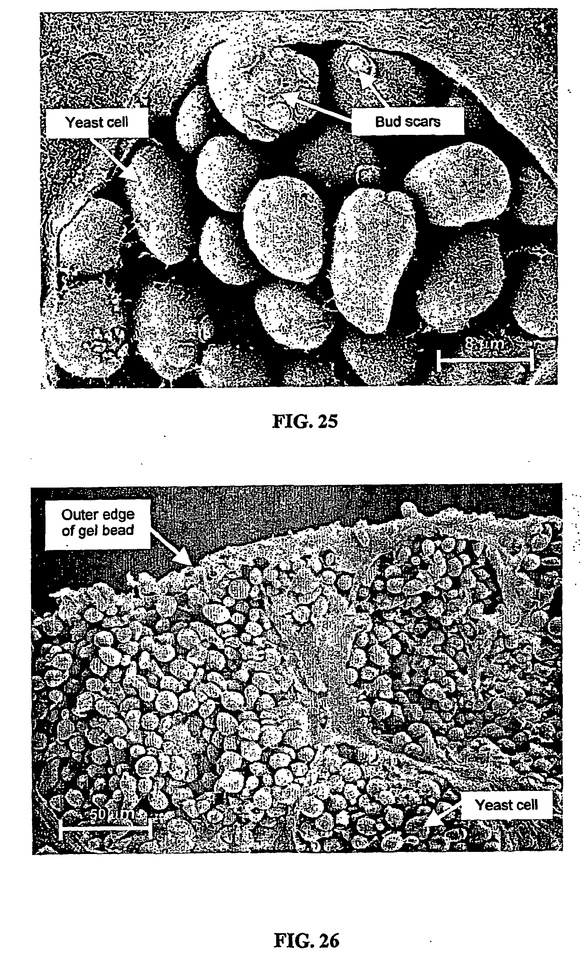

Viability was >90% following 2 days of batch fermentation, and cell concentration within the gel bead had increased ten-fold (Table 6.3). Cells (>90% viable) had also begun to be released from the gel into the bulk liquid phase of the fermentation, yielding a concentration of $10^7$ cells/mL of liquid. Small yeast colonies formed inside the gel beads, with many bud scars present on individual cells as seen in FIG. 25.

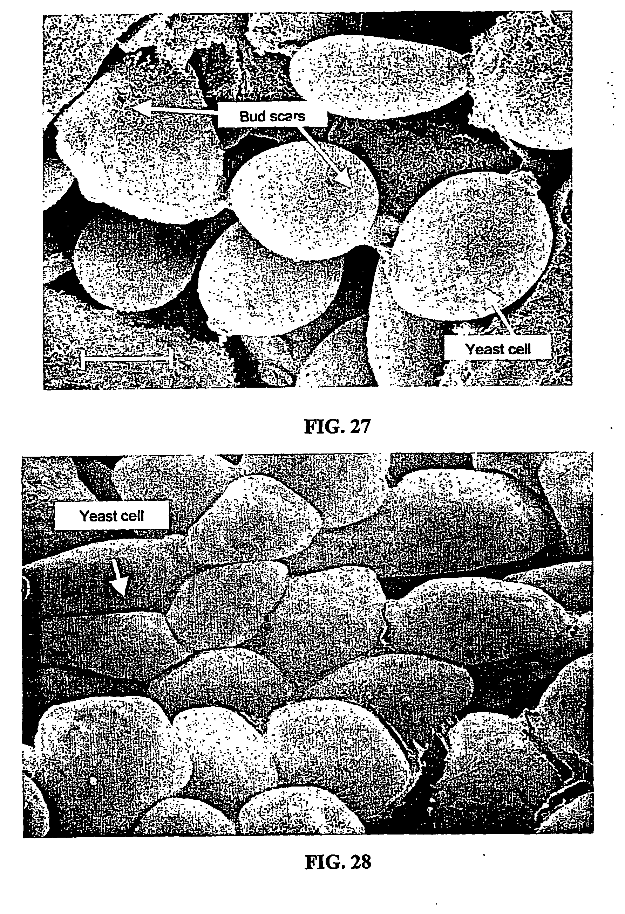

Immobilized yeast cell viability decreased after 2 months of continuous fermentation in a gas lift bioreactor (Table 6.3), but the cells in the bulk liquid phase remained highly viable (>90%), and this finding was supported during several different continuous fermentations in pilot scale gas lift bioreactors. The SEM in FIG. 26 showed that at two months large colonies of yeast had formed toward the periphery of the bead, confirming the results of other researchers (Bancel and Hu, 1996; Gòdia et al., 1987; Wada et al., 1979; Wang et al., 1982). A comparison of the morphology of yeast positioned toward the outer edge of an immobilized cell bead to the yeast positioned at the center of a gel bead was made in several samples using SEM imaging. The cells located toward the periphery of the beads were ovoid and smooth with many bud scars (FIG. 27), indicative of yeast multiplication (Smart, 1995). The cells that were imaged at the center of the bead (FIG. 28) appeared malformed and displayed little evidence of bud scar formation. The lack of bud scars may be an indication of possible limitation of nutrients, such as oxygen, at the center of the beads. The surface irregularity observed on the surface of the yeast in FIG. 28, may also be an indicator of cell aging (Barker and Smart, 1996; Smart, 1999).

The viability of the yeast immobilized within the carrageenan gel had dropped to below 50% after six months of continuous fermentation in the gas lift bioreactor, (Table 6.3). It should be noted that while only a single data point for immobilized cell concentration and viability was collected at six months, data at the five-month mark was similar, with an immobilized cell concentration of $1.14 \times 10^9$ cells/mL of gel and viability of <50%. While a gradual decline in immobilized cell viability was seen over time, the viability of the cells in the bulk liquid phase remained reliably high. In addition, even though immobilized cell viabilities were low in the beads as a whole, the bioreactor produced a fully fermented beer during its sixth month of continuous operation. Possible reasons for this finding include the significant contribution of the highly viable freely suspended yeast cells to the fermentation. As well, there is the potential contribution of viable immobilized cells located at the periphery of the gel bead where there are fewer barriers to mass transfer, as compared to the cells located at the center of the bead. It is unclear whether the immobilized cells had the ability to redistribute themselves within the gel matrix, or if these cells remained stationary where they were first located. A concentration of $10^9$ cells/mL of gel bead was the maximum reached within these beads over the six-month period of continuous fermentation.

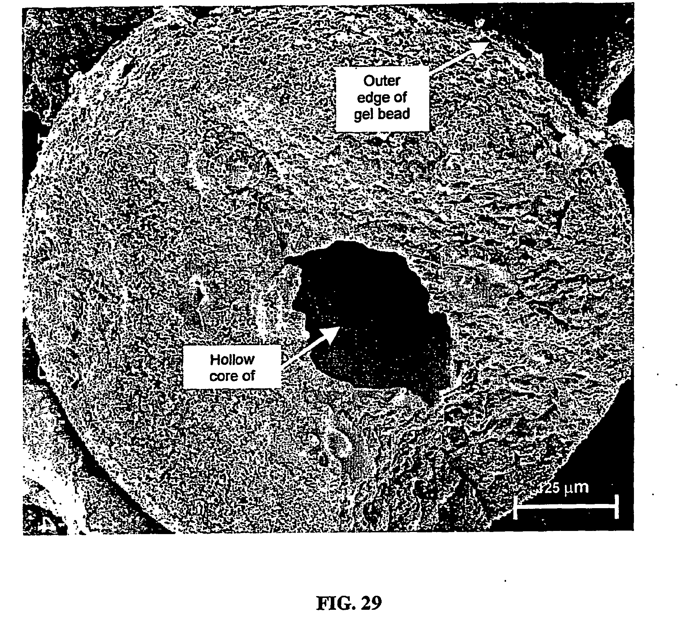

In FIG. 29 an entire bead was imaged using SEM. This bead had a hollow center and, of the many beads examined, approximately half exhibited this structure. The hollow cavity could be a result of the carrageenan gel structure degradation and promoted further by the SEM preparation. This hollow cavity was not observed in fresh bead preparations. Previous work by others (Bancel et al., 1996) has shown that growing cells induced weakening of the gel network. Audet et al. (1988) reported that the addition of locust bean gum to kappa-carrageenan modified the mechanical strength of gel beads for the immobilization of bacteria.

Over the entire six month beer fermentation experiment, the gas lift bioreactor was tested a minimum of once a week for contamination. No bacterial contaminants were detected at any time during the experiment.

In the last two months of the trial, a contaminating yeast was detected in concentrations which fluctuated between 1 and 5 cfu/mL. This yeast was capable of growth on PYN medium at 37°C, but did not grow aerobically or anaerobically on DUBA medium (selective for bacteria), did not ferment dextrins, and showed no growth on $CuSO_4$ medium (selective for wild yeast).

After five months, the average percentage of respiratory deficient yeast cells was 7%, which is higher than what is normally found using this strain during industrial batch fermentations (2% average). Other researchers have reported similar findings (Norton and D'Amore, 1995). Respiratory deficient yeast result from a mutation which causes yeast to be incapable of respiring glucose to carbon dioxide and water. These yeast have mitochondria with permanently impaired activity and arise usually because of a mutation of mitochondrial DNA (Hardwick, 1995).

Artifacts from SEM sample preparation can cause confusion. Technologies such as nuclear magnetic resonance (NMR) spectroscopy (Fernandez, 1996) and confocal microscopy (Bancel and Hu, 1996) have been used to examine immobilized cells non-invasively. NMR imaging techniques have allowed researchers to study transport, flow and spatial distribution of cells and biochemicals in biofilms. Researchers (Bancel and Hu, 1996) have also shown that confocal laser scanning microscopy can be used to observe cells immobilized in porous gelatin microcaniers through serial optical sectioning.

Although methylene blue is used as a standard indicator of cell viability in the brewing industry the method has many shortcomings (Mochaba et al., 1998). It measures whether a yeast population is viable or non-viable based on the ability of viable cells to oxidize the dye to its colourless form. Non-viable cells lack the ability to oxidize the stain and therefore remain blue (O'Connor-Cox et al., 1997). Plate count and slide culture techniques are based on the ability of the cells to grow and produce macrocolonies on agar plates or microcolonies on media covered microscope slides (Technical Committee and Editorial Committee of the ASBC, 1992). Ongoing work of examining the viability of yeast in immobilized matrices over extended periods of time at Labatt now uses, not only methylene blue, but also the aforementioned methods as well as developing the confocal microscopy technique using vital staining. In addition to measuring the viability of the cells, the issue of "vitality" of the immobilized cells must also be addressed in future work. Where viability has been used to describe the ability of cells to grow and reproduce, vitality measures yeast fermentation performance, activity, or the ability of the yeast to recover from stress (Smart et al., 1999).

## CHAPTER 7. FLAVOUR PRODUCTION IN A GAS-LIFT CONTINUOUS BEER FERMENTATION SYSTEM

7.1 Experimental Procedure

Using continuous fermentation to produce beer is very different from other applications using immobilized cells because the resulting product is not measured in terms of one component of interest such as ethanol. Rather, it is a balance of numerous chemical compounds which must be balanced to make a quality finished product. The effects of oxygen on yeast flavour metabolites during continuous primary fermentation and during a secondary batch holding period were examined. The effect of residence time on flavour metabolites was also examined at two levels. Lastly, a commercial enzyme preparation of alpha-acetolactate decarboxylase was added to the continuous fermentation wort supply and liquid phase total diacetyl concentration was monitored

7.1.1 Effect of Relative Amounts of Air in the Bioreactor Fluidizing Gas on Yeast Metabolites during Primary Continuous Fermentation

The amount of air and hence oxygen in the bioreactor fluidizing gas was varied while residence time, temperature and all other controllable process variables were held constant. The total volumetric flow rate of gas was held constant at 472 mL/min at STP, temperature was 15°C, and kappa-carrageenan gel beads containing immobilized LCC 3021 yeast were used throughout the trial with an initial cell loading of $1 \times 10^8$ cells/mL of gel. Four different volumetric flow rates of air were imposed on the system throughout the trial (Table 7.1), and the average bioreactor residence time, $R_t$, was 1.18 days.

Table 7.1. Air volumetric flow rates supplied to the bioreactor through the sparger during continuous fermentation. The total volumetric flow rate supplied to the bioreactor was 472 mL/min at STP, with carbon dioxide making up the remainder of the gas.

| Air Volumetric Flow Rate (mL/min) | Percent Air in the Fluidizing Gas (% v/v) | Start (Day) | Finish (Day) | Total Time (Days) |
|---|---|---|---|---|
| 94 | 19.9 | 10 | 26 | 17 |
| 354 | 75.0 | 27 | 40 | 14 |
| 34 | 7.2 | 41 | 58 | 18 |
| 0 | 0 | 59 | 66 | 8 |

The following analyses were performed repeatedly throughout the experiment: free amino nitrogen (FAN), total fermentable carbohydrate (as glucose), ethanol, total total diacetyl, beer volatiles (selected esters and alcohols), and liquid phase yeast cell concentration and viability. The bioreactor was also tested for contamination a minimum of once a week.

The dissolved oxygen concentration in the bulk liquid phase of the bioreactor was measured when the continuous fermentation was assumed to be at pseudo-steady state for each volumetric flow rate of air (minimum of three reactor turn-over times).

7.1.2 Post Fermentation Batch Holding Period: Effects of Oxygen Exposure on Yeast Metabolites

Even when the amount of oxygen in the bioreactor fluidizing gas was relatively low (34 mL/min at STP), the concentrations of acetaldehyde and total diacetyl found during the experiment conducted in section 7.1.2, were unacceptable high for the North American lager beer market. Therefore a novel approach was taken, where liquid taken from the continuous primary bioreactor was held in batch for 48 hours at a slightly elevated temperature of 21°C to reduce the concentration of these two compounds. As well, the results from the previous section 7.1.2 indicated the significant effect that the amount of air in the fluidizing gas had on the flavour compounds measured. Therefore the effect on yeast flavour metabolites of aerobic versus anaerobic conditions downstream of the primary fermentation, where the secondary batch hold occurred, was examined.

Continuous primary fermentation was performed in a 50 L gas lift bioreactor using a highly flocculent variant of the LCC3021 yeast strain for this trial because the sample volume requirement for the study was too large relative to the volume of the 8 L bioreactor. Operating conditions were 1180 mL/min $CO_2$ and 189 mL/min air at STP in the fluidizing gas, an average bioreactor residence time, $R_t$, of 1.0 day, a temperature of 15 °C, and high-gravity 17.5°P lager brewer's wort.

A total of 4 samples were taken (100 mL crimp vials), with two handled under anaerobic conditions and the other two were exposed to the aerobic environment.

The anaerobic sampling procedure was as follows: two 100 mL crimp vials and six 25 mL crimp vials were autoclaved and then placed in an anaerobic box (Labmaster 100, mbraun, USA) with argon as the purging gas. The 100 mL vials were allowed to equilibrate for 45 minutes and then they were sealed using aluminum caps and Teflon® septa. A 50 mL syringe, fitted with a 3 inch, 16 gauge needle, sanitized using a 70% (v/v) ethanol solution, was used to withdraw sample from the bioreactor by puncturing the septum of the membrane of the sample valve and the sample was injected into the 100 mL pre-purged anaerobic vials. It was necessary to provide a vent to the crimp vial, through an additional sterile syringe needle, to allow release of the pressure within the vial during filling. The aerobic samples were exposed to the atmosphere as they were drained from the bioreactor by fully opening the membrane sample valve into the 100 mL unsealed sample vials, without using a syringe and needle.

The sample liquid was allowed to rest at room temperature for 2 hours in order to allow the yeast to settle out of solution, leaving a cell concentration in the bulk liquid of approximately $10^6$ cells/mL. Once settled, the liquid from each 100 mL vial was decanted into three 25 mL vials. The anaerobic samples were handled in an anaerobic box in order to minimize oxygen pickup while the aerobic samples were processed under the laminar flow hood. Each of the samples in the 100 mL vials were split into 3 smaller 25 mL vials, so that sample analyses could be performed without altering the course of the fermentation due to sample removal. Once the aerobic samples were transferred to the smaller vials they were incubated, uncapped at 21°C. The anaerobic samples were transferred to the three smaller vials and sealed using an aluminum cap and Teflon® septa. In order to avoid pressure buildup due to carbon dioxide evolution within the vials, while preventing exposure of the samples to the aerobic external environment, the septa were punctured with a needle. The end of the needle exposed to the external environment was submerged in ethanol (less than 1 cm of pressure head), preventing any back-flow of air into the sample. Samples were collected for analysis at 2, 24, and 48 hours: A sample was also taken directly from the bioreactor and analyzed immediately in order to assess the state of the fermentation within the bioreactor at the time of the protocol. The samples were analyzed for total fermentable carbohydrate (as glucose), ethanol, total diacetyl, and beer volatiles (selected esters and alcohols).

7.1.3 Effect of Liquid Residence Time on Yeast Metabolites during Continuous Primary Beer Fermentation

In order to examine the effect of liquid residence time on yeast metabolic activity, an experiment was performed in which a step change in wort volumetric flow rate to the bioreactor was imposed during continuous primary beer fermentation using LCC3021 yeast cells immobilized in kappa-carrageenan gel beads. The bioreactor temperature was held constant at 17°C throughout the trial. The gas volumetric flow rate supplied to the bioreactor was also constant at 472 mL/min at STP. The gas was a mixture of air (11 mL/min at STP) and carbon dioxide (461 mL/min at STP). The initial concentration of yeast cells in the kappa-carrageenan gel was 2.6 x $10^7$ cells/mL of gel bead and the bioreactor contained 40% (v/v) of beads.

The following analyses were performed repeatedly throughout the trial: carbohydrates, free amino nitrogen (FAN), total fermentable carbohydrate (as glucose), ethanol, total diacetyl, beer volatiles (selected esters and alcohols), and liquid phase yeast cell concentration and viability. The bioreactor was also tested for contamination, a minimum of once a week.

7.1.4 Using a Commercial Preparation of Alpha-Acetolactate Decarboxylase to Reduce Total Diacetyl during Continuous Primary Beer Fermentation

High diacetyl concentrations are considered by most North American brewers to be an undesirable flavour defect in their beer. In the continuous primary fermentations performed to date, total diacetyl concentrations have consistently been above the threshold levels for traditional batch fermentations (70 - 150 □g/L) in a North American lager. During batch fermentation, diacetyl is reduced during the later stages of fermentation, when oxygen is no longer present and additional sugars are not being introduced. In the continuous fermentation system a constant low level of oxygen is supplied to the bioreactor through a sparger, and fresh wort is continuously supplied to the bioreactor. Therefore, a novel strategy using a commercial enzyme preparation was explored to control diacetyl concentration in the continuous bioreactor.

In a wort fermentation diacetyl is formed when alpha-acetolactate, an intermediate in the synthesis of valine, is oxidatively decarboxylated outside the yeast cell. The yeast cell then reabsorbs diacetyl and converts it into the less flavour-active acetoin. This oxidative decarboxylation of alpha-acetolactate to diacetyl is rate-limiting in batch wort fermentations. During the continuous fermentations, total diacetyl exited the bioreactor at unacceptably high concentrations (300-400 □g/L). The commercial enzyme alpha-acetolactate decarboxylase (ALDC), from Novo-Nordisk A/S can convert alpha-acetolactate directly into acetoin, thus avoiding the unwanted diacetyl intermediate (Figure 7.1) (Jepsen, 1993).

Figure 7.1 The action of alpha-acetolactate decarboxylase (ALDC).

Alpha-acetolactate decarboxylase was added to the wort fed into the bioreactor in order to examine its net effect on total diacetyl concentration. Other strategies for reducing diacetyl, including a batch warm hold period of 48 hours post-fermentation and immobilized secondary fermentation systems, technology from Alpha-Laval (Anon, 1997), were also explored. Both of these other strategies have shown success in reducing diacetyl levels post fermentation, but neither addresses the level of diacetyl at the source (i.e. at the bioreactor outlet). By using ALDC in the wort to reduce the diacetyl concentration coming out of the bioreactor, the post-fermentation treatment periods could be minimized or eliminated.

ALDC activity is optimal at pH 6.0 in lager wort at 10°C. At pH 5.0, typical of industrial worts, ALDC activity is maximized at a temperature of 35°C (Anon, 1994). Thus under typical beer fermentation conditions of reduced temperature and pH, ALDC activity is less than optimal.

Health Canada in 1997 amended Canada's Food and Drug Regulations (SOR/97-81) to allow the use of ALDC in alcoholic beverages, which has opened the door for its use in Canadian breweries. *Bacillus subtilis,* carrying the gene coding for ALDC (E.C. 4.1.1.5) from *Bacillus brevis*, produces the enzyme ALDC. Because ALDC is an enzyme that is produced by a genetically modified organism (GMO), there are public perception issues that would need to be addressed before using such an enzyme in a commercial product.

Lager yeast, LCC3021, was used for these experiments. High gravity, 17.5°P, lager brewer's wort was supplied by the Labatt London brewery. Ethanol, total fermentable carbohydrate (as glucose), total diacetyl, and liquid phase cell concentration were monitored. Yeast cells were immobilized in kappa-carrageenan gel beads as described in the Chapter 4. The bioreactor was allowed three turnover times, before it was assumed to have reached pseudo-steady state. As mentioned earlier, the diacetyl method used in this work is referred to as "total diacetyl" because the method measures the amount of diacetyl and its precursor, alpha-acetolactate. Thus an observed reduction in total diacetyl during this experiment would be due to the combined effect of the enzyme converting alpha-acetolactate directly into acetoin and the subsequent lowered concentration of its derivative, diacetyl.

Alpha-acetolactate decarboxylase (ALDC) was supplied as a generous gift for laboratory purposes from Novo Nordisk A/S, Denmark as Maturex® L. The activity of the enzyme was 1500 ADU/g, where ADU is the amount of enzyme which under standard conditions, by decarboxylation of alpha-acetolactate, produces 1 $\mu$mole of acetoin per minute as described in Novo Nordisk Method AF27 (Anon, 1994).

*Continuous Fermemtatian Conditions*: Continuous fermentations were performed in the 8 L gas lift draft tube bioreactor pitched at 40% (v/v) with kappa-carrageenan gel beads containing immobilized lager yeast cells. The bioreactor was sparged with a mixture of carbon dioxide (438 mL/min at STP) and air (34 mL/min at STP). Fermentation temperature was controlled at 15°C throughout the trials and the bioreactor residence time, $R_t$, was 1.5 days. Total diacetyl concentration was monitored under these conditions and an average pseudo-steady state control diacetyl concentration was reached. ALDC was then added to the wort at a concentration of 72 Dg/L (108 ADU/L) and total diacetyl concentration in the bioreactor was monitored for a response.

*Experiment 1:* Wort was collected from the brewhouse into a 20 L stainless steel vessel, and heated in an autoclave for 45 minutes at 100°C. The wort was held at 2°C in a controlled temperature water bath while feeding the bioreactor. Once a pseudo-steady state total diacetyl concentration had been reached within the bioreactor, 72 □g/L (108 ADU/L) of ALDC was added to the wort inside the 20 L vessel. The initial biomass loading in the kappa-carrageenan gel beads was $3 \times 10^7$ cells/mL of gel.

*Experiment 2:* In order to minimize the risk of contamination, the system was closed loop at the outlet and other upgrades were also made to the system as described in Chapter 4. As with Experiment 1, wort was collected from the brewhouse into a 20 L stainless steel vessel, and autoclaved for 45 minutes at 100°C. While feeding the bioreactor, the wort was held at 2°C in a controlled temperature water bath. The initial biomass loading in the kappa-carrageenan gel beads was $3 \times 16^7$ cells/mL of gel. Once a pseudo-steady state total diacetyl concentration had been reached within the bioreactor, 72 □g/L (108 ADU/L) of ALDC was added to the wort inside the 20 L vessel.

*Experiment 3:* Unoxygenated 17.5°P brewery wort (14 hL) was collected into a large wort storage vessel (T-1) in the Pilot Plant. It was then flash pasteurized and stored with carbon dioxide sparging in order to maintain a constant dissolved oxygen concentration of <0.10 mg/L, as described in Chapter 5. The wort was fed into the bioreactor from this tank until a pseudo-steady state total diacetyl concentration was reached. ALDC (72 □g/L) was then aseptically added to the wort for the remainder of the trial. The addition of ALDC was accomplished by measuring the amount of wort remaining in the storage vessel and calculating the amount of ALDC needed to bring the concentration of enzyme up to the target concentration of 72 □g/L (108 ADU/L). The appropriate amount of enzyme was then dissolved in 10 L of sterile wort. This solution was transferred to a 20 L stainless steel pressure vessel, which was connected via sterile tubing to the sample port on the wort holding vessel (T-1). The ALDC solution was then pushed using sterile carbon dioxide pressure into the wort holding vessel. In order to ensure that the ALDC solution was adequately mixed with the wort in the holding vessel, the flow rate of carbon dioxide sparged into the tank was increased to 4720 mL/min at

STP for 1 hour and then returned to its normal flow rate. The storage tank then held enough ALDC dosed wort to complete the trial. The initial biomass loading in the kappa-carrageenan gel beads was $10^8$ cells/mL of gel.

7.2 Results and Discussion

7.2.1 Effect of Relative Amounts of Air in the Bioreactor Fluidizing Gas on Yeast Metabolites during Primary Continuous Fermentation

In Figures 7.2 - 7.11 liquid phase yeast viability and cell concentration, free amino nitrogen (FAN), total fermentable carbohydrate (as glucose), ethanol, total diacetyl, acetaldehyde, ethyl acetate, 1-propanol, isobutanol, isoamyl acetate, isoamyl alcohol, ethyl hexanoate, and ethyl octanoate concentrations are plotted versus continuous fermentation time. All bioreactor operating conditions were held constant throughout the protocol except the percentage of air in the bioreactor sparging gas, which is marked directly on the figures. In Table 7.2 the averages for each analyte at pseudo-steady state (after a minimum of three reactor turnover times) are summarized

Table 7.2. Summary table of effect of air volumetric flow rate to the bioreactor through the sparger on liquid phase yeast and key yeast metabolite concentrations in the bioreactor at a residence time, $R_b$ of 1.18 days, averages at pseudo-steady state.

| Average* Analyte Concentration | Air Volumetric Flow Rate (mL/min) | | |
| --- | --- | --- | --- |
| | 94 | 354 | 34 |
| Cell Conc (cells/mL) | 3.87E+08 | 2.98E+08 | 4.73E+08 |
| Total Ferm. Glucose (g/100 mL) | 1.36 | 1.25 | 2.07 |
| FAN (mg/L) | 196.9 | 171.7 | 162.8 |
| Ethanol (g/100 mL) | 6.14 | 5.46 | 5.74 |
| Total diacetyl (ug/L) | 346 | 1417 | 389 |
| Acetaldehyde (mg/L) | 75.62 | 329.48 | 28.63 |
| Ethyl Acetate (mg/L) | 22.38 | 21.13 | 18.01 |
| 1-Propanol (mg/L) | 44.74 | 50.89 | 53.04 |
| Isobutanol (mg/L) | 8.73 | 16.09 | 8.05 |
| Isoamyl Acetate (mg/L) | 0.38 | 0.21 | 0.30 |
| Isoamyl Alcohol (mg/L) | 58.62 | 61.64 | 59.16 |
| Average* Analyte | Air Volumetric Flow Rate (mL/min) | | |
| Ethyl Hexanoate (mg/L) | 0.060 | 0.030 | 0.053 |
| Ethyl Octanoate (mg/L) | 0.031 | 0.013 | 0.025 |

*average of final four days of each operating condition

Figures 7.2 and 7.3 show that the liquid phase yeast population did not reach zero during this experiment. The flavour compounds that were studied in this work were produced by a combination of free and immobilized yeast cells and the relative contributions from each source were not determined. There was more than one source of freely suspended yeast cells in this work: biomass growth and cells that were released from the gel beads into the bulk liquid medium. Research has shown with compound models of cell release and growth, that when cells are being released from biofilms, even if the bioreactor is operated high dilution rates, there will still be a population of cells in the output liquid (Karamanev, 1991).

Figure 7.2. Liquid phase yeast cell concentration versus relative continuous fermentation time. The volumetric flow rate of air at STP supplied to the bioreactor through the sparger is indicated on the graph. The remainder of the gas was carbon dioxide and the total volumetric gas flow rate was constant at 472 mL/min at STP throughout the experiment.

Figure 7.3. Liquid phase yeast viability versus relative continuous fermentation time. The volumetric flow rate of air at STP supplied to the bioreactor through the sparger is indicated on the graph. The remainder of the gas was carbon dioxide and the total volumetric gas flow rate was constant at 472 mL/min at STP throughout the experiment.

In Figure 7.4 the liquid phase concentration of free amino nitrogen (FAN) was tracked. It was interesting to note that the minimum FAN concentrations occurred at 34 mL/min at STP of air. This did not coincide with maximum ethanol concentration or minimum total fermentable carbohydrate (as glucose) concentrations. The ethanol concentration within the bioreactor liquid phase decreased, while total fermentable carbohydrate (as glucose) increased when the volumetric flow rate of air in the sparge gas was increased from 94 to 354 mL/min, as seen in Figure 7.5. This may indicate that more cell respiration, as opposed to fermentation, was occurring due to the increase in oxygen availability. When the volumetric flow rate was again reduced from 354 mL/min down to 34 mL/min at STP, the ethanol concentration again increased, however it did not reach the concentration seen when the flow rate was at 94 mL/min at STP. It is difficult to compare in precise terms the concentrations of ethanol at 34 mL/min with those at 94 mL/min at STP, because there have been other factors influencing the system, resulting from cell aging, effects of the continuous exposure to relatively high amount of oxygen for the time at 354 mL/min at STP, and changes in the immobilized cell population. In Figure 2.4, White and Portno (1978) noted changes in yeast flavour metabolite concentrations with continuous fermentation time in their tower fermenter.

Figure 7.4. Free amino nitrogen concentration remaining in wort versus relative continuous fermentation time. The volumetric flow rate of air at STP through the sparger is indicated on the graph. The remainder of the gas was carbon dioxide and the total volumetric gas flow rate was constant at 472 mL/min at STP throughout the experiment.

Figure 7.5. Liquid phase ethanol and total fermentable carbohydrate (as glucose) concentration versus relative continuous fermentation time. The volumetric flow rate of air at STP supplied to the bioreactor through the sparger is indicated on the graph. The remainder of the gas was carbon dioxide and the total volumetric gas flow rate was constant at 472 mL/min at STP throughout the experiment.

In Figure 7.6, the pronounced effect of oxygen on the production of total diacetyl is seen. Since diacetyl is generally considered an undesirable flavour compound in beer, one of the main reasons to optimize the amount of oxygen in the bioreactor is to control levels of this flavour compound. After the 354 mL/min air phase, the flow rate was dropped to 34 mL/min at STP and total diacetyl decreased. During batch fermentation, it is known that increased oxygen leads to an increase in the formation of alpha-acetolactate, the precursor of diacetyl (Kunze, 1996).

In Figure 7.7 a clear relationship between the amount of air in the sparge gas and acetaldehyde concentration, arose. As the percent of air in the sparge gas increased, the amount of acetaldehyde also increased.

Acetaldehyde imparts a green-apple character to beer, and is normally present in commercial beer at levels of less than 20 mg/L.

Figure 7.6. Liquid phase total diacetyl concentration versus relative continuous fermentation time. The volumetric flow rate of air at STP supplied to the bioreactor through the sparger is indicated on the graph. The remainder of the gas was carbon dioxide and the total volumetric gas flow rate was constant at 472 mL/min at STP throughout the experiment

Figure 7.7. Liquid phase acetaldehyde concentration versus relative continuous fermentation time. The volumetric flow rate of air at STP supplied to the bioreactor through the sparger is indicated on the graph. The remainder of the gas was carbon dioxide and the total volumetric gas flow rate was constant at 472 mL/min at STP throughout the experiment.

In Table 7.2 and Figures 7.8 - 7.9 the pseudo-steady state concentrations of ethyl acetate, isoamyl acetate, ethyl hexanoate, and ethyl octanoate are given versus continuous fermentation time. For all the esters measured, the step change in aeration rate from 94 to 354 mL/min at STP resulted in a decrease in concentration. When the aeration rate was decreased from 354 mL/min down to 34 mL/min at STP, the concentration of isoamyl acetate, ethyl hexanoate, and ethyl octanoate increased. However they did not increase to the values seen at the 94 mL/min aeration rate. The pattern of response of these compounds closely matched one another, with ethyl hexanoate and ethyl octanoate showing more relative fluctuations than isoamyl acetate. The concentration of ethyl acetate actually further decreased when the volumetric flow rate of air was reduced to 34 mL/min at STP. For all the esters measured in this study, the concentration showed an increase when the air was completely eliminated from the fluidizing gas. The concentration of each ester rose and then tapered off, as the liquid phase cell concentration decreased rapidly in the bioreactor.

**140**

Figure 7.8. Ethyl acetate concentration versus relative continuous fermentation time. The volumetric flow rate of air at STP supplied to the bioreactor through the sparger is indicated on the graph. The remainder of the gas was carbon dioxide and the total volumetric gas flow rate was constant at 472 mL/min at STP throughout the experiment.

141

Figure 7.9. Liquid phase isoamyl acetate, ethyl hexanoate and ethyl octanoate concentration versus relative continuous fermentation time. The volumetric flow rate of air at STP supplied to the bioreactor through the sparger is indicated on the graph. The remainder of the gas was carbon dioxide and the total volumetric gas flow rate was constant at 472 mL/min at STP throughout the experiment.

The higher alcohols isoamyl alcohol, isobutanol, and 1-propanol versus continuous fermentation time are given in Figures 7.10 and 7.11. For the alcohols measured, the concentration increased as a result of the step change increase in aeration from 94 to 354 mL/min at STP. Isobutanol showed the largest relative fluctuations when aeration rate was changed. The 1-propanol concentrations were well below the flavour threshold values of 600 - 800 mg/L, however, throughout the continuous fermentation experiment, the concentration was well above that found in typical commercial batch-produced beers, where concentrations are usually below 16 mg/L. This was not the case for isoamyl alcohol or isobutanol, which were within normal ranges. The compound 1-propanol is thought to arise from the reduction of the acid propionate (Gee and Ramirez, 1994). Others (Hough et al., 1982; Yamauchi et al., 1995) have also related the formation of 1-propanol to the metabolism of the amino acids □-aminobutyric acid and threonine, with the corresponding oxo-acid and aldehyde being □-oxobutyric acid and proprionaldehyde, respectively.

Figure 7.10. Liquid phase isoamyl alcohol and isobutanol concentration versus relative continuous fermentation time. The volumetric flow rate of air at STP supplied to the bioreactor through the sparger is indicated on the graph. The remainder of the gas was carbon dioxide and the total volumetric gas flow rate was constant at 472 mL/min at STP throughout the experiment.

Figure 7.11. Liquid phase 1-propanol concentration versus relative continuous fermentation time. The volumetric flow rate air at STP supplied to the bioreactor through the sparger is indicated on the graph. The -remainder of the gas was carbon dioxide and the total volumetric gas flow rate was constant at 472 mL/min at STP throughout the experiment.

Because excess diacetyl, acetaldehyde and fusel alcohols are undesirable in beer, oxygen control to limit their production is important. As discussed in the literature review, when the supply of oxygen to the yeast cells is increased, there is enhanced anabolic formation of amino acid precursors and thus an overflow of higher alcohols, oxo-acids, and diacetyl The concentration of esters is known to decrease with an increase in oxygen availability because ester formation is catalysed by acetyl transferase. Acetyl transferase is inhibited by unsaturated fatty acids and ergosterol, which in turn will increase in the presence of oxygen (Norton and D'Amore, 1994).

For the bioreactor conditions used in this experiment, the pseudo-steady-state (after a minimum of three reactor turnover times) dissolved oxygen concentrations measured in the liquid phase of the bioreactor were close to zero (less than .03 mg/L).

This experiment did not allow for a direct comparison of the data from the 94 mL/min and 34 mL/min of air at STP in the fluidization gas, because they were separated by the highest air flow rate (354 mL/min). This is because the physiological state of the yeast resulting from the exposure to previous bioreactor conditions, the immobilization matrix and continuous fermentation time may also have caused other changes in flavour production.

No contamination was detected in the bioreactor at any point during this experiment.

In order to balance the requirement of yeast for some oxygen to maintain yeast viability and the need to minimize oxygen to obtain a beer with a desirable flavour profile, other strategies could be explored such as the addition of nutrients such as zinc, magnesium, or providing other exogenous compounds required by the yeast cell to maintain viability. Such additions would allow for a further decrease in the oxygen requirement of the yeast. Another possibility would be to operate at very low oxygen concentrations most of the time, with periodic pulses of oxygen supplied to the yeast on a regular basis to maintain cell viability

7.2.2 Post Fermentation Batch Holding Period: Effects of Oxygen Exposure on Yeast Metabolites

Because total diacetyl was not within normal ranges for a commercial beer at the end of primary fermentation, several approaches were taken to reduce the concentration of this compound to acceptable levels. One such approach was to use a warm holding period immediately following continuous primary fermentation.

In Figures 7.12-7.21 liquid phase total fermentable carbohydrate (as glucose), ethanol, total diacetyl, acetaldehyde, ethyl acetate, 1-propanol, isobutanol, isoamyl acetate, isoamyl alcohol, and ethyl hexanoate concentrations are plotted versus post fermentation holding time. Samples collected from the continuous primary fermenter at pseudo-steady state were held under aerobic or anaerobic conditions, as indicated in the legend of each figure.

In Figure 7.12 the concentration of total fermentable carbohydrate (as glucose) declined quickly in the first two hours and then declined at a slower rate during the remainder of the holding period in both the aerobic and anaerobic samples. Possible reasons for this observation were that during the first two hours, more yeast were present prior to decantation, and the concentration of sugars was higher at the start of the holding period. There was not a significant difference in fermentable glucose uptake between the aerobic and anaerobic samples, although some differences were noted initially.

The concentration of ethanol in Figure 7.13 rose quickly at the beginning of the hold period and then the anaerobic and aerobic samples increased in ethanol concentration over time, in an almost parallel fashion. The initial increase in ethanol for the anaerobic sample coincided with the period where the most sugar uptake occurred. At the end of the hold period, ethanol concentration was higher in the anaerobically treated samples.

Figure 7.12 Mean fermentable glucose concentration versus post fermentation hold time for aerobic and anaerobic treated samples after continuous primary fermentation in a gas lift bioreactor. Error bars represent the upper and lower limits of the experimental data (n = 2).

Figure 7.13. Mean ethanol concentration versus post fermentation hold time for aerobic and anaerobic treated samples after continuous primary fermentation in a gas lift bioreactor. Error bars represent the upper and lower limits of the experimental data (n = 2).

In Figure 7.14 the aerobic samples showed an early increase in acetaldehyde upon exposure to aerobic conditions outside the bioreactor. The combination of aerobic conditions, with sugar consumption and ethanol production, could account for this result. By the end of the 48-hour holding period, the concentration of acetaldehyde had dropped from 17 mg/L to 9 mg/L in the anaerobic sample, which brings the liquid concentration to within specifications for a quality North American lager (less than 10 mg/L).

The concentration of total diacetyl versus holding time is given in Figure 7.15. The results show that the elimination of oxygen from the system during this holding period provides more favourable conditions for diacetyl reduction. The shape of the total diacetyl curve may be related to free amino nitrogen depletion and the subsequent intracellular production of valine, of which diacetyl is a byproduct (Nakatani et al., 1984a; Nakatani et al., 1984b). Total diacetyl concentration at the end of the primary continuous fermentation was 326 □g/L and at the end of the anaerobic hold period it was at a concentration of 33 □g/L, which is well below the taste threshold in commercial beers.

Figure 7.14. Mean acetaldehyde concentration versus post fermentation hold time for aerobic and anaerobic treated samples after continuous primary fermentation in a gas lift bioreactor. Error bars represent the upper and lower limits of the experimental data (n = 2).

Figure 7.15. Mean total diacetyl concentration versus post fermentation hold time for aerobic and anaerobic treated samples after continuous primary fermentation in a gas lift bioreactor. Error bars represent the upper and lower limits of the experimental data (n = 2).

In Figures 7.16 - 7.18 the esters ethyl acetate, isoamyl acetate, and ethyl hexanoate concentrations are plotted versus post fermentation holding time. The same pattern for aerobic and anaerobic samples was observed for all esters. The concentration of esters did not diverge between the anaerobic and aerobic samples until later in the holding period, where the concentration of esters in the aerobic samples declined and the concentration in the anaerobic samples increased. Because the concentration of esters in the continuous fermentations is somewhat low compared with ester concentrations found in commercial beer, it is desirable to select conditions, which favour ester production.

Figure 7.16. Mean ethyl acetate concentration versus post fermentation hold time for aerobic and anaerobic treated samples after continuous primary fermentation in a gas lift bioreactor. Error bars represent the upper and lower limits of the experimental data (n = 2).

Figure 7.17. Mean isoamyl acetate concentration versus post fermentation hold time for aerobic and anaerobic treated samples after continuous primary fermentation in a gas lift bioreactor. Error bars represent the upper and lower limits of the experimental data (n = 2).

Figure 7.18. Mean ethyl hexanoate concentration versus post fermentation hold time for aerobic and anaerobic treated samples after continuous primary fermentation in a gas lift bioreactor. Error bars represent the upper and lower limits of the experimental data (n = 2).

Figures 7.19 - 7.21 show isoamyl alcohol, 1-propanol, and isobutanol concentration versus post fermentation holding time. At the end of the 48 hour holding period, no significant differences in these alcohols were observed between the aerobic and anaerobic treatments. However, the 24-hour samples showed a higher concentration in all cases for the aerobic treatments.

Figure 7.19. Mean isoamyl alcohol concentration versus post fermentation hold time for aerobic and anaerobic treated samples after continuous primary fermentation in a gas lift bioreactor. Error bars represent the upper and lower limits of the experimental data (n = 2).

Figure 7.20. Mean 1-propanol concentration versus post fermentation hold time for aerobic and anaerobic treated samples after continuous primary fermentation in a gas lift bioreactor. Error bars represent the upper and lower limits of the experimental data (n = 2).

Figure 7.21. Mean isobutanol concentration versus post fermentation hold time for aerobic and anaerobic treated samples after continuous primary fermentation in a gas lift bioreactor. Error bars represent the upper and lower limits of the experimental data (n = 2).

In Figure 7.22, a radar graph is given to allow comparison of a number of the flavour compounds after the 48 hour-aerobic and anaerobic holding period with a profile from a commercial beer. Radar graphs are commonly used in the brewing industry to allow one to examine and compare a variety of different beer characteristics together on one graph (Sharpe, 1988). From this figure, it can be seen that the anaerobically-held continuously fermented beer is the closest match to a typical market beer. From Appendix 6, it can be seen that the anaerobic liquid was within normal ranges for a market beer, except in the case of 1-propanol, which was significantly higher than batch-fermented beers. This higher than normal 1-propanol was observed in all continuously fermented products from this work.

The formation of 1-propanol occurred during the continuous primary fermentation stage and it did not decrease significantly during the holding period, whether the conditions were aerobic or anaerobic. Kunze (1996) states that the following factors will increase higher alcohols such as 1 propanol during batch fermentation: mixing, intensive aeration of the wort, and repeated addition of fresh wort to existing yeast

Ultimately the ideal scenario will be to eliminate the secondary holding period entirely by optimizing the conditions in the primary continuous bioreactor. However, further gains can be made using the holding period, by optimizing the holding temperature (diacetyl removal by yeast is very temperature dependent), the amount of fermentable sugars remaining in the liquid at the beginning of the holding period, optimizing the concentration of yeast present, the hydrodynamic characteristics of the holding vessel (diacetyl removal could be improved by improving the contact between the yeast and the beer), and taking further measures to eliminate oxygen from this stage.

Volumetric beer productivity calculations are given in Appendix 3. The process described in this section, with a continuous bioreactor operating with a 24 hour residence time followed by a 48 hour batch hold, is 1.8 times more productive than a current industrial batch process. A relatively fast industrial batch process with a 7.5 day cycle time has a volumetric beer productivity of 0.093 $m^3$ beer produced / ($m^3$ vessel volume x day), whereas the continuous process described here has a productivity of 0.165 $m^3$ beer produced / ($m^3$ vessel volume x day). If further research allowed the batch holding period to be shorted to 24 hours, beer productivity would become 2.3 times more productive that the industrial batch standard. If the ideal scenario of a 24 hour continuous process with no batch holding were achieved, beer volumetric productivity would become 7.5 times that of the batch standard. In addition to the increased volumetric productivity, the additional benefits realized by moving from a batch to a continuous process, such as shorter time to market, decrease in brewhouse size, and less frequent yeast propagation, must be balanced with a careful analysis of relative operating costs.

Other researchers (Kronlöf and Virkajärvi, 1996; Nakanishi et al., 1993; Yamauchi et al., 1995) have focused on developing multi-staged continuous fermentations in which the first stage of continuous fermentation (aerobic) results in only a partial consumption of the fermentable sugars present in the wort. While this strategy has shown some success in terms of flavour production, these systems are complex. As well, the first aerobic stage of such systems creates an environment, which is more susceptible to microbial contamination (i.e. high sugar concentration, temperature, and oxygen, with low concentrations of ethanol). In the gas-lift bioreactor system presented in this work, the bioreactor has a low fermentable sugar concentration, low pH, high ethanol concentration, and low concentrations of oxygen, making the environment inhospitable for potential contaminants.

Figure 7.22. Radar graph of normalized concentration data obtained after 48 hours of aerobic or anaerobic holding, following continuous primary fermentation in a gas lift bioreactor. The normalized data is based on the averages of duplicate samples and the commercial beer data was taken as the midpoint of the data listed in Appendix 6.

7.2.3 Effect of Liquid Residence Time on Key Yeast Metabolites during Continuous Primary Beer Fermentation

Figures 7.23 - 7.28 show the analytical results obtained from the bioreactor liquid phase. In Table 7.3, the average concentrations and flow rates of the measured analytes at pseudo-steady state (after a minimum of three bioreactor turnover times) are listed at the two liquid residence times used during this experiment While liquid phase yeast viability did not change significantly when the flow rate of wort to the bioreactor was increased, the concentration of yeast cells did change as seen in Figure 7.23.

Table 7.3. (a) Summary table of effect of bioreactor residence time on liquid phase yeast and key yeast metabolite concentrations, averages at pseudo-steady state; (b) Summary table of the effect of bioreactor residence time on liquid phase yeast and key yeast metabolite flow rates at the bioreactor outlet, averages at pseudo-steady state.

| (a) Average Analyte Concentration | Bioreactor Residence Time | |
|---|---|---|
| | 1.8 days | 0.9 days |
| Cell Conc (cells/mL) | 2.38E+08 | 1.32E+08 |

Table continued

| (a) Average Analyte Concentration | | Bioreactor Residence Time | |
|---|---|---|---|
| | | 1.8 days | 0.9 days |
| | Tot. Ferm. Glucose (g/100 mL) | 0.29 | 6.09 |
| | FAN (mg/L) | 106.3 | 246.4 |
| | Ethanol (g/100 mL) | 5.16 | 4.80 |
| | Total Diacetyl (ug/L) | 292 | 460 |
| | Acetaldehyde (mg/L) | 19.47 | 37.07 |
| | Ethyl Acetate (mg/L) | 41.00 | 38.29 |
| | 1-Propanol (mg/L) | 44.95 | 13.53 |
| | Isobutanol (mg/L) | 22.78 | 9.13 |
| | Isoamyl Acetate (mg/L) | 0.90 | 1.28 |
| | Isoamyl Alcohol (mg/L) | 76.67 | 51.39 |

| (b) Average Analyte Flow Rate | Bioreactor Residence Time | |
|---|---|---|
| | 1.8 days | 0.9 days |
| Cell Flow Rate(cells/min) | 7.38E+08 | 8.22E+08 |
| Tot. Ferm. Glucose (g/min) | 8.93E-03 | 3.72E-01 |
| FAN(g/min) | 3.65E.04 | 1.50E-03 |
| Ethanol (g/min) | 1.60E-01 | 2.93E-01 |
| Total Diacetyl (g/min) | 9.06E-07 | 2.81E-06 |
| Acetaldehyde (g/min) | 6.04E-05 | 2.26E-04 |
| Ethyl Acetate (g/min) | 1.27E-04 | 234E-04 |
| 1-Propanol (g/min) | 1.39E-04 | 8.25E-05 |
| Isobutanol (g/min) | 7.06E-05 | 5.57E-05 |
| Isoamyl Acetate (g/min) | 2.80E-06 | 7.30E-06 |
| Isoamyl Alcohol (g/min) | 238E-04 | 3.13E-04 |

Figure 7.23. Liquid phase yeast cell concentration versus relative continuous fermentation time, effect of liquid residence time in bioreactor. $R_t$ is bioreactor liquid residence time in days.

In Figures 7.24 and 7.25, the concentrations of the wort substrates free amino nitrogen (FAN) and total fermentable carbohydrate (as glucose) both increased when the liquid residence time decreased from 1.8 to 0.9 days. From the mass balances in Table 7.4, the consumption rate of total fermentable carbohydrate (as glucose) increased while free amino nitrogen consumption rate decreased, with decreasing bioreactor residence time. The yield factor, $Y_{P/S}$, of the fermentation product ethanol from fermentable glucose substrate, increased from 0.3 to 0.5 with the reduction in liquid residence time. Because the system was sparged with air and carbon dioxide, there were probably minor losses of ethanol in the gas phase, which would have an impact on the yield factor, $Y_{P/S}$, by affecting the balance on ethanoL Research conducted in collaboration with Budac and Margaritis (1999) has qualitatively demonstrated, using a gas chromatograph-mass spectroscopy technique (GC-MS), that beer flavour volatiles including ethanol, acetaldehyde, ethyl acetate, and isoamyl acetate are detected in the gas-lift bioreactor headspace during continuous fermentation.

Figure 7.24. Liquid phase ethanol and fermentable glucose concentration versus relative continuous fermentation time, effect of liquid residence time in bioreactor. $R_t$ is bioreactor liquid residence time in days.

Figure 7.25. Liquid phase free amino nitrogen and 1-propanol concentration versus relative continuous fermentation time, effect of liquid residence time in bioreactor. $R_t$ is bioreactor liquid residence time in days.

Table 7.4. Mass balances on free amino nitrogen and total fermentable carbohydrate (as glucose) based on average data in Table 7.3, effect of residence time.

| Residence Time | 1.8 days | 0.9 days | 1.8 days | 0.9 days |
|---|---|---|---|---|
| | Free Amino Nitrogen (g/min) | | Total Ferm. Glucose (g/min) | |
| Inlet* | 8.84E-04 | 1.74E-03 | 4.71E-01 | 9.26E-01 |
| Outlet | 3.65E-04 | 1.50E-03 | 8.93E-03 | 3.72E-01 |
| Consumption (AS) | 5.18E-04 | 2.35E-04 | 4.62E-01 | 5.54E-01 |
| Yield Factor ($Y_{P/S}$) | | | 0.3 | 0.5 |

*Inlet concentrations from Appendix 1

The liquid phase concentration of the fermentation product ethanol decreased with the step change in liquid residence time. However, the system as a whole was producing more ethanol on a mass flow rate basis at the faster liquid residence time. Because the objective of this work was not only to produce ethanol in isolation, but rather a beer with a balance of many components, maximizing ethanol productivity must be balanced with other factors. At the end of a commercial primary beer fermentation, the majority of fermentable glucose substrate must be consumed.

In Figure 7.26, the response of acetaldehyde and total diacetyl concentration, to the step change in wort flow rate is given. Both analytes increased in concentration and in their rate of production when the liquid residence time was decreased. During batch beer fermentations, acetaldehyde is excreted by yeast during the first few days of fermentation (Kunze, 1996).

Figure 7.26. Liquid phase total diacetyl and acetaldehyde concentration versus relative continuous fermentation time, effect of liquid residence time in bioreactor. $R_t$ is bioreactor liquid residence time in days.

Figures 7.25 and 7.27 show the effect of decreasing bioreactor residence time on the liquid phase concentrations of the higher alcohols 1-propanol, isobutanol and isoamyl alcohol. All three higher alcohols decreased in concentration when the bioreactor residence time was decreased.

Figure 7.27. Liquid phase isobutanol and isoamyl alcohol concentration versus relative continuous fermentation time, effect of liquid residence time in bioreactor. $R_t$ is bioreactor liquid residence time in days.

Ethyl acetate and isoamyl acetate mass flow rates given in Table 7.3 (b) both increased in response to the decrease in liquid residence time. In Figure 7.28 the liquid phase concentration of ethyl acetate decreased while isoamyl acetate increased. Because this experiment allowed for an increase in liquid phase cell growth without increasing the oxygen supply to the system, the conditions in the bioreactor promoted ester production. Hough et al. (1982) state that increased growth and decreased oxygen conditions encourage ester formation.

Figure 7.28. Liquid phase ethyl acetate and isoamyl acetate concentration versus relative continuous fermentation time, effect of liquid residence time in bioreactor. $R_t$ is bioreactor liquid residence time in days.

7.2.4 Using a Commercial Preparation of Alpha-Acetolactate Decarboxylase to Reduce Total Diacetyl during Continuous Primary Beer Fermentation

*Experiment 1:* The bioreactor was contaminated with aerobically growing Gram positive cocci before the trial could be completed. It was determined that the bioreactor itself was contaminated, since microbiological testing of the wort supply showed no contamination. This pointed to the need for bioreactor upgrades with improved safeguards against contamination. However, before the system was shut down, a decrease in total diacetyl concentration was observed when ALDC was added to the wort supply. Unfortunately it was not possible to draw any conclusions from this data due to the confusing effects of bioreactor contamination.

*Experiment 2:* As a result of numerous bioreactor upgrades, the system operated without contamination throughout the duration of Experiment 2. The data for this experiment is given in Figures 7.29 - 7.31. In Table 7.5 the average pseudo-steady state concentrations of total diacetyl before and after ALDC addition to the wort are summarized. Total diacetyl concentration dropped by 47% with the addition of ALDC to the wort, which makes the use of this enzyme promising for the future (averages taken after three bioreactor turnover times). As seen in Figures 7.30 and 7.31, total fermentable carbohydrate (as glucose) and cell concentration drifted slightly during this trial, which may have been caused by slight differences in the wort, supplied to the bioreactor before and after the addition of ALDC.

Figure 7.29. Liquid phase total diacetyl concentration versus continuous fermentation time, effect of ALDC addition to the wort fermentation medium, Experiment 2.

Figure 7.30. Liquid phase fermentable carbohydrate (as glucose) and ethanol concentration versus continuous fermentation time, effect of ALDC addition to the wort fermentation medium, Experiment 2.

Figure 7.31. Liquid phase cell concentration versus continuous fermentation time, effect of ALDC addition to the wort fermentation medium, Experiment 2.

In order to eliminate the potential confounding effect of wort variability, during Experiment 3 a large quantity of wort from the brewhouse (14 hL) was collected and ALDC was added directly to the wort remaining in this holding vessel, once a pseudo-steady state baseline was reached. This further eliminated any potential wort inconsistencies that could have affected fermentation performance in Experiment 2. This wort storage vessel was also equipped with carbon dioxide sparging, so that dissolved oxygen levels in the wort supply were kept at a consistently low level.

*Experiment 3:* Figures 7.32 - 7.34 illustrate the effect of ALDC addition to the wort supply, on total diacetyl, total fermentable carbohydrate (as glucose), ethanol, and the freely suspended cell concentration during continuous beer fermentation. Table 7.6 also gives the average pseudo-steady state total diacetyl concentration before and after the addition of ALDC to the wort supply (averages taken after three bioreactor turnover times). No contamination was detected at any point during this experiment. The concentration of total diacetyl was reduced by 45% upon addition of ALDC. No significant differences in ethanol, total fermentable carbohydrate (as glucose) or the freely suspended cell concentration were observed, which agrees with the batch findings of Aschengreen and Jepsen (1992).

Figure 7.32. Liquid phase total diacetyl concentration versus continuous fermentation time, effect of ALDC addition to the wort fermentation medium, Experiment 3.

Figure 7.33. Liquid phase ethanol and total fermentable sugar (as glucose) concentration versus continuous fermentation time, effect of ALDC addition to the wort fermentation medium, Experiment 3.

Figure 7.34. Liquid phase cell concentration versus continuous fermentation time, effect of ALDC addition to the wort fermentation medium, Experiment 3.

The results of Experiments 2 and 3 indicate that ALDC did have a significant effect on total diacetyl concentration during continuous fermentation in gas lift bioreactors giving an average reduction in total diacetyl concentration of 46%.

This has the potential to decrease, or eliminate secondary processing for diacetyl reduction in continuous gas-lift systems. A relatively high dosage of ALDC was used for these initial experiments, and it would be necessary to optimize the amount, method and timing of ALDC dosing, in wort if this enzyme was to be adopted for the process. Further savings could be realized if an enzyme becomes available with higher activity levels under brewery fermentation conditions or if the enzyme itself was immobilized, thus allowing for its reuse (Dulieu et al., 1996). Another consideration will be public acceptance of enzyme additives that have been produced using genetically modified organisms.

At the supplier's recommended dosage of 2 kg/1000 hL, and, with cost of the commercial enzyme preparation at $131.05/kg, $0.26/hL would be added to the material costs of fermentation. As used in the experiments performed, the enzyme dosage was 72 □g/L (108 ADU/L) or 7.2 kg/1000 hL ALDC, giving an added material cost of $0.94/hL. The economics of using ALDC for diacetyl reduction during gas lift continuous fermentations will depend on the optimum enzyme dosage under bioreactor conditions and the amount of time saved by its use.

Table 7.5. Summary of average pseudo-steady state effect of ALDC addition to wort fermentation medium on total diacetyl concentration during continuous beer fermentation in a gas lift bioreactor.

| Experiment | Average Total Diacetyl Concentration (□g/L) (ALDC absent) | (ALDC, 60□L/L) | Percent Diacetyl Reduction |
|---|---|---|---|
| Experiment II | 495 | 260 | 47 |
| Experiment III | 445 | 245 | 45 |

*averages based on pseudo-steady state values after three reactor turnover times

The foregoing supports the proposition that continuous fermentation, using immobilized yeast and the associated free cells in a gas-lift draft tube bioreactor system, is a viable alternative to batch fermentation for beer production based on the following criteria:

-    flavour match accomplished
-    higher bioreactor volumetric productivity
-    minimal complexity
-    long term continuous operation demonstrated
-    control of air (oxygen) in the fluidizing gas for flavour control
-    addition of enzyme □-acetolactate decarboxylase for diacetyl control an option
-    no bacterial contamination
-    financial benefits.

There are still many areas, which need to be studied further, but the technology is ready to be tested at a larger scale. Gas-lift bioreactors are already used at an industrial scale for wastewater treatment, which makes the prospects of scaling up the continuous beer fermentation system technically feasible. The Grolsch brewery in the Netherlands has been reported to use a 230 m$^3$ gas lift bioreactor for treatment of their wastewater (Driessen et aL, 1997). One of the biggest barriers to commercial scale continuous fermentation in the brewing industry may be the acceptance by the brewers of a new process, in an industry that is deeply tied to tradition.

Data collected on secondary yeast metabolites produced during continuous beer fermentations conducted in this work highlighted the importance of controlling oxygen in the fluidizing gas for beer flavour formation. The findings showed that under the given operating conditions, increased air in the bioreactor fluidizing gas caused an increase in acetaldehyde, diacetyl, and higher alcohols (isoamyl alcohol and isobutanol), while the concentrations of esters (isoamyl acetate, ethyl hexanoate, ethyl octanoate) and ethanol were reduced. These data suggest that there is the potential for controlling beer flavour through the composition of the bioreactor fluidizing gas, allowing for the production of unique products.

With the exception of when air was eliminated from the fluidizing gas, a freely suspended cell concentration of greater than 10$^8$ cells/mL was maintained in the bioreactor liquid phase. The system thus has more than one population of yeast cells coexisting in the bioreactor, the immobilized yeast and the liquid phase suspended yeast. Because of the large quantities of viable yeast growing in the bioreactor liquid phase, the possibility exists of using a continuous bioreactor as a yeast propagator.

When a secondary 48-hour batch-holding period was added following continuous primary fermentation, a flavour profile within the range of market beers was obtained. The temperature of this holding period was 21°C and the importance of minimizing the exposure of the liquid to oxygen during the holding period for flavour formation was demonstrated experimentally. The addition of a holding period adds two days to the process as well as additional complexity, however it is still significantly faster than commercial batch fermentations, which take between seven and fourteen days.

Ultimately, the ideal scenario would be to entirely eliminate the secondary holding period by optimizing the conditions in the primary continuous bioreactor. However, further reductions in the secondary holding time can be achieved in the short term by optimizing the holding temperature (diacetyl removal by yeast is very temperature dependent), the amount of fermentable sugars remaining in the liquid at the beginning of the holding period, the concentration of yeast present, the hydrodynamic characteristics of the holding vessel (diacetyl removal could be improved by improving the contact between the yeast and the beer), and by taking further measures to eliminate oxygen from this stage.

Other researchers (Kronlof and Virkajarvi, 1996; Nakanishi et al., 1993; Yamauchi et al.,1995) have focused on developing multi-stage continuous fermentations in which the first stage of continuous fermentation (aerobic) results in only a partial consumption of the fermentable sugars present in the wort. While this strategy has shown some success in terms of flavour production, these systems are complex. As well, the first aerobic stage of such systems creates an environment, which is more susceptible to microbial contamination (i.e. high sugar concentration, temperature, and oxygen, with low concentrations of ethanol). In the gas-lift bioreactor presented in this work, the bioreactor has a low steady state fermentable sugar concentration, low pH, high ethanol concentration, and low concentrations of oxygen, making the environment inhospitable for potential contaminants. In a less-developed brewery, minimizing complexity and developing a robust, contamination-resistant process is an important success factor.

The addition of a commercial preparation of alpha-acetolactate decarboxylase (ALDC) to the wort supplying the continuous fermentation showed an average diacetyl reduction of 46%. However, because ALDC is an enzyme that is produced by a genetically modified organism (GMO), there are public perception issues that would need to be addressed before using such an enzyme in a commercial product. In addition the commercially available enzymes for diacetyl control do not have optimal activity under fermentation conditions.

Over six months of continuous fermentation using kappa-carrageenan gel immobilization, freely suspended cells in the liquid phase retained viabilities greater than 90%, while immobilized cell viability decreased to less than 60%. Scanning electron micrographs revealed that cells located near the periphery of the gel bead had multiple bud scars and a regular morphology, while those near the bead core had an irregular shape and fewer bud scars, suggesting impaired growth. The micrographs also suggested that the yeast located near the bead core were showing signs of aging. As discussed in section 5, kappa-carrageenan gel has many characteristics that make it a desirable yeast immobilization matrix. However, there is currently no industrial method available for bead manufacture and, because the yeast are entrapped in the matrix as part of the bead-making process, bead-handling in a commercial plant increases complexity and cost. Other immobilization methods such as self-aggregation or flocculation should be explored in the future. This would eliminate the complexity of bead handling in a plant environment, and, if the yeast flocs were disrupted on a regular basis, one could ensure that aged cells are regularly removed from the bioreactor.

## Claims

1. The process for the production of potable alcohols in which, a gas lift bioreactor utilizing internal circulation is used to carry out a continuous fermentation stage where wort containing fermentable sugars is initially fermented using flocculent yeast cells immobilized by self-aggregation in a restricted oxygen supply and the at least partially fermented discharge from the continuous process is delivered to a batch processing stage for finishing.

2. The process according to claim 1 wherein said potable alcohol is a beer.

3. The process according to claim 2 wherein the beer is a pale style beer.

4. The process according to claim 3 wherein said beer is a lager.

5. The process according to claim 1 wherein said beer is a North American style beer.

6. A process according to claim 1 wherein said yeast is a highly flocculent or super flocculent yeast.

7. The process according to claim 1 wherein said fermentation is a primary fermentation.

8. The process according to claim 1 wherein the wort is purged with carbon dioxide prior to the fermentation.

9. The process according to claim 1 wherein the reactor uses a carbon dioxide sparge gas containing about 3% oxygen.

10. The process according to claim 1 wherein completion of primary fermentation is carried out in said batch hold stage.

**11.** The process according to claim 10 wherein diacetyl concentration reduction is carried out.

**12.** The process according to claim 10 wherein acetaldehyde concentration reduction is carried out.

**13.** The process according to claim 10 wherein the concentration of higher fusel alcohols substantially remains unaffected by the batch hold processing stage.

**14.** The process according to claim 1 wherein the discharge from the continuous fermentation stage is distributed through a manifold to ones of a plurality of batch hold vessels wherein said batch hold process takes place.

**15.** The process according to claim 1, wherein said continuous process is a process for pitching subsequent batch fermentations in the batch hold stage.

**Patentansprüche**

**1.** Verfahren für die Herstellung von trinkbaren Alkoholen, bei dem ein Gasliftbioreaktor unter Anwendung von Innenzirkulation eingesetzt wird, um eine kontinuierliche Fermentationsstufe durchzuführen, in der zuerst Würze, die fermentierbare Zucker enthält, unter Verwendung von durch Selbstaggregation immobilisierten, flockenden Hefezellen bei eingeschränkter Sauerstoffzufuhr fermentiert wird, und die wenigstens partiell fermentierte Entnahme aus dem kontinuierlichen Verfahren zu einer Chargenbearbeitungsstufe zur Endbearbeitung geleitet wird.

**2.** Verfahren nach Anspruch 1, wobei der trinkbare Alkohol ein Bier ist.

**3.** Verfahren nach Anspruch 2, wobei das Bier ein helles Bier (pale style beer) ist.

**4.** Verfahren nach Anspruch 3, wobei das Bier ein Lager-Bier ist.

**5.** Verfahren nach Anspruch 1, wobei das Bier ein Bier des nordamerikanischen Typs (North American style beer) ist.

**6.** Verfahren nach Anspruch 1, wobei die Hefe eine hochflockende oder superflockende Hefe ist.

**7.** Verfahren nach Anspruch 1, wobei die Fermentation eine Primärfermentation ist.

**8.** Verfahren nach Anspruch 1, wobei die Hefe vor der Fermentation mit Kohlendioxid gespült wird.

**9.** Verfahren nach Anspruch 1, wobei der Reaktor ein Kohlendioxidzerstäubungsgas verwendet, das etwa 3% Sauerstoff enthält.

**10.** Verfahren nach Anspruch 1, wobei eine Vervollständigung der Primärfermentation in der Chargenhaltestufe durchgeführt wird.

**11.** Verfahren nach Anspruch 10, wobei eine Reduzierung der Diacetylkonzentration durchgeführt wird.

**12.** Verfahren nach Anspruch 10, wobei eine Reduzierung der Acetaldehydkonzentration durchgeführt wird.

**13.** Verfahren nach Anspruch 10, wobei die Konzentration an höheren Fuselalkoholen durch die Chargenhaltebearbeitungsstufe im Wesentlichen unbeeinflusst bleibt.

**14.** Verfahren nach Anspruch 1, wobei die Entnahme aus der kontinuierlichen Fermentationsstufe durch einen Verteiler in einige einer Vielzahl von Chargenhaltebehältern verteilt wird, in denen das Chargenhalteverfahren stattfindet.

**15.** Verfahren nach Anspruch 1, wobei das kontinuierliche Verfahren ein Verfahren zum Pichen nachfolgender Chargenfermentationen in der Chargenhaltestufe ist.

**Revendications**

1. Procédé pour la production d'alcools potables, dans lequel on emploie un bioréacteur à ascenseur de gaz utilisant la circulation interne pour effectuer une étape de fermentation en continu, où du moût contenant des sucres fermentables est initialement fermenté en utilisant des cellules de levure floculante immobilisées par auto-agrégation dans une source d'oxygène restreinte et la décharge au moins partiellement fermentée du procédé continu est délivrée à une étape de traitement en discontinu pour terminer.

2. Procédé selon la revendication 1, dans lequel ledit alcool potable est une bière.

3. Procédé selon la revendication 2, dans lequel la bière est une bière de type pale ale.

4. Procédé selon la revendication 3, dans lequel ladite bière est une bière de type lager.

5. Procédé selon la revendication 1, dans lequel ladite bière est une bière de type nord-américaine.

6. Procédé selon la revendication 1, dans lequel ladite levure est une levure très floculante ou super floculante.

7. Procédé selon la revendication 1, dans lequel ladite fermentation est une fermentation primaire.

8. Procédé selon la revendication 1, dans lequel le moût est purgé avec du dioxyde de carbone avant la fermentation.

9. Procédé selon la revendication 1, dans lequel le réacteur utilise un gaz de lavage de dioxyde de carbone contenant environ 3% d'oxygène.

10. Procédé selon la revendication 1, dans lequel l'achèvement de la fermentation primaire est effectué dans ladite étape de maintien en discontinu.

11. Procédé selon la revendication 10, dans lequel est effectuée une réduction de la concentration en diacétyle.

12. Procédé selon la revendication 10, dans lequel est effectuée une réduction de la concentration en acétaldéhyde.

13. Procédé selon la revendication 10, dans lequel la concentration d'alcools de fusel supérieurs reste sensiblement non affectée par l'étape de traitement de maintien en discontinu.

14. Procédé selon la revendication 1, dans lequel la décharge de l'étape de fermentation continue est distribuée via un collecteur à certaines d'une pluralité de cuves de maintien en discontinu, dans lesquelles a lieu ledit procédé de maintien en discontinu.

15. Procédé selon la revendication 1, dans lequel ledit procédé en continu est un procédé pour régler les fermentations discontinues suivantes dans l'étape de maintien en discontinu.

FIG. 1

**FIG. 2**

FIG. 3

**FIG. 4**

**FIG. 5**

**FIG. 6**

FIG. 7

**FIG. 8**

**FIG. 9**

**FIG. 10**

**FIG. 11**

**FIG. 12**

250 μm

**FIG. 13**

250 μm

**FIG. 14**

**Corn Oil Supply**

**Heating**

**Cooling**

**Hardening Solution**

**Kappa-Carrageeanan Supply**

**Phase Separation Tank**

**Yeast Supply**

| ⊘ | ● | ⬛ |
|---|---|---|
| Peristaltic Pump | Valve | Static Mixer |

**Bead Harvesting Tank**

**FIG. 15**

Particle Separator

"Green" Beer

Thermal Jacket

Inoculated Beads

Bioreactor

Draft Tube

Fluidizing Gas

Brewery Wort

**FIG. 16**

5 cm

**FIG. 17**

**FIG. 18**

**FIG. 19**

**FIG. 20**

**FIG. 21**

EP 1 397 481 B1

Carrageenan
Solution
(Random Coil)

Carrageenan
Gel
(Continuous Network)

Carrageenan
Gel
(Aggregate)

**FIG. 22**

Oxygen

Sugars & Carbohydrates

Nitrogen Compounds

Lipids

Vitamins

Salts and Minerals

WORT

Bulk Liquid Phase

Individual Yeast

Immobilization Matrix

Boundary Layer

Yeast Colony

BEER

$CO_2$

Ethanol

Carbonyl Compounds

Sulfur Compounds

Esters

Higher alcohols

Organic and Fatty Acids

FIG. 23

EP 1 397 481 B1

**FIG. 24**

**FIG. 25**

**FIG. 26**

**FIG. 27**

**FIG. 28**

**FIG. 29**